# EUROPEAN PATENT APPLICATION

(11) **EP 4 681 862 A1**
(43) Date of publication of application: **21.01.2026**
(21) Application number: 23927389.9
(22) Date of filing: 14.03.2023
(51) Int. Cl.: B23K 26/34, B23K 26/21

(54) **PROCESSING SYSTEM AND PROCESSING METHOD**

(71) Applicant: NIKON CORPORATION, Tokyo 140-8601 (JP)
(72) Inventor: Funatsu, Takayuki, Tokyo 140-8601 (JP); Murata, Hiromichi, Tokyo 140-8601 (JP); Iida, Souichiro, Tokyo 140-8601 (JP); Doi, Ryosuke, Tokyo 140-8601 (JP); Nagasaka, Hiroyuki, Tokyo 140-8601 (JP)
(74) Representative: Hoffmann Eitle
(86) International application number: PCT/JP2023/009803
(87) International publication number: WO 2024/189768

(57) **Abstract**

A processing system includes: a processing apparatus that build a build object on an object by melting a material supplied from a supply member with a beam emitted from an irradiation apparatus; and a control apparatus that is configured to control the processing apparatus, the supply member supplies the material to a supply area in a plane that intersects an optical axis of the irradiation apparatus in a space between the supply member and the object, and a control of the processing apparatus by the control apparatus includes a control of a beam path of the beam from the irradiation apparatus based on at least one of a shape and a size of the supply area.

## Description

### Technical Field

The present invention relates to a technical field of a processing system and a processing method that are configured to process an object, for example.

### Background Art

A Patent literature 1 discloses one example of a processing system that processes an object. One technical problem of this processing system is to properly process the object.

### Citation List

### Patent Literature

Patent Literature 1: US2016/0311059A1

### Summary of Invention

A first aspect provides a processing system including: a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and a control apparatus that is configured to control the processing apparatus, wherein the material supply member supplies the build material to a material supply area in a plane that intersects an optical axis of the irradiation apparatus in a space between the material supply member and the object, and a control of the processing apparatus by the control apparatus includes a control of a beam path of the energy beam from the irradiation apparatus based on at least one of a shape and a size of the material supply area.

A second aspect provides a processing system including: a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and a control apparatus that is configured to control the processing apparatus, wherein the material supply member supplies the build material to a material supply area in a plane that intersects an optical axis of the irradiation apparatus in a space between the material supply member and the object, and the control apparatus controls a supply aspect of the build material from the material supply member based on an irradiation aspect of the energy beam.

A third aspect provides a processing system including: a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and a control apparatus that is configured to control the processing apparatus, wherein the control apparatus controls the processing apparatus to melt the build material by irradiating the build material supplied to a space between the material supply member and the object with the energy beam, and to build the build object on the object by supplying the melted build material to the object, and the control apparatus controls the energy beam, which is irradiated onto the build material, based on a supply aspect of the build material supplied to the space.

A fourth aspect provides a processing system including: a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and a control apparatus that is configured to control the processing apparatus, wherein the material supply member supplies the build material to a material supply area in a plane that intersects an optical axis of the irradiation apparatus in a space between the material supply member and the object, and a control of the processing apparatus by the control apparatus includes a control of an irradiation of the energy beam from the irradiation apparatus based on at least one of a shape and a size of the material supply area.

A fifth aspect provides a processing method including: supplying a build material from a material supply member; emitting an energy beam from an irradiation apparatus; and performing an additive manufacturing for building a build object on an object by melting the build material supplied from the material supply member with the energy beam emitted from the irradiation apparatus, wherein the supplying the build material includes supplying the build material to a material supply area in a plane that intersects an optical axis of the irradiation apparatus in a space between the material supply member and the object, and the performing the additive manufacturing includes setting a beam path of the energy beam from the irradiation apparatus based on at least one of a shape and a size of the material supply area.

A sixth aspect provides a processing method including: supplying a build material from a material supply member; emitting an energy beam from an irradiation apparatus; and performing an additive manufacturing for building a build object on an object by melting the build material supplied from the material supply member with the energy beam emitted from the irradiation apparatus, wherein the supplying the build material includes: supplying the build material to a material supply area in a plane that intersects an optical axis of the irradiation apparatus in a space between the material supply member and the object; and setting a supply aspect of the build material from the material supply member based on an aspect of the energy beam.

A seventh aspect provides a processing method including: supplying a build material from a material supply member; emitting an energy beam from an irradiation apparatus; and performing an additive manufacturing for building a build object on an object by melting the build material, which is supplied from the material supply member in a space between the material supply member and the object, with the energy beam emitted from the irradiation apparatus, wherein the performing the additive manufacturing includes setting the energy beam, which is irradiated onto the build material, based on an aspect of the build material supplied to the space.

An eighth aspect provides a processing method including: supplying a build material from a material supply member; emitting an energy beam from an irradiation apparatus; and performing an additive manufacturing for building a build object on an object by melting the build material supplied from the material supply member with the energy beam emitted from the irradiation apparatus, wherein the supplying the build material includes supplying the build material to a material supply area in a plane that intersects an optical axis of the irradiation apparatus in a space between the material supply member and the object, and the performing the additive manufacturing includes controlling an irradiation of the energy beam from the irradiation apparatus based on at least one of a shape and a size of the material supply area.

An operation and another advantage of the present invention will be apparent from an example embodiment described below.

### Brief Description of Drawings

[FIG. 1] FIG. 1 is a cross-sectional view that illustrates a configuration of a processing system in a present example embodiment.
[FIG. 2] FIG. 2 is a block diagram that illustrates a configuration of the processing system in the present example embodiment.
[FIG. 3] FIG. 3 is a plan view that illustrates a lower surface of a material nozzle.
[FIG. 4] Each of FIG. 4(a) to FIG. 4(c) is a plan view that illustrates one example of a material supply area in a material supply plane.
[FIG. 5] FIG. 5 is a cross-sectional view that illustrates a configuration of an irradiation optical system.
[FIG. 6] FIG. 6(a) is a plan view that illustrates a movement trajectory of a target irradiation area in a processing unit area, and FIG. 6(b) is a plan view that illustrates a movement trajectory of the target irradiation area on a build surface.
[FIG. 7] Each of FIG. 7(a) and FIG. 7(b) is a plan view that illustrates a movement trajectory of the target irradiation area in the processing unit area, and FIG. 7(c) is a plan view that illustrates a movement trajectory of the target irradiation area on the build surface.
[FIG. 8] Each of FIG. 8(a) to FIG. 8(e) is a cross-sectional view that illustrates a process for building a structural layer by a first build operation..
[FIG. 9] Each of FIG. 9(a) to FIG. 9(c) is a cross-sectional view that illustrates a process for building a three-dimensional structural object.
[FIG. 10] Each of FIG. 10(a) to FIG. 10(e) is a cross-sectional view that illustrates a process for building the structural layer by a second build operation..
[FIG. 11] FIG. 11 illustrates processing light passing through a material irradiation plane.
[FIG. 12] Each of FIG. 12(a), FIG. 12(c), and FIG. 12(d) is a plan view that illustrates a movement trajectory of the target irradiation area in the processing unit area, and each of FIG. 12(b) and FIG. 12(e) is a plan view that illustrates a movement trajectory of the target irradiation area on the build surface.
[FIG. 13] Each of FIG. 13(a) to FIG. 13(c) is a plan view that illustrates a relationship between the material supply area and an irradiation unit area.
[FIG. 14] FIG. 14(a) is a cross-sectional view that illustrates one example of a processing head performing the first build operation, and FIG. 14(b) is a cross-sectional view that illustrates one example of the processing head performing the second build operation.
[FIG. 15] FIG. 15 is a cross-sectional view that illustrates one example of an operation for controlling a material control point.
[FIG. 16] FIG. 16 is a cross-sectional view that illustrates one example of the operation for controlling the material control point.
[FIG. 17] FIG. 17(a) is a plan view that illustrates the structural layer built by performing both the first and second build operations, FIG. 17(b) is a plan view that illustrates a part of the structural layer (an outer wall build object) built by performing the first build operation, and FIG. 17(c) is a plan view that illustrates another part of the structural layer (an infill build object) built by performing the second build operation.
[FIG. 18] FIG. 18(a) is a plan view that illustrates the structural layer built by performing both the first and second build operations, and FIG. 18(b) is a cross-sectional view that illustrates the structural layer built by performing both the first and second build operations.
[FIG. 19] FIG. 19 is a cross-sectional view illustrating the processing light that is changed to build the structural layer by performing both the first and second build operations.
[FIG. 20] FIG. 20 is a cross-sectional view that illustrates the three-dimensional structural object built by performing both the first and second build operations.

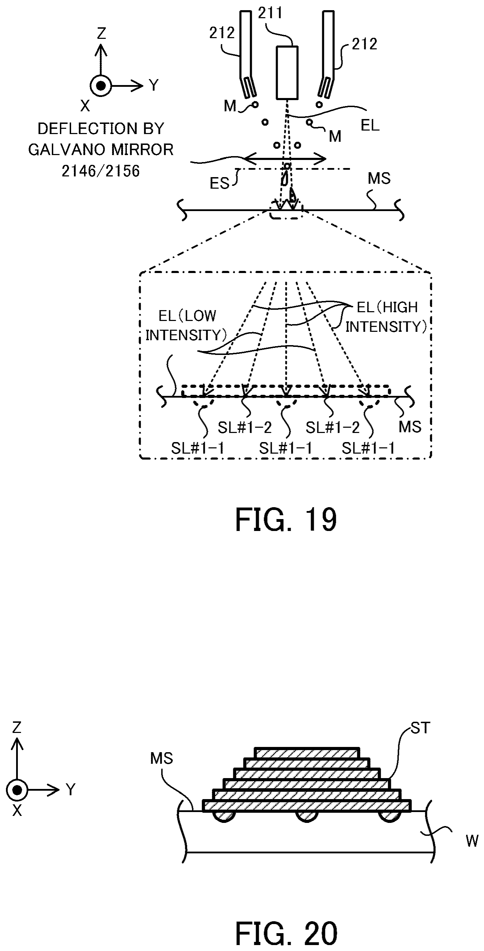

[FIG. 20] FIG. 20 is a cross-sectional view that illustrates the three-dimensional structural object built by performing both the first and second build operations.

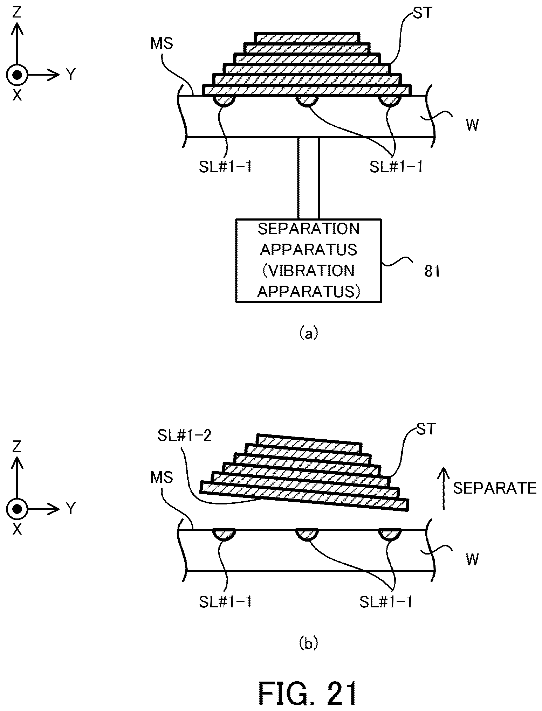

[FIG. 21] FIG. 21 conceptionally illustrates a separation apparatus that separates the three-dimensional structural object from a workpiece, and FIG. 21(b) illustrates the three-dimensional structural object separated from the workpiece.

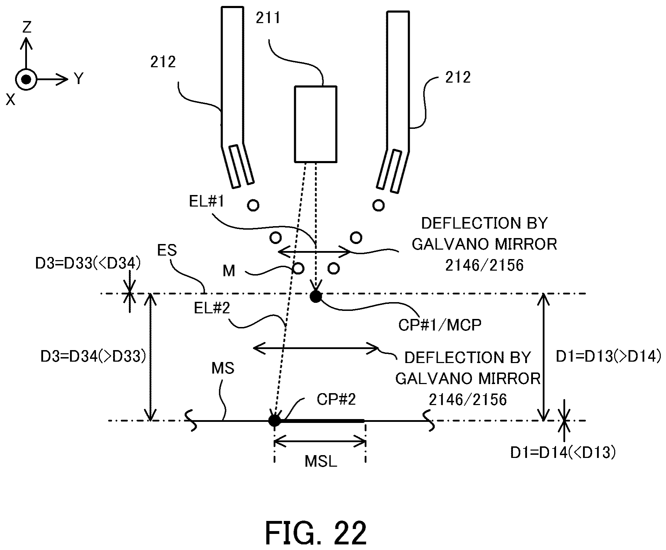

[FIG. 22] FIG. 22 illustrates the processing light that is used for a first use application and the processing light that is used for a second use application

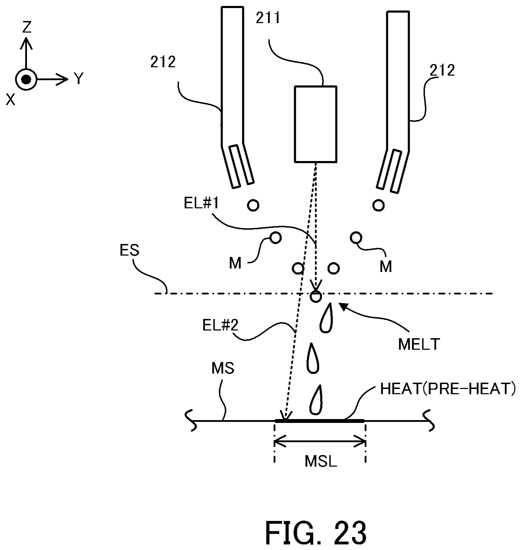

[FIG. 23] FIG. 23 illustrates the processing light that is used for a first use application and the processing light that is used for a second use application

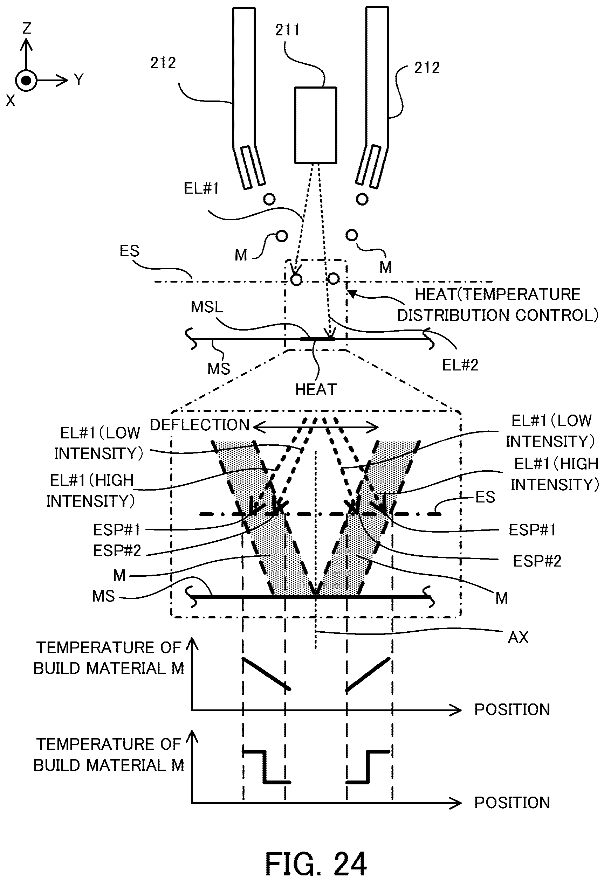

[FIG. 24] FIG. 24 illustrates the processing light that is used for a first use application and the processing light that is used for a second use application

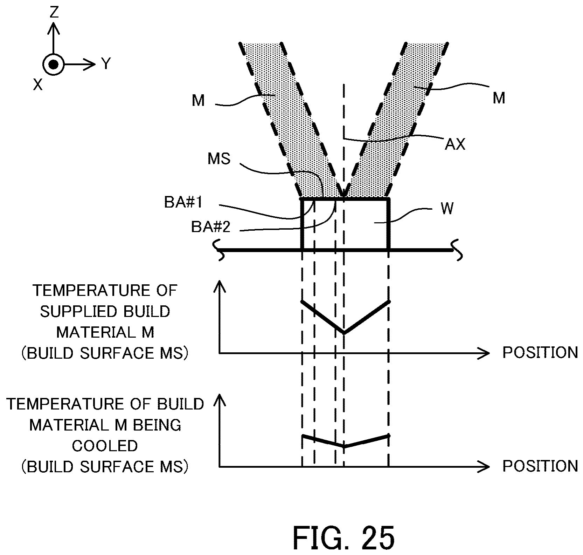

[FIG. 25] FIG. 25 is a cross-sectional view that illustrates the workpiece to which build materials whose temperature distribution is controlled are supplied.

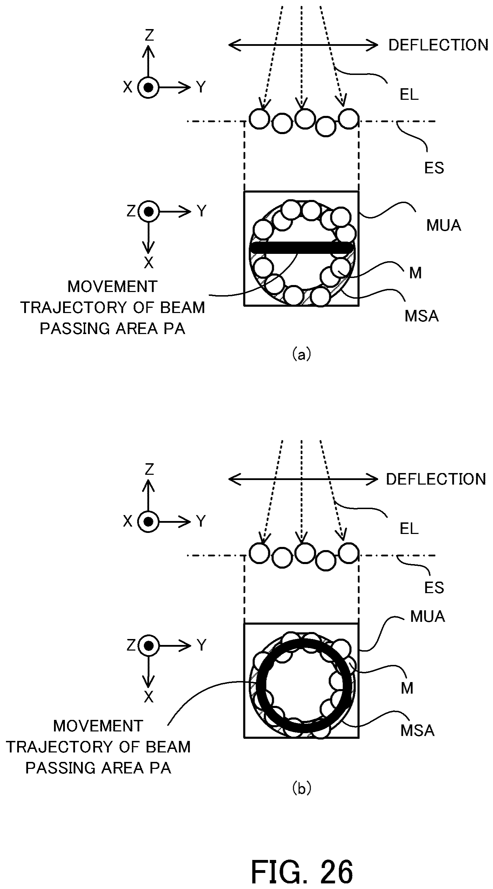

[FIG. 26] Each of FIG. 26(a) and FIG. 26(b) illustrates a relationship between the material supply area to which the build material is supplied and a movement trajectory of a beam passing area.

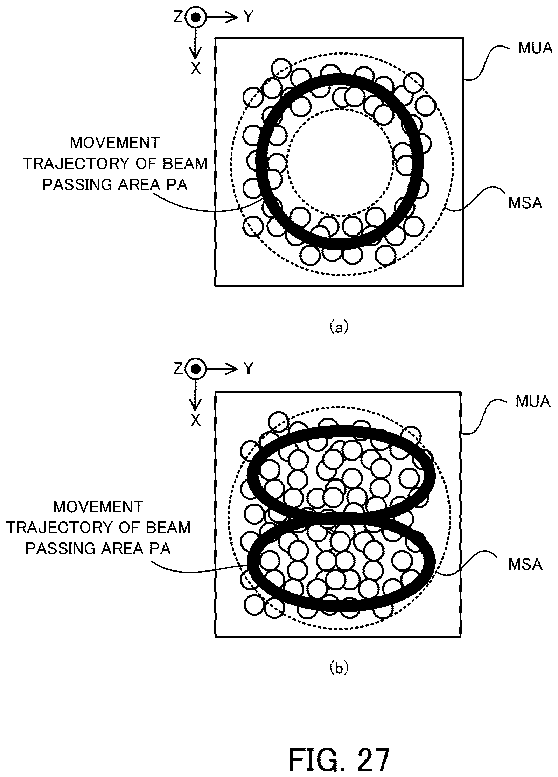

[FIG. 27] Each of FIG. 27(a) and FIG. 27(b) illustrates a relationship between the material supply area to which the build material is supplied and the movement trajectory of the beam passing area.

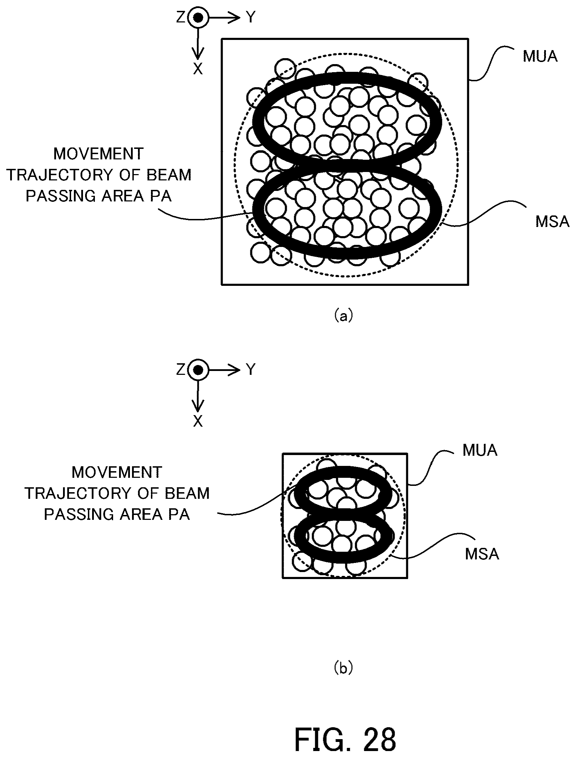

[FIG. 28] Each of FIG. 28(a) and FIG. 28(b) illustrates a relationship between the material supply area to which the build material is supplied and the movement trajectory of the beam passing area.

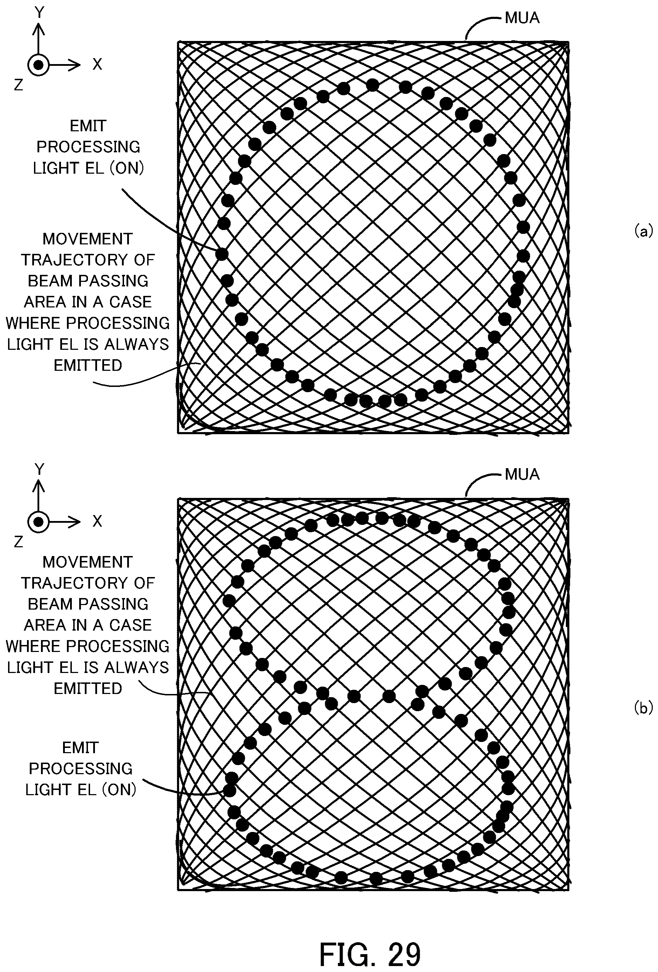

[FIG. 29] Each of FIG. 27(a) and FIG. 27(b) illustrates the substantial movement trajectory of the beam passing area that is realized by controlling a light source.

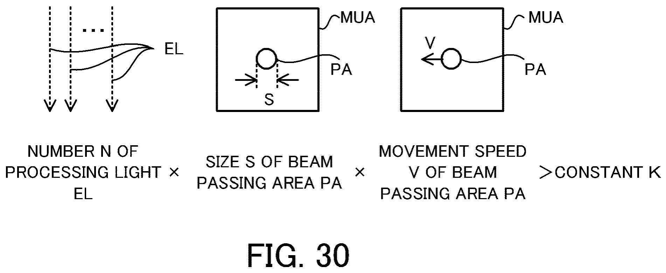

[FIG. 30] FIG. 30 illustrates a relationship among the number of processing lights, a size of the beam passing area, and a movement speed of the beam passing area.

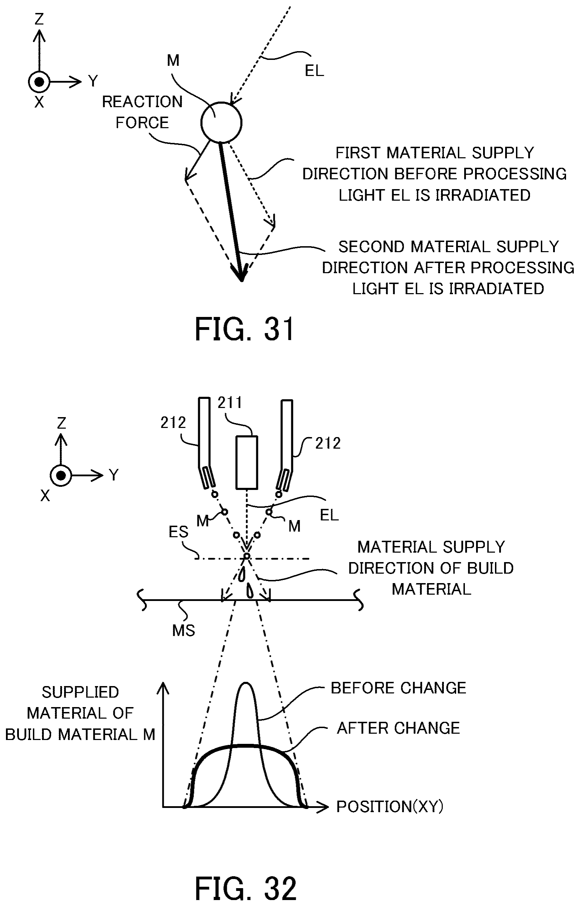

[FIG. 31] FIG. 31 illustrates a reaction force that is generated in the build material melted by the irradiation of the processing light.
[FIG. 32] FIG. 32 illustrates a distribution of a supplied amount of the build material on the build surface.

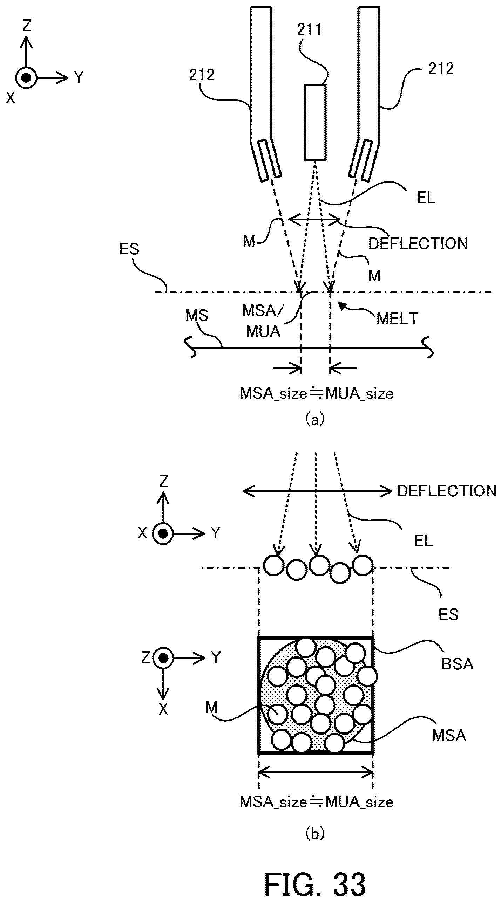

[FIG. 33] FIG. 33(a) is a cross-sectional view that illustrates a relationship between the material supply area and the irradiation unit area, and FIG. 33(b) is a plan view that illustrates a relationship between the material supply area and the irradiation unit area.

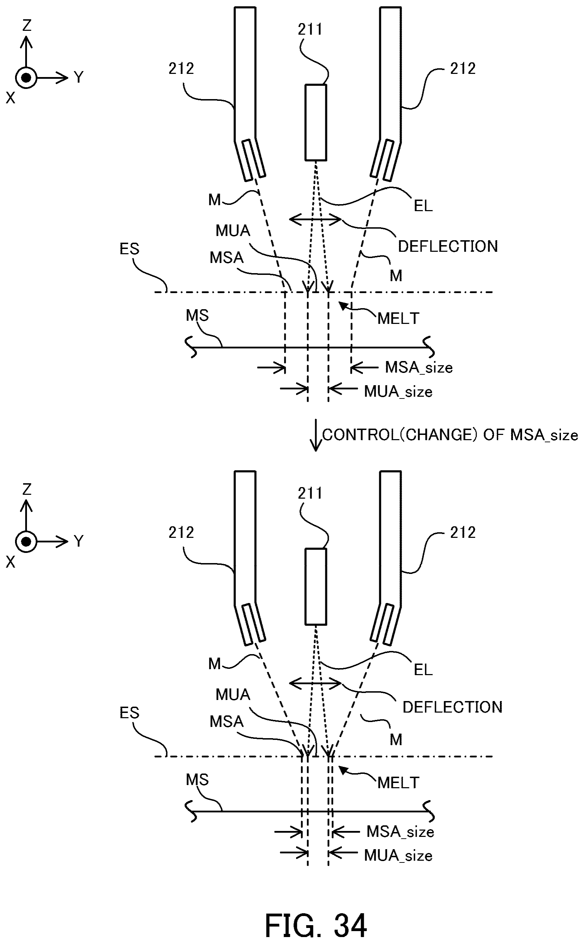

[FIG. 34] FIG. 34 is a cross-sectional view that illustrates a relationship between the material supply area and the irradiation unit area.

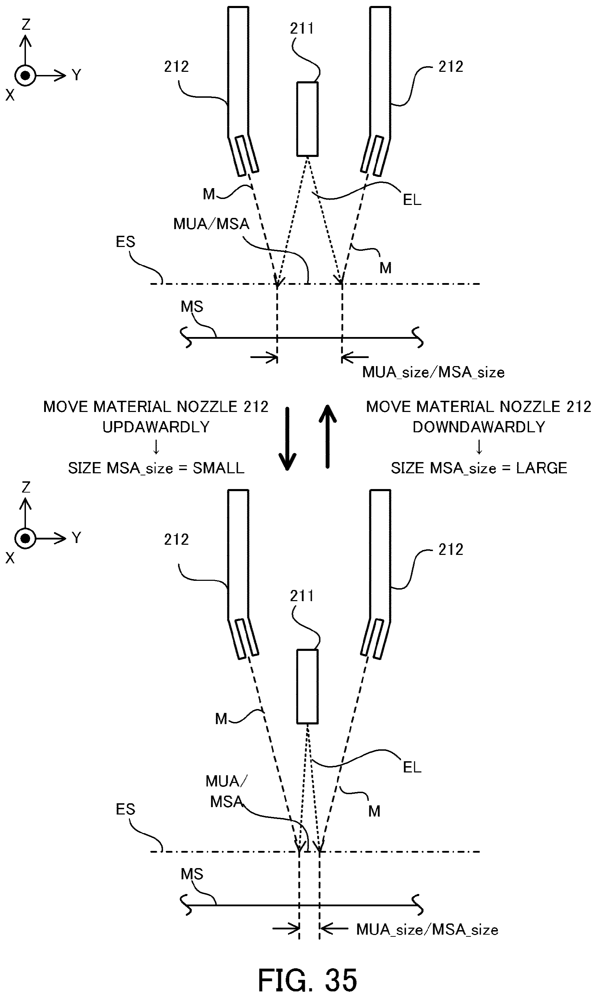

[FIG. 35] FIG. 35 is a cross-sectional view that illustrates one example of an operation for controlling a size of the material supply area.

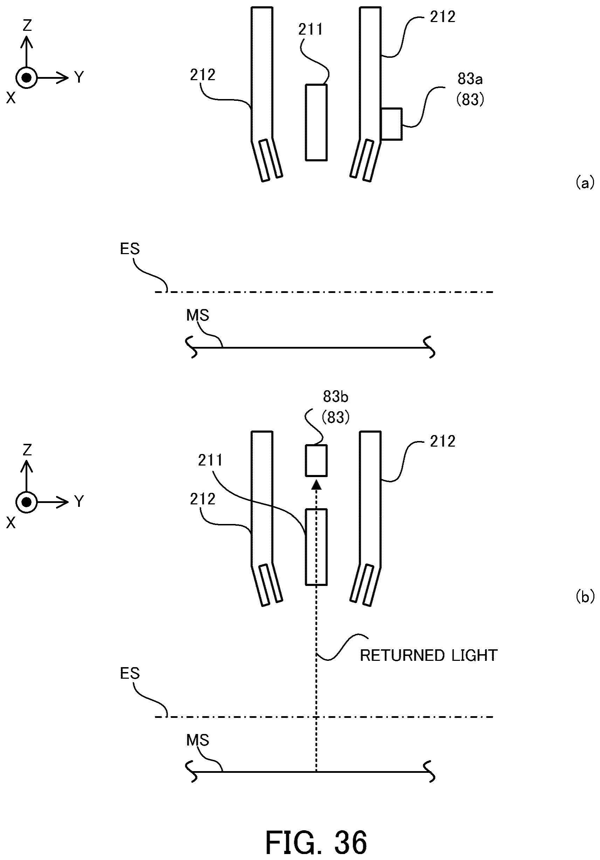

[FIG. 36] Each of FIG. 36(a) and FIG. 36(b) is a cross-sectional view that illustrates a measurement apparatus.

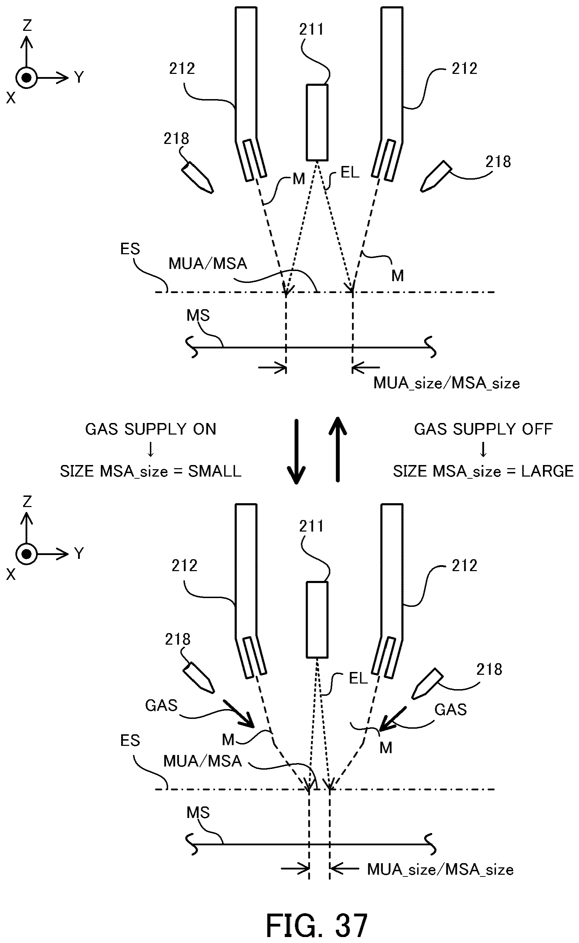

[FIG. 37] FIG. 37 is a cross-sectional view that illustrates one example of the operation for controlling the size of the material supply area.

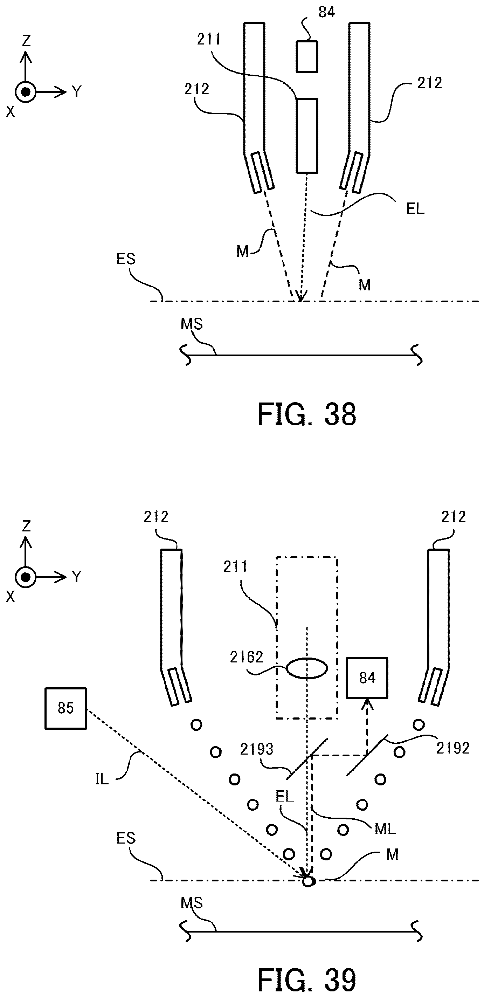

[FIG. 38] FIG. 38 is a cross-sectional view that illustrates an imaging apparatus of the processing system.
[FIG. 39] FIG. 39 is a cross-sectional view that illustrates the imaging apparatus of the processing system.

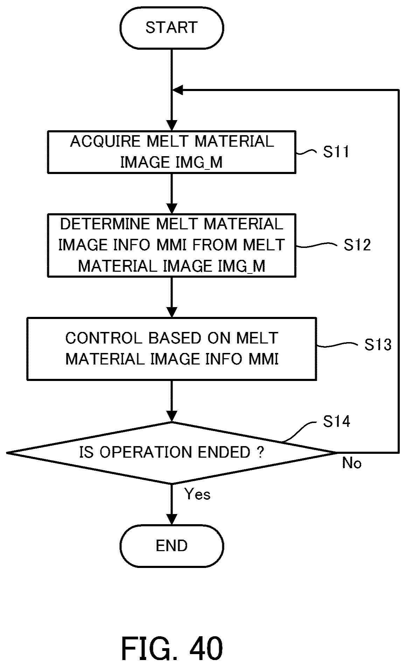

[FIG. 40] FIG. 40 is a flowchart that illustrates a flow of a melt material feedback control operation based on a material image.

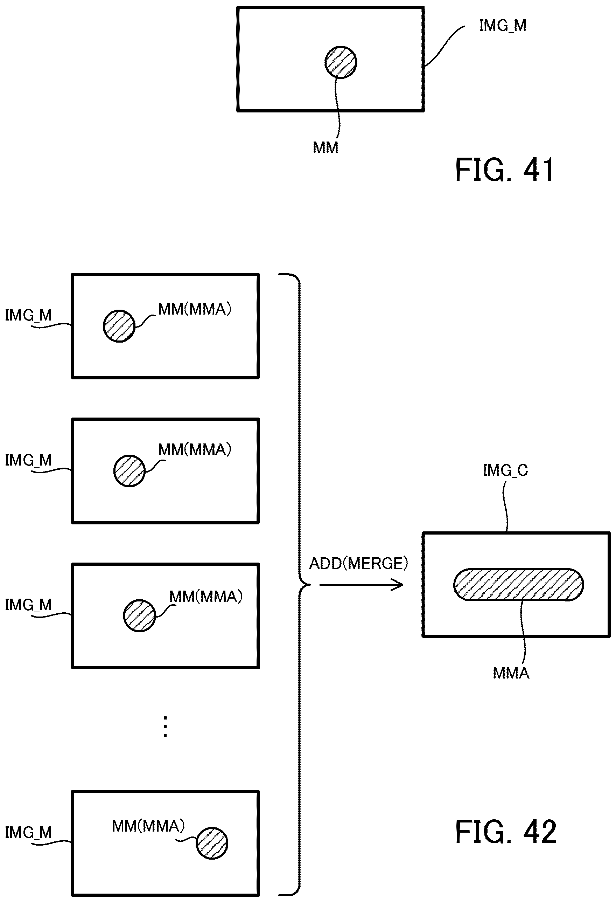

[FIG. 41] FIG. 41 illustrates a melt material image.
[FIG. 42] FIG. 42 illustrates an addition image that is generated by adding (namely, merging) a plurality of melt material images.

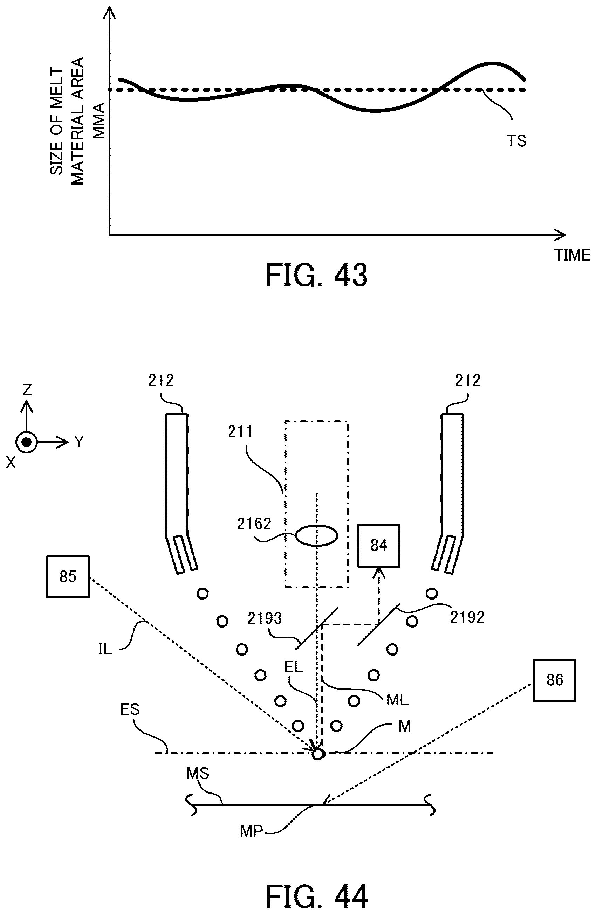

[FIG. 43] FIG. 43 is a timing chart that illustrates a relationship between a size of a melt material area and a target size.
[FIG. 44] FIG. 44 is a cross-sectional view that illustrates the imaging apparatus of the processing system.

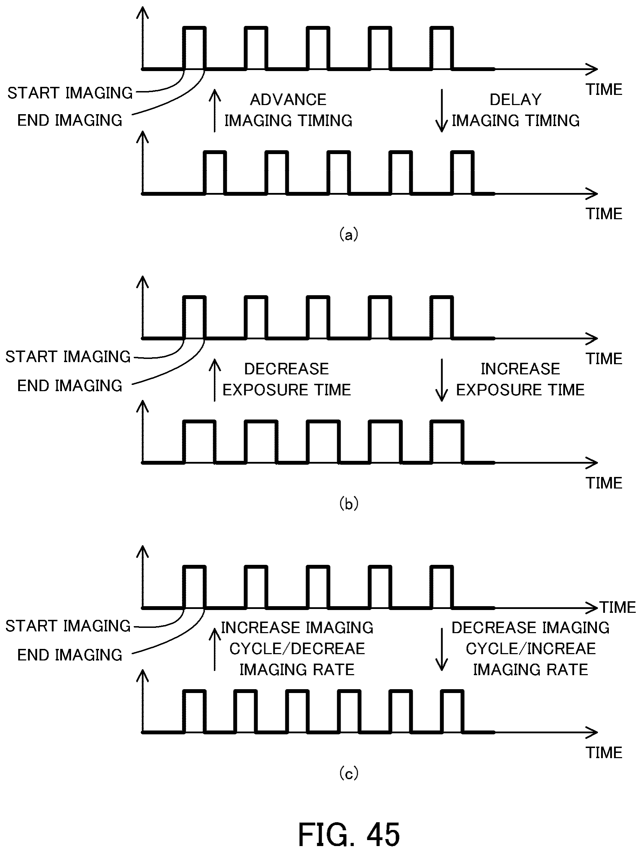

[FIG. 45] FIG. 45(a) is a timing chart that illustrates an imaging timing by the imaging apparatus, FIG. 45(b) is a timing chart that illustrates an exposure time by the imaging apparatus, and FIG. 45(c) is a timing chart that illustrates an imaging cycle and an imaging rate by the imaging apparatus.

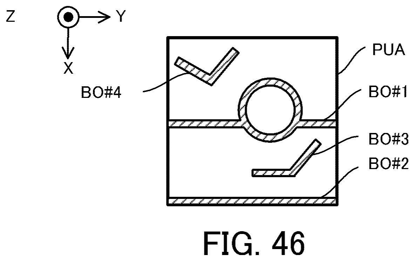

[FIG. 46] FIG. 46 is a plan view illustrating the build object that has a desired shape pattern and that is built in the processing unit area.

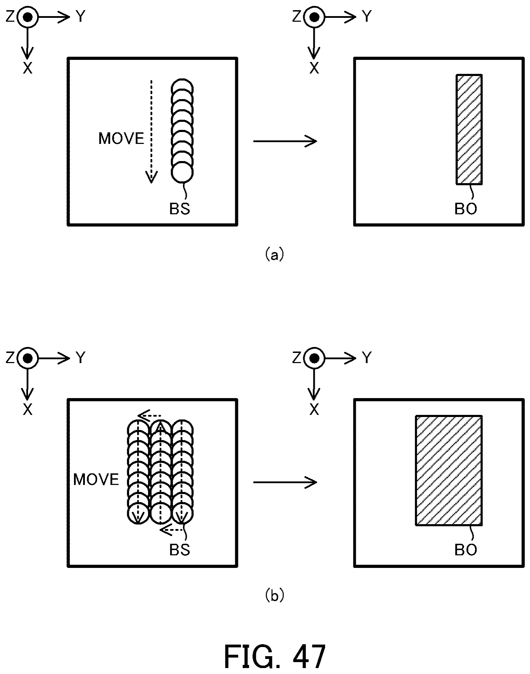

[FIG. 47] Each of FIG. 47(a) and FIG. 47(b) is a plan view illustrating the build object that has a desired shape pattern and that is built in the processing unit area.

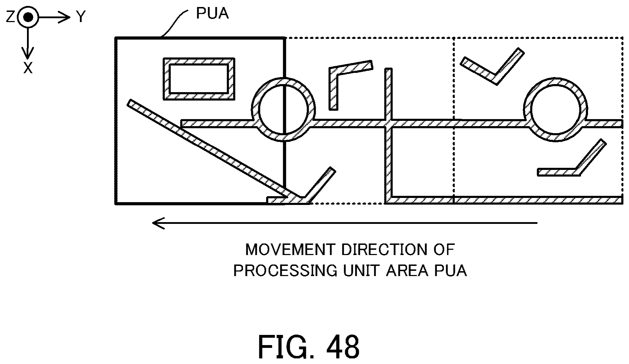

[FIG. 48] FIG. 48 is a plan view illustrating the build object that is built by moving the processing unit area on the build surface while building the build object having a desired shape pattern in the processing unit area.

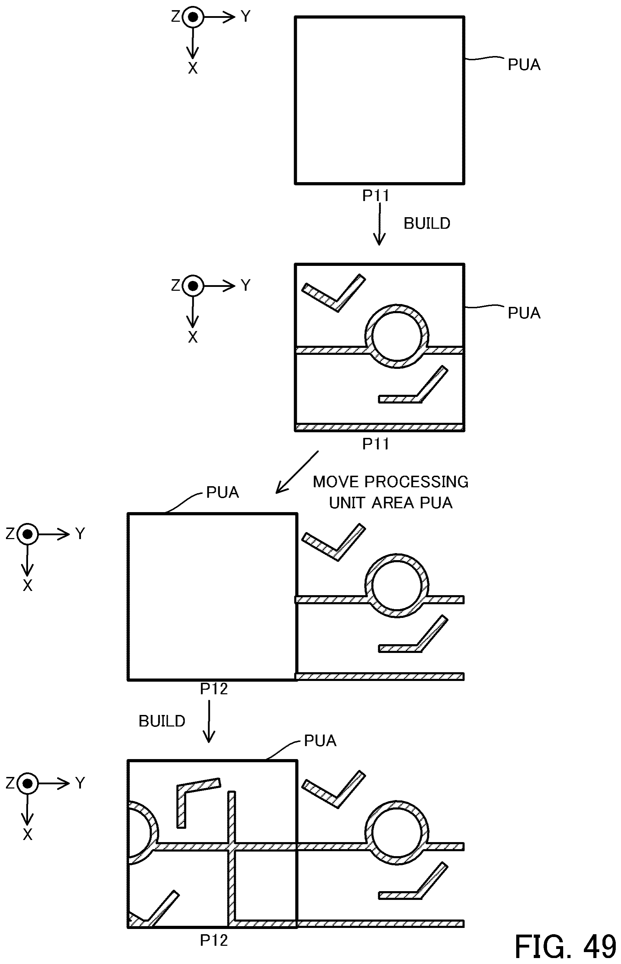

[FIG. 49] FIG. 49 is a plan view illustrating the build object that is built by moving the processing unit area on the build surface while building the build object having a desired shape pattern in the processing unit area.

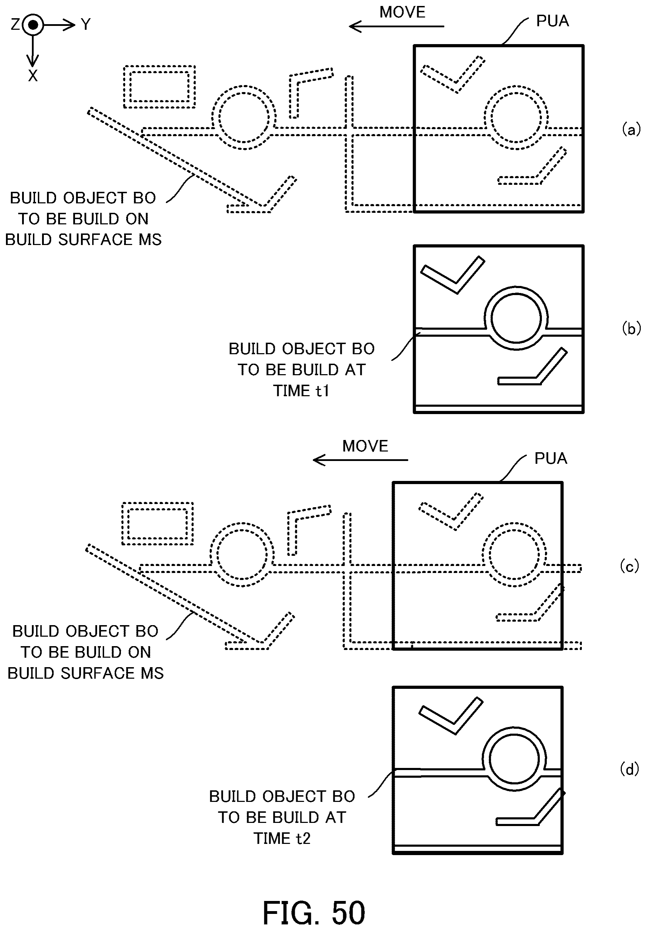

[FIG. 50] FIG. 50 is a plan view illustrating the build object that is built by moving the processing unit area on the build surface while building the build object having a desired shape pattern in the processing unit area.

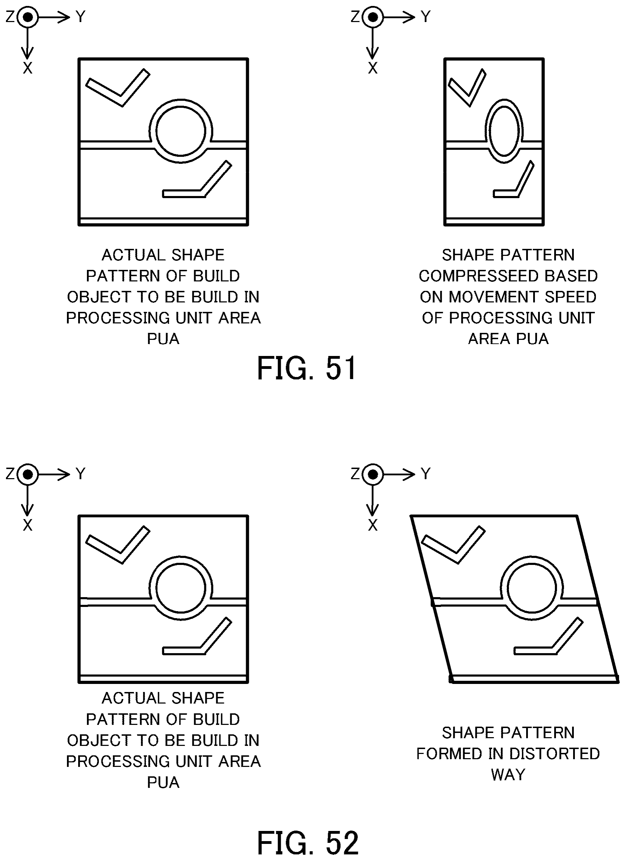

[FIG. 51] FIG. 51 is a plan view that illustrates an actual shape pattern of the built object, which should be built on the build surface, and a shape pattern that is generated by compressing the actual shape pattern of the built object, which should be built on the build surface, along a movement direction of the processing unit area.
[FIG. 52] FIG. 52 is a plan view that illustrates an actual shape pattern of the built object, which should be built on the build surface, and a shape pattern that is generated by deforming the actual shape pattern of the built object, which should be built on the build surface, in a deformation aspect that allows a distortion of the shape pattern of the build object built on the build surface to be canceled.

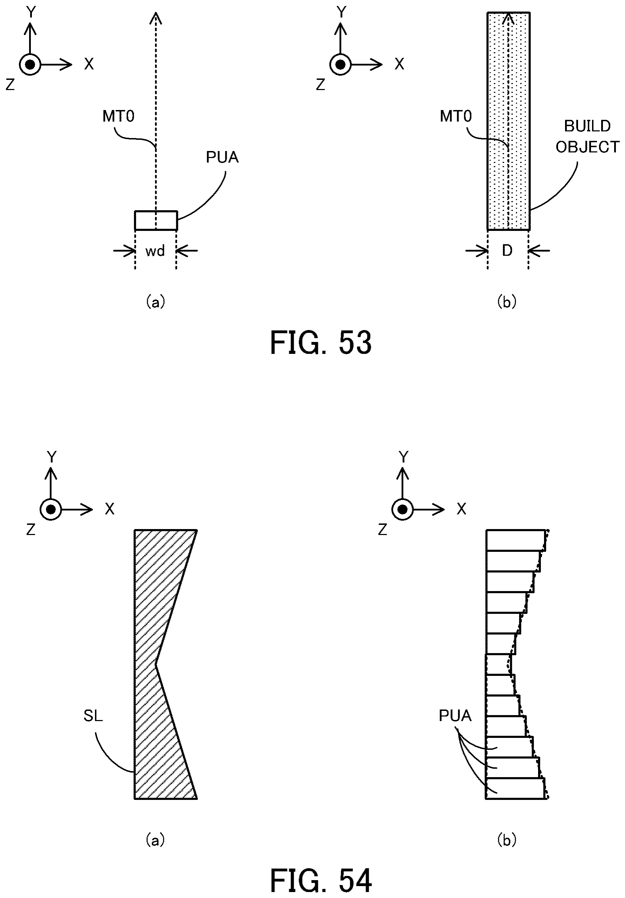

[FIG. 53] FIG. 53(a) is a plan view that illustrates a target movement trajectory of the processing unit area, and FIG. 53(b) is a plan view that illustrates a linear build object built on the build surface in a case where the processing unit area moves along the target movement trajectory illustrated in FIG. 53(a).
[FIG. 54] FIG. 54(a) is a plan view that illustrates the structural layer, and FIG. 54(b) is a plan view that illustrates an operation for changing a width of the processing unit area to build the structural layer illustrated in FIG. 54(a).

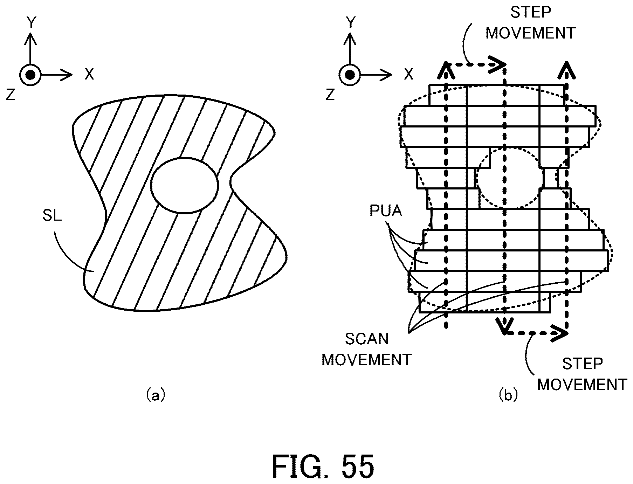

[FIG. 55] FIG. 55(a) is a plan view that illustrates the structural layer, and FIG. 55(b) is a plan view that illustrates an operation for changing a width of the processing unit area to build the structural layer illustrated in FIG. 55(a).

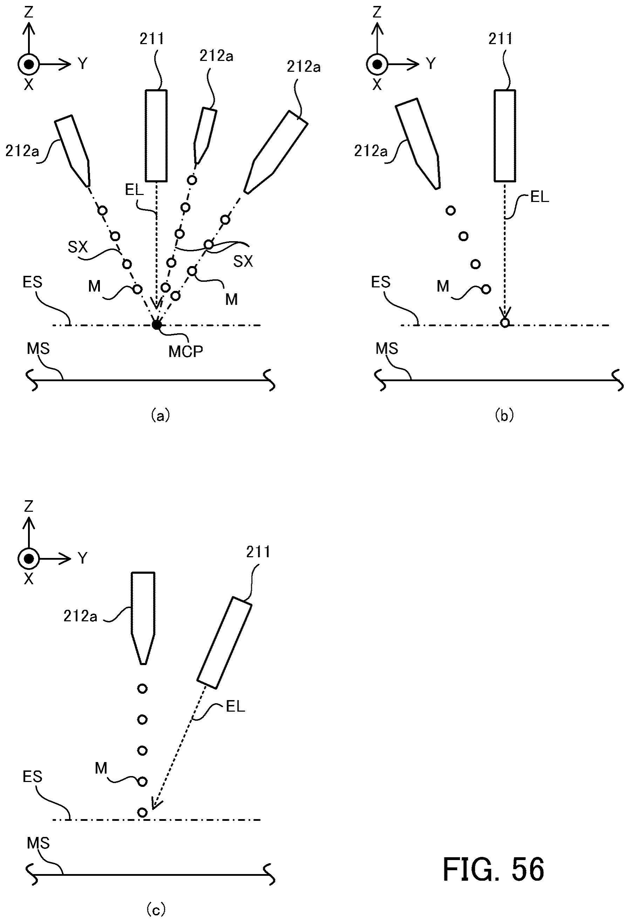

[FIG. 56] Each of FIG. 56(a) to FIG. 56(c) is a side view that illustrates one example of the material nozzle.

### Description of Example embodiments

Next, with reference to drawings, an example embodiment of a processing system and a processing method will be described. In the below-described description, the example embodiment of the processing system and the processing method will be described by using a processing system SYS that is configured to process a workpiece W that is one example of an object. Especially, in the below-described description, the example embodiment of the processing system and the processing method will be described by using the processing system SYS that is configured to perform an additive manufacturing based on a Laser Metal Deposition (LMD). The additive manufacturing based on the Laser Metal Deposition is an additive manufacturing for building a build object that is integrated with or separatable from the workpiece W by melting a build material M supplied to the workpiece W with processing light EL (namely, an energy beam in a form of light).

Moreover, in the below-described description, a positional relationship of various components captured in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

### (1-1) Entire Configuration of Processing System SYS

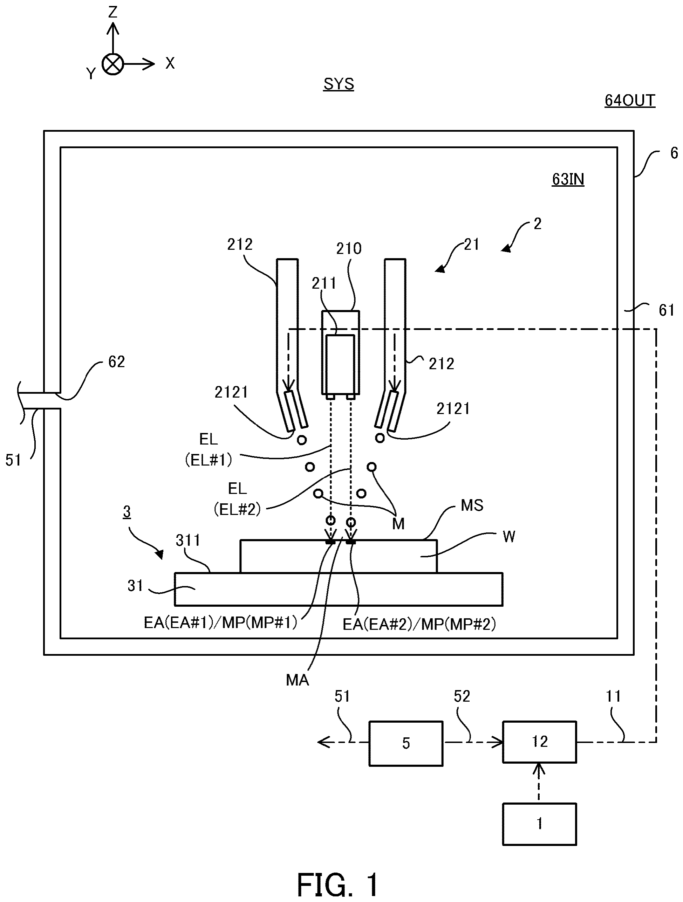

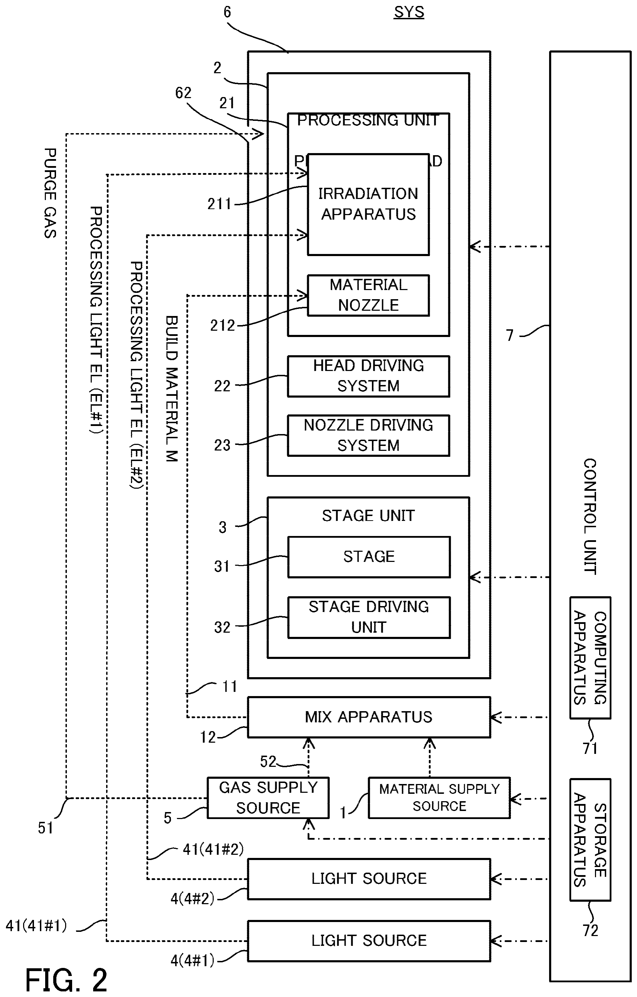

First, with reference to FIG. 1 to FIG. 2, a configuration of the processing system SYS in the present example embodiment will be described. FIG. 1 is a cross-sectional view that schematically illustrates the configuration of the processing system SYS in the present example embodiment. FIG. 2 is a system configuration diagram that illustrates a system configuration of the processing system SYS in the present example embodiment.

The processing system SYS is configured to perform the additive manufacturing on the workpiece W. The processing system SYS is configured to build the build object integrated with (alternatively, separatable from) the workpiece W by performing the additive manufacturing on the workpiece W. In this case, the additive manufacturing performed on the workpiece W corresponds to a processing for adding, to the workpiece W, the build object integrated with (alternatively, separatable from) the workpiece W. Note that the build object in the present example embodiment may mean any object built by the processing system SYS. For example, the processing system SYS is configured to build a three-dimensional structural object ST (namely, a three-dimensional object having a size in each of three-dimensional directions, a solid object, in other words, an object having a size in the X-axis direction, the Y-axis direction, and the Z-axis direction) as one example of the build object.

In a case where the workpiece W is a stage 31 described below, the processing system SYS is configured to perform the additive manufacturing on the stage 31. In a case where the workpiece W is a placed object that is an object placed on the stage 31, the processing system SYS is configured to perform the additive manufacturing on the placed object. The placed object placed on the stage 31 may be another three-dimensional structural object ST built by the processing system SYS (namely, an existing structural object). The workpiece W may be held by a holding tool that is allowed to be placed on the stage 31. Namely, the holding tool may hold the workpiece W, and the holding tool holding the workpiece W may be placed on the stage 31. The holding tool may be referred to as a jig, a holder, a holding member, an attachment member, a holding member, a mounting member, or a clamp. Note that FIG. 1 illustrates an example in which the workpiece W is the existing structural object placed on the stage 31. Moreover, in the below-described description, the example in which the workpiece W is the existing structural object placed on the stage 31 will be described.

The workpiece W may be an item that needs to be repaired having a missing part. In this case, the processing system SYS may perform a repair processing for repairing the item that needs to be repaired by performing the additive manufacturing for building the build object for filling in the missing part. Namely, the additive manufacturing performed by the processing system SYS may include the additive manufacturing for adding, to the workpiece W, the build object for filling in the missing part.

As described above, the processing system SYS is configured to perform the additive manufacturing based on the Laser Metal Deposition. Namely, it can be said that the processing system SYS is a 3D printer that builds an object by using an Additive layer manufacturing technique. Note that the Additive layer manufacturing technique may be referred to as a Rapid Prototyping, a Rapid Manufacturing, or an Additive Manufacturing. Note that the Laser Metal Deposition (LMD) may be referred to as a DED (Directed Energy Deposition).

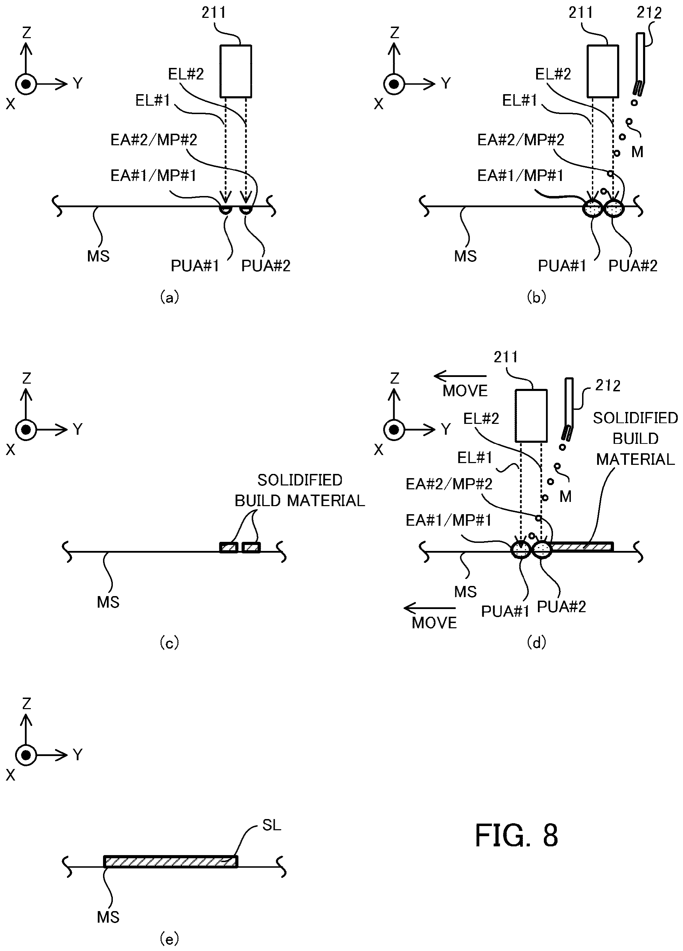

A processing system SYS that uses the Additive layer manufacturing technique builds the three-dimensional structural object ST in which a plurality of structural layers SL (see FIG. 8 below) are stacked by forming the plurality of structural layers SL in sequence. In this case, the processing system SYS first sets a surface of the workpiece W to be a build surface MS on which the build object is actually built, and builds a first structural layer SL on the build surface MS. Then, the processing system SYS sets a surface of the first structural layer SL to be a new build surface MS, and builds a second structural layer SL on the build surface MS. Then, the processing system SYS repeats the same operation to build the three-dimensional structural object ST in which the plurality of structural layers SL are stacked.

The processing system SYS performs the additive manufacturing by processing the build material M with the processing light EL that is an energy beam. The build material M is a material that is melted by an irradiation with the processing light EL having a predetermined intensity or more intensity. At least one of a metal material and a resin material is usable as the build material M, for example. At least one of a material including copper, a material including tungsten, and a material including stainless steel is one example of the metal material. However, another material that is different from the metal material and the resin material may be used as the build material M. The build material M is a powder-like material. Namely, the build material M is a powdery material. However, the build material M may not be the powdery material. For example, at least one of a wired-like build material and a gas-like build material may be used as the build material M.

The workpiece W may also be an object including a material that is melted by an irradiation with the processing light EL having a predetermined intensity or more intensity. The material of the workpiece W may be the same as or may be different from the build material M. At least one of a metal material and a resin material is usable as the material of the workpiece W, for example. At least one of a material including copper, a material including tungsten, and a material including stainless steel is one example of the metal material. However, another material that is different from the metal material and the resin material may be used as the material of the workpiece W.

In order to perform the additive manufacturing, the processing system SYS includes a material supply source 1, a processing unit 2, a stage unit 3, a light source 4, a gas supply source 5, and a control unit 7, as illustrated in FIG. 1 to FIG. 2. The processing unit 2 and the stage unit 3 may be contained in a chamber space 63IN in a housing 6. In this case, the processing system SYS may perform the additive manufacturing in the chamber space 63IN. Note that at least one of the processing unit 2 and the stage unit 3 may not be contained in the chamber space 63IN in the housing 6.

Note that the processing unit 2 may be referred to as a processing apparatus. An apparatus including the processing unit 2 and at least one of the material supply source 1, the stage unit 3, the light source 4, and the gas supply source 5 may be referred to as a processing apparatus. The control unit 7 may be referred to as a control apparatus.

The material supply source 1 supplies the build material M to the processing unit 2. The material supply source 1 supplies, to the processing unit 2, the build material M the amount of which is necessary for performing the additive manufacturing per unit time by supplying the build material M the amount of which is based on the necessary amount.

The processing unit 2 builds the build object by processing the build material M supplied from the material supply source 1. In order to build the build object, the processing unit 2 includes a processing head 21, a head driving system 22, and a nozzle driving system 23. Furthermore, the processing head 21 includes an irradiation apparatus 210 and a material nozzle 212. Note that the processing head 21 may be referred to as a processing apparatus.

The irradiation apparatus 210 is an apparatus for emitting the processing light EL. In order to emit the processing light EL, the irradiation apparatus 210 includes an irradiation optical system 211. The irradiation optical system 211 is an optical system for emitting the processing light EL. Specifically, the irradiation optical system 211 is optically connected to the light source 4, which emits (generates) the processing light EL, through a light transmitting member 41. At least one of an optical fiber and a light pipe is one example of the light transmitting member 41.

In the example illustrated in FIG. 1 to FIG. 2, the processing system SYS includes two light sources 4 (specifically, light sources 4#1 and 4#2), and the irradiation optical system 211 are optically connected to the light sources 4#1 and 4#2 through the light transmitting members 41#1 and 41#2, respectively. The irradiation optical systems 211 emits both the processing light EL transmitted from the light source 4#1 through the light transmitting member 41#1 and the processing light EL transmitted from the light source 4#2 through the light transmitting member 41#2. Note that the processing light EL generated by the light source 4#1 is referred to as "processing light EL#1", and the processing light EL generated by the light source 4#2 is referred to as "processing light EL#2", as necessary, in a case where it is necessary to distinguish the two processing lights EL emitted from the irradiation optical system 211 in the below-described description. On the other hand, in a case where it is not necessary to distinguish the two processing lights EL, the "processing light EL" may mean at least one of the processing light EL#1 and the processing light EL#2.

However, the processing system SYS may include a single light source 4 instead of the plurality of light sources 4. The irradiation optical system 211 may emit single processing light EL instead of emitting the plurality of processing lights EL.

The irradiation optical system 211 emits the processing lights EL in a downward direction (namely, toward a -Z side) from the irradiation optical system 211. In the example illustrated in FIG. 1, the irradiation optical system 211 emits the processing lights EL so that the processing lights EL propagate from the irradiation optical system 211 in an irradiation direction (in other words, a propagating direction) that is along the Z-axis. The stage 31 is positioned below the irradiation optical system 211. In a case where the workpiece W is placed on the stage 31, the irradiation optical system 211 irradiates the build surface MS with the emitted processing lights EL. Specifically, the irradiation optical system 211 may irradiate a target irradiation area (a target irradiation position) EA, which is set on the build surface MS as an area that is irradiated with the processing lights EL (typically, in which the lights are condensed), with the processing lights EL. Note that, the target irradiation area EA that is irradiated with the processing light EL#1 by the irradiation optical system 211 is referred to as a "target irradiation area EA#1" and the target irradiation area EA that is irradiated with the processing light EL#2 by the irradiation optical system 211 is referred to as a "target irradiation area EA#2", as necessary, in a case where it is necessary to distinguish two target irradiation areas EA that are irradiated with the two processing lights EL by the irradiation optical system 211, respectively, in the below-described description. Furthermore, a state of the irradiation optical system 211 is switchable between a state where the target irradiation areas EA are irradiated with the processing lights EL and a state where the target irradiation areas EA are not irradiated with the processing lights EL under the control of the control unit 7.

The irradiation optical system 211 may form a melt pool MP on the build surface MS by irradiating the build surface MS with the processing light EL. For example, the irradiation optical system 211 may form a melt pool MP#1 on the build surface MS by irradiating the build surface MS with the processing light EL#1. For example, the irradiation optical system 211 may form a melt pool MP#2 on the build surface MS by irradiating the build surface MS with the processing light EL#2. The melt pool MP#1 and the melt pool MP#2 may be integrated. Alternatively, the melt pool MP#1 and the melt pool MP#2 may be separated from each other. However, the melt pool MP#1 may not be formed on the build surface MS by the irradiation with the processing light EL#1. The melt pool MP#2 may not be formed on the build surface MS by the irradiation with the processing light EL#2.

As described in detail later, the irradiation optical system 211 may irradiate a material irradiation plane ES with the processing lights EL. The material irradiation plane ES is a virtual optical plane that is positioned between the irradiation optical system 211 and the build surface MS. The irradiation optical system 211 may melt the build material M passing through the material irradiation plane ES by irradiating the material irradiation plane ES with the processing light EL.

The material nozzle 212 supplies (for example, injects, jets, blows out or sprays) the build material M. Therefore, the material nozzle 212 may be referred to as a material supply member. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding.

The material nozzle 212 supplies the build material M in a downward direction (namely, toward the -Z side) from the material nozzle 212. The stage 31 is positioned below the material nozzle 212. In a case where the workpiece W is placed on the stage 31, the material nozzle 212 supplies the build material M toward the build surface MS.

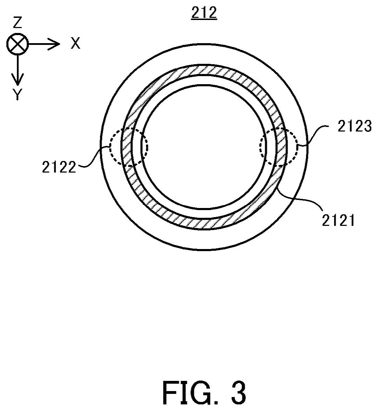

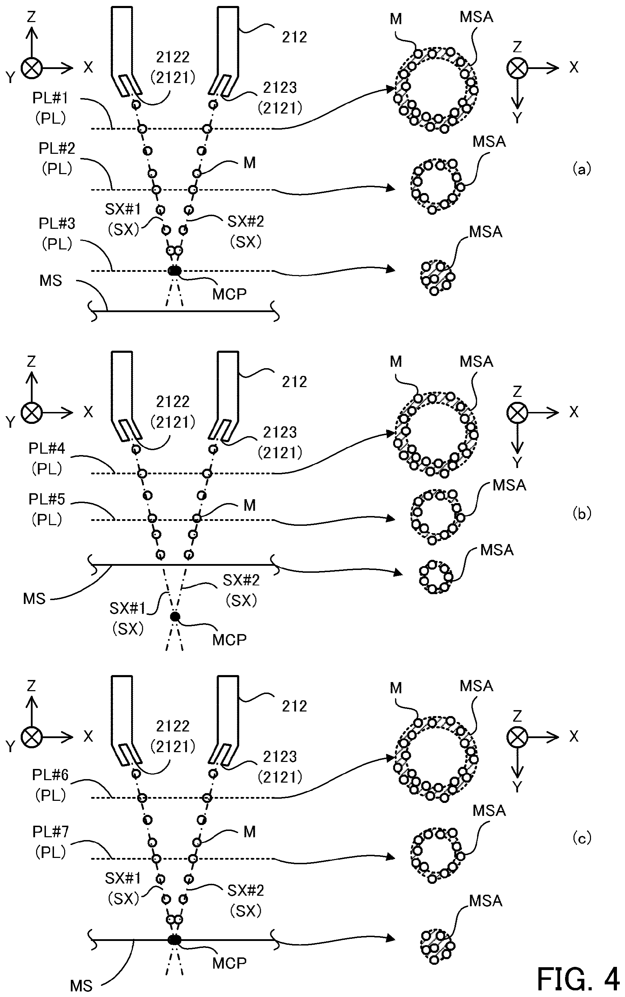

A material supply port 2121 is formed on a lower surface of the material nozzle 212. For example, as illustrated in FIG. 3 that is a plan view illustrating the lower surface of the material nozzle 212, a ring-shaped material supply port 2121 is formed on the lower surface of the material nozzle 212. In the example illustrated in FIG. 3, a shape of an outer edge of the material supply port 2121 along a plane intersecting the Z-axis is a circular shape, but it may be a shape that is different from the circular shape. For example, the shape of the outer edge of the material supply port 2121 along the plane intersecting the Z-axis may be an elliptical shape or may be a polygonal shape. Moreover, in the example illustrated in FIG. 3, the material supply port 2121 that is a continuous aperture having a ring shape or an annular shape is formed on the lower surface of the material nozzle 212. However, a plurality of material supply ports 2121, each of which is an arc-shaped, a circular-shaped, an elliptical-shaped, or a rectangular-shaped aperture, may be formed on the lower surface of the material nozzle 212. The material nozzle 212 supplies the build material M from the material supply ports 2121. In a case where the material supply port 2121 is formed in this manner, the material nozzle 212 may supply the build material M so that a shape of a material supply area MSA in a virtual material supply plane PL, which intersects the Z-axis between the material nozzle 212 and the build surface MS, becomes a shape corresponding to the material supply port 2121. For example, as illustrated in FIG. 4(a) that is a plan view illustrating one example of the material supply area MSA in the material supply plane PL, the material nozzle 212 may supply the build material M so that the shape of the material supply area MSA in each of material supply planes PL#1 and PL#2, each of which is one example of the material supply plane PL, is a ring shape corresponding to the ring-shaped material supply port 2121. For example, as illustrated in FIG. 4(b) that is a plan view illustrating one example of the material supply area MSA in the material supply plane PL, the material nozzle 212 may supply the build material M so that the shape of the material supply area MSA in each of material supply planes PL#4 and PL#5, each of which is one example of the material supply plane PL, is a ring shape corresponding to the ring-shaped material supply port 2121. For example, as illustrated in FIG. 4(c) that is a plan view illustrating one example of the material supply area MSA in the material supply plane PL, the material nozzle 212 may supply the build material M so that the shape of the material supply area MSA in each of material supply planes PL#6 and PL#7, each of which is one example of the material supply plane PL, is a ring shape corresponding to the ring-shaped material supply port 2121.

Note that the material supply area MSA is a virtual area to which the build material M is supplied in the virtual material supply plane PL intersecting the Z-axis between the material nozzle 212 and the build surface MS. Namely, the material supply area MSA is a virtual area through which the build material M supplied from the material nozzle 212 passes in the material supply plane PL. In this case, the material nozzle 212 may be considered to supply the build material M to the material supply area MSA. Note that the material supply plane PL may be referred to as a material passing plane because the build material M passes through the material supply plane PL.

However, in a case where the build material M is the powder-like material, there is a possibility that an amount (a supplied amount) of the build material M supplied to each position in the material supply plane PL varies with time. For example, there is a possibility that the build material M is supplied to one position in the material supply plane PL at a first time but the build material M is not supplied to the same one position in the material supply plane PL at a second time that is different from the first time. Namely, in a case where the build material M is the powder-like material, there is a possibility that an amount (a passed amount) of the build material M passing through each position in the material supply plane PL varies with time. For example, there is a possibility that the build material M passes through one position in the material supply plane PL at a first time but the build material M does not pass through the same one position in the material supply plane PL at a second time that is different from the first time. This is because it is unlikely that a trajectory of the powder-like build material M supplied from the material nozzle 212 is always the same. Therefore, in the present example embodiment, a virtual area may be used as the material supply area MSA, an outer edge (in other words, a border) of which is defined by a line connecting a plurality of positions that satisfy a condition that "an integrated value of the supplied amount (the passed amount) of the build material M per unit time in the material supply plane PL is equal to a predetermined ratio of a maximum value of the integrated value of the supplied amount (the passed amount) of the build material M per unit time in the material supply plane PL". 50% or a ratio that is larger than 50% is one example of the predetermined ratio. 60% or a ratio that is larger than 60% is one example of the predetermined ratio. 70% or a ratio that is larger than 70% is one example of the predetermined ratio. 80% or a ratio that is larger than 80% is one example of the predetermined ratio. 90% or a ratio that is larger than 90% is one example of the predetermined ratio.

Furthermore, as illustrated in FIG. 1, the material nozzle 212 may supply the build material M so that the build material M is supplied from the material supply port 2121 along a material supply direction that is inclined with respect to the Z-axis. In this case, the material nozzle 212 may supply the build material M so that the build material M is supplied from a plurality of locations of the material supply port 2121 along different material supply directions, respectively. Namely, the material nozzle 212 may supply the build material M so that the build material M is supplied from a plurality of supply positions in the material supply port 2121 along different material supply directions, respectively. As one example, as illustrated in FIG. 3 and FIG. 4(a) to FIG. 4(c), the material nozzle 212 may supply the build material M so that the build material M is supplied from a first supply port part 2122 of the material supply port 2121 along a first material supply direction that is inclined with respect to the Z-axis and the build material M is supplied from a second supply port part 2123, which is different from the first supply port part 2122, of the material supply port 2121 along a second material supply direction that is inclined with respect to the Z-axis and that is different from the first material supply direction. In this case, as illustrated in FIG. 4(a) to FIG. 4(c), typically, a size (for example, an outer diameter) of the material supply area MSA in the material supply plane PL changes in accordance with a distance between the material supply plane PL and the material nozzle 212 (especially, the material supply port 2121) along the Z-axis.

In the example illustrated in FIG. 4(a) to FIG. 4(c), the material nozzle 212 supplies the build material M so that the size of the material supply area MSA in the material supply plane PL is smaller as the distance between the material supply plane PL and the material nozzle 212 (especially the material supply port 2121) along the Z-axis is longer. Namely, the material nozzle 212 supplies the build material M so that the build material M supplied from the material nozzle 212 gradually converges. As one example, in the example illustrated in FIG. 4(a), the size (for example, the outer diameter) of the material supply area MSA in the material supply plane PL#2 is smaller than the size (for example, the outer diameter) of the material supply area MSA in the material supply plane PL#1 that is positioned between the material supply plane PL#2 and the material nozzle 212 (namely, that is closer to the material nozzle 212 than the material supply plane PL#2 is).

In a case where the build material M is supplied from the plurality of locations of material supply ports 2121 along different directions, respectively, the material nozzle 212 may supply the build material M so that a plurality of virtual material supply axes SX, which extend along the plurality of material supply directions, respectively, intersect each other. For example, as illustrated in FIG. 4(a) to FIG. 4(c), the material nozzle 212 may supply the build material M so that a virtual material supply axis SX#1, which extends along the material supply direction of the build material M supplied from the first supply port part 2122 of the material supply port 2121 intersects a virtual material supply axis SX#2, which extends along the material supply direction of the build material M supplied from the second supply port part 2123 of the material supply port 2121

As one example, as illustrated in FIG. 4(a), the material nozzle 212 may supply the build material M so that the plurality of virtual material supply axes SX, which extend along the plurality of material supply directions, respectively, intersect each other above the build surface MS. Namely, the material nozzle 212 may supply the build material M so that the plurality of virtual material supply axes SX, which extend along the plurality of material supply directions, respectively, intersect each other in a space between the build surface MS and the material nozzle 212. In this case, the build materials M supplied from the plurality of locations of the material supply port 2121 along the different material supply directions, respectively, may intersect each other above the build surface MS. Namely, the build materials M supplied from the plurality of locations of the material supply port 2121 along the different material supply directions, respectively, may intersect each other in the space between the build surface MS and the material nozzle 212. In this case, as illustrated in FIG. 4(a), the shape of the material supply area MSA may be a shape that is different from the ring shape in the material supply plane PL (in the example illustrated in FIG. 4(a), the material supply plane PL#3) that is positioned at a position at which the build materials M supplied from the plurality of locations of the material supply port 2121 along the different material supply directions, respectively, intersect each other. For example, as illustrated in FIG. 4(a), the shape of the material supply area MSA may be a circular shape or a shape that may be regarded as the circular shape.

As another example, as illustrated in FIG. 4(b), the material nozzle 212 may supply the build material M so that the plurality of virtual material supply axes SX, which extend along the plurality of material supply directions, respectively, intersect each other below the build surface MS. In this case, the build materials M supplied from the plurality of locations of the material supply port 2121 along the different material supply directions, respectively, may not intersect each other. The build materials M supplied from the plurality of locations of the material supply port 2121 along the different material supply directions, respectively, may reach the build surface MS before intersecting each other. In this case, as illustrated in FIG. 4(b), the shape of the material supply area MSA may be the ring shape in the build surface MS that may be regarded as the material supply plane PL. However, the shape of the material supply area MSA may be a shape that is different from the ring shape in the build surface MS that may be regarded as the material supply plane PL. For example, the shape of the material supply area MSA may be a circular shape or a shape that may be regarded as the circular shape in the build surface MS.

As another example, as illustrated in FIG. 4(c), the material nozzle 212 may supply the build material M so that the plurality of virtual material supply axes SX, which extend along the plurality of material supply directions, respectively, intersect each other on the build surface MS. In this case, the build materials M supplied from the plurality of locations of the material supply port 2121 along the different material supply directions, respectively, may intersect each other on the build surface MS. In this case, as illustrated in FIG. 4(c), the shape of the material supply area MSA may be a shape that is different from the ring shape in the build surface MS that may be regarded as the material supply plane PL. For example, the shape of the material supply area MSA may be a circular shape or a shape that may be regarded as the circular shape in the build surface MS.

In the below-described description, a position (a point) at which the plurality of virtual material supply axes SX, which extend along the plurality of material supply directions, respectively, intersect each other is referred to as a material control point MCP for convenience of description. Note that the material control point MCP may be referred to as a powder control point in a case where the build material M is the powdery material. In this case, in the example illustrated in FIG. 4(a), it can be said that the material nozzle 212 supplies the build material M in a state where the material control point MCP is positioned above the build surface MS. In the example illustrated in FIG. 4(a), it can be said that the material nozzle 212 supplies the build material M in a state where the material control point MCP is positioned in the space between the build surface MS and the material nozzle 212. On the other hand, in the example illustrated in FIG. 4(b), it can be said that the material nozzle 212 supplies the build material M in a state where the material control point MCP is positioned below the build surface MS. In other words, in the example illustrated in FIG. 4(b), it can be said that the material nozzle 212 supplies the build material M in a state where the material control point MCP is positioned in the workpiece W, below the workpiece W, in the structural layer SL that has been already built, and / or below the structural layer SL that has been already built. On the other hand, in the example illustrated in FIG. 4(c), it can be said that the material nozzle 212 supplies the build material M in a state where the material control point MCP is positioned on the build surface MS.

The material supply direction from the material nozzle 212 is typically a direction that is specific to the material nozzle 212. Therefore, the material control point MCP may be regarded as a point that is specific to the material nozzle 212. Namely, the material control point MCP may be regarded as a point that is determined with respect to the material nozzle 212. Note that a position (a point) that is different from the position (the point) at which the plurality of virtual material supply axes SX intersect each other may be used as the material control point MCP as long as the material control point MCP is the point that is determined with respect to the material nozzle 212. Note that a positional relationship between the material control point MCP and the material nozzle 212 may be considered to be fixed in a case where the material control point MCP is determined with respect to the material nozzle 212.

Since the plurality of virtual material supply axes SX, which extend along the plurality of material supply directions, respectively, intersect each other at the material control point MCP, the build materials M supplied from the material nozzle 212 along the plurality of different material supply directions are supplied to the material control point MCP in a situation where there is no object (for example, the workpiece W including the build surface MS on its surface, the same applies in the below-described description) blocking the build material M. Therefore, the material control point MCP may be regarded as a point to which the build materials M supplied from the material nozzle 212 along the plurality of different material supply directions are supplied in a situation where there is no object blocking the build material M. The material control point MCP may be regarded as a point that is positioned in a space to which the material nozzle 212 can supply the build material M in a situation where there is no object blocking the build material M.

Note that the material control point MCP may be positioned in a space occupied by the object (typically, the workpiece W) blocking the build material M, in practice, in a situation where there is the object (for example, the build surface MS) blocking the build material M, in a case where the material control point MCP is positioned below the build surface MS as described above,. The material control point MCP may be positioned in the object (typically, the workpiece W) blocking the build material M.

Since the plurality of virtual material supply axes SX, which extend along the plurality of material supply directions, respectively, intersect each other at the material control point MCP, the build materials M supplied from the material nozzle 212 along the plurality of different material supply directions intersect each other at the material control point MCP in a situation where there is no object blocking the build material M. Therefore, the material control point MCP may be regarded as a point at which the build materials M supplied from the material nozzle 212 along the plurality of different material supply directions intersect each other in a situation where there is no object blocking the build material M.

Since the plurality of virtual material supply axes SX, which extend along the plurality of material supply directions, respectively, intersect each other at the material control point MCP, the build materials M supplied from the material nozzle 212 along the plurality of different material supply directions converge at the material control point MCP in a situation where there is no object blocking the build material M. Therefore, the material control point MCP may be regarded as a point at which the build materials M supplied from the material nozzle 212 along the plurality of different material supply directions converge in a situation where there is no object blocking the build material M.

Since the plurality of virtual material supply axes SX, which extend along the plurality of material supply directions, respectively, intersect each other at the material control point MCP, the build materials M supplied from the material nozzle 212 along the plurality of different material supply directions concentrate at the material control point MCP in a situation where there is no object blocking the build material M. Therefore, the material control point MCP may be regarded as a point at which the build materials M supplied from the material nozzle 212 along the plurality of different material supply directions concentrate in a situation where there is no object blocking the build material M.

Since the build materials M supplied from the material nozzle 212 along the plurality of different material supply directions intersect each other (converge or concentrate) at the material control point MCP, a density of the build material M in the material supply plane PL positioned at a position that is the same as that of the material control point MCP in the Z-axis direction is higher than a density of the build material M in the material supply plane PL positioned at a position that is distant from the material control point MCP in the Z-axis direction. Typically, the density of the build material M is the highest in the material supply plane PL whose position is the same as the material control point MCP in the Z-axis direction. Therefore, the material control point MCP may be regarded as a point whose position in the Z-axis direction is the same as that of one material supply plane PL that satisfies a condition that "the density of the build material M in the material supply plane PL is the highest."

Since the plurality of virtual material supply axes SX, which extend along the plurality of material supply directions, respectively, intersect each other at the material control point MCP, the shape of the material supply area MSA is the circular shape or the shape that may be regarded as the circular shape at a position of the material control point MCP as described with reference to FIG. 4(a) to FIG. 4(c). In this case, the material control point MCP may be regarded as a point whose position in the Z-axis direction is the same as that of one material supply plane PL that satisfies a condition that "the shape of the material supply area MSA in the material supply plane PL is the circular shape or the shape that may be regarded as the circular shape (namely, the shape that is different from the ring shape)."

The processing light EL emitted from the irradiation optical system 211 may propagate in a space that is surrounded at least partially by the build material M supplied from the material nozzle 212. In this case, the build surface MS may be irradiated with the processing light EL propagating in the space that is surrounded at least partially by the build material M supplied from the material nozzle 212. For example, in the example illustrated in FIG. 4(a) to FIG. 4(c), the processing light EL emitted from the irradiation optical system 211 may propagate in a conical-shaped space whose outer edge is formed by the build material M supplied from the material nozzle 212. For example, in the example illustrated in FIG. 4(a) to FIG. 4(c), the processing light EL emitted from the irradiation optical system 211 may propagate in a conical-shaped space whose outer edge is formed by the build material M supplied from the material nozzle 212.

The processing light EL emitted from the irradiation optical system 211 may propagate in a space between the build materials M supplied from the plurality of locations of the material nozzle 212. In this case, the build surface MS may be irradiated with the processing light EL propagating in the space between the build materials M supplied from the plurality of locations of the material nozzle 212. For example, in the examples illustrated in FIG. 4(a) to FIG. 4(c), the processing light EL emitted from the irradiation optical system 211 may propagate in a space between the build material M supplied from the first supply port part 2122, which is a part of the material supply port 2121, and the build material M supplied from the second supply port part 2123, which is another part of the material supply port 2121. In other words, the processing light EL emitted from the irradiation optical system 211 may propagate in a conical-shaped or a frustum-shaped space whose ridge line is formed by the plurality of material supply axes SX extending along the plurality of material supply directions, respectively.

Again in FIG. 1 and FIG. 2, the head driving system 22 moves the processing head 21 under the control of the control unit 7. Namely, the head driving system 22 moves the irradiation optical system 211 and the material nozzle 212 under the control of the control unit 7. The head driving system 22 moves the processing head 21 along at least one of the X-axis direction, the Y-axis direction, the Z-axis direction, the θX direction, the θY direction, and the θZ direction, for example. Note that an operation for moving the processing head 21 along at least one of the θX direction, the θY direction, and the θZ direction may be considered to be equivalent to an operation for rotating the processing head 21 around at least one of a rotational axis along the X-axis, a rotational axis along the Y-axis, and a rotational axis along the Z-axis.

When the head driving system 22 moves the processing head 21, a relative positional relationship between the processing head 21 and each of the stage 31 and the workpiece W placed on the stage 31 changes. As a result, a positional relationship between the irradiation optical system 211 of the processing head 21 and each of the stage 31 and the workpiece W changes. Therefore, the head driving system 22 may be considered to serve as a position apparatus that is configured to change the positional relationship between the irradiation optical system 211 and each of the stage 31 and the workpiece W. Furthermore, when the positional relationship between the irradiation optical system 211 and each of the stage 31 and the workpiece W changes, a relative positional relationship between the workpiece W and each of the target irradiation areas EA#1 and EA#2 and a target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS on which the additive manufacturing is performed). In this case, the head driving system 22 may be considered to move the processing head 21 so that each of the target irradiation areas EA#1 and EA#2 and the target supply area MA moves on the build surface MS.

The nozzle driving system 23 moves the material nozzle 212. On the other hand, the nozzle driving system 23 does not move the irradiation optical system 211. Namely, the nozzle driving system 23 moves the material nozzle 212 relative to the irradiation optical system 211. The nozzle driving system 23 moves the material nozzle 212 separately from the irradiation optical system 211. The nozzle driving system 23 moves the material nozzle 212 independently of the irradiation optical system 211. Therefore, the nozzle driving system 23 is different from the head driving system 22, which moves the irradiation optical system 211 and the material nozzle 212 simultaneously, in that it is configured to move the material nozzle 212 without moving the irradiation optical system 211.

The nozzle driving system 23 moves the material nozzle 212 along at least one of the X-axis direction, the Y-axis direction, the Z-axis direction, the θX direction, the θY direction, and the θZ direction. In the present example embodiment, the nozzle driving system 23 moves the material nozzle 212 along the Z-axis.

When the nozzle driving system 23 moves the material nozzle 212 along the Z-axis, the material control point MCP, which is determined with respect to the material nozzle 212, moves. Therefore, the nozzle driving system 23 may be considered to control the material control point MCP, which is determined with respect to the material nozzle 212, by moving the material nozzle 212. The nozzle driving system 23 may be considered to control the position of the material control point MCP, which is determined with respect to the material nozzle 212, by moving the material nozzle 212.

As one example, when the nozzle driving system 23 moves the material nozzle 212 along the Z-axis, a positional relationship between the build surface MS and the material control point MCP in the Z-axis direction changes. Therefore, the nozzle driving system 23 may be considered to change the positional relationship (especially, the positional relationship in the Z-axis direction) between the build surface MS and the material control point MCP by moving the material nozzle 212. The nozzle driving system 23 may be considered to change a distance (especially, a distance in the Z-axis direction) between the build surface MS and the material control point MCP by moving the material nozzle 212.

Moreover, when the head driving system 22 moves the processing head 21, the relative positional relationship between the material control point MCP and each of the stage 31 and the workpiece W placed on the stage 31 change even in a case where the nozzle driving system 23 does not move the material nozzle 212. Namely, the positional relationship between the build surface MS and the material control point MCP changes. This is because a positional relationship between the material control point MCP and the material nozzle 212, which moves due to the movement of the processing head 21, is fixed. Therefore, the head driving system 22 may be considered to change the positional relationship between the build surface MS and the material control point MCP. For example, in a case where the head driving system 22 moves the processing head 21 along the Z-axis direction, the head driving system 22 may be considered to change the distance (especially, the distance in the Z-axis direction) between the build surface MS and the material control point MCP.

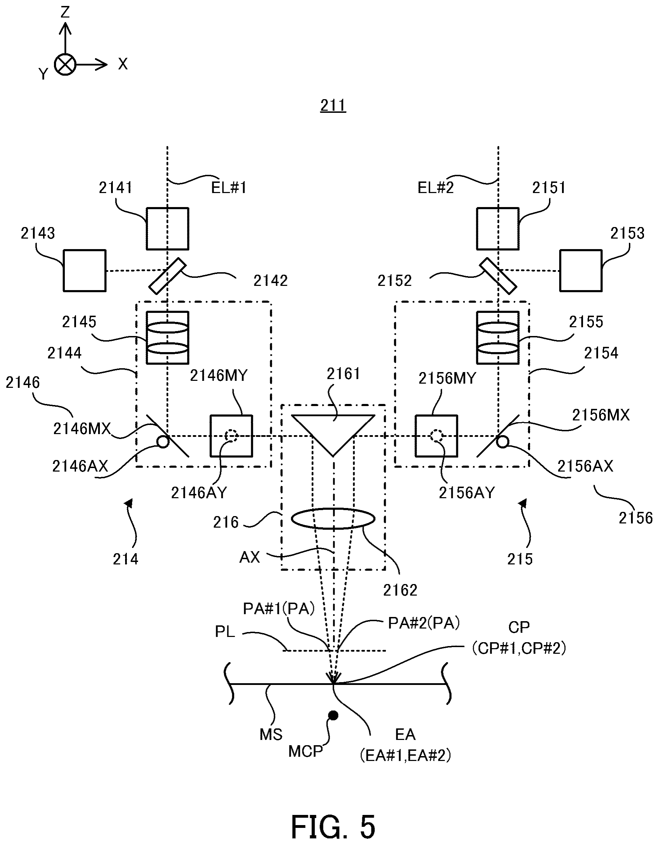

As another example, when the nozzle driving system 23 moves the material nozzle 212 along the Z-axis, a positional relationship between the light concentration position CP of the processing light EL (see FIG. 5) and the material control point MCP in the Z-axis direction changes. Therefore, the nozzle driving system 23 may be considered to change the positional relationship (especially, the positional relationship in the Z-axis direction) between the light concentration position CP of the processing light EL and the material control point MCP by moving the material nozzle 212. The nozzle driving system 23 may be considered to change a distance (especially, a distance in the Z-axis direction) between the light concentration position CP of the processing light EL and the material control point MCP by moving the material nozzle 212. Note that the light concentration position CP of the processing light EL will be described in detail later with reference to FIG. 5.

The stage unit 3 includes the stage 31 and a stage driving system 32.

The workpiece W is placed on the stage 31. Specifically, the workpiece W is placed on a stage placement surface 311 that is one surface (for example, a surface facing toward the +Z side) of the stage 31. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. Moreover, the workpiece W may be attached to a holding tool, and the holding tool to which the workpiece W is attached may be placed on the stage 31. The above-described irradiation optical system 211 emits each of the processing lights EL#1 and EL#2 in at least a part of a period during which the workpiece W is placed on the stage 31. Furthermore, the above-described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction, and the θZ direction. Note that an operation for moving the stage 31 along at least one of the θX direction, the θY direction, and the θZ direction may be considered to be equivalent to an operation for rotating the stage 31 around at least one of a rotational axis along the X-axis (namely, an A-axis), a rotational axis along the Y-axis (namely, a B-axis), and a rotational axis along the Z-axis (namely, a C-axis).

When the stage driving system 32 moves the stage 31, the relative positional relationship between the processing head 21 and each of the stage 31 and the workpieces W changes. As a result, the positional relationship between the irradiation optical system 211 of the processing head 21 and each of the stage 31 and the workpiece W changes. Therefore, the stage driving system 32 may be considered to serve as a position change apparatus that is configured to change the positional relationship between the irradiation optical system 211 and each of the stage 31 and the workpiece W, as with the head driving system 22. Furthermore, when the positional relationship between the irradiation optical system 211 and each of the stage 31 and the workpiece W changes, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS.

Moreover, when the stage driving system 32 moves the stage 31, the relative positional relationship between the material control point MCP and each of the stage 31 and the workpiece W placed on the stage 31 change even in a case where the nozzle driving system 23 does not move the material nozzle 212. Namely, the positional relationship between the build surface MS and the material control point MCP changes. This is because the positional relationship between the material control point MCP and the material nozzle 212 is fixed. Therefore, the stage driving system 32 may be considered to change the positional relationship between the build surface MS and the material control point MCP. For example, in a case where the stage driving system 32 moves the stage 31 along the Z-axis direction, the stage driving system 32 may be considered to change the distance (especially, the distance in the Z-axis direction) between the build surface MS and the material control point MCP.

The light source 4 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the processing light EL may not be the laser light. The light source 4 may include any light source (for example, at least one of a LED (Light Emitting Diode), a discharge lamp and the like).

As described above, the processing system SYS includes the plurality of light sources 4 (specifically, the light sources 4#1 and 4#2). In this case, a characteristic of the processing light EL#1 emitted by the light source 4#1 may be the same as a characteristic of the processing light EL#2 emitted by the light source 4#2. For example, a wavelength of the processing light EL#1 (typically, a peak wavelength that is a wavelength at which an intensity is maximum in a wavelength band of the processing light EL#1) may be the same as the wavelength (typically, a peak wavelength) of the processing light EL#2. For example, the wavelength band (typically, a range of wavelengths at which the intensity is equal to or higher than a certain value) of the processing light EL#1 may be the same as the wavelength band of the processing light EL#2. For example, an intensity of the processing light EL#1 may be the same as an intensity of the processing light EL#2. For example, an absorption rate of the workpiece W (alternatively, an object whose surface is the build surface MS, the same applies in the below-described description) to the processing light EL#1 may be the same as an absorption rate of the workpiece W to the processing light EL#2. Especially, the absorption rate of the workpiece W to the peak wavelength of the processing light EL#1 may be the same as the absorption rate of the workpiece W to the peak wavelength of the processing light EL#2. Alternatively, the characteristic of the processing light EL#1 emitted by the light source 4#1 may be different from the characteristic of the processing light EL#2 emitted by the light source 4#2. For example, the wavelength (typically, the peak wavelength) of the processing light EL#1 may be different from the wavelength (typically, the peak wavelength) of the processing light EL#2. For example, the wavelength band of the processing light EL#1 may be different from the wavelength band of the processing light EL#2. For example, the intensity of the processing light EL#1 may be different from the intensity of the processing light EL#2. For example, the absorption rate of the workpiece W to the processing light EL#1 may be different from the absorption rate of the workpiece W to the processing light EL#2. Especially, the absorption rate of the workpiece W to the peak wavelength of the processing light EL#1 may be different from the absorption rate of the workpiece W to the peak wavelength of the processing light EL#2.

Note that an example in which the processing system SYS includes the plurality of light sources 4 is described in the present example embodiment. However, the processing system SYS may not include the plurality of light sources 4. The processing system SYS may include a single light source 4. As one example, the processing system may include, as the single light source, a light source that emits (supplies) light having a wide wavelength band or a plurality of wavelengths. In this case, the processing system SYS may generate the processing light EL#1 and the processing light EL#2 whose wavelengths are different from each other by performing a wavelength division on the light emitted from this light source. Moreover, in this case, the processing system SYS may perform an amplitude-division or may perform a polarization-division on the light emitted from this light source.

The gas supply source 5 is a source of the purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from a non-illustrated outlet port formed in the wall member 61. Note that the gas supply source 5 may be a tank that stores the inert gas such as the Nitrogen gas and the Argon gas. In a case where the purge gas is the Nitrogen gas, the gas supply source 5 may be a Nitrogen gas generation apparatus that generates the Nitrogen gas by using air as material.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control unit 7 controls an operation of the processing system SYS. For example, the control unit 7 may control the processing unit 2 (for example, at least one of the processing head 21 and the head driving system 22) of the processing system SYS to perform the additive manufacturing on the workpiece W. For example, the control unit 7 may control the stage unit 3 (for example, stage driving system 32) of the processing system SYS to perform the additive manufacturing on the workpiece W. For example, the control unit 7 may control the material supply source 1 of the processing system SYS to perform the additive manufacturing on the workpiece W. For example, the control unit 7 may control the light source 4 of the processing system SYS to perform the additive manufacturing on the workpiece W. For example, the control unit 7 may control the gas supply source 5 of the processing system SYS to perform the additive manufacturing on the workpiece W.

The control unit 7 may include a computing apparatus 71 and a storage apparatus 72. The computing apparatus 71 may include at least one of a CPU (Central Processing unit) and a GPU (Graphic Processing unit), for example. The storage apparatus 72 may include a memory. The control unit 7 serves as an apparatus for controlling the operation of the processing system SYS by means of the computing apparatus 71 executing a computer program. The computer program is a computer program that allows the computing apparatus 71 to execute (namely, to perform) a below-described operation that should be executed by the control unit 7. Namely, the computer program is a computer program that allows the control unit 7 to function so as to make the processing system SYS execute the below-described operation. The computer program executed by the computing apparatus 71 may be recorded in the storage apparatus 72 (namely, a recording medium) of the control unit 7, or may be recorded in any recording medium (for example, a hard disk or a semiconductor memory) that is built in the control unit 7 or that is attachable to the control unit 7. Alternatively, the computing apparatus 71 may download the computer program that should be executed from an apparatus external to the control unit 7 through a network interface. Note that the storage apparatus 72 may be referred to as a recording apparatus.

The control unit 7 may control an emitting aspect of the processing light EL by the irradiation optical system 211. The emitting aspect may include at least one of the intensity of the processing light EL and emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control unit 7 may control a movement aspect of the processing head 21 by the head driving system 22. The control unit 7 may control a movement aspect of the stage 31 by the stage driving system 32. The movement aspect may include at least one of a movement distance, a movement speed, a movement direction, and a movement timing (a movement period), for example. Moreover, the control unit 7 may control a supply aspect of the build material M by the material nozzle 212. The supply aspect may include at least one of the supplied amount (especially, the supplied amount per unit time) and a supply timing (a supply period).

The control unit 7 may not be positioned in the processing system SYS. For example, the control unit 7 may be positioned at the outside of the processing system SYS as a server or the like. In this case, the control unit 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 7 and the processing system SYS may be configured to transmit and receive various information through the network. Moreover, the control unit 7 may be configured to transmit information such as a command and a control parameter to the processing system SYS through the network. The processing system SYS may include a reception apparatus that is configured to receive the information such as the command and the control parameter from the control unit 7 through the network. The processing system SYS may include a transmission apparatus that is configured to transmit the information such as the command and the control parameter to the control unit 7 through the network (namely, an output apparatus that is configured to output information to the control unit 7). Alternatively, a first control apparatus that is configured to perform a part of the arithmetic processing performed by the control unit 7 may be positioned in the processing system SYS and a second control apparatus that is configured to perform another part of the arithmetic processing performed by the control unit 7 may be positioned at the outside of the processing system SYS.

An arithmetic model that is buildable by machine learning may be implemented in the control unit 7 by the computing apparatus 71 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 7 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control unit 7. Moreover, the arithmetic model implemented in the control unit 7 may be updated by online machine learning on the control unit 7. Alternatively, the control unit 7 may control the operation of the processing system SYS by using the arithmetic model implemented in an apparatus external to the control unit 7 (namely, an apparatus external to the processing system SYS), in addition to or instead of the arithmetic model implemented on the control unit 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 7. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions captured in the computer program may be realized by a logical processing block that is realized in the control unit 7 by means of the control unit 7 (namely, a computer) executing the computer program, may be realized by a hardware such as a predetermined gate array (a FPGA, an ASIC) of the control unit 7, or may be realized in a form in which the logical process block and a partial hardware module that realizes a partial element of the hardware are combined.

### (1-2) Configuration of Irradiation Optical System 211

Next, with reference to FIG. 5, a configuration of irradiation optical system 211 will be described with reference to FIG. 5. FIG. 5 is a cross-sectional view that illustrates the configuration of irradiation optical system 211.

As illustrated in FIG. 5, the irradiation optical system 211 includes a first optical system 214, a second optical system 215, and the third optical system 216. The first optical system 214 is an optical system into which the processing light EL#1, which has been emitted from the light source 4#1, enters. The first optical system 214 is an optical system that emits the processing light EL#1, which has been emitted from the light source 4#1, toward the third optical system 216. The second optical system 215 is an optical system into which the processing light EL#2, which has been emitted from the light source 4#2, enters. The second optical system 215 is an optical system that emits the processing light EL#2, which has been emitted from the light source 4#2, toward the third optical system 216. The third optical system 216 is an optical system into which the processing light EL#1, which has been emitted from the first optical system 214, and the processing light EL#2, which has been emitted from the second optical system 215, enter. The third optical system 216 is an optical system that emits the processing light EL#1, which has been emitted from the first optical system 214, and the processing light EL#2, which has been emitted from the second optical system 215, toward the build surface MS. Next, the first optical system 214, the second optical system 215, and the third optical system 216 will be described in sequence.

The first optical system 214 includes a collimator lens 2141, a parallel plate 2142, a power meter 2143, and a Galvano scanner 2144. The Galvano scanner 2144 includes a focus control optical system 2145 and a Galvano mirror 2146. However, the first optical system 214 may not include at least one of the collimator lens 2141, the parallel plate 2142, the power meter 2143, and the Galvano scanner 2144. The Galvano scanner 2144 may not include at least one of the focus control optical system 2145 and the Galvano mirror 2146.

The processing light EL#1 that has been emitted from the light source 4#1 enters the collimator lens 2141. The collimator lens 2141 converts the processing light EL#1 that has entered the collimator lens 2141 into collimated light. Note that the first optical system 214 may not include the collimator lens 2141 in a case where the processing light EL#1 emitted from the light source 4#1 is collimated light (namely, the processing light EL#1 that is the collimated light enters the first optical system 214). The processing light EL#1 that has been converted to the collimated light by the collimator lens 2141 enters the parallel plate 2142. A part of the processing light EL#1 that has entered the parallel plate 2142 passes through the parallel plate 2142. Another part of the processing light EL#1 that has entered the parallel plate 2142 is reflected by the parallel plate 2142.

The processing light EL#1 that has passed through the parallel plate 2142 enters the Galvano scanner 2144. Specifically, the processing light EL#1 that has passed through the parallel plate 2142 enters the focus control optical system 2145 of the Galvano scanner 2144.

The focus control optical system 2145 is an optical member that is configured to change the light concentration position CP of the processing light EL#1 (in the below-described description, it is referred to as a "light concentration position CP#1"). In the present example embodiment, the light concentration position CP#1 of the processing light EL#1 may mean a condensed position at which the processing light EL#1 is condensed. The light concentration position CP#1 of the processing light EL#1 may mean a converged position at which the processing light EL#1 is most converged in the irradiation direction (the propagating direction) of the processing light EL#1.

Specifically, the focus control optical system 2145 is configured to change the light concentration position CP#1 of the processing light EL#1 along the irradiation direction of the processing light EL#1 emitted from the irradiation optical system 211. In the example illustrated in FIG. 5, the irradiation direction of the processing light EL#1 emitted from the irradiation optical system 211 is a direction whose main component is the Z-axis direction. In this case, the focus control optical system 2145 is configured to change the light concentration position CP#1 of the processing light EL#1 along the Z-axis direction. Moreover, since the irradiation optical system 211 irradiates the build surface MS with the processing light EL from a position above the workpiece W, the irradiation direction of the processing light EL#1 is a direction that intersects the build surface MS (for example, the surface of the workpiece W or the structural layer SL). Therefore, the focus control optical system 2145 may be considered to be configured to change the light concentration position CP#1 of the processing light EL#1 along the direction that intersects the build surface MS (for example, the surface of the workpiece W or the structural layer SL). The focus control optical system 2145 may be considered to be configured to change the light concentration position CP#1 of the processing light EL#1 along a direction of an optical axis AX of the irradiation optical system 211 (typically, the third optical system 216).

Note that the irradiation direction of the processing light EL#1 may mean an irradiation direction of the processing light EL#1 emitted from the third optical system 216. In this case, the irradiation direction of the processing light EL#1 may be the same as a direction along an optical axis of the third optical system 216. The irradiation direction of the processing light EL#1 may be the same as a direction along an optical axis of a terminal optical member, which is positioned at a position closest to the build surface MS, among optical members of the third optical system 216. The terminal optical member may be a fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

Note that the irradiation optical system 211 may not include the third optical system 216. In a case where the irradiation optical system 211 does not include the third optical system 216, the terminal optical member may be an optical member (a Y-scanning mirror 2146MY), which is positioned at a position closest to the build surface MS, among the plurality of optical members of the first optical system 214. In a case where the irradiation optical system 211 does not include the third optical system 216, the terminal optical member may be an optical member (a Y-scanning mirror 2156MY), which is positioned at a position closest to the build surface MS, among the plurality of optical members of the second optical system 215.

The focus control optical system 2145 may include a plurality of optical members (for example, a plurality of lenses) that are aligned along the irradiation direction of the processing light EL#1, for example. In this case, the focus control optical system 2145 may change the light concentration position CP#1 of the processing light EL#1 by moving at least one of the plurality of optical members along its optical axis direction.

When the focus control optical system 2145 changes the light concentration position CP#1 of the processing light EL#1, a positional relationship between the light concentration position CP#1 of the processing light EL#1 and the build surface MS changes. Especially, a positional relationship between the light concentration position CP#1 of the processing light EL#1 and the build surface MS in the irradiation direction of the processing light EL#1 changes along the irradiation direction (namely, the Z-axis direction). Therefore, the focus control optical system 2145 may be considered to change the positional relationship (especially, the positional relationship in the Z-axis direction) between the light concentration position CP#1 of the processing light EL#1 and the build surface MS by changing the light concentration position CP#1 of the processing light EL#1. The focus control optical system 2145 may be considered to change a distance (especially, a distance in the Z-axis direction) between the light concentration position CP#1 of the processing light EL#1 and the build surface MS by changing the light concentration position CP#1 of the processing light EL#1.

When the focus control optical system 2145 changes the light concentration position CP#1 of the processing light EL#1, a positional relationship between the light concentration position CP#1 of the processing light EL#1 and the material control point MCP changes. Especially, a positional relationship between the light concentration position CP#1 of the processing light EL#1 and the material control point MCP in the irradiation direction of the processing light EL#1 (namely, in the Z-axis direction) changes. Therefore, the focus control optical system 2145 may be considered to change the positional relationship (especially, the positional relationship in the Z-axis direction) between the light concentration position CP#1 of the processing light EL#1 and the material control point MCP by changing the light concentration position CP#1 of the processing light EL#1. The focus control optical system 2145 may be considered to change a distance (especially, a distance in the Z-axis direction) between the light concentration position CP#1 of the processing light EL#1 and the material control point MCP by changing the light concentration position CP#1 of the processing light EL#1. Note that FIG. 5 illustrates an example in which the material control point MCP is positioned below the build surface MS, however, the material control point MCP may be positioned above the build surface MS or on the build surface MS as described above.

Note that the Galvano scanner 2144 may not include the focus control optical system 2145 as described above. Even in this case, when the positional relationship between the irradiation optical system 211 and the build surface MS in the irradiation direction of the processing light EL#1 changes, the positional relationship between the light concentration position CP#1 of the processing light EL#1 and the build surface MS in the irradiation direction of the processing light EL#1 changes. Therefore, even in a case where the Galvano scanner 2144 does not include the focus control optical system 2145, the processing system SYS may change the positional relationship between the light concentration position CP#1 of the processing light EL#1 and the build surface MS in the irradiation direction of the processing light EL#1. For example, the processing system SYS may change the positional relationship between the light concentration position CP#1 of the processing light EL#1 and the build surface MS in the irradiation direction of the processing light EL#1 by using the head driving system 22 to move the processing head 21 along the irradiation direction of the processing light EL#1. For example, the processing system SYS may change the positional relationship between the light concentration position CP#1 of the processing light EL#1 and the build surface MS in the irradiation direction of the processing light EL#1 by using the stage driving system 32 to move the stage 31 along the irradiation direction of the processing light EL#1. Note that the processing system SYS may accordingly change the positional relationship between the material control point MCP and the build surface MS and / or the positional relationship between the material control point MCP and the light concentration position CP#1 by using the nozzle driving system 23 to move the material nozzle 212 in a case where the processing system SYS changes the positional relationship between the light concentration position CP#1 of the processing light EL#1 and the build surface in the irradiation direction of the processing light EL#1 by using at least one of the head driving system 22 and the stage driving system 32.

The processing light EL#1 that has been emitted from the focus control optical system 2145 enters the Galvano mirror 2146. The Galvano mirror 2146 changes an emitting direction of the processing light EL#1 emitted from the Galvano mirror 2146 by deflecting the processing light EL#1. Therefore, the Galvano mirror 2146 may be referred to as a deflection optical member.

When the emitting direction of the processing light EL#1 emitted from the Galvano mirror 2146 is changed, a position from which the processing head 21 emits the processing light EL#1 is changed. When the position from which the processing head 21 emits the processing light EL#1 is changed, the target irradiation area EA#1 that is irradiated with the processing light EL#1 on the build surface MS moves. Namely, an irradiation position that is irradiated with the processing light EL#1 on the build surface MS moves. Therefore, the Galvano mirror 2146 may be considered to serve as an irradiation position movement apparatus that is configured to move the irradiation position of the processing light EL#1 on the build surface MS.

Furthermore, when the position from which the processing head 21 emits the processing light EL#1 is changed, a beam passing area PA#1, through which the processing light EL#1 passes in the virtual material supply plane PL intersecting the Z-axis between the material nozzle 212 and the build surface MS, moves. Namely, a passing position through which the processing light EL#1 passes in the material supply plane PL moves. Therefore, the Galvano mirror 2146 may be considered to serve as a passing position movement apparatus that is configured to move the passing position of the processing light EL#1 in the material supply plane PL.

The Galvano mirror 2146 includes an X scanning mirror 2146MX, an X scanning motor 2146AX, the Y scanning mirror 2146MY, and a Y scanning motor 2146AY, for example. The processing light EL#1 that has been emitted from the focus control optical system 2145 enters the X scanning mirror 2146MX. The X scanning mirror 2146MX reflects the processing light EL#1 that has entered the X scanning mirror 2146MX toward the Y scanning mirror 2146MY. The Y scanning mirror 2146MY reflects the processing light EL#1 that has entered the Y scanning mirror 2146MY toward the third optical system 216. Note that each of the X scanning mirror 2146MX and the Y scanning mirror 2146MY may be referred to as a Galvano mirror.

The X scanning motor 2146AX swings or rotates the X scanning mirror 2146MX around a rotational axis along the Y-axis. As a result, an angle of the X scanning mirror 2146MX relative to an optical path of the processing light EL#1 entering the X scanning mirror 2146MX is changed. In this case, the build surface MS is scanned with the processing light EL#1 along the X-axis direction due to the swing or the rotation of the X scanning mirror 2146MX. Namely, the target irradiation area EA#1 (namely, the irradiation position of the processing light EL#1) moves along the X-axis direction on the build surface MS. Furthermore, the material supply plane PL is scanned with the processing light EL#1 along the X-axis direction due to the swing or the rotation of the X scanning mirror 2146MX. Namely, the beam passing area PA#1 of the processing light EL#1 (namely, the passing position of the processing light EL#1) moves along the X-axis direction in the material supply plane PL.

The Y scanning motor 2146AY swings or rotates the Y scanning mirror 2146MY around a rotational axis along the X-axis. As a result, an angle of the Y scanning mirror 2146MY relative to an optical path of the processing light EL#1 entering the Y scanning mirror 2146MY is changed. In this case, the build surface MS is scanned with the processing light EL#1 along the Y-axis direction due to the swing or the rotation of the Y scanning mirror 2146MY. Namely, the target irradiation area EA#1 (namely, the irradiation position of the processing light EL#1) moves along the Y-axis direction on the build surface MS. Furthermore, the material supply plane PL is scanned with the processing light EL#1 along the Y-axis direction due to the swing or the rotation of the Y scanning mirror 2146MY. Namely, the beam passing area PA#1 of the processing light EL#1 (namely, the passing position of the processing light EL#1) moves along the Y-axis direction in the material supply plane PL.

In the present example embodiment, a virtual area in which the Galvano mirror 2146 moves the target irradiation area EA#1 on the build surface MS is referred to as a processing unit area PUA (especially, the processing unit area PUA#1). In this case, the target irradiation area EA#1 may be considered to move on a surface of the build surface MS that overlaps with the processing unit area PUA#1. Specifically, the virtual area in which the Galvano mirror 2146 moves the target irradiation area EA#1 on the build surface MS in a state where a positional relationship between the irradiation optical system 211 and the build surface MS is fixed (namely, is not changed) is referred to as the processing unit area PUA (especially, the processing unit area PUA#1). The processing unit area PUA#1 indicates a virtual area (in other words, a range) in which the processing head 21 actually performs the additive manufacturing by using the processing light EL#1 in a state where the positional relationship between the irradiation optical system 211 and the build surface MS is fixed. The processing unit area PUA#1 indicates a virtual area (in other words, a range) that is actually scanned by the processing head 21 with the processing light EL#1 in a state where the positional relationship between the irradiation optical system 211 and the build surface MS is fixed. The processing unit area PUA#1 indicates an area (in other words, a range) in which the target irradiation area EA#1 actually moves in a state where the positional relationship between the irradiation optical system 211 and the build surface MS is fixed. Therefore, the processing unit area PUA#1 may be regarded as a virtual area that is determined with respect to the processing head 21 (especially, the irradiation optical system 211). Namely, the processing unit area PUA#1 may be regarded as a virtual area positioned at a position that is determined with respect to the processing head 21 (especially, the irradiation optical system 211) on the build surface MS. Note that a maximum area in which the Galvano mirror 2146 is allowed to move the target irradiation area EA#1 on the build surface MS in a state where the positional relationship between the irradiation optical system 211 and the build surface MS is fixed may be referred to as the processing unit area PUA#1.

In this case, the processing system SYS may move the target irradiation area EA#1 in the processing unit area PUA#1 by using the Galvano mirror 2146. Therefore, an operation for deflecting the processing light EL#1 by using the Galvano mirror 2146 may be considered to be equivalent to an operation for moving the target irradiation area EA#1 in the processing unit area PUA#1. Furthermore, as described above, the melt pool MP#1 is formed by irradiating the target irradiation area EA#1 with the processing light EL#1. In this case, the processing system SYS may be considered to move the melt pool MP#1 in the processing unit area PUA#1 by using the Galvano mirror 2146. Therefore, the operation for deflecting the processing light EL#1 by using the Galvano mirror 2146 may be considered to be equivalent to an operation for moving the melt pool MP#1 in the processing unit area PUA#1. Namely, the operation for moving the target irradiation area EA#1 in the processing unit area PUA#1 may be considered to be equivalent to the operation for moving the melt pool MP#1 in the processing unit area PUA#1.

Note that the target irradiation area EA#1 moves on the build surface MS even when at least one of the processing head 21 and the stage 31 moves as described above. However, when at least one of the processing head 21 and the stage 31 moves, the relative positional relationship between the Galvano mirror 2146 and the build surface MS changes. As a result, the processing unit area PUA#1 that is determined with respect to the processing head 21 (namely, the processing unit area PUA#1 in which the Galvano mirror 2146 moves the target irradiation area EA#1 on the build surface MS) moves on the build surface MS. Therefore, in the present example embodiment, an operation for moving at least one of the processing head 21 and the stage 31 may be considered to be equivalent to an operation for moving the processing unit area PUA#1 relative to the build surface MS.

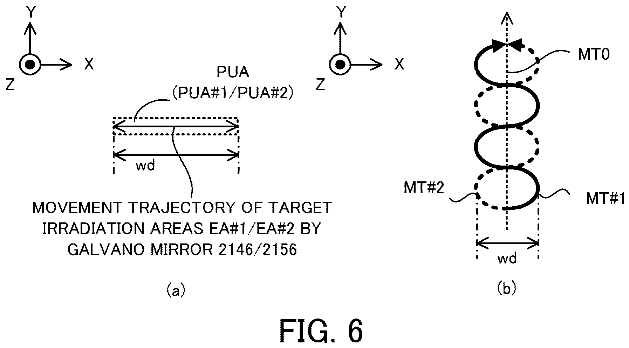

As one example of the operation for moving the target irradiation area EA#1 in the processing unit area PUA#1, as illustrated in FIG. 6(a), the Galvano mirror 2146 may deflect the processing light EL#1 so that the target irradiation area EA#1 moves along a single direction, which is along the build surface MS, in the processing unit area PUA#1 under the assumption that the processing unit area PUA#1 is stationary (namely, does not move) on the build surface MS. Namely, the Galvano mirror 2146 may deflect the processing light EL#1 so that the target irradiation area EA#1 moves along a single scanning direction in a coordinate system that is determined with respect to the processing unit area PUA#1. Especially, the Galvano mirror 2146 may deflect the processing light EL#1 so that the target irradiation area EA#1 periodically reciprocates along the single scanning direction in the processing unit area PUA#1. Namely, the Galvano mirror 2146 may deflect the processing light EL#1 so that the target irradiation area EA#1 periodically reciprocates along an axis, which is along the single scanning direction, in the processing unit area PUA#1. In this case, a shape of the processing unit area PUA#1 in which the target irradiation area EA#1 moves may be a rectangular shape whose longitudinal direction is a movement direction of the target irradiation area EA#1.

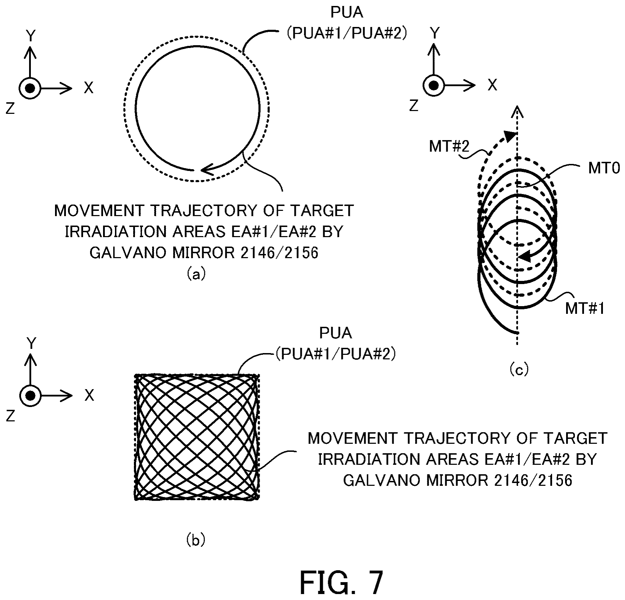

As another example of the operation for moving the target irradiation area EA#1 in the processing unit area PUA#1, as illustrated in FIG. 7(a) and FIG. 7(b), the Galvano mirror 2146 may deflect the processing light EL#1 so that the target irradiation area EA#1 moves along a plurality of directions, which is along the build surface BSA#1, in the processing unit area PUA#1 under the assumption that the processing unit area PUA#1 is stationary (namely, does not move) on the build surface MS. Namely, the Galvano mirror 2146 may deflect the processing light EL#1 so that the target irradiation area EA#1 moves along a plurality of directions in the coordinate system that is determined with respect to the processing unit area PUA#1. Especially, the Galvano mirror 2146 may deflect the processing light EL#1 so that the target irradiation area EA#1 periodically reciprocates along each of a plurality of scanning directions in the processing unit area PUA#1. Namely, the Galvano mirror 2146 may deflect the processing light EL#1 so that the target irradiation area EA#1 periodically reciprocates along an axis, which is along each of the plurality of scanning directions, in the processing unit area PUA#1. FIG. 7(a) illustrates an example in which the target irradiation area EA#1 reciprocates along each of the X-axis direction and the Y-axis direction in the processing unit area PUA#1 so that a movement trajectory of the target irradiation area EA#1 in the processing unit area PUA#1 is a circular shape. In this case, the shape of the processing unit area PUA#1 in which the target irradiation area EA#1 moves may be a circular shape . FIG. 7(b) illustrates an example in which the target irradiation area EA#1 reciprocates along each of the X-axis direction and the Y-axis direction in the processing unit area PUA#1 so that the movement trajectory of the target irradiation area EA#1 in the processing unit area PUA#1 is a net-like shape. In this case, the shape of the processing unit area PUA#1 in which the target irradiation area EA#1 moves may be a rectangular shape.

Note that an operation for periodically moving the target irradiation area EA#1 on the build surface MS as illustrated in each of FIG. 6(a), FIG. 7(a) and FIG. 7(b) may be referred to as a wobbling operation. In other words, an operation for periodically moving (in other words, deflecting) the processing light EL#1 so that the target irradiation area EA#1 periodically moves on the build surface MS may be referred to as the wobbling operation.

The control unit 7 may move at least one of the processing head 21 and the stage 31 so that the processing unit area PUA#1 moves on the build surface MS in a period during which the target irradiation area EA#1 is moved in the processing unit area PUA#1 by using the Galvano mirror 2146. Namely, the control unit 7 may control at least one of the head driving system 22 and the stage driving system 32 so that the processing unit area PUA#1 moves on the build surface MS in the period during which the target irradiation area EA#1 is moved in the processing unit area PUA#1 by using the Galvano mirror 2146.

For example, in the example illustrated in FIG. 6(a), the control unit 7 may control at least one of the head driving system 22 and the stage driving system 32 so that the processing unit area PUA#1 moves along a target movement trajectory MT0 that intersects (is orthogonal to, in some cases) the movement direction (namely, the scanning direction) of the target irradiation area EA#1 in the processing unit area PUA#1. Conversely, the control unit 7 may control the Galvano mirror 2146 so that the target irradiation area EA#1 periodically moves along a scanning direction that intersects (is orthogonal to, in some cases) the target movement trajectory MT0 of the processing unit area PUA#1 on the build surface MS. As a result, the target irradiation area EA#1 may move on the build surface MS along a movement trajectory MT#1 illustrated in FIG. 6(b). Specifically, the target irradiation area EA#1 may move along the scanning direction intersecting the target movement trajectory MT0 while moving along target movement trajectory MT0 of the processing unit area PUA#1. Namely, the target irradiation area EA#1 may move along the wave-shaped (for example, sinusoidal wave-shaped) movement trajectory MT#1 that oscillates around the target movement trajectory MT0.

For example, in the example illustrated in FIG. 7(a) or FIG. 7(b), the control unit 7 may control at least one of the head driving system 22 and the stage driving system 32 so that the processing unit area PUA#1 moves along the target movement trajectory MT0 that extends along at least one of a direction that is along the movement direction (namely, the scanning direction) of the target irradiation area EA#1 in the processing unit area PUA#1 and a direction that intersects (is orthogonal to, in some cases) the movement direction of the target irradiation area EA#1 in the processing unit area PUA#1. Conversely, the control unit 7 may control the Galvano mirror 2146 so that the target irradiation area EA#1 periodically moves along each of a scanning direction that is along the target movement trajectory MT0 of the processing unit area PUA#1 on the build surface MS and a scanning direction that intersects (is orthogonal to, in some cases) the target movement trajectory MT0. Note that FIG. 7(c) illustrates the movement trajectory MT#1 of the target irradiation area EA#1 on the build surface MS in a case where the processing unit area PUA#1 moves along the target movement trajectory MT0 on the build surface MS as illustrated in FIG. 7(a).

In a case where the build surface MS is irradiated with the processing light EL#1 in a unit of the processing unit area PUA#1, the melt pool MP#1 is formed in at least a part of the processing unit area PUA#1. As a result, the build object is built in the processing unit area PUA#1. Here, as described above, the processing unit area PUA#1 is the area that has a width along a direction that intersects the movement direction of the processing unit area PUA#1 on the build surface MS (specifically, a direction along which the target movement trajectory MT0 extends). In this case, the build object that has a width along the direction intersecting the target movement trajectory MT0 of the processing unit area PUA#1 is built on the build surface MS. For example, in the example illustrated in FIG. 6(a) and FIG. 6(b), the build object that has a width along the X-axis direction and that extends along the Y-axis direction is built. For example, in the example illustrated in FIG. 7(a) and FIG. 7(c), the build object that has a width along the X-axis direction and that extends along the Y-axis direction is built.

In a case where the build surface MS is irradiated with the processing light EL#1 in a unit of the processing unit area PUA#1, the Galvano mirror 2146 scans the processing unit area PUA#1 with the processing light EL#1. Therefore, it is less likely that an amount of the energy transferred from the processing light EL#1 to the processing unit area PUA#1 varies in the processing unit area PUA#1, compared to a case where the build surface MS is irradiated with the processing light EL#1 without using the Galvano mirror 2146. Namely, it is possible to uniform the amount of the energy transferred from the processing light EL#1 to the processing unit area PUA#1. As a result, the processing system SYS can build the build object on the build surface MS with relatively high build accuracy.

However, the processing system SYS may not irradiate the build surface MS with the processing light EL#1 in a unit of the processing unit area PUA#1. The processing system SYS may irradiate the build surface MS with the processing light EL#1 without using the Galvano mirror 2146. The processing system SYS may not perform the wobbling operation. In this case, the target irradiation area EA#1 may move on the build surface MS due to the movement of at least one of the processing head 21 and the stage 31.

Moreover, the processing system SYS may move the target irradiation area EA#1 non-periodically on the build surface MS. Note that one example of an operation for moving the target irradiation area EA#1 non-periodically on the build surface MS is described in a first modified example of the processing system SYS described later (see FIG. 46 to FIG. 52).

Again in FIG. 5, the processing light EL#1 that has been reflected by the parallel plate 2142 enters the power meter 2143. The power meter 2143 is configured to detect the intensity of the processing light EL#1 that has entered the power meter 2143. For example, the power meter 2143 may include a light receiving element that detects the processing light EL#1 as light. Alternatively, the amount of the energy generated by the processing light EL#1 is larger as the intensity of the processing light EL#1 is higher. As a result, the amount of heat generated by the processing light EL#1 is larger. Therefore, the power meter 2143 may detect the intensity of the processing light EL#1 by detecting the processing light EL#1 as heat. In this case, the power meter 2143 may include a heat detection element that detects the heat of the processing light EL#1.

As described above, the processing light EL#1 that has been reflected by the parallel plate 2142 enters the power meter 2143. Therefore, the power meter 2143 detects the intensity of the processing light EL#1 that has been reflected by the parallel plate 2142. Since the parallel plate 2142 is positioned on the optical path of the processing light EL#1 between the light source 4#1 and the Galvano mirror 2146, the power meter 2143 may be considered to detect the intensity of the processing light EL#1 propagating on the optical path between the light source 4#1 and the Galvano mirror 2146. In this case, the power meter 2143 can stably detect the intensity of the processing light EL#1 without being affected by the deflection of the processing light EL#1 by the Galvano mirror 2146. However, the position of the power meter 2143 is not limited to the example illustrated in FIG. 5. For example, the power meter 2143 may detect the intensity of the processing light EL#1 propagating on the optical path between the Galvano mirror 2146 and the build surface MS. The power meter 2143 may detect the intensity of the processing light EL#1 propagating on the optical path in the Galvano mirror 2146.

A detected result by the power meter 2143 is output to the control unit 7. The control unit 7 may control (in other words, change) the intensity of the processing light EL#1 based on the detected result by the power meter 2143 (namely, the detected result of the intensity of the processing light EL#1). For example, the control unit 7 may control the intensity of the processing light EL#1 so that the intensity of the processing light EL#1 on the build surface MS is a desired intensity. In order to control the intensity of the processing light EL#1, the control unit 7 may control the light source 4#1 to change the intensity of the processing light EL#1 emitted from the light source 4#1 based on the detected result by the power meter 2143, for example. As a result, the processing system SYS can properly build the build object on the build surface MS by irradiating the build surface MS with the processing light EL#1 having an appropriate intensity.

As described above, the processing light EL#1 has an intensity that is capable of melting the build material M. Therefore, there is a possibility that the processing light EL#1 entering the power meter 2143 has an intensity that is capable of melting the build material M. However, if the processing light EL#1 having an intensity that is capable of melting the build material M enters the power meter 2143, there is a possibility that the power meter 2143 is damaged by the processing light EL#1. Therefore, the processing light EL#1 having an intensity that is not high enough to damage the power meter 2143 may enter the power meter 2143. In other words, the first optical system 214 may reduce the intensity of the processing light EL#1 entering the power meter 2143 so that the processing light EL#1 having an intensity that is not high enough to damage the power meter 2143 enters the power meter 2143.

For example, in order to reduce the intensity of the processing light EL#1 entering the power meter 2143, a reflectance of the parallel plate 2142 relative to the processing light EL#1 may be set to be an appropriate value. Specifically, the intensity of the processing light EL#1 entering the power meter 2143 is lower as the reflectance of the parallel plate 2142 relative to the processing light EL#1 is lower. Therefore, the reflectance of the parallel plate 2142 may be set to a value that is low enough to realize a state where the processing light EL#1 has an intensity that is not high enough to damage the power meter 2143 enters the power meter 2143. For example, the reflectance of the parallel plate 2142 may be lower than 10%. For example, the reflectance of the parallel plate 2142 may be lower than a few percent. As the parallel plate 2142 having such a low reflectance, bare glass may be used.

For example, in order to reduce the intensity of the processing light EL#1 entering the power meter 2143, the first optical system 214 may allow the processing light EL#1 to enter the power meter 2143 through a plurality of parallel plates 2142. Specifically, the processing light EL#1, which has been reflected a plurality of times by the plurality of parallel plates 2142, respectively, may enter the power meter 2143. In this case, the intensity of the processing light EL#1 reflected a plurality of times by the plurality of parallel plates 2142, respectively, is lower than the intensity of the processing light EL#1 reflected once by a single parallel plate 2142. Therefore, it is more likely that the processing light EL#1 having an intensity that is not high enough to damage the power meter 2143 enters the power meter 2143.

A desired coating processing may be performed on a surface of the parallel plate 2142 (especially, at least one of an incident surface which the processing light EL#1 enters and a reflective surface that reflects the processing light EL#1). For example, an anti-reflection coating processing (AR: Anti Reflection Coating) may be performed on the surface of the parallel plate 2142.

The second optical system 215 includes a collimator lens 2151, a parallel plate 2152, a power meter 2153, and a Galvano scanner 2154. The Galvano scanner 2154 includes a focus control optical system 2155 and a Galvano mirror 2156. However, the second optical system 215 may not include at least one of the collimator lens 2151, the parallel plate 2152, the power meter 2153, and the Galvano scanner 2154. The Galvano scanner 2154 may not include at least one of the focus control optical system 2155 and the Galvano mirror 2156.

The processing light EL#2 that has been emitted from the light source 4#2 enters the collimator lens 2151. The collimator lens 2151 converts the processing light EL#2 that has entered the collimator lens 2151 into collimated light. Note that the second optical system 215 may not include the collimator lens 2151 in a case where the processing light EL#2 emitted from the light source 4#2 is collimated light (namely, the processing light EL#2 that is the collimated light enters the second optical system 215 The processing light EL#2 that has been converted to the collimated light by the collimator lens 2151 enters the parallel plate 2152. A part of the processing light EL#2 that has entered the parallel plate 2152 passes through the parallel plate 2152. Another part of the processing light EL#2 that has entered the parallel plate 2152 is reflected by the parallel plate 2152.

The processing light EL#2 that has passed through the parallel plate 2152 enters the Galvano scanner 2154. Specifically, the processing light EL#2 that has passed through the parallel plate 2152 enters the focus control optical system 2155 of the Galvano scanner 2154.

The focus control optical system 2155 is an optical member that is configured to change the light concentration position CP of the processing light EL#2 (in the below-described description, it is referred to as a "light concentration position CP#2"). In the present example embodiment, the light concentration position CP#2 of the processing light EL#2 may mean a condensed position at which the processing light EL#2 is condensed. The light concentration position CP#2 of the processing light EL#2 may mean a converged position at which the processing light EL#2 is most converged in the irradiation direction (the propagating direction) of the processing light EL#2.

Specifically, the focus control optical system 2155 is configured to change the light concentration position CP#2 of the processing light EL#2 along an irradiation direction of the processing light EL#2 emitted from the irradiation optical system 211. In the example illustrated in FIG. 5, the irradiation direction of the processing light EL#2 emitted from the irradiation optical system 211 is a direction whose main component is the Z-axis direction. In this case, the focus control optical system 2155 is configured to change the light concentration position CP#2 of the processing light EL#2 along the Z-axis direction. Moreover, since the irradiation optical system 211 irradiates the build surface MS with the processing light EL from a position above the workpiece W, the irradiation direction of the processing light EL#2 is a direction that intersects the build surface MS (for example, the surface of the workpiece W or the structural layer SL). Therefore, the focus control optical system 2155 may be considered to be configured to change the light concentration position CP#2 of the processing light EL#2 along the direction that intersects the build surface MS (for example, the surface of the workpiece W or the structural layer SL). The focus control optical system 2155 may be considered to be configured to change the light concentration position CP#2 of the processing light EL#2 along a direction of the optical axis AX of the irradiation optical system 211 (typically, the third optical system 216).

Note that the irradiation direction of the processing light EL#2 may mean an irradiation direction of the processing light EL#2 emitted from the third optical system 216. In this case, the irradiation direction of the processing light EL#2 may be the same as a direction along the optical axis of the third optical system 216. The irradiation direction of the processing light EL#2 may be the same as a direction along the optical axis of the terminal optical member, which is positioned at the position closest to the build surface MS, among the optical members of the third optical system 216. The terminal optical member may be the fθ lens 2162 described below. Moreover, in a case where the below-described fθ lens 2162 includes the plurality of optical members, the terminal optical member may be the optical member, which is positioned at the position closest to the build surface MS, among the plurality of optical members of the fθ lens 2162.

Note that the irradiation optical system 211 may not include the third optical system 216. In a case where the irradiation optical system 211 does not include the third optical system 216, the terminal optical member may be an optical member (the Y-scanning mirror 2156MY), which is positioned at a position closest to the build surface MS, among the plurality of optical members of the second optical system 215.

The focus control optical system 2155 may include a plurality of optical members (for example, a plurality of lenses) that are aligned along the irradiation direction of the processing light EL#2, for example. In this case, the focus control optical system 2155 may change the light concentration position CP#2 of the processing light EL#2 by moving at least one of the plurality of optical members along its optical axis direction.

When the focus control optical system 2155 changes the light concentration position CP#2 of the processing light EL#2, a positional relationship between the light concentration position CP#2 of the processing light EL#2 and the build surface MS changes. Especially, a positional relationship between the light concentration position CP#2 of the processing light EL#2 and the build surface MS in the irradiation direction of the processing light EL#2 changes along the irradiation direction (namely, the Z-axis direction). Therefore, the focus control optical system 2155 may be considered to change the positional relationship (especially, the positional relationship in the Z-axis direction) between the light concentration position CP#2 of the processing light EL#2 and the build surface MS by changing the light concentration position CP#2 of the processing light EL#2. The focus control optical system 2155 may be considered to change a distance (especially, a distance in the Z-axis direction) between the light concentration position CP#2 of the processing light EL#2 and the build surface MS by changing the light concentration position CP#2 of the processing light EL#2.

When the focus control optical system 2155 changes the light concentration position CP#2 of the processing light EL#2, a positional relationship between the light concentration position CP#2 of the processing light EL#2 and the material control point MCP changes. Especially, a positional relationship between the light concentration position CP#2 of the processing light EL#2 and the material control point MCP in the irradiation direction of the processing light EL#2 (namely, in the Z-axis direction) changes. Therefore, the focus control optical system 2155 may be considered to change the positional relationship (especially, the positional relationship in the Z-axis direction) between the light concentration position CP#2 of the processing light EL#2 and the material control point MCP by changing the light concentration position CP#2 of the processing light EL#2. The focus control optical system 2155 may be considered to change a distance (especially, a distance in the Z-axis direction) between the light concentration position CP#2 of the processing light EL#2 and the material control point MCP by changing the light concentration position CP#2 of the processing light EL#2. Note that FIG. 5 illustrates an example in which the material control point MCP is positioned below the build surface MS, however, the material control point MCP may be positioned above the build surface MS or on the build surface MS as described above.

Note that the Galvano scanner 2154 may not include the focus control optical system 2155 as described above. Even in this case, when the positional relationship between the irradiation optical system 211 and the build surface MS in the irradiation direction of the processing light EL#2 changes, the positional relationship between the light concentration position CP#2 of the processing light EL#2 and the build surface MS in the irradiation direction of the processing light EL#2 changes. Therefore, even in a case where the Galvano scanner 2154 does not include the focus control optical system 2155, the processing system SYS may change the positional relationship between the light concentration position CP#2 of the processing light EL#2 and the build surface MS in the irradiation direction of the processing light EL#2. For example, the processing system SYS may change the positional relationship between the light concentration position CP#2 of the processing light EL#2 and the build surface MS in the irradiation direction of the processing light EL#2 by using the head driving system 22 to move the processing head 21 along the irradiation direction of the processing light EL#2. For example, the processing system SYS may change the positional relationship between the light concentration position CP#2 of the processing light EL#2 and the build surface MS in the irradiation direction of the processing light EL#2 by using the stage driving system 32 to move the stage 31 along the irradiation direction of the processing light EL#2. Note that the processing system SYS may accordingly change the positional relationship between the material control point MCP and the build surface MS and / or the positional relationship between the material control point MCP and the light concentration position CP#2 by using the nozzle driving system 23 to move the material nozzle 212 in a case where the processing system SYS changes the positional relationship between the light concentration position CP#2 of the processing light EL#2 and the build surface in the irradiation direction of the processing light EL#2 by using at least one of the head driving system 22 and the stage driving system 32.

The processing light EL#2 that has been emitted from the focus control optical system 2155 enters the Galvano mirror 2156. The Galvano mirror 2156 changes an emitting direction of the processing light EL#2 emitted from the Galvano mirror 2156 by deflecting the processing light EL#2. Therefore, the Galvano mirror 2156 may be referred to as a deflection optical member. When the emitting direction of the processing light EL#2 emitted from the Galvano mirror 2156 is changed, a position from which the processing head 21 emits the processing light EL#2 is changed.

When the position from which the processing head 21 emits the processing light EL#2 is changed, the target irradiation area EA#2 that is irradiated with the processing light EL#2 on the build surface MS moves. Namely, an irradiation position that is irradiated with the processing light EL#2 on the build surface MS moves. Therefore, the Galvano mirror 2156 may be considered to serve as an irradiation position movement apparatus that is configured to move the irradiation position of the processing light EL#2 on the build surface MS.

Furthermore, when the position from which the processing head 21 emits the processing light EL#2 is changed, a beam passing area PA#2, through which the processing light EL#2 passes in the virtual material supply plane PL intersecting the Z-axis between the material nozzle 212 and the build surface MS, moves. Namely, a passing position through which the processing light EL#2 passes in the material supply plane PL moves. Therefore, the Galvano mirror 2156 may be considered to serve as a passing position movement apparatus that is configured to move the passing position of the processing light EL#5 in the material supply plane PL.

The Galvano mirror 2156 includes an X scanning mirror 2156MX, an X scanning motor 2156AX, the Y scanning mirror 2156MY, and a Y scanning motor 2156AY, for example. The processing light EL#2 that has been emitted from the focus control optical system 2155 enters the X scanning mirror 2156MX. The X scanning mirror 2156MX reflects the processing light EL#2 that has entered the X scanning mirror 2156MX toward the Y scanning mirror 2156MY. The Y scanning mirror 2156MY reflects the processing light EL#2 that has entered the Y scanning mirror 2156MY toward the third optical system 216. Note that each of the X scanning mirror 2156MX and the Y scanning mirror 2156MY may be referred to as a Galvano mirror.

The X scanning motor 2156AX swings or rotates the X scanning mirror 2156MX around a rotational axis along the Y-axis. As a result, an angle of the X scanning mirror 2156MX relative to an optical path of the processing light EL#2 entering the X scanning mirror 2156MX is changed. In this case, the build surface MS is scanned with the processing light EL#2 along the X-axis direction due to the swing or the rotation of the X scanning mirror 2156MX. Namely, the target irradiation area EA#2 (namely, the irradiation position of the processing light EL#2) moves along the X-axis direction on the build surface MS. Furthermore, the material supply plane PL is scanned with the processing light EL#2 along the X-axis direction due to the swing or the rotation of the X scanning mirror 2156MX. Namely, the beam passing area PA#2 of the processing light EL#2 (namely, the passing position of the processing light EL#2) moves along the X-axis direction in the material supply plane PL.

The Y scanning motor 2156AY swings or rotates the Y scanning mirror 2156MY around a rotational axis along the X-axis. As a result, an angle of the Y scanning mirror 2156MY relative to an optical path of the processing light EL#2 entering the Y scanning mirror 2156MY is changed. In this case, the build surface MS is scanned with the processing light EL#2 along the Y-axis direction due to the swing or the rotation of the Y scanning mirror 2156MY. Namely, the target irradiation area EA#2 (namely, the irradiation position of the processing light EL#2) moves along the Y-axis direction on the build surface MS. Furthermore, the material supply plane PL is scanned with the processing light EL#2 along the Y-axis direction due to the swing or the rotation of the Y scanning mirror 2156MY. Namely, the beam passing area PA#2 of the processing light EL#2 (namely, the passing position of the processing light EL#2) moves along the Y-axis direction in the material supply plane PL.

In the present example embodiment, a virtual area in which the Galvano mirror 2156 moves the target irradiation area EA#2 on the build surface MS is referred to as a processing unit area PUA (especially, the processing unit area PUA#2). In this case, the target irradiation area EA#2 may be considered to move on a surface of the build surface MS that overlaps with the processing unit area PUA#2. Specifically, the virtual area in which the Galvano mirror 2156 moves the target irradiation area EA#2 on the build surface MS in a state where the positional relationship between the irradiation optical system 211 and the build surface MS is fixed (namely, is not changed) is referred to as the processing unit area PUA (especially, the processing unit area PUA#2). The processing unit area PUA#2 indicates a virtual area (in other words, a range) in which the processing head 21 actually performs the additive manufacturing by using the processing light EL#2 in a state where the positional relationship between the irradiation optical system 211 and the build surface MS is fixed. The processing unit area PUA#2 indicates a virtual area (in other words, a range) that is actually scanned by the processing head 21 with the processing light EL#2 in a state where the positional relationship between the irradiation optical system 211 and the build surface MS is fixed. The processing unit area PUA#2 indicates an area (in other words, a range) in which the target irradiation area EA#2 actually moves in a state where the positional relationship between the irradiation optical system 211 and the build surface MS is fixed. Therefore, the processing unit area PUA#2 may be regarded as a virtual area that is determined with respect to the processing head 21 (especially, the irradiation optical system 211). Namely, the processing unit area PUA#2 may be regarded as a virtual area positioned at a position that is determined with respect to the processing head 21 (especially, the irradiation optical system 211) on the build surface MS. Note that a maximum area in which the Galvano mirror 2156 is allowed to move the target irradiation area EA#2 on the build surface MS in a state where the positional relationship between the irradiation optical system 211 and the build surface MS is fixed may be referred to as the processing unit area PUA#2.

In this case, the processing system SYS may move the target irradiation area EA#2 in the processing unit area PUA#2 by using the Galvano mirror 2156. Therefore, an operation for deflecting the processing light EL#2 by using the Galvano mirror 2156 may be considered to be equivalent to an operation for moving the target irradiation area EA#2 in the processing unit area PUA#2. Furthermore, as described above, the melt pool MP#2 is formed by irradiating the target irradiation area EA#2 with the processing light EL#2. In this case, the processing system SYS may be considered to move the melt pool MP#2 in the processing unit area PUA#2 by using the Galvano mirror 2156. Therefore, the operation for deflecting the processing light EL#2 by using the Galvano mirror 2156 may be considered to be equivalent to an operation for moving the melt pool MP#2 in the processing unit area PUA#2. Namely, the operation for moving the target irradiation area EA#2 in the processing unit area PUA#2 may be considered to be equivalent to the operation for moving the melt pool MP#2 in the processing unit area PUA#2.

Note that the target irradiation area EA#2 moves on the build surface MS even when at least one of the processing head 21 and the stage 31 moves as described above. However, when at least one of the processing head 21 and the stage 31 moves, the relative positional relationship between the Galvano mirror 2156 and the build surface MS changes. As a result, the processing unit area PUA#2 that is determined with respect to the processing head 21 (namely, the processing unit area PUA#2 in which the Galvano mirror 2156 moves the target irradiation area EA#2 on the build surface MS) moves on the build surface MS. Therefore, in the present example embodiment, the operation for moving at least one of the processing head 21 and the stage 31 may be considered to be equivalent to an operation for moving the processing unit area PUA#2 relative to the build surface MS.

A characteristic (for example, the shape, a movement aspect, and so on) of the processing unit area PUA#2 may be the same as a characteristic of the above-described processing unit area PUA#1. A movement aspect (for example, a movement trajectory and so on) of the target irradiation area EA#2 in the processing unit area PUA#2 may be the same as a movement aspect of the target irradiation area EA#1 in the above-described processing unit area PUA#1. Therefore, a detailed description of the characteristic of the processing unit area PUA#2 and the movement aspect (for example, the movement trajectory and so on) of the target irradiation area EA#2 in the processing unit area PUA#2 is omitted, however, one example thereof will be briefly described below. As illustrated in FIG. 6(a), the Galvano mirror 2156 may deflect the processing light EL#2 so that the target irradiation area EA#2 moves along a single scanning direction, which is along the build surface MS, in the processing unit area PUA#2 under the assumption that the processing unit area PUA#2 is stationary (namely, does not move) on the build surface MS. The processing unit area PUA#2 illustrated in FIG. 6(a) may move on the build surface MS along the target movement trajectory MT0, thereby, the target irradiation area EA#2 may move on the build surface MS along a movement trajectory MT#2 illustrated in FIG. 6(b) (for example, a wave-shaped movement trajectory MT#2 that oscillates around the target movement trajectory MT0). As illustrated in FIG. 7(a) and FIG. 7(b), the Galvano mirror 2156 may deflect the processing light EL#2 so that the target irradiation area EA#2 moves along a plurality of scanning directions in the processing unit area PUA#2 under the assumption that the processing unit area PUA#2 is stationary (namely, does not move) on the build surface MS.

Note that an operation for periodically moving the target irradiation area EA#2 on the build surface MS as illustrated in each of FIG. 6(a), FIG. 7(a) and FIG. 7(b) may be referred to as a wobbling operation. In other words, an operation for periodically moving (in other words, deflecting) the processing light EL#2 so that the target irradiation area EA#2 periodically moves on the build surface MS may be referred to as the wobbling operation.

Typically, the processing unit area PUA#1 coincides with the processing unit area PUA#2. Namely, the processing unit area PUA#1 is the same as the processing unit area PUA#2. Therefore, the Galvano mirror 2156 may be considered to deflect the processing light EL#2 so that the target irradiation area EA#2 moves in the processing unit area PUA#1. The Galvano mirror 2146 may be considered to deflect the processing light EL#1 so that the target irradiation area EA#1 moves in the processing unit area PUA#2. However, the processing unit area PUA#1 and the processing unit area PUA#2 may be partially different from each other.

In a case where the build surface MS is irradiated with the processing light EL#2 in a unit of the processing unit area PUA#2, the melt pool MP#2 is formed in at least a part of the processing unit area PUA#2. As a result, the build object is built in the processing unit area PUA#2. Here, as described above, the processing unit area PUA#2 is the area that has a width along a direction that intersects the movement direction of the processing unit area PUA#2 on the build surface MS (specifically, a direction along which the target movement trajectory MT0 extends). In this case, the build object that has a width along the direction intersecting the target movement trajectory MT0 of the processing unit area PUA#2 is built on the build surface MS. For example, in the examples illustrated in FIG. 6(a) and FIG. 6(b), the build object that has a width along the X-axis direction and that extends along the Y-axis direction is built. For example, in the examples illustrated in FIG. 7(a) and FIG. 7(c), the build object that has a width along the X-axis direction and that extends along the Y-axis direction is built.

In a case where the build surface MS is irradiated with the processing light EL#2 in a unit of the processing unit area PUA#2, the Galvano mirror 2156 scans the processing unit area PUA#2 with the processing light EL#2. Therefore, there is a lower possibility that an amount of the energy transferred from the processing light EL#2 to the processing unit area PUA#2 varies in the processing unit area PUA#2, compared to a case where the build surface MS is irradiated with the processing light EL#2 without using the Galvano mirror 2156. Namely, it is possible to uniform the amount of the energy transferred from the processing light EL#2 to the processing unit area PUA#2. As a result, the processing system SYS can build the build object on the build surface MS with relatively high build accuracy.

However, the processing system SYS may not irradiate the build surface MS with the processing light EL#2 in a unit of the processing unit area PUA#2. The processing system SYS may irradiate the build surface MS with the processing light EL#2 without using the Galvano mirror 2156. The processing system SYS may not perform the wobbling operation. In this case, the target irradiation area EA#2 may move on the build surface MS due to the movement of at least one of the processing head 21 and the stage 31.

Moreover, the processing system SYS may move the target irradiation area EA#2 non-periodically on the build surface MS. Note that one example of an operation for moving the target irradiation area EA#2 non-periodically on the build surface MS is described in a first modified example of the processing system SYS described later (see FIG. 46 to FIG. 52).

Again in FIG. 5, the processing light EL#2 that has been reflected by the parallel plate 2152 enters the power meter 2153. The power meter 2153 is one specific example of an electrical component that is used to control the processing light EL#2. Specifically, the power meter 2153 is configured to detect the intensity of the processing light EL#2 that has entered the power meter 2153. For example, the power meter 2153 may include a light receiving element that detects the processing light EL#2 as light. Alternatively, the amount of the energy generated by the processing light EL#2 is larger as the intensity of the processing light EL#2 is higher. As a result, the amount of heat generated by the processing light EL#2 is larger. Therefore, the power meter 2153 may detect the intensity of the processing light EL#2 by detecting the processing light EL#2 as heat. In this case, the power meter 2153 may include a heat detection element that detects the heat of the processing light EL#2.

As described above, the processing light EL#2 that has been reflected by the parallel plate 2152 enters the power meter 2153. Therefore, the power meter 2153 detects the intensity of the processing light EL#2 that has been reflected by the parallel plate 2152. Since the parallel plate 2152 is positioned on the optical path of the processing light EL#2 between the light source 4#2 and the Galvano mirror 2156, the power meter 2153 may be considered to detect the intensity of the processing light EL#2 propagating on the optical path between the light source 4#2 and the Galvano mirror 2156. In this case, the power meter 2153 can stably detect the intensity of the processing light EL#2 without being affected by the deflection of the processing light EL#2 by the Galvano mirror 2156. However, the position of the power meter 2153 is not limited to the example illustrated in FIG. 5. For example, the power meter 2153 may detect the intensity of the processing light EL#2 propagating on the optical path between the Galvano mirror 2156 and the build surface MS. The power meter 2153 may detect the intensity of the processing light EL#2 propagating on the optical path in the Galvano mirror 2156.

A detected result by the power meter 2153 is output to the control unit 7. The control unit 7 may control (in other words, change) the intensity of the processing light EL#2 based on the detected result by the power meter 2153 (namely, the detected result of the intensity of the processing light EL#2). For example, the control unit 7 may control the intensity of the processing light EL#2 so that the intensity of the processing light EL#2 on the build surface MS is a desired intensity. In order to control the intensity of the processing light EL#2, the control unit 7 may control the light source 4#2 to change the intensity of the processing light EL#2 emitted from the light source 4#2 based on the detected result by the power meter 2153, for example. As a result, the processing system SYS can properly build the build object on the build surface MS by irradiating the build surface MS with the processing light EL#2 having an appropriate intensity.

As described above, the processing light EL#2 has an intensity that is capable of melting the build material M. Therefore, there is a possibility that the processing light EL#2 entering the power meter 2153 ha an intensity that is capable of melting the build material M. However, if the processing light EL#2 having an intensity that is capable of melting the build material M enters the power meter 2153, there is a possibility that the power meter 2153 is damaged by the processing light EL#2. Therefore, the processing light EL#2 having an intensity that is not high enough to damage the power meter 2153 may enter the power meter 2153. In other words, the second optical system 215 may reduce the intensity of the processing light EL#2 entering the power meter 2153 so that the processing light EL#2 having an intensity that is not high enough to damage the power meter 2153 enters the power meter 2153.

For example, in order to reduce the intensity of the processing light EL#2 entering the power meter 2153, a reflectance of the parallel plate 2152 relative to the processing light EL#2 may be set to be an appropriate value. Specifically, the intensity of the processing light EL#2 entering the power meter 2153 is lower as the reflectance of the parallel plate 2152 relative to the processing light EL#2 is lower. Therefore, the reflectance of the parallel plate 2152 may be set to a value that is low enough to realize a state where the processing light EL#2 has an intensity that is not high enough to damage the power meter 2153 enters the power meter 2153. For example, the reflectance of the parallel plate 2152 may be lower than 10%. For example, the reflectance of the parallel plate 2152 may be lower than a few percent. As the parallel plate 2152 having such a low reflectance, bare glass may be used.

For example, in order to reduce the intensity of the processing light EL#2 entering the power meter 2153, the second optical system 215 may allow the processing light EL#2 to enter the power meter 2153 through a plurality of parallel plates 2152. Specifically, the processing light EL#2, which has been reflected a plurality of times by the plurality of parallel plates 2152, respectively, may enter the power meter 2153. In this case, the intensity of the processing light EL#2 reflected a plurality of times by the plurality of parallel plates 2152, respectively, is lower than the intensity of the processing light EL#2 reflected once by a single parallel plate 2152. Therefore, it is more likely that the processing light EL#2 having an intensity that is not high enough to damage the power meter 2153 enters the power meter 2153.

A desired coating processing may be performed on a surface of the parallel plate 2152 (especially, at least one of an incident surface which the processing light EL#2 enters and a reflective surface that reflects the processing light EL#2). For example, an anti-reflection coating processing (AR: Anti Reflection Coating) may be performed on the surface of the parallel plate 2152.

The third optical system 216 includes a prism mirror 2161 and the fθ lens 2162.

Each of the processing light EL#1 emitted from the first optical system 214 and the processing light EL#2 emitted from the second optical system 215 enters the prism mirror 2161. The prism mirror 2161 reflects each of the processing lights EL#1 and EL#2 toward the fθ lens 2162. The prism mirror 2161 reflects, toward the substantially same direction (specifically, toward the fθ lens 2162), the processing lights EL#1 and EL#2 that enters the prism mirror 2161 from different directions, respectively.

Note that the third optical system 216 may not include the prism mirror 2161 in a case where each of the processing light EL#1 emitted from the first optical system 214 and the processing light EL#2 emitted from the second optical system 215 can directly enter the fθ lens 2162.

The fθ lens 2162 is an optical system for emitting each of the processing lights EL#1 and EL#2, which have been reflected by the prism mirror 2161, toward the build surface MS. Namely, the fθ lens 2162 is an optical system for irradiating the build surface MS with each of the processing lights EL#1 and EL#2 that have been reflected by the prism mirror 2161. As a result, the build surface MS is irradiated with the processing lights EL#1 and EL#2 that have passed through the fθ lens 2162.

The fθ lens 2162 may be an optical element that is configured to condense each of the processing lights EL#1 and EL#2 on a condensed plane. In this case, the fθ lens 2162 may be referred to as a condensing optical system. The condensed plane of the fθ lens 2162 may be set on the build surface MS, for example. In this case, the third optical system 216 may be considered to include a condensing optical system whose projection characteristic is fθ. However, the third optical system 216 may include a condensing optical system whose projection characteristic is different from fθ. For example, the third optical system 216 may include a condensing optical system whose projection characteristic is f×tanθ. For example, the third optical system 216 may include a condensing optical system whose projection characteristic is f×sinθ.

The optical axis AX of the fθ lens 2162 is an axis along the Z-axis. Therefore, the fθ lens 2162 emits each of the processing lights EL#1 and EL#2 substantially along the Z-axis direction. In this case, the irradiation direction of the processing light EL#1 and the irradiation direction of the processing light EL#2 may be the same direction. Both the irradiation direction of the processing light EL#1 and the irradiation direction of the processing light EL#2 may be the Z-axis direction. Both the irradiation direction of the processing light EL#1 and the irradiation direction of the processing light EL#2 may be directions along the optical axis AX of the fθ lens 2162. However, the irradiation direction of the processing light EL#1 and the irradiation direction of the processing light EL#2 may not be the same direction. The irradiation direction of the processing light EL#1 and the irradiation direction of the processing light EL#2 may be directions that are different from each other.

### (2) Build Operation performed by Processing System SYS

Next, a build operation (an additive manufacturing operation for performing the additive manufacturing on the workpiece W) performed by the processing system SYS will be described.

### (2-1) Overview of Build Operation

As described above, the processing system SYS builds the three-dimensional structural object ST by performing the additive manufacturing based on the Laser Metal Deposition. Therefore, the processing system SYS may build the three-dimensional structural object ST by performing a build operation based on the Laser Metal Deposition.

The processing system SYS builds the three-dimensional structural object ST on the workpiece W based on three-dimensional model data (in other words, three-dimensional model information) and the like of the three-dimensional structural object ST that should be built. Measured data of the solid object measured by at least one of a non-illustrated measurement apparatus mounted in the processing system SYS and a three-dimensional shape measurement device mounted separately from the processing system SYS may be used as the three-dimensional model data. The processing system SYS successively builds a plurality of layered partial structural objects (it is referred to as the "structural layer" in the below-described description) SL that are arranged along the Z-axis direction in order to build the three-dimensional structural object ST, for example. For example, the processing system SYS builds, one by one in sequence, the plurality of structural layers SL based on data related to a plurality of layers that are obtained by slicing the three-dimensional model of the three-dimensional structural object ST along the Z-axis direction. As a result, the three-dimensional structural object ST that is a layered structural body in which the plurality of structural layers SL are stacked is built. Note that the structural layer SL may not be the build object having a layered shape.

Especially in the present example embodiment, the processing system SYS (mainly, the processing unit 2) may perform at least one of a first build operation and a second build operation as the build operation. The first build operation and the second build operation may be different from each other in that a method for building the three-dimensional structural object ST by the first build operation is different from a method for building the three-dimensional structural object ST by the second build operation. Especially, the first build operation and the second build operation may be different from each other in that a method for building each structural layer SL by the first build operation is different from a method for building each structural layer SL by the second build operation.

The processing system SYS may build the three-dimensional structural object ST by performing the second build operation without performing the first build operation. The processing system SYS may build each structural layer SL by performing the second build operation without performing the first build operation. The processing system SYS may build the three-dimensional structural object ST by performing the first build operation without performing the second build operation. The processing system SYS may build each structural layer SL by performing the first build operation without performing the second build operation. The processing system SYS may build the three-dimensional structural object ST by performing both the first and second build operations. The processing system SYS may build each structural layer SL by performing both the first and second build operations.

Next, the first build operation and the second build operation will be described below in order.

### (2-1) First Build Operation

The first build operation is a build operation for building the build object on the build surface MS by irradiating the build surface MS with the processing light EL to form the melt pool MP and supplying the build material M to the formed melt pool MP. Namely, the first build operation is a build operation for irradiating the build surface MS with the processing light EL to form the melt pool MP and supplying the build material M to the formed melt pool MP in order to build the build object on the build surface MS.

First, with reference to FIG. 8(a) to FIG. 8(e), an operation for building each structural layer SL by performing the first build operation will be described. The processing system SYS moves at least one of the processing head 21 and the stage 31 under the control of the control unit 7 so that the processing unit areas PUA#1 and PUA#2 are set in a desired area on the build surface MS that corresponds to the surface of the workpiece W or the surface of the already built structural layer SL. Then, the irradiation optical system 211 irradiate the processing unit areas PUA#1 and PUA#2 with the processing lights EL#1 and EL#2, respectively. In this case, the light concentration position CP#1 of the processing light EL#1 and the light concentration position CP#2 of the processing light EL#2 may be positioned on the build surface MS along the Z-axis direction. Alternatively, the light concentration position CP#1 of the processing light EL#1 and the light concentration position CP#2 of the processing light EL#2 may be distant from the build surface MS along the A-axis direction. As a result, as illustrated in FIG. 8(a), the melt pools MP#1 and MP#2 are formed on the build surface MS that is irradiated with the processing lights EL#1 and EL#2, respectively. Furthermore, as illustrated in FIG. 8(b), the processing system SYS supplies the build material M from the material nozzle 212 under the control of the control unit 7. As a result, the build material M is supplied to each of the melt pools MP#1 and MP#2.

The build material M supplied to the melt pool MP#1 is melted by the processing light EL#1 irradiated onto the melt pool MP#1. Alternatively, the build material M supplied to the melt pool MP#1 is melted by the melt pool MP#1 formed by the processing light EL#1. Note that, the build material M may be considered to be melted by the processing light EL#1 forming the melt pool MP#1 even in a case where the build material M is melted by the melt pool MP#1, because the melt pool MP#1 is formed by the processing light EL#1. Namely, the build material M may be considered to be indirectly melted by the processing light EL#1 through the melt pool MP#1 formed by the processing light EL#1.

Similarly, the build material M supplied to the melt pool MP#2 is melted by the processing light EL#2 irradiated onto the melt pool MP#2. Alternatively, the build material M supplied to the melt pool MP#2 is melted by the melt pool MP#2 formed by the processing light EL#2. Note that, the build material M may be considered to be melted by the processing light EL#2 forming the melt pool MP#2 even in a case where the build material M is melted by the melt pool MP#2, because the melt pool MP#2 is formed by the processing light EL#2. Namely, the build material M may be considered to be indirectly melted by the processing light EL#2 through the melt pool MP#2 formed by the processing light EL#2.

Furthermore, the irradiation optical system 211 moves the target irradiation areas EA#1 and EA#2 in the processing unit areas PUA#1 and PUA#2, respectively, by using the Galvano mirrors 2146 and 2156. Namely, the irradiation optical system 211 scans the processing unit areas PUA#1 and PUA#2 with the processing lights EL#1 and EL#2, respectively, by using the Galvano mirrors 2146 and 2156, respectively. After the melt pool MP#1 is no longer irradiated with the processing light EL#1 due to the movement of the target irradiation area EA#1, the build material M melted in the melt pool MP#1 is cooled and solidified (namely, coagulated). Similarly, after the melt pool MP#2 is no longer irradiated with the processing light EL#2 due to the movement of the target irradiation area EA#2, the build material M melted in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 8(c), the build object including the solidified build material M is deposited on the build surface MS in the processing unit areas PUA#1 and PUA#2 in which the melt pools MP#1 and MP#2 move.

Note that the build object including the build material M solidified in the processing unit area PUA#1 is physically separated from the build object including the build material M solidified in the processing unit area PUA#2 in FIG. 8(c), for convenience of description. However, the build object including the build material M solidified in the processing unit area PUA#1 may be integrated with the build object including the build material M solidified in the processing unit area PUA#2. Especially in a case where the processing unit areas PUA#1 and PUA#2 coincide with each other (alternatively, partially overlap with each other), the build object including the build material M solidified in the processing unit area PUA#1 may be integrated with the build object including the build material M solidified in the processing unit area PUA#2.

In a period during which the target irradiation areas EA#1 and EA#2 move in the processing unit areas PUA#1 and PUA#2, respectively, the processing system SYS may move at least one of the processing head 21 and the stage 31 so that the processing unit areas PUA#1 and PUA#2 move on the build surface MS. Namely, the processing system SYS may move each of the target irradiation areas EA#1 and EA#2 in the processing unit areas PUA#1 and PUA#2 and move the processing unit areas PUA#1 and PUA#2 on the build surface MS in parallel.

Alternatively, in the period during which the target irradiation areas EA#1 and EA#2 move in the processing unit areas PUA#1 and PUA#2, respectively, the processing system SYS may not move the processing head 21 and the stage 31 to prevent the processing unit areas PUA#1 and PUA#2 from moving on the build surface MS. Namely, in the period during which the target irradiation areas EA#1 and EA#2 move in the processing unit areas PUA#1 and PUA#2, respectively, the processing head 21 and the stage 31 may stop. In this case, after the additive manufacturing (namely, the building) in the processing unit areas PUA#1 and PUA#2 is completed, the processing system SYS may move at least one of the processing head 21 and the stage 31 so that the processing unit areas PUA#1 and PUA#2 are set in another area on the build surface MS. Namely, the processing system SYS may move at least one of the processing head 21 and the stage 31 so that the processing unit areas PUA#1 and PUA#2 move on the build surface MS after the additive manufacturing (namely, the building) in the processing unit areas PUA#1 and PUA#2 is completed. In this case, the processing system SYS may move at least one of the processing head 21 and the stage 31 so that an area on which the processing unit areas PUA#1 and PUA#2 have already been set (namely, an area in which the additive manufacturing has already been performed) on the build surface MS is adjacent to an area on which the processing unit areas PUA#1 and PUA#2 are newly set (namely, an area in which the additive manufacturing is performed next) on the build surface MS. Especially, the processing system SYS may move at least one of the processing head 21 and the stage 31 so that the area on which the processing unit areas PUA#1 and PUA#2 have already been set on the build surface MS does not overlap with the area on which the processing unit areas PUA#1 and PUA#2 are newly set on the build surface MS. However, the processing system SYS may move at least one of the processing head 21 and the stage 31 so that the area on which the processing unit areas PUA#1 and PUA#2 have already been set on the build surface MS partially overlaps with the area on which the processing unit areas PUA#1 and PUA#2 are newly set on the build surface MS.

The processing system SYS repeats a series of build process including the formation of the melt pool MP#1 by the irradiation with the processing light EL#1 in the processing unit area PUA#1, the formation of the melt pool MP#2 by the irradiation with the processing light EL#2 in the processing unit area PUA#2, the supply of the build material M to the melt pools MP#1 and MP#2, the melting of the supplied build material M, and the solidification of the melted build material M while moving the processing unit areas PUA#1 and PUA#2 along the target movement trajectory MT0, as illustrated in FIG. 8(d). In this case, the build object that has the width along the direction intersecting the target movement trajectory MT0is built on the build surface MS due to the movement of each of the processing unit areas PUA#1 and PUA#2. For example, in a case where each of the processing unit areas PUA#1 and PUA#2 moves as illustrated in FIG. 6(a) and FIG. 6(b), the build object that has a width along the X-axis direction and that extends along the Y-axis direction is built. For example, in a case where each of the processing unit areas PUA#1 and PUA#2 moves as illustrated in FIG. 7(a) and FIG. 7(c), the build object that has a width along the X-axis direction and that extends along the Y-axis direction is built.

As a result, as illustrated in FIG. 8(e), the structural layer SL corresponding to the build object that is an aggregation of the build material M, which has been solidified after being melted, is built on the build surface MS. Namely, the structural layer SL, which corresponds to an aggregation of the build object that has been built on the build surface MS in a pattern based on the target movement trajectory MT0of the processing unit areas PUA#1 and PUA#2, is built. Namely, the structural layer SL having a shape based on the target movement trajectory MT0of the processing unit areas PUA#1 and PUA#2 in a planar view is built.

Note that the processing system SYS may not irradiate the target irradiation areas EA#1 with the processing light EL#1 in a case where the target irradiation area EA#1 is set at the area on which the build object should not be built. Alternatively, the processing system SYS may irradiate the target irradiation areas EA#1 with the processing light EL#1 and stop the supply of the build material M. Alternatively, the processing system SYS may supply the build material M to the target irradiation areas EA#1 and irradiate the target irradiation areas EA#1 with the processing light EL#1 having an intensity by which the melt pool MP is not formed. The same may be applied to a case where the target irradiation area EA#2 is set at the area on which the build object should not be built.

The target movement trajectory MT0of each of the processing unit areas PUA#1 and PUA#2 may be referred to as a processing path (in other words, a tool path). In this case, the control unit 7 may move at least one of the processing head 21 and the stage 31 based on path information indicating the target movement trajectory MT0(namely, path information indicating the processing path) so that each of the processing unit areas PUA#1 and PUA#2 moves along the target movement trajectory MT0on the build surface MS.

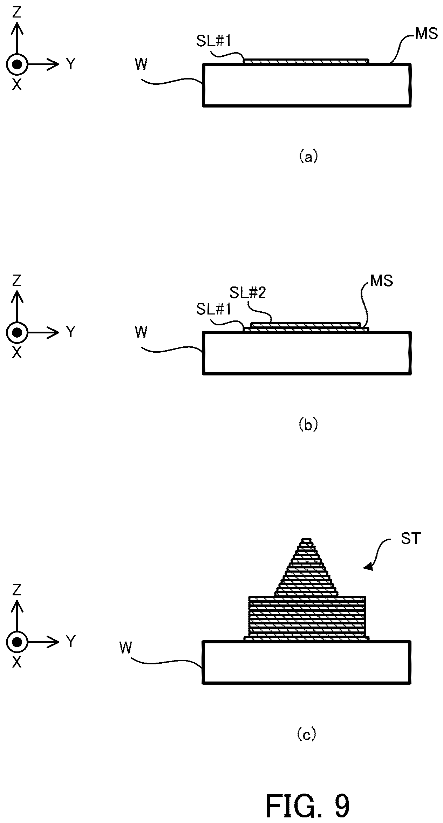

The processing system SYS repeats the operation for building the structural layer SL based on the three-dimensional model data under the control of the control unit 7. Specifically, the control unit 7 first generates slice data by performing a slicing process on the three-dimensional model data by a layer pitch before performing the operation for building the structural layer SL. The processing system SYS performs an operation for building a first structural layer SL#1 on the build surface MS that corresponds to the surface of the workpiece W based on the slice data corresponding to the structural layer SL#1. Specifically, the control unit 7 acquires the path information that is for building the first structural layer SL#1 and that is generated based on the slice data corresponding to the structural layer SL#1. Then, the control unit 7 controls the processing unit 2 and the stage unit 3 to build the first structural layer SL#1 based on the path information. As a result, as illustrated in FIG. 9(a), the structural layer SL#1 is built on the build surface MS. Then, the processing system SYS sets a surface (namely, an upper surface) of the structural layer SL#1 to be a new build surface MS and builds a second structural layer SL#2 on the new build surface MS. In order to build the structural layer SL#2, first, the control unit 7 controls at least one of the head driving system 22 and the stage driving system 32 so that the processing head 21 moves along the Z-axis direction relative to the stage 31. Specifically, the control unit 7 controls at least one of the head driving system 22 and the stage driving system 32 to move the processing head 21 toward the +Z-axis side and / or to move the stage 31 toward the -Z-axis direction so that the processing unit areas PUA#1 and PUA#2 are set on the surface of the structural layer SL#1 (namely, the new build surface MS). Then, the processing system SYS builds the structural layer SL#2 on the structural layer SL#1 based on the slice data corresponding to the structural layer SL#2, by performing an operation that is the same as the operation for building the structural layer SL#1 under the control of the control unit 7. As a result, as illustrated in FIG. 9(b), the structural layer SL#2 is built. Then, the same operation is repeated until all structural layers SL constituting the three-dimensional structural object ST that should be built on the workpiece W are built. As a result, the three-dimensional structural object ST is built by a layered structural object in which the plurality of structural layers SL are stacked, as illustrated in FIG. 9(c).

### (2-2) Second Build Operation

In the first build operation described above, the processing system SYS forms the melt pool MP on the build surface MS by irradiating the build surface MS with the processing light EL. On the other hand, in the second build operation, the processing system SYS may not irradiate the build surface MS with the processing light EL in order to form the melt pool MP on the build surface MS. In the second build operation, the processing system SYS may not perform the operation for forming the melt pool MP by irradiating the build surface MS with the processing light EL. Furthermore, in the first build operation described above, the processing system SYS melts the build material M in the melt pool MP by supplying the build material M to the melt pool MP formed on the build surface MS. Namely, in the first build operation described above, the processing system SYS melts the build material M on the build surface MS. On the other hand, in the second build operation, the processing system SYS may not melt the build material M on the build surface MS.

Specifically, in the second build operation, the processing system SYS melts the build material M in a space between the material nozzle 212 and the build surface MS before the build material M reaches the build surface MS. Namely, in the second build operation, the processing system SYS melts the build material M in the space between the material nozzle 212 and the build surface MS by irradiating the build material M with processing light EL in the space between the material nozzle 212 and the build surface MS. The build material M melted in the space between the material nozzle 212 and the build surface MS is supplied to the build surface MS. Therefore, the processing system SYS supplies the build material M, which has been melted in the space between the material nozzle 212 and the build surface MS, to the build surface MS. Therefore, summarizing the description of the second build operation described above, the second build operation may be an operation for building the build object on the build surface MS by irradiating the build material M with the processing light EL in the space between the material nozzle 212 and the build surface MS to melt the build material M and supplying the melted build material M to the build surface MS.

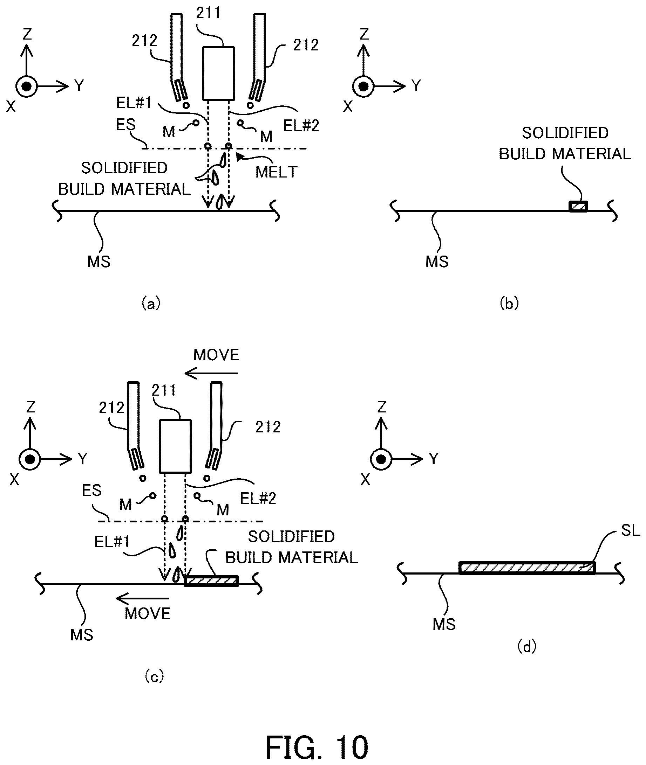

In order to build each structural layer SL by performing the second build operation, the processing system SYS moves at least one of the processing head 21 and the stage 31 under the control of the control unit 7 so that the melted build material M is supplied to a desired area on the build surface MS corresponding to the surface of the workpiece W or the surface of the already built structural layer SL. Then, as illustrated in FIG. 10(a), the processing system SYS emits the processing light EL#1 and EL#2 from the irradiation optical system 211 under the control of the control unit 7. Furthermore, as illustrated in FIG. 10(a), the processing system SYS supplies the build material M from the material nozzle 212 under the control of the control unit 7.

As a result, the build material M is irradiated with at least one of the processing lights EL#1 and EL#2 in the space between the material nozzle 212 and the build surface MS. Note that, the virtual material supply plane PL, which is positioned at a position at which the build material M is irradiated with at least one of processing light EL#1 and EL#2 in the space between the material nozzle 212 and the build surface MS, is referred to as the material irradiation plane ES in the below-described description, for convenience of description. In this case, as illustrated in FIG. 10(a), the processing system SYS may be considered to irradiate the material irradiation plane ES with the processing light EL#1 and EL#2 and supply the build material M to the material irradiation plane ES. However, since the material irradiation plane ES is not a physical surface, the processing light EL#1 and EL#2 irradiated onto the material irradiation plane ES pass through the material irradiation plane ES, and the build material M supplied to the material irradiation plane ES passes through the material irradiation plane ES. Therefore, the processing system SYS may be considered to emit the processing light EL#1 and EL#2 so that the processing light EL#1 and EL#2 pass through the material irradiation plane ES, and to supply the build material M so that the build material M passes through the material irradiation plane ES.

When the build material M is irradiated with at least one of the processing lights EL#1 and EL#2 in the material irradiation plane ES, the build material M is melted in the material irradiation plane ES, as illustrated in FIG. 10(a). The build material M melted in the material irradiation plane ES is supplied from the material irradiation plane ES to the build surface MS. As a result, the build material M, which has been melted in the material irradiation plane ES, adheres to the build surface MS. In this case, the melt pool MP may be considered to be formed on the build surface MS by the build material M that has been melted in the material irradiation plane ES. However, in the second build operation, since an object (for example, the workpiece W or the structural layer SL) whose surface is the build surface MS is hardly melted directly by the processing light EL, the melt pool MP hardly enters into the interior of the object (for example, the workpiece W or the structural layer SL) whose surface is the build surface MS. Alternatively, an amount of the melt pool MP entering into the interior of the object (for example, workpiece W or structural layer SL) whose surface is the build surface MS is relatively small. On the other hand, in the first build operation, since the object (for example, the workpiece W or the structural layer SL) whose surface is the build surface MS is melted by the processing light EL, it is likely that the melt pool MP enters into the interior of the object (for example, the workpiece W or the structural layer SL) whose surface is the build surface MS. Furthermore, the amount of the melt pool MP entering into the interior of the object (for example, workpiece W or structural layer SL) whose surface is the build surface MS is relatively large. Therefore, in a case where the melt pool MP is considered to be formed in the second build operation, a depth of the formed melt pool MP is typically shallower than a depth of the melt pool MP formed in the first build operation.

Then, the build material M supplied to the build surface MS is cooled and solidified (namely, coagulated). As a result, as illustrated in FIG. 10(b), the build object including the solidified build material M is deposited on the build surface MS.

The processing system SYS repeats a series of build process including the melting of the build material M in the material irradiation plane ES by the irradiation with the processing lights EL#1 and EL#2, the supply of the melted build material M to the build surface MS, and the solidification of the melted build material M on the build surface MS while moving the processing head 21 relative to the build surface MS, as illustrated in FIG. 10(c). Especially, the processing system SYS repeats the series of build process while moving the processing head 21 relative to the build surface MS along at least one of the X-axis direction and the Y-axis direction. In this case, the build object that has the width along the direction intersecting the movement direction of the processing head 21 is built on the build surface MS due to the movement of the processing head 21. As a result, as illustrated in FIG. 10(d), the structural layer SL corresponding to the build object that is an aggregation of the build material M, which has been solidified after being melted, is built on the build surface MS. The structural layer SL, which corresponds to an aggregation of the build object that has been built on the build surface MS in a pattern based on a movement trajectory of the processing head 21, is built. Namely, the structural layer SL having a shape based on the movement trajectory of the processing head 21 in a planar view is built.

Then, even in a case where the second build operation is performed, the processing system SYS repeats the operation for building the structural layer SL based on the three-dimensional model data under the control of the control unit 7, as in a case where the first build operation is performed. As a result, the three-dimensional structural object ST is built by a layered structural object in which the plurality of structural layers SL are stacked.

In the case where the second build operation is performed, the object (for example, the workpiece W or the structural layer SL) whose surface is the build surface MS is hardly melted directly by the processing light EL as described above. Therefore, a relatively shallow melt pool MP is formed on the build surface MS by the build material M that has been melted in the material irradiation plane ES. Therefore, a time required for the melted build material M to be cooled and solidified is shorter, compared to a case where the relatively deep melt pool MP is formed. Therefore, a time required to build the three-dimensional structural object ST is shorter in a case where the second build operation is performed, compared to a case where the first build operation is performed. Namely, a build speed by the second build operation is faster than a build speed by the first build operation. That is, the processing system SYS can build the three-dimensional structural object ST at a higher speed in a case where the second build operation is performed, compared to a case where the first build operation is performed.

Since the three-dimensional structural object ST can be built at higher speed by the second build operation, the second build operation may be referred to as a build operation based on an extreme high speed laser method (ELHA: Extreme High Speed Application). The second build operation may be regarded as the build operation based on the extreme high speed laser method (ELHA: Extreme High Speed Application).

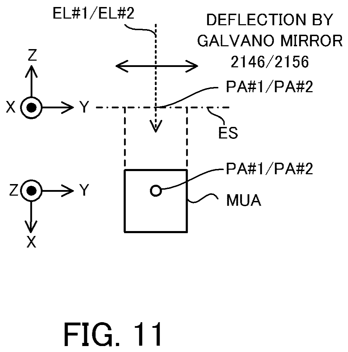

Even in a case where the second build operation is performed, the processing system SYS may deflect the processing light EL#1 and EL#2 by using the Galvano mirrors 2146 and 2156, as in the case where the first build operation is performed. In this case, as illustrated in FIG. 11 that illustrates the processing light EL#1 passing through the material irradiation plane ES, the processing system SYS may move the beam passing area PA#1, through which the processing light EL#1 passes in the virtual material supply plane PL intersecting the Z-axis between the material nozzle 212 and the build surface MS, by using the Galvano mirror 2146 to deflect the processing light EL#1. Similarly, as illustrated in FIG. 11 that illustrates the processing light EL#2 passing through the material irradiation plane ES, the processing system SYS may move the beam passing area PA#2, through which the processing light EL#2 passes in the virtual material supply plane PL intersecting the Z-axis between the material nozzle 212 and the build surface MS, by using the Galvano mirror 2156 to deflect the processing light EL#2.

In the present example embodiment, for convenience of description, a virtual area in which the Galvano mirror 2146 or 2156 moves the beam passing area PA#k (wherein k is a variable number representing 1 or 2) in the material irradiation plane ES is referred to as an irradiation unit area MUA (especially, the irradiation unit area MUA#k). In this case, the beam passing area PA#k may be considered to move on a plane of the material irradiation plane ES that overlaps with the irradiation unit area MUA#k. Specifically, the virtual area in which the Galvano mirror 2146 or 2156 moves the beam passing area PA#k in the material irradiation plane ES in a state where a positional relationship between the irradiation optical system 211 and the material irradiation plane ES is fixed (namely, is not changed) is referred to as the irradiation unit area MUA (especially, the irradiation unit area MUA#k). The irradiation unit area MUA#k indicates a virtual area (in other words, a range) through which the processing light EL#k emitted from the processing head 21 actually passes in a state where the positional relationship between the irradiation optical system 211 and the material irradiation plane ES is fixed. The irradiation unit area MUA#k indicates a virtual area (in other words, a range) in which the beam passing area PA#k actually moves in a state where the positional relationship between the irradiation optical system 211 and the material irradiation plane ES is fixed. Therefore, the irradiation unit area MUA#k may be regarded as a virtual area that is determined with respect to the processing head 21 (especially, the irradiation optical system 211). Namely, the irradiation unit area MUA#k may be regarded as a virtual area positioned at a position that is determined with respect to the processing head 21 (especially, the irradiation optical system 211) in the material irradiation plane ES. Note that a maximum area in which the Galvano mirror 2146 or 2156 is allowed to move the beam passing area PA#k in the material irradiation plane ES in a state where the positional relationship between the irradiation optical system 211 and the material irradiation plane ES is fixed may be referred to as the irradiation unit area MUA#k.

In this case, the processing system SYS may move the beam passing area PA#k in the irradiation unit area MUA#k by using the Galvano mirror 2146 or 2156. Therefore, an operation for deflecting the processing light EL#k by using the Galvano mirror 2146 or 2156 may be considered to be equivalent to an operation for moving the beam passing area PA#k in the irradiation unit area MUA#k.

Note that the beam passing area PA#k moves in the material irradiation plane ES even when at least one of the processing head 21 and the stage 31 moves. However, when at least one of the processing head 21 and the stage 31 moves, the relative positional relationship between the Galvano mirrors 2146 and 2156 and the material irradiation plane ES changes. As a result, the irradiation unit area MUA#k that is determined with respect to the processing head 21 (namely, the irradiation unit area MUA#k in which the Galvano mirror 2146 or 2156 moves the beam passing area PA#k in the material irradiation plane ES) moves in the material irradiation plane ES. Therefore, in the present example embodiment, an operation for moving at least one of the processing head 21 and the stage 31 may be considered to be equivalent to an operation for moving the irradiation unit area MUA#k relative to the material irradiation plane ES.

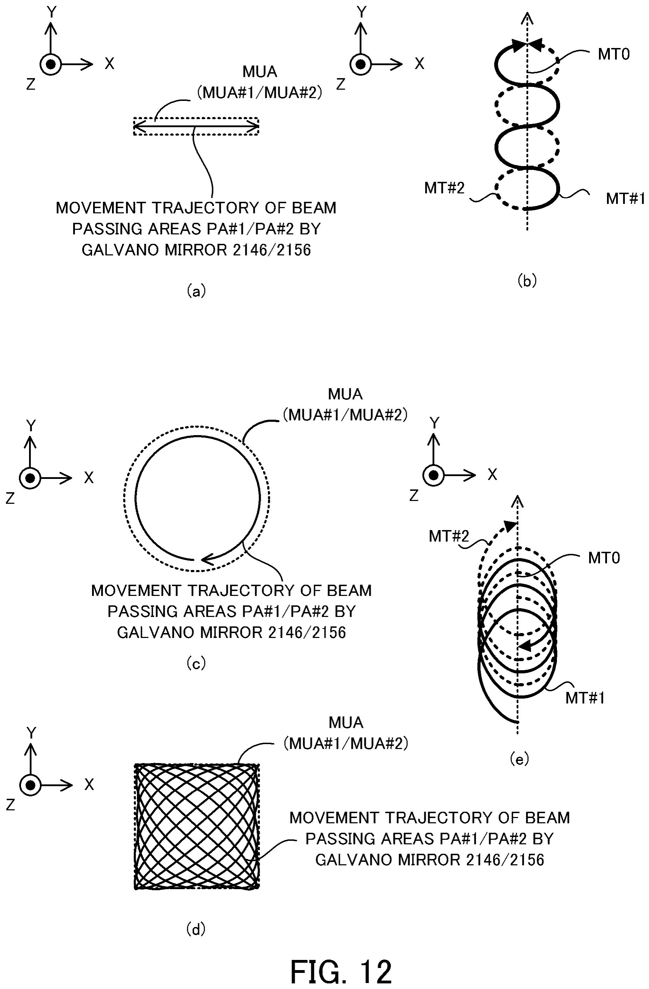

A characteristic (for example, the shape, a movement aspect, and so on) of the irradiation unit area MUA#k may be the same as a characteristic of the above-described processing unit area PUA#k. A movement aspect (for example, a movement trajectory and so on) of the beam passing area PA#k in the irradiation unit area MUA#k may be the same as a movement aspect of the target irradiation area EA#k in the above-described processing unit area PUA#k. Therefore, a detailed description of the characteristic of the irradiation unit area MUA#k and the movement aspect (for example, the movement trajectory and so on) of the beam passing area PA#k in the irradiation unit area MUA#k is omitted, however, one example thereof will be briefly described below with reference to FIG. 12(a) to FIG. 12(e). As illustrated in FIG. 12(a), the Galvano mirror 2146 or 2156 may deflect the processing light EL#k so that the beam passing area PA#k moves along a single scanning direction, which is along the material irradiation plane ES, in the irradiation unit area MUA#k under the assumption that the irradiation unit area MUA#k is stationary (namely, does not move) in the material irradiation plane ES. The irradiation unit area MUA#k illustrated in FIG. 12(a) may move in the material irradiation plane ES along the target movement trajectory MT0, thereby, the beam passing area PA#k may move in the material irradiation plane ES along a movement trajectory MT#k illustrated in FIG. 12(b) (for example, a wave-shaped movement trajectory MT#k that oscillates around the target movement trajectory MT0). As illustrated in FIG. 12(c) and FIG. 12(d), the Galvano mirror 2146 or 2156 may deflect the processing light EL#k so that the beam passing area PA#k moves along a plurality of scanning directions in the irradiation unit area MUA#k under the assumption that the irradiation unit area MUA#k is stationary (namely, does not move) in the material irradiation plane ES. The irradiation unit area MUA#k illustrated in FIG. 12(c) may move in the material irradiation plane ES along the target movement trajectory MT0, thereby, the beam passing area PA#k may move in the material irradiation plane ES along a movement trajectory MT#k illustrated in FIG. 12(e).

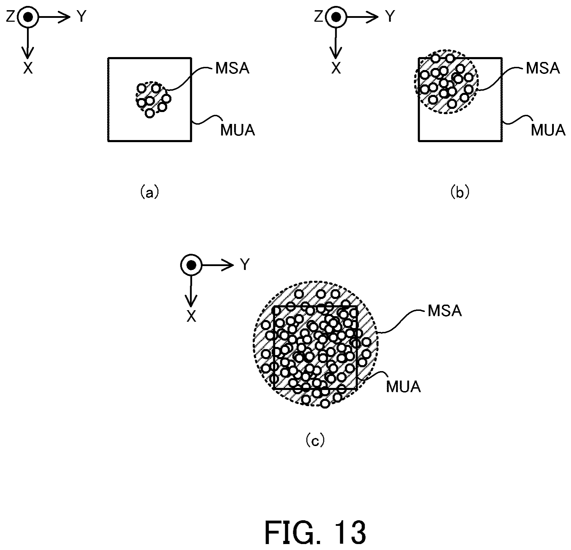

The material nozzle 212 may supply the build material M to the irradiation unit area MUA. In this case, the material nozzle 212 may supply the build material M to the irradiation unit area MUA so that the entire material supply area MSA is included in the irradiation unit area MUA, as illustrated in FIG. 13(a) that is a plan view illustrating a relationship between the material supply area MSA, to which the build material M is supplied in the irradiation unit area MUA, and the irradiation unit area MUA. Namely, the material nozzle 212 may supply the build material M to the irradiation unit area MUA so that a part of the irradiation unit area MUA is included in the material supply area MSA and another part of the irradiation unit area MUA is not included in the material supply area MSA. Alternatively, as illustrated in FIG. 13(b) that is a plan view illustrating a relationship between the material supply area MSA and the irradiation unit area MUA, the material nozzle 212 may supply the build material M to the irradiation unit area MUA so that a part of the material supply area MSA is included in the irradiation unit area MUA and another part of the material supply area MSA is not included in the irradiation unit area MUA. Namely, the material nozzle 212 may supply the build material M to the irradiation unit area MUA so that a part of the irradiation unit area MUA is included in the material supply area MSA and another part of the irradiation unit area MUA is not included in the material supply area MSA. Alternatively, the material nozzle 212 may supply the build material M to the irradiation unit area MUA so that the entire irradiation unit area MUA is included in the material supply area MSA, as illustrated in FIG. 13(c) that is a plan view illustrating a relationship between the material supply area MSA and the irradiation unit area MUA. Namely, the material nozzle 212 may supply the build material M to the irradiation unit area MUA so that a part of the material supply area MSA is included in the irradiation unit area MUA and another part of the material supply area MSA is not included in the irradiation unit area MUA.

### (2-3) Switching of Processing Mode (Setting of Processing Mode)

The control unit 7 may switch a processing mode of the processing system SYS (mainly, the processing unit 2) between a first mode in which the processing unit 2 performs the first build operation and a second mode in which the processing unit 2 performs the second build operation. Namely, the control unit 7 may set the processing mode of the processing system SYS (mainly, the processing unit 2) to either the first mode or the second mode.

In a case where the processing mode of the processing system SYS is set to the first mode, the processing unit 2 may perform the first build operation. By performing the first build operation, the processing unit 2 may build at least a part of the three-dimensional structural object ST. In a case where the processing mode of the processing system SYS is set to the second mode, the processing unit 2 may perform the second build operation. The processing unit 2 may build at least a part of the three-dimensional structural object ST by performing the second build operation.

In order to set the processing mode of the processing system SYS, the control unit 7 may control at least one of the position of the material control point MCP and the light concentration position CP of the processing light EL. For example, the control unit 7 may set the processing mode of the processing system SYS to the first mode by controlling the position of the material control point MCP so that the position of the material control point MCP is positioned at a first position that is suitable for performing the first build operation. For example, the control unit 7 may set the processing mode of the processing system SYS to the second mode by controlling the position of the material control point MCP so that the position of the material control point MCP is positioned at a second position that is suitable for performing the second build operation. For example, the control unit 7 may set the processing mode of the processing system SYS to the first mode by controlling the light concentration position CP so that the light concentration position CP is positioned at a third position that is suitable for performing the first build operation. For example, the control unit 7 may set the processing mode of the processing system SYS to the second mode by controlling the light concentration position CP so that the light concentration position CP is positioned at a fourth position that is suitable for performing the second build operation. Note that the third position and the fourth position may be referred to as a first light concentration position and a second light concentration position, respectively.

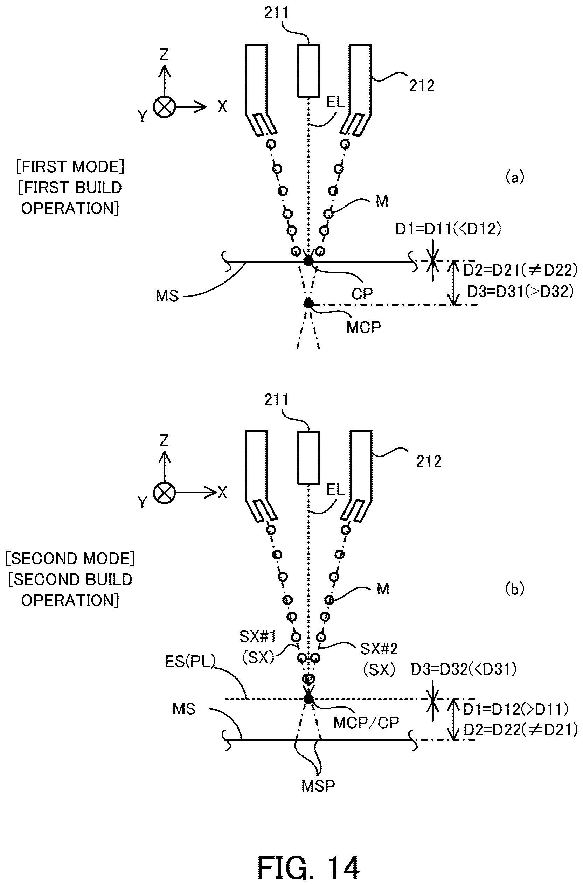

Next, with reference to FIG. 14(a) and FIG. 14(b), a specific example of a mode setting operation for setting the processing mode of the processing system SYS by controlling at least one of the position of the material control point MCP and the light concentration position CP of the processing light EL will be described. FIG. 14(a) is a cross-sectional view that illustrates one example of the processing head 21 performing the first build operation, and FIG. 14(b) is a cross-sectional view that illustrates one example of the processing head 21 performing the second build operation.

### (2-3-1) First Mode Setting Operation

As illustrated in FIG. 14(a), the control unit 7 may perform a first mode setting operation for setting the processing mode of the processing system SYS to the first mode by controlling the light concentration position CP of the processing light EL so that the light concentration position CP of the processing light EL is positioned on or near the build surface MS. Note that FIG. 14(a) illustrates an example in which the light concentration position CP of the processing light EL is positioned on the build surface MS, but the light concentration position CP of the processing light EL may be positioned at a position that is distant from the build surface MS along the Z-axis direction. In a case where the first mode setting operation is performed, the processing system SYS can properly form the melt pool MP on the build surface MS by irradiating the build surface MS with the processing light EL whose intensity is relatively high.

### (2-3-2) Second Mode Setting Operation

As illustrated in FIG. 14(b), the control unit 7 may perform a second mode setting operation for setting the processing mode of the processing system SYS to the second mode by controlling the light concentration position CP of the processing light EL so that the light concentration position CP of the processing light EL is positioned in the space between the material nozzle 212 and the build surface MS. In this case, it is likely that the intensity of the processing light EL used to perform the second build operation is likely to be maximum in the space between the material nozzle 212 and the build surface MS. Therefore, the processing system SYS can properly melt the build material M in the space between the material nozzle 212 and the build surface MS by irradiating the build material M with the processing light EL whose intensity is relatively high in the space between the material nozzle 212 and the build surface MS.

### (2-3-3) Third Mode Setting Operation

The control unit 7 may perform a third mode setting operation for switching the processing mode of the processing system SYS by controlling the light concentration position CP of the processing light EL to control a distance D1 between the light concentration position CP of the processing light EL and the build surface MS. Especially, the control unit 7 may perform the third mode setting operation for switching the processing mode of the processing system SYS by controlling the light concentration position CP of the processing light EL to control the distance D1 in the Z-axis direction between the light concentration position CP of the processing light EL and the build surface MS.

Specifically, as illustrated in FIG. 14(a) and FIG. 14(b), the control unit 7 may switch the processing mode of the processing system SYS by controlling the light concentration position CP of the processing light EL so as to satisfy a first distance condition that "the distance D1 between the light concentration position CP of the processing light EL and the build surface MS in a case where the first build operation is performed is different from the distance D1 between the light concentration position CP of the processing light EL and the build surface MS in a case where the second build operation is performed". Typically, the control unit 7 may switch the processing mode of the processing system SYS by controlling the light concentration position CP of the processing light EL so as to satisfy the first distance condition that "the distance D1 between the light concentration position CP of the processing light EL and the build surface MS in a case where the first build operation is performed is shorter the distance D1 between the light concentration position CP of the processing light EL and the build surface MS in a case where the second build operation is performed". Note that, the distance D1 is zero in the example illustrated in FIG. 14(a) because the light concentration position CP of the processing light EL is set on the build surface MS, but the distance D1 may not be zero.

In this case, the control unit 7 may set the processing mode of the processing system SYS to the first mode by controlling the light concentration position CP so that the distance D1 between the light concentration position CP of the processing light EL and the build surface MS is a first distance D11 that is suitable for performing the first build operation. On the other hand, the control unit 7 may set the processing mode of the processing system SYS to the second mode by controlling the light concentration position CP so that the distance D1 between the light concentration position CP of the processing light EL and the build surface MS is a second distance D12 that is suitable for performing the second build operation.

The second distance D12 is longer than the first distance D11. Namely, the first distance D11 is shorter than the second distance D12. The first distance D11 may be zero or longer than zero. The second distance D12 may be longer than zero, but it is preferable that it is not zero.

Each of the first distance D11 and the second distance D12 may be set based on a processing condition (for example, at least one of a characteristic of the processing system SYS, a characteristic of the build material M, and a characteristic of the workpiece W). Alternatively, each of the first distance D11 and the second distance D12 may be set by a user of the processing system SYS.

In a case where the first distance condition is satisfied in this manner, it is more likely that the intensity of the processing light EL used to perform the first build operation is maximum at or near the build surface MS, compared to a case where the first distance condition is not satisfied. Therefore, the processing system SYS can properly form the melt pool MP on the build surface MS by irradiating the build surface MS with the processing light EL whose intensity is relatively high. On the other hand, in a case where the first distance condition is satisfied, it is more likely that the intensity of the processing light EL used to perform the second build operation is maximum at a position that is distant from the build surface MS (typically, in the space between the material nozzle 212 and the build surface MS), compared to a case where the first distance condition is not satisfied. Therefore, the processing system SYS can properly melt the build material M in the space between the material nozzle 212 and the build surface MS by irradiating the build material M with the processing light EL whose intensity is relatively high in the space between the material nozzle 212 and the build surface MS.

Note thin the material irradiation plane ES on which the build material M is irradiated with the processing light EL in the second build operation may be regarded as the virtual material supply plane PL that is set at the same position as the light concentration position CP of the processing light EL in the Z-axis direction or that is set in the vicinity of the light concentration position CP of the processing light EL in the Z-axis direction, as illustrated in FIG. 14(b). Namely, the virtual material supply plane PL that is set at the same position as the light concentration position CP of the processing light EL in the Z-axis direction or that is set in the vicinity of the light concentration position CP of the processing light EL in the Z-axis direction may be used as the material irradiation plane ES.

### (2-3-4) Fourth Mode Setting Operation

As illustrated in FIG. 14(a), the control unit 7 may perform a fourth mode setting operation for setting the processing mode of the processing system SYS to the first mode by controlling the material control point MCP so that the material control point MCP is positioned below the build surface MS. It is likely that the object (for example, the workpiece W or the structural layer SL) whose surface is the build surface MS is positioned below the build surface MS. In this case, the fourth mode setting operation may be regarded as an operation for setting the processing mode of the processing system SYS to the first mode by controlling the material control point MCP so that the material control point MCP is positioned in (namely, inside) the object (for example, the workpiece W or the structural layer SL) whose surface is the build surface MS. A state where the material control point MCP is positioned below the build surface MS may include a state where the material control point MCP is positioned in (namely, inside) the object (for example, the workpiece W or the structural layer SL) whose surface is the build surface MS.

In this case, as illustrated in FIG. 14(a), it is less likely that the build material M is irradiated with the processing light EL (and, as a result, the build material M is melted) in the space between the material nozzle 212 and the build surface MS, compared to a case where the material control point MCP is positioned in the space between the material nozzle 212 and the build surface MS (namely, positioned above the build surface MS). Therefore, the processing system SYS can properly form the melt pool MP on the build surface MS by irradiating the build surface MS with the processing light EL, and can properly supply the build material M to the melt pool MP.

Note that the build material M supplied from the material nozzle 212 reaches the build surface MS before the build materials M supplied from the plurality of different material supply directions intersect each other in a case where the material control point MCP is positioned below the build surface MS. Therefore, an operation for controlling the material control point MCP so that the material control point MCP is positioned below the build surface MS may be considered to be equivalent to an operation for controlling the material control point MCP so that the build material M supplied from the material nozzle 212 reaches the build surface MS before the build materials M supplied from the plurality of different material supply directions intersect each other.

However, even in a case where the material control point MCP is positioned in the space between the material nozzle 212 and the build surface MS, the processing system SYS can form the melt pool MP on the build surface MS as long as the processing system SYS can irradiate the build surface MS with the processing light EL. Therefore, even in a case where the material control point MCP is positioned in the space between the material nozzle 212 and the build surface MS (namely, positioned above the build surface MS), the processing system SYS may perform the first build operation. For the same reason, even in a case where the material control point MCP is positioned on the build surface MS, the processing system SYS may perform the first build operation.

### (2-3-5) Fifth Mode Setting Operation

As illustrated in FIG. 14(b), the control unit 7 may perform a fifth mode setting operation for setting the processing mode of the processing system SYS to the second mode by controlling the material control point MCP so that the material control point MCP is positioned in the space between the material nozzle 212 and the build surface MS. Namely, the control unit 7 may perform the fifth mode setting operation for setting the processing mode of the processing system SYS to the second mode by controlling the material control point MCP so that the material control point MCP is positioned above the build surface MS.

In this case, as illustrated in FIG. 14(b), it is more likely that the build material M is irradiated with the processing light EL (as a result, the build material M is melted) in the space between the material nozzle 212 and the build surface MS, compared to the case where the material control point MCP is positioned below the build surface MS. Therefore, the processing system SYS can properly melt the build material M in the space between the material nozzle 212 and the build surface MS.

### (2-3-6) Sixth Mode Setting Operation

The control unit 7 may perform a sixth mode setting operation for switching the processing mode of the processing system SYS by controlling the position of the material control point MCP to control a distance D2 between the material control point MCP and the build surface MS. Especially, the control unit 7 may perform the sixth mode setting operation for switching the processing mode of the processing system SYS by controlling the position of the material control point MCP to control the distance D2 in the Z-axis direction between the material control point MCP and the build surface MS.

Specifically, as illustrated in FIG. 14(a) and FIG. 14(b), the control unit 7 may switch the processing mode of the processing system SYS by controlling the position of the material control point MCP so as to satisfy a second distance condition that "the distance D2 between the material control point MCP and the build surface MS in a case where the first build operation is performed is different from the distance D2 between the material control point MCP and the build surface MS in a case where the second build operation is performed". Typically, in a case where the distance D2 between the material control point MCP and the build surface MS is defined so that a distance between the build surface MS and a position that is distant from the build surface MS toward the +Z side is a positive distance and a distance between the build surface MS and a position that is distant from the build surface MS toward the -Z side is a negative distance, the control unit 7 may switch the processing mode of the processing system SYS by controlling the position of the material control point MCP so as to satisfy the second distance condition that "the distance D2 between the material control point MCP and the build surface MS in a case where the first build operation performed is a negative distance and the distance D2 between the material control point MCP and the build surface MS in a case where the second build operation is performed is a positive distance that is different from the negative distance". Note that the distance D2 between the material control point MCP and the build surface MS is equal to the distance D1 between the light concentration position CP of the processing light EL and the build surface MS in the example illustrated in FIG. 14(a) because the material control point MCP is positioned at the same position as the light concentration position CP of the processing light EL in the Z-axis direction, but the distance D2 may be different from the distance D1.

In a case where the second distance condition is satisfied in this manner, it is more likely that the material control point MCP is positioned below the build surface MS in a case where the first build operation is performed, compared to a case where the second distance condition is not satisfied. Therefore, it is less likely that the build material M is irradiated with the processing light EL (and, as a result, the build material M is melted) in the space between the material nozzle 212 and the build surface MS, as described in the description of the fourth mode setting operation. Therefore, the processing system SYS can properly form the melt pool MP on the build surface MS by irradiating the build surface MS with the processing light EL, and can properly supply the build material M to the melt pool MP.

Furthermore, in a case where the second distance condition is satisfied, it is more likely that the material control point MCP is positioned in the space between the material nozzle 212 and the build surface MS (namely, positioned above the build surface MS) in a case where the second build operation is performed, compared to a case where the second distance condition is not satisfied. Therefore, it is more likely that the build material M is irradiated with the processing light EL (and, as a result, the build material M is melted) in the space between the material nozzle 212 and the build surface MS, as described in the description of the fifth mode setting operation. Therefore, the processing system SYS can properly melt the build material M in the space between the material nozzle 212 and the build surface MS.

### (2-3-7) Seventh Mode Setting Operation

The control unit 7 may perform a seventh mode setting operation for switching the processing mode of the processing system SYS by controlling at least one of the light concentration position CP of the processing light EL and the position of the material control point MCP to control a distance D3 between the light concentration position CP of the processing light EL and the material control point MCP. Especially, the control unit 7 may perform the seventh mode setting operation for switching the processing mode of the processing system SYS by controlling at least one of the light concentration position CP of the processing light EL and the position of the material control point MCP to control the distance D3 in the Z-axis direction between the light concentration position CP of the processing light EL and the material control point MCP.

Specifically, as illustrated in FIG. 14(a) and FIG. 14(b), the control unit 7 performs the seventh mode setting operation for switching the processing mode of the processing system SYS by controlling the distance D3 between the light concentration position CP of the processing light EL and the material control point MCP so as to satisfy a third distance condition that "the distance D3 between the light concentration position CP of the processing light EL and the material control point MCP in a case where the first build operation is performed is different from the distance D3 between the light concentration position CP of the processing light EL and the material control point MCP in a case where the second build operation is performed". Typically, the control unit 7 performs the seventh mode setting operation for switching the processing mode of the processing system SYS by controlling the distance D3 between the light concentration position CP of the processing light EL and the material control point MCP so as to satisfy the third distance condition that "the distance D3 between the light concentration position CP of the processing light EL and the material control point MCP in a case where the first build operation is performed is longer the distance D3 between the light concentration position CP of the processing light EL and the material control point MCP in a case where the second build operation is performed". Note that the distance D3 is zero in the example illustrated in FIG. 14(b) because the material control point MCP is positioned at the same position as the light concentration position CP of the processing light EL in the Z-axis direction, but the distance D3 may not be zero.

In this case, the control unit 7 may set the processing mode of the processing system SYS to the first mode by controlling at least one of the light concentration position CP of the processing light EL and the position of the material control point MCP so that the distance D3 between the light concentration position CP of the processing light EL and the material control point MCP is a first distance D31 that is suitable for performing the first build operation. On the other hand, the control unit 7 may set the processing mode of the processing system SYS to the second mode by controlling at least one of the positions of the light concentration position CP and the material control point MCP so that the distance D3 between the light concentration position CP of the processing light EL and the material control point MCP is a second distance D32 that is suitable for performing the second build operation.

The second distance D32 is shorter than the first distance D31. Namely, the first distance D31 is longer than the second distance D32. The second distance D32 may be zero or longer than zero. The first distance D31 may be longer than zero, but it is preferable that it is not zero.

Each of the first distance D31 and the second distance D32 may be set based on the processing condition (for example, at least one of the characteristic of the processing system SYS, the characteristic of the build material M, and the characteristic of the workpiece W). Alternatively, each of the first distance D31 and the second distance D32 may be set by a user of the processing system SYS.

In a case where the third distance condition is satisfied in this manner, it is more likely that the material control point MCP is positioned below the build surface MS in a case where the first build operation is performed, compared to a case where the third distance condition is not satisfied. Therefore, it is less likely that the build material M is irradiated with the processing light EL (and, as a result, the build material M is melted) in the space between the material nozzle 212 and the build surface MS, as described in the description of the fourth mode setting operation. Therefore, the processing system SYS can properly form the melt pool MP on the build surface MS by irradiating the build surface MS with the processing light EL, and can properly supply the build material M to the melt pool MP.

Furthermore, in a case where the third distance condition is satisfied, it is more likely that the material control point MCP is positioned in the space between the material nozzle 212 and the build surface MS (namely, positioned above the build surface MS) in a case where the second build operation is performed, compared to a case where the third distance condition is not satisfied. Therefore, it is more likely that the build material M is irradiated with the processing light EL (and, as a result, the build material M is melted) in the space between the material nozzle 212 and the build surface MS, as described in the description of the fifth mode setting operation. Therefore, the processing system SYS can properly melt the build material M in the space between the material nozzle 212 and the build surface MS.

Note thin the material irradiation plane ES on which the build material M is irradiated with the processing light EL in the second build operation may be regarded as the virtual material supply plane PL that is set at the same position as the material control point MCP in the Z-axis direction or that is set in the vicinity of the material control point MCP in the Z-axis direction. Namely, the virtual material supply plane PL that is set at the same position as the material control point MCP in the Z-axis direction or that is set in the vicinity of the material control point MCP in the Z-axis direction may be used as the material irradiation plane ES.

### (2-3-8) Eighth Mode Setting Operation

In a case where the material nozzle 212 supplies the build material M from each of the plurality of different material supply directions, the control unit 7 may perform an eighth mode setting operation for setting the processing mode of the processing system SYS to the second mode by controlling at least one of the light concentration position CP of the processing light EL and the position of the material control point MCP so that the build material M is melted by the processing light EL at a position at which the build materials M supplied from the plurality of different material supply directions intersect each other. Namely, as illustrated in FIG. 14(b), the control unit 7 may perform the eighth mode setting operation for setting the processing mode of the processing system SYS to the second mode by controlling at least one of the light concentration position CP of the processing light EL and the position of the material control point MCP so that the build material M is irradiated with the processing light EL at the position at which the build materials M supplied from the plurality of different material supply directions intersect each other. For example, the control unit 7 may perform the eighth mode setting operation for setting the processing mode of the processing system SYS to the second mode by controlling at least one of the light concentration position CP of the processing light EL and the position of the material control point MCP so that the build material M is melted by the processing light EL at a position at which the build material M supplied from the first supply port part 2122 of the material supply port 2121 along the first material supply direction and the build material M supplied from the second supply port part 2123 of the material supply port 2121 along the second material supply direction intersect each other.

Even in this case, it is more likely that the build material M is irradiated with the processing light EL (and, as a result, the build material M is melted) in the space between the material nozzle 212 and the build surface MS (namely, above the build surface MS). Therefore, the processing system SYS can properly melt the build material M in the space between the material nozzle 212 and the build surface MS.

Note that it may be considered that the material nozzle 212 supplies the build material M toward a material supply position MSP on the build surface MS from a direction intersecting the build surface MS and the irradiation optical system 211 melts the build material M in the material irradiation plane ES by using the processing light EL directed toward a direction different from the material supply position MSP in a case where the build material M is melted by the processing light EL at the position at which the build materials M supplied from the plurality of different material supply directions intersects each other as illustrated in FIG. 14(b). Therefore, the eighth mode setting operation may be regarded as an operation for setting the processing mode of the processing system SYS to the second mode by controlling at least one of the light concentration position CP of the processing light EL and the position of the material control point MCP so that the material nozzle 212 supplies the build material M toward the material supply position MSP on the build surface MS from the direction intersecting the build surface MS and the irradiation optical system 211 melts the build material M in the material irradiation plane ES by using the processing light EL directed toward the direction different from the material supply position MSP.

Moreover, in a case where the build material M is melted by the processing light EL at the position at which the build materials M supplied from the plurality of different material supply directions intersects each other, the material irradiation plane ES may be regarded as the virtual material supply plane PL that is set at or near the position at which the build materials M supplied from the plurality of different material supply directions intersects each other. Namely, the virtual material supply plane PL that is set at or near the position at which the build materials M supplied from the plurality of different material supply directions intersects each other may be used as the material irradiation plane ES.

Note that the point at which the build materials M supplied from the plurality of different material supply directions intersect each other may be used as the material control point MCP. In this case, in a case where the build material M is melted by the processing light EL at the position at which the build materials M supplied from the plurality of different material supply directions intersects each other, the position at which the build materials M supplied from the plurality of different material supply directions intersects each other is positioned on the optical path of the processing light EL. Therefore, the material control point MCP may also be a point that is positioned on the optical path of the processing light EL. The material control point MCP may be a point that is positioned on a virtual axis extending along the optical path of the processing light EL. The material control point MCP may be a point that is positioned on the optical axis AX of the irradiation optical system 211 that emits the processing light EL.

Furthermore, both the material control point MCP and the optical axis AX may be positioned in an area that is determined by a distribution of the supplied amount of the build material M in the material irradiation plane ES including the material control point MCP. For example, both the material control point MCP and the optical axis AX may be positioned in an area corresponding to a half width at half maximum (alternatively, a full width at half maximum) of the distribution of the supplied amount of the build material M in the material irradiation plane ES including the material control point MCP. In this case, a diameter of the third optical system 216 (especially, the fθ lens 2162) that serves as the objective optical system may be smaller than the half width at half maximum (alternatively, the full width at half maximum) of the distribution of the supplied amount of the build material M in the material irradiation plane ES including the material control point MCP. Note that the light concentration position CP of the processing light EL may be fixed in a case where the processing mode of the processing system SYS is set to the first mode or the second mode by performing the fourth mode setting operation to the eighth mode setting operation. In other words, the light concentration position CP of the processing light EL in a case where the processing mode of the processing system SYS is set to the first mode may be the same as the light concentration position CP of the processing light EL in a case where the processing mode of the processing system SYS is set to the second mode. In this case, the processing system SYS may switch the processing mode of the processing system SYS by controlling the position of the material control point MCP. Moreover, the processing system SYS may switch the processing mode of the processing system SYS by controlling the position of the material control point MCP without controlling the light concentration position CP of the processing light EL.

### (2-3-9) Specific Example of Control Method of Position of Material Control Point MCP and Light Concentration Position CP of Processing Light EL

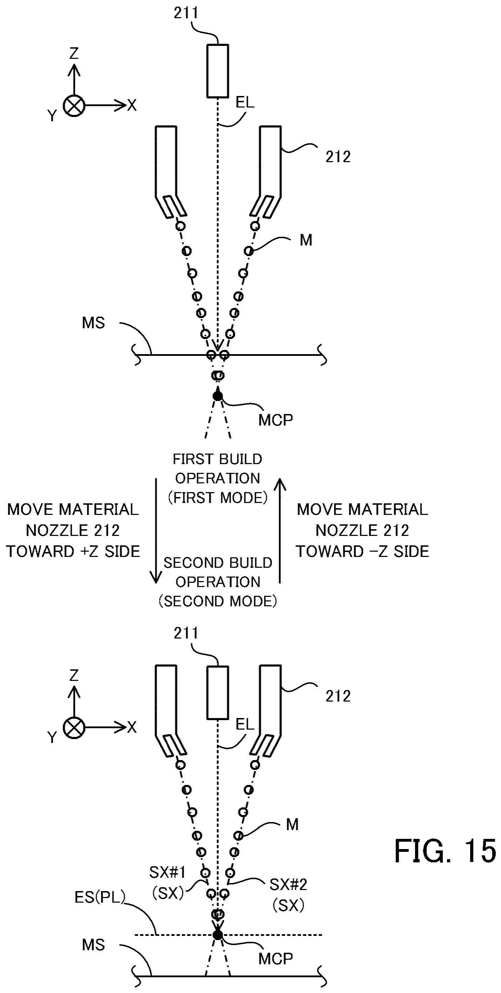

The control unit 7 may control the nozzle driving system 23 in order to control the position of the material control point MCP. Specifically, as illustrated in FIG. 15, the control unit 7 may control (typically, change) the position of the material control point MCP, which is determined with respect to the material nozzle 212, by controlling the nozzle driving system 23 to move the material nozzle 212 along the Z-axis direction. For example, as illustrated in FIG. 15, the control unit 7 may move the material nozzle 212 toward the +Z size along the Z-axis in a situation where the processing system SYS performs the first build operation (namely, the processing mode of the processing system SYS is set to the first mode) to switch the processing mode of the processing system SYS from the first mode to the second mode. For example, as illustrated in FIG. 15, the control unit 7 may move the material nozzle 212 toward the -Z size along the Z-axis in a situation where the processing system SYS performs the second build operation (namely, the processing mode of the processing system SYS is set to the second mode) to switch the processing mode of the processing system SYS from the second mode to the first mode.

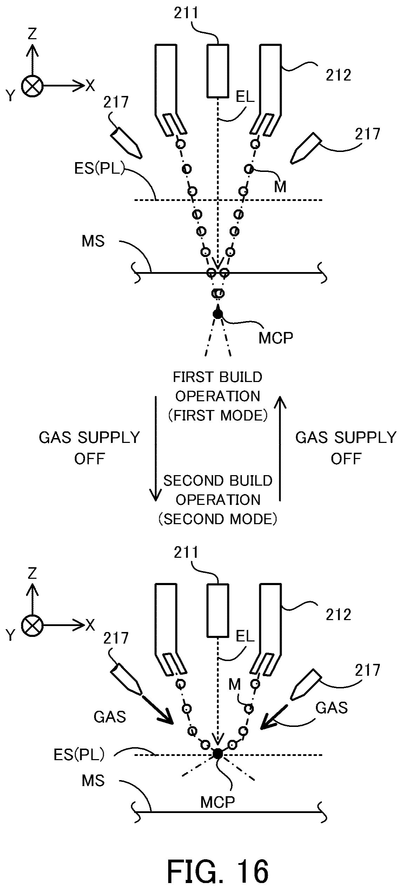

The control unit 7 may control a gas nozzle 217, which is configured to supply (typically, configure to blow) gas to a supply path of the build material M supplied from the material nozzle 212 in order to control the position of the material control point MCP. Specifically, as illustrated in FIG. 16, the control unit 7 may control (typically, change) the position of the material control point MCP, which corresponds to a point at which the build materials M intersect each other, by controlling ON/OFF of the supply of the gas from the gas nozzle 217 to change the material supply direction of the build material M from the material nozzle 212. For example, as illustrated in FIG. 16, the control unit 7 may change the material supply direction of the build material M so that the build materials M intersect each other in the space between the material nozzle 212 and the build surface MS by controlling the gas nozzle 217 to supply the gas in a situation where the processing system SYS performs the first build operation (namely, the processing mode of the processing system SYS is set to the first mode), thereby switching the processing mode of the processing system SYS from the first mode to the second mode. Alternatively, although it is not illustrated, for example, the control unit 7 may change the material supply direction of the build material M so that the build materials M intersect each other in the space between the material nozzle 212 and the build surface MS by controlling the gas nozzle 217 to stop the supply of the gas in a situation where the processing system SYS performs the first build operation (namely, the processing mode of the processing system SYS is set to the first mode), thereby switching the processing mode of the processing system SYS from the first mode to the second mode. For example, the control unit 7 may return the material supply direction of the build material M to its original direction by controlling the gas nozzle 217 to stop the supply of the gas in a situation where the processing system SYS performs the second build operation (namely, the processing mode of the processing system SYS is set to the second mode), thereby switching the processing mode of the processing system SYS from the second mode to the first mode. Alternatively, although it is not illustrated, for example, the control unit 7 may return the material supply direction of the build material M to its original direction by controlling the gas nozzle 217 to supply the gas in a situation where the processing system SYS performs the second build operation (namely, the processing mode of the processing system SYS is set to the second mode), thereby switching the processing mode of the processing system SYS from the second mode to the first mode.

Alternatively, although it is not illustrated, the control unit 7 may change the material supply direction of the build material M from the material nozzle 212 by controlling a supply direction of the gas from the gas nozzle 217 in addition to or instead of controlling ON/OFF of the supply of the gas from the gas nozzle 217. Namely, the control unit 7 may control (typically, change) the position of the material control point MCP, which corresponds to a point at which the build materials M intersect each other, by controlling the supply direction of the gas from the gas nozzle 217 in addition to or instead of controlling ON/OFF of the supply of the gas from the gas nozzle 217. For example, the control unit 7 may change the material supply direction of the build material M by controlling the gas nozzle 217 to change the supply direction of the gas in a situation where the processing system SYS performs the second build operation, thereby switching the processing mode of the processing system SYS from the second mode to the first mode. For example, the control unit 7 may change the material supply direction of the build material M by controlling the gas nozzle 217 to change the supply direction of the gas in a situation where the processing system SYS performs the first build operation, thereby switching the processing mode of the processing system SYS from the first mode to the second mode.

Alternatively, although it is not illustrated, the control unit 7 may change the material supply direction of the build material M from the material nozzle 212 by controlling a supplied amount of the gas from the gas nozzle 217, in addition to or instead of controlling at least one of ON/OFF of the supply of the gas from the gas nozzle 217 and the supply direction of the gas from the gas nozzle 217. Namely, the control unit 7 may control (typically, change) the position of the material control point MCP, which corresponds to a point at which the build materials M intersect each other, by controlling the supplied amount of the gas from the gas nozzle 217, in addition to or instead of controlling at least one of ON/OFF of the supply of the gas from the gas nozzle 217 and the supply direction of the gas from the gas nozzle 217. For example, the control unit 7 may change the material supply direction of the build material M by controlling the gas nozzle 217 to change (for example, increase or decrease) the supplied amount of the gas in a situation where the processing system SYS performs the second build operation, thereby switching the processing mode of the processing system SYS from the second mode to the first mode. For example, the control unit 7 may change the material supply direction of the build material M by controlling the gas nozzle 217 to change (for example, increase or decrease) the supplied amount of the gas in a situation where the processing system SYS performs the first build operation, thereby switching the processing mode of the processing system SYS from the first mode to the second mode.

The control unit 7 may control at least one of the focus control optical systems 2145 and 2156 of the irradiation optical system 211 in order to control the light concentration position CP. Especially, the control unit 7 may control the light concentration position CP in accordance with the control of the material control point MCP by controlling at least one of the focus control optical systems 2145 and 2156 in parallel with or before or after the control of the material control point MCP.

### (2-3-10) Usage of Position Information related to Position of Material Control Point MCP, Light Concentration Position CP of Processing Light EL, and Position of Build Surface MS

As described above, the processing mode of the processing system SYS may be switched depending on at least one of the light concentration position CP of the processing light EL, the position of the material control point MCP, and the position of the build surface MS. Therefore, the light concentration position CP of the processing light EL, the position of the material control point MCP, and the position of the build surface MS may be regarded as index values that affect the processing mode of the processing system SYS.

In this case, the control unit 7 may collect, as log information, position information related to at least one of the light concentration position CP of the processing light EL, the position of the material control point MCP, and the position of the build surface MS in a period during which the processing system SYS builds the three-dimensional structural object ST. In order for the control unit 7 to collect the log information, the processing system SYS may include a sensor that detects the position information related to at least one of the light concentration position CP of the processing light EL, the position of the material control point MCP, and the position of the build surface MS. The collected log information may be used to verify the operation of the processing system SYS later. The collected log information may be used to verify a quality of the three-dimensional structural object ST built by the processing system SYS later.

### (3) Building of Three-Dimensional Structural Object ST using both First and Second Build Operations

As described above, the processing system SYS may build the three-dimensional structural object ST by performing both the first and second build operations. Specifically, the processing system SYS may build a part of the three-dimensional structural object ST by performing the first build operation, and may build another part of the three-dimensional structural object ST by performing the second build operation. Namely, the processing system SYS may build a first part of the three-dimensional structural object ST by performing the first build operation and build a second part, which is different from the first part, of the three-dimensional structural object ST by performing the second build operation. Especially, the processing system SYS may build a part of the three-dimensional structural object ST by performing the first build operation in a first period, and build another part of the three-dimensional structural object ST by performing the second build operation in a second period that is different from the first period. Namely, the processing system SYS may build a first part of the three-dimensional structural object ST by performing the first build operation during the first period, and build a second part of the three-dimensional structural object ST by performing the second build operation during the second period that is different from the first period.

In this case, the control unit 7 may switch the processing mode of the processing system SYS so that the processing unit 2 that performs the first build operation builds a part (the first part) of the three-dimensional structural object ST, and the processing unit 2 that performs the second build operation builds another part (the second part) of the three-dimensional structural object ST.

Next, a specific example of an operation for building the three-dimensional structural object ST by performing both the first and second build operations will be described.

### (3-1) First Specific Example of Operation for Building Three-Dimensional Structural Object ST by using both First and Second Build Operations

First, a first specific example of the operation for building the three-dimensional structural object ST by performing both the first and second build operations will be described. In the first specific example, the processing system SYS may perform both the first and second build operations to build each of the plurality of structural layers SL constituting the three-dimensional structural object ST. Therefore, in the first specific example, the control unit 7 may switch the processing mode of the processing system SYS between the first mode and the second mode in a period during which the processing system SYS builds each structural layer SL.

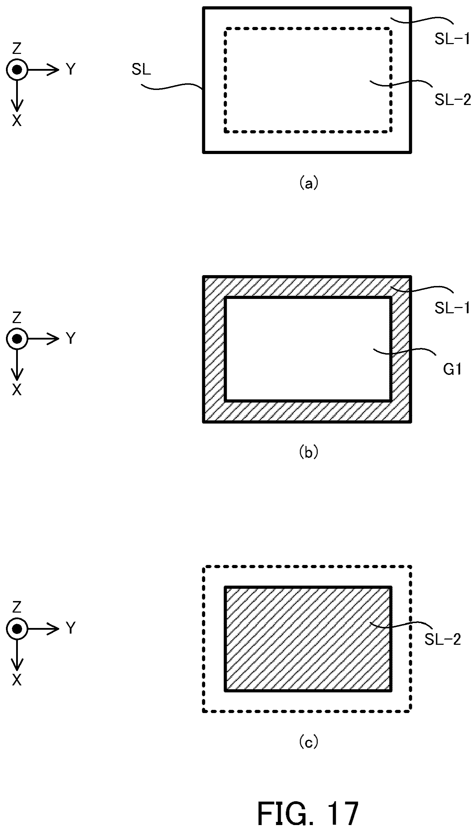

Specifically, in the first specific example, as illustrated in FIG. 17(a) and FIG. 17(b), the processing system SYS may build an outer wall build object SL-1, which corresponds to a part of the structural layer SL, by performing the first build operation. The outer wall build object SL-1 may be a build object having a surface that is exposed after the three-dimensional structural object ST is completed. The outer wall build object SL-1 may be a build object having a surface that is an outer surface of the three-dimensional structural object ST. The outer wall build object SL-1 may be a build object having a surface that faces toward a direction intersecting a stacking direction of the structural layers SL (for example, toward a direction intersecting the Z-axis). The outer wall build object SL-1 may include a build object having a predetermined width along a direction intersecting the stacking direction of the structural layer SL. FIG. 17(a) and FIG. 17(b) illustrates an example in which the outer wall build object SL-1 is a frame-shaped build object.

On the other hand, as illustrated in FIG. 17(a) and FIG. 17(c), the processing system SYS may build an infill build object SL-2, which corresponds to a remaining part of the structural layer SL, by performing the second build operation. The infill build object SL-2 may include a build object that is not exposed after the three-dimensional structural object ST is completed. The infill build object SL-2 may include a build object that is at least partially surrounded by the outer wall build object SL-1. The infill build object SL-2 may include a build that is at least partially surrounded by the outer wall build SL-1 in a plane intersecting the stacking direction of the structural layers SL. The infill build object SL-2 may include a build object that is positioned inside the outer wall build SL-1. The infill build object SL-2 may include a build object that is positioned inside the outer wall build object SL-1 in a plane intersecting the stacking direction of the structural layers SL. The infill build object SL-2 may include a build object that fills in a void part G1 of the outer wall build object SL-1 (namely, a space surrounded by the outer wall build object SL-1). In this case, the outer wall build object SL-1 may include a build object that includes the void part G1 surrounded by the outer wall build object SL-1. FIG. 17(a) and FIG. 17(c) illustrates an example in which the infill build object SL-2 is a build object that has a rectangular outer shape and that fills in a three-dimensional void part G1 having a rectangular cross-sectional shape.

The processing system SYS may build the outer wall build object SL-1 by performing the first build operation, and then build the infill build object SL-2 by performing the second build operation. The processing system SYS may build the infill build object SL-2 by performing the second build operation, and then build the outer wall build object SL-1 by performing the first build operation. The processing system SYS may alternately repeat an operation for forming a part of the outer wall build object SL-1 by performing the first build operation and an operation for forming a part of the infill build object SL-2 by performing the second build operation.

Here, a build accuracy by the first build operation is usually higher than a build accuracy by the second build operation. Next, a reason why the build accuracy by the first build operation is higher than the build accuracy by the second build operation will be described. As described above, the first build operation is the operation for building the build object by irradiating the build surface MS with the processing light EL to form the melt pool MP on the build surface MS and supplying the build material M to the formed melt pool MP. In this case, the build accuracy by the first build operation depends on an accuracy of the position at which the melt pool MP is formed. The accuracy of the position at which the melt pool MP is formed depends on an accuracy of the irradiation position of the processing light EL on the build surface MS. Here, the irradiation position of the processing light EL on the build surface MS is controllable with relatively high accuracy by the Galvano mirror 2146 or 2156. On the other hand, the second build operation is the operation for building the build object by supplying the build material M, which has been melted in the space between the material nozzle 212 and the build surface MS, to the build surface MS. In this case, the build accuracy by the second build operation depends on an accuracy of a supply position of the melted build material M on the build surface MS. Here, the supply position of the melted build material M on the build surface MS may not necessarily be controllable with high accuracy, compared to the irradiation position of the processing light EL on the build surface MS that affects the build accuracy by the first build operation described above. This is because a trajectory of the melted build material M, which falls in the space between the material nozzle 212 and the build surface MS, may not be necessarily controllable with high accuracy. Therefore, the build accuracy by the first build operation is usually higher than the build accuracy by the second build operation.

As a result, in a case where the outer wall build object SL-1 is built by the first build operation, the processing system SYS can build the outer wall build object SL-1, which forms the outer surface of the three-dimensional structural object ST, with higher build accuracy, compared to a case where the outer wall build object SL-1 is built by the second build operation. Therefore, the processing system SYS can build the three-dimensional structural object ST whose outer shape has a relatively small size error.

On the other hand, as describe above, the build speed by the second build operation is faster than the build speed by the first build operation. Therefore, in a case where the infill build object SL-2 is built by performing the second build operation, a time required to build the infill build object SL-2 is shorter, compared to a case where the infill build object SL-2 is built by performing the first build operation. On the other hand, since the infill build object SL-2 is not exposed to an outside of the three-dimensional structural object ST, it is unlikely that a size accuracy of the outer shape of the three-dimensional structural object ST deteriorates even in a case where the infill build object SL-2 is built by performing the second build operation.

Therefore, in the first specific example, the processing system SYS can build the three-dimensional structural object ST with relatively smaller size error in a relatively shorter time, compared to a case where the three-dimensional structural object ST is built by performing only one of the first and second build operations. Namely, the processing system SYS can achieve both an effect of improving the build accuracy (for example, improving the size error of the outer shape of the three-dimensional structural object ST) and an effect of reducing the time required to build the three-dimensional structural object ST (namely, improving a throughput).

### (3-2) Second Specific Example of Operation for Building Three-Dimensional Structural Object ST by using both First and Second Build Operations

Next, a second specific example of the operation for building the three-dimensional structural object ST by performing both the first and second build operations will be described. Even in the second specific example, the processing system SYS may perform both the first and second build operations to build each of the plurality of structural layers SL constituting the three-dimensional structural object ST, as in the first specific example. Therefore, even in the second specific example, the control unit 7 may switch the processing mode of the processing system SYS between the first mode and the second mode in the period during which the processing system SYS builds each structural layer SL, as in the first specific example.

Especially in the second specific example, the processing system SYS may perform both the first and second build operations to build the first structural layer SL#1 of the plurality of structural layers SL that constitute the three-dimensional structural object ST. However, the processing system SYS may perform both the first and second build operations to build any structural layer SL constituting the three-dimensional structural object ST. In the below-described description, an example in which the processing system SYS performs both the first and second build operations to build the first structural layer SL#1 will be described. In this case, the processing system SYS builds a first structural layer part SL#1-1, which is a part of the structural layer SL#1, by performing the first build operation, and builds a second structural layer part SL#1-1, which is another part of the structural layer SL#1, by performing the second build operation.

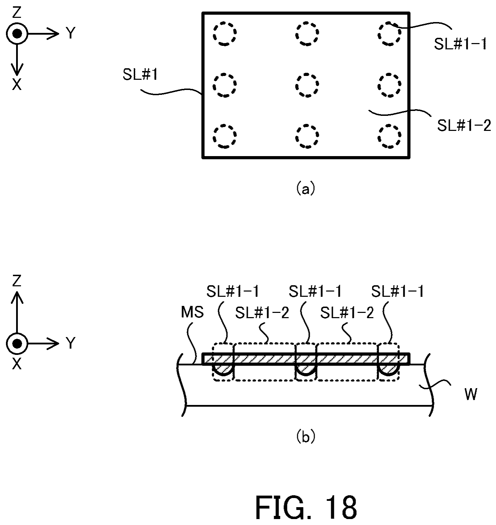

FIG. 18(a) and FIG. 18(b) illustrated one example of the structural layer SL#1 built in the second specific example.

As illustrated in FIG. 18(a) and FIG. 18(b), the processing system SYS may build the first structural layer part SL#1-1 by performing the first build operation. Here, as illustrated in FIG. 18(b), the first structural layer part SL#1-1 may be a build object that is integrated with (namely, is coupled with) the workpiece W. Alternatively, the first structural layer part SL#1-1 may be a build object that is coupled with the workpiece W with a relatively strong coupling force. As described above, since the processing system SYS that performs the first build operation irradiates the build surface MS, which corresponds to the surface of the workpiece W, with the processing light EL, a part of the workpiece W is melted by the irradiation of the processing light EL. Therefore, the processing system SYS can properly build the first structural layer part SL#1-1 that is integrated with the workpiece W or that is coupled with the workpiece W with the relatively strong coupling force by supplying the build material M of the melt pool MP formed by melting a part of the workpiece W.

On the other hand, as illustrated in FIG. 18(a) and FIG. 18(b), the processing system SYS may build the second structural layer part SL#1-2 by performing the second build operation. Here, as illustrated in FIG. 18(b), the second structural layer part SL#1-2 may be a build object that is not integrated (namely, is not coupled with) with the workpiece W. Alternatively, the second structural layer part SL#1-2 may be a build object that is coupled with the workpiece W with a relatively weak coupling force. Namely, the coupling force between the second structural layer part SL#1-2 and the workpiece W may be weaker than the coupling force between the first structural layer part SL#1-1 and the workpiece W. As described above, the processing system SYS that performs the second build operation supplies the melted build material M to the build surface MS that corresponds to the surface of the workpiece W. Therefore, a part of the workpiece W is hardly melted directly by the processing light EL. Therefore, the processing system SYS can properly build the second structural layer part SL#1-2 that is not integrated with the workpiece W or that is coupled with the workpiece W with the relatively weak coupling force by supplying the melted build material M to the build surface MS.

The processing system SYS may build a plurality of first structural layer parts SL#1-1. Especially, the processing system SYS may build the plurality of first structural layer parts SL#1-1 that are distributed discretely on the build surface MS. On the other hand, the processing system SYS may build the second structural layer part SL#1-2 that connects the plurality of first structural layer parts SL#1-1. As a result, the processing system SYS may build the structural layer SL#1 in which the plurality of first structural layer parts SL#1-1 and the second structural layer part SL#1-2 are integrated. In this case, the structural layer SL#1 is fixed to the workpiece W through the plurality of first structural layer parts SL#1-1, and therefore, the build object (for example, at least one structural layer SL including the structural layer SL#1) built on the workpiece W does not move unintentionally in the period during which the three-dimensional structural object ST is built.

In the second specific example, as illustrated in FIG. 19, the control unit 7 may switch the processing mode of the processing system SYS between the first mode and the second mode in a period during which the processing light EL is deflected by using at least one of the Galvano mirrors 2146 and 2156. For example, the control unit 7 may set the processing mode of the processing system SYS to the second mode and control the processing unit 2 to build the second structural layer part SL#1-2 while deflecting the processing light EL by using at least one of the Galvano mirrors 2146 and 2156. The processing light EL is irradiated onto a position on the build surface MS at which the first structural layer SL#1-1 should be built at a certain timing in the period during which the processing light EL is deflected by using at least one of the Galvano mirrors 2146 and 2156,. In this case, the control unit 7 may switch the processing mode of the processing system SYS from the second mode to the first mode and control the processing unit 2 to build the first structural layer part SL#1-1 at that timing.

Here, since a part of the workpiece W may not be melted by the second build operation and a part of the workpiece W is melted by the first build operation as described above, the intensity of the processing light EL used to perform the first build operation may be different from the intensity of the processing light EL used to perform the second build operation. Therefore, the control unit 7 may change the intensity of the processing light EL in accordance with the switching of the processing mode of the processing system SYS.

Typically, the intensity of the processing light EL used to perform the first build operation may be higher than the intensity of the processing light EL used to perform the second build operation. In other words, the intensity of the processing light EL used to perform the second build operation may be lower than the intensity of the processing light EL used to perform the first build operation. For example, the intensity of the processing light EL used to perform the first build operation may be high enough to melt a part of the workpiece W. For example, the intensity of the processing light EL used to perform the second build operation may not be high enough to melt a part of the workpiece W. However, it is preferable that the intensity of the processing light EL used to perform the second build operation be high enough to melt the build material M. As a result, the processing system SYS can build the first structural layer part SL#1-1 that is integrated with the workpiece W or coupled with the workpiece W with the relatively strong coupling force by performing the first build operation, and can build the second structural layer part SL#1-2 that is not integrated with the workpiece W or coupled with the workpiece W with a relatively weak coupling force by performing the second build operation.

Note that the processing light EL continues to move in the period during which the processing light EL is deflected by at least one of the Galvano mirrors 2146 and 2156,. Therefore, there is a possibility that a period during which the processing light EL is irradiated at the position at which the first structural layer SL#1-1 should be built on the build surface MS is not very long. Therefore, there is a possibility that it is not easy to control at least one of the light concentration position CP of the processing light EL and the material control point MCP in a relatively short time corresponding to a driving cycle of the Galvano mirrors 2146 and 2156. In this case, the control unit 7 may switch the processing mode of the processing system SYS between the first mode and the second mode by changing the intensity of the processing light EL, in addition to or instead of performing the mode setting operation described above. Namely, the control unit 7 may switch the processing mode of the processing system SYS between the first mode and the second mode by changing the intensity of the processing light EL so that the intensity of the processing light EL used to perform the first build operation is different from the intensity of the processing light EL used to perform the second build operation. Typically, the control unit 7 may switch the processing mode of the processing system SYS between the first mode and the second mode by changing the intensity of the processing light EL so that the intensity of the processing light EL used to perform the first build operation is higher than the intensity of the processing light EL used to perform the second build operation.

After the structural layer SL#1 is built, the processing system SYS may build the remaining structural layers SL by performing either the first or the second build operation. However, even in a case where the remaining structural layers SL are built, the processing system SYS may perform both the first and the second build operations in the same manner as in a case where the first structural layer SL#1 is built. As a result, as illustrated in FIG. 20, the three-dimensional structural object ST including structural layer SL#1 built by performing both the first and second build operations is built. For example, the three-dimensional structural object ST, which is coupled with the workpiece W through the first structural layer part SL#1-1, is built.

After the three-dimensional structural object ST is built, the processing system SYS may perform a separation operation for separating the three-dimensional structural object ST from the workpiece W by using a separation apparatus 81 of the processing system SYS. Alternatively, in a case where an apparatus different from the processing system SYS includes the separation apparatus 81, the workpiece W on which the three-dimensional structural object ST has been built may be taken out from the processing system SYS (especially, the stage 31), and the apparatus different from the processing system SYS may perform the separation operation for separating the three-dimensional structural object ST from the workpiece W by using the separation apparatus 81. In a case where the apparatus different from the processing system SYS performs the separation operation, the processing system SYS may not include the separation apparatus 81.

The separation apparatus 81 may separate the three-dimensional structural object ST, which includes the second structural layer part SL#1-2, from the workpiece W by destroying the first structural layer part SL#1-1 integrated with the workpiece W. For example, the separation apparatus 81 may destroy the entire first structural layer part SL#1-1. In this case, the three-dimensional structural object ST that has been separated from the workpiece W may not include the first structural layer part SL#1-1. Alternatively, for example, the separation apparatus 81 may destroy a part of the first structural layer part SL#1-1 and may not destroy another part of the first structural layer part SL#1-1. In this case, the three-dimensional structural object ST that has been separated from the workpiece W may not include a part of the first structural layer SL#1-1 and may include another part of the first structural layer SL#1-1.

FIG. 21(a) illustrates one example of the separation apparatus 81. As illustrated in FIG. 21(a), the separation apparatus 81 may include a vibration apparatus for vibrating the workpiece W. In this case, the separation apparatus 81 may separate the three-dimensional structural object ST from the workpiece W by vibrating the workpiece W. Specifically, when the workpiece W vibrates, the vibration of the workpiece W is transmitted to the first structural layer part SL#1-1. Since the first structural layer part SL#1-1 is integrated with the workpiece W or is coupled with the workpiece W with the relatively strong coupling force, the vibration of the workpiece W is easily transmitted to the first structural layer part SL#1-1 as it is. As a result, the first structural layer part SL#1-1 is easily destroyed due to the vibration. On the other hand, since the second structural layer part SL#1-2 is not integrated with the workpiece W or is merely coupled with the relatively weak coupling force, it is unlikely that the vibration of the workpiece W is transmitted to the second structural layer part SL#1-2 as it is. As a result, the first structural layer part SL#1-1 is not easily destroyed due to the vibration. Therefore, as illustrated in FIG. 21(b), the separation apparatus 81 can properly separate the three-dimensional structural object ST including the second structural layer part SL#1-2 from the workpiece W by selectively destroying the first structural layer part SL#1-1.

The separation apparatus 81 may separate the three-dimensional structural object ST from the workpiece W by vibrating the workpiece W at a resonance frequency of the workpiece W. In a case where the workpiece W vibrates at the resonance frequency of the workpiece W, an amplitude of the vibrating workpiece W is larger, compared to a case where the workpiece W vibrates at a vibration frequency different from the resonance frequency of the workpiece W. As a result, it is more likely that the first structural layer part SL#1-1, which is integrated with the workpiece W or is coupled with the workpiece W with the relatively strong coupling force, is destroyed. On the other hand, since the second structural layer part SL#1-2 is not integrated with the workpiece W or is merely coupled with the relatively weak coupling force, it is unlikely that the second structural layer part SL#1-2 is destroyed due to the vibration of the workpiece W even in a case where the amplitude of the vibrating workpiece W is large. Therefore, as illustrated in FIG. 21(b), the separation apparatus 81 can properly separate the three-dimensional structural object ST including the second structural layer part SL#1-2 from the workpiece W by selectively destroying the first structural layer part SL#1-1.

In this manner, in the second specific example, the processing system SYS can build the three-dimensional structural object ST that is relatively easily separatable from the workpiece W.

Note that one structural layer SL includes the first structural layer part SL#1-1 and the second structural layer part SL#1-2 in the above-described description. However, the processing system SYS may build a first structural layer SL that serves as the first structural layer part SL#1-1 and a second structural layer SL that serves as the second structural layer part SL#1-2 separately. For example, the processing system SYS may build the first structural layer SL#1 that serves as the first structural layer part SL#1-1 by performing the first build operation, and then build the second structural layer SL#2 that serves as the second structural layer part SL#1-2 on the first structural layer SL#1 by performing the second build operation.

### (3-3) Parallel Performance of First Build Operation and Second Build Operation

In the above-described description, the processing system SYS builds a part (the first part) of the three-dimensional structural object ST by performing the first build operation in the first period, and builds another part (the second part) of the three-dimensional structural object ST by performing the second build operation in the second period different from the first period. However, the processing system SYS may build at least a part of the three-dimensional structural object ST by performing the first build operation and the second build operation in parallel in the first period. Namely, the first period for performing the first build operation and the second period for performing the second build operation may overlap with each other at least partially.

For example, even in a case where the processing mode of the processing system SYS is set to the first mode, the processing system SYS may perform the second build operation in parallel with the first build operation. Specifically, even in a case where the processing mode of the processing system SYS is set to the first mode, the processing system SYS may perform the second build operation for melting a second build object M by irradiating the second build object M with the processing light EL in the space between the material nozzle 212 and the build surface MS and supplying the melted second build material M to the build surface MS while performing the first build operation by irradiating the build surface MS with the processing light EL to form the melt pool MP on the build surface MS and supplying a first build material M to the formed melt pool MP.

For example, even in a case where the processing mode of the processing system SYS is set to the second mode, the processing system SYS may perform the first build operation in parallel with the second build operation. Specifically, even in a case where the processing mode of the processing system SYS is set to the second mode, the processing system SYS may perform the first build operation by irradiating the build surface MS with the processing light EL to form the melt pool MP on the build surface MS and supplying a second build material M to the formed melt pool MP while performing the second build operation for melting a first build object M by irradiating the first build object M with the processing light EL in the space between the material nozzle 212 and the build surface MS and supplying the melted first build material M to the build surface MS.

In a case where the processing system SYS performs the first build operation and the second build operation in parallel, the processing light EL is irradiated onto the build material M supplied from the material nozzle 212 at the virtual material irradiation plane ES positioned in the space between the material nozzle 212 and the build surface MS, because the second build operation is performed. In this case, a part of the build material M supplied from the material nozzle 212 may be melted by the processing light EL and a remaining part of the build material M supplied from the material nozzle 212 may not be melted by the processing light EL in the material irradiation plane ES. In this case, the remaining part of the build material M, which is not melted in the material irradiation plane ES, may be melted at the build surface MS. For example, the remaining part of the build material M, which is not melted in the material irradiation plane ES, may be melted in the melt pool MP formed on the build surface MS.

The remaining part of the build material M, which is not melted in the material irradiation plane ES, may be heated (for example, preheated) by the processing light EL in the material irradiation plane ES. In this case, a growth accuracy of a crystal of the build material M when the melted build material M is solidified is improved, compared to a case where the remaining part of the build material M is not heated. Namely, it is more likely that the crystal of the build material M grows in an expected growth aspect in the process of the solidification of the melted build material M. Therefore, even in a case where the second build operation whose build accuracy is lower than that of the first build operation is performed, the build accuracy of the processing system SYS is improved. As a result, the processing system SYS can achieve both the effect of improving the build accuracy and the effect of reducing the time required to build the three-dimensional structural object ST (namely, improving the throughput).

In a case where the processing system SYS performs the first build operation and the second build operation in parallel, the control unit 7 may control a degree (a percentage) to which the three-dimensional structural object ST is built by the first build operation and a degree (a percentage) to which the three-dimensional structural object ST is built by the second build operation. For example, the control unit 7 may control a ratio of a degree to which the first build operation contributes to the building of the three-dimensional structural object ST and a degree to which the second build operation contributes to the building of the three-dimensional structural object ST. Specifically, the control unit 7 may set the degree to which the first build operation contributes to the building of the three-dimensional structural object ST to a first value that is equal to or larger than 0% and that is equal to or smaller than 100%, and set the degree to which the second build operation contributes to the building of the three-dimensional structural object ST to a second value calculated by subtracting the first value from 100%.

The control unit 7 may control the degree to which the three-dimensional structural object ST is built by the first build operation and the degree to which the three-dimensional structural object ST is built by the second build operation by controlling at least one of the light concentration position CP of the processing light EL and the material control point MCP. For example, the degree to which the three-dimensional structural object ST is built by the first build operation is smaller and the degree to which the three-dimensional structural object ST is built by the second build operation is larger as the distance D1 between the light concentration position CP of the processing light EL and the build surface MS is longer. For example, the degree to which the three-dimensional structural object ST is built by the first build operation is smaller and the degree to which the three-dimensional structural object ST is built by the second build operation is larger as the distance D3 between the light concentration position CP of the processing light EL and the material control point MCP is shorter. Therefore, the control unit 7 may control the degree to which the three-dimensional structural object ST is built by the first build operation and the degree to which the three-dimensional structural object ST is built by the second build operation by controlling at least one of the light concentration position CP of the processing light EL and the position of the material control point MCP to control at least one of the distances D1 and D3.

Note that the degree (the percentage) to which the three-dimensional structural object ST is built by the first build operation may be a parameter that is based on the amount of the energy transmitted from the processing light EL to the build surface MS by the first build operation. Typically, the degree (the percentage) to which the three-dimensional structural object ST is built by the first build operation may be a parameter that is proportional to the amount of the energy transmitted from the processing light EL to the build surface MS by the first build operation. Similarly, the degree (the percentage) to which the three-dimensional structural object ST is built by the second build operation may be a parameter that is based on the amount of the energy transmitted from the processing light EL to the material irradiation plane ES (especially, the build material M supplied to the material irradiation plane ES) by the second build operation. Typically, the degree (the percentage) to which the three-dimensional structural object ST is built by the first build operation may be a parameter that is proportional to the amount of the energy transmitted from the processing light EL to the material irradiation plane ES (especially, the build material M supplied to the material irradiation plane ES) by the second build operation. As one example, the degree (the percentage) to which the three-dimensional structural object ST is built by the first build operation may be the ratio of the amount of the energy transmitted from the processing light EL to the build surface MS by the first build operation to a total sum of the amount of the energy transmitted from the processing light EL to the build surface MS by the first build operation and the amount of the energy transmitted from the processing light EL to the material irradiation plane ES by the second build operation. Similarly, the degree (the percentage) to which the three-dimensional structural object ST is built by the second build operation may be the ratio of the amount of the energy transmitted from the processing light EL to the material irradiation plane ES by the second build operation to a total sum of the amount of the energy transmitted from the processing light EL to the build surface MS by the first build operation and the amount of the energy transmitted from the processing light EL to the material irradiation plane ES by the second build operation.

In this case, the processing system SYS may build the three-dimensional structural object ST in a state where one of the degree to which the three-dimensional structural object ST is built by the first build operation and the degree to which the three-dimensional structural object ST is built by the second build operation is larger than the other one of the degree to which the three-dimensional structural object ST is built by the first build operation and the degree to which the three-dimensional structural object ST is built by the second build operation. Namely, the processing system SYS may build the three-dimensional structural object ST in a state where one of the amount of the energy transmitted from the processing light EL to the build surface MS by the first build operation and the amount of the energy transmitted from the processing light EL to the material irradiation plane ES by the second build operation is larger than the other one of the amount of the energy transmitted from the processing light EL to the build surface MS by the first build operation and the amount of the energy transmitted from the processing light EL to the material irradiation plane ES by the second build operation. As one example, the processing system SYS may build the three-dimensional structural object ST in a state where the degree to which the three-dimensional structural object ST is built by the first build operation is 70% and the degree to which the three-dimensional structural object ST built by the second build operation is 30%. As one example, the processing system SYS may build the three-dimensional structural object ST in a state where the degree to which the three-dimensional structural object ST is built by the first build operation is 30% and the degree to which the three-dimensional structural object ST built by the second build operation is 70%.

Note that the processing system SYS that builds the three-dimensional structural object ST in a state where the degree to which the three-dimensional structural object ST is built by the first build operation is larger than the degree to which the three-dimensional structural object ST is built by the second build operation may be considered to build the three-dimensional build object ST in the first mode. In other words, the processing system SYS that builds the three-dimensional structural object ST in a state where the amount of the energy transmitted from the processing light EL to the build surface MS by the first build operation is larger than the amount of the energy transmitted from the processing light EL to the material irradiation plane ES by the second build operation may be considered to build the three-dimensional build object ST in the first mode. On the other hand, the processing system SYS that builds the three-dimensional structural object ST in a state where the degree to which the three-dimensional structural object ST is built by the second build operation is larger than the degree to which the three-dimensional structural object ST is built by the first build operation may be considered to build the three-dimensional build object ST in the second mode. In other words, the processing system SYS that builds the three-dimensional structural object ST in a state where the amount of the energy transmitted from the processing light EL to the material irradiation plane ES by the second build operation is larger than the amount of the energy transmitted from the processing light EL to the build surface MS by the first build operation may be considered to be building the three-dimensional build object ST in the second mode.

### (4) Modified Example of Second Build Operation

Next, a modified example of the second build operation will be described.

### (4-1) First Modified Example of Second Build Operation

First, a first modified example of the second build operation will be described. In the above-described description, the processing system SYS that performs the second build operation uses both the processing lights EL#1 and EL#2 to melt the build material M to melt the build material M in the material irradiation plane ES (namely, in the space between the material nozzle 212 and the build surface MS). Namely, a use application of the processing light EL#1 is the same as a use application of the processing light EL#2. On the other hand, in the first modified example, the processing system SYS that performs the second build operation may use one of the processing lights EL#1 and EL#2 for a first use application and the other one of the processing lights EL#1 and EL#2 for a second use application different from the first use application. Namely, the processing system SYS may selectively use the processing light EL#1 and EL#2 depending on the use application.

For example, as illustrated in FIG. 22, the processing system SYS may irradiate the build material M with the processing light EL#1 in the material irradiation plane ES (namely, in the space between the material nozzle 212 and the build surface MS, the same applies in the below-described description). In this case, the processing system SYS may irradiate the build material M with the processing light EL#1 in the material irradiation plane ES while deflecting the processing light EL#1 by using the Galvano mirror 2146. Alternatively, the processing system SYS may irradiate the build material M with the processing light EL#1 in the material irradiation plane ES without deflecting the processing light EL#1 by using the Galvano mirror 2146.

The processing system SYS may melt the build material M in the material irradiation plane ES by irradiating the build material M with the processing light EL#1 in the material irradiation plane ES. Alternatively, the processing system SYS may not melt the build material M in the material irradiation plane ES by irradiating the build material M with the processing light EL#1 in the material irradiation plane ES. In this case, the processing system SYS may heat (for example, preheat) the build material M in the material irradiation plane ES by irradiating the build material M with processing light EL#1 in the material irradiation plane ES.

On the other hand, as illustrated in FIG. 22, the processing system SYS may irradiate the build surface MS with the processing light EL#2. **In** this case, the processing system SYS may irradiate the build surface MS with the processing light EL#2 while deflecting the processing light EL#2 by using the Galvano mirror 2156. Alternatively, the processing system SYS may irradiate the build surface MS with the processing light EL#2 without deflecting the processing light EL#2 by using the Galvano mirror 2156.

The processing system SYS may form the melt pool MP on the build surface MS by irradiating the build surface MS with the processing light EL#2. Alternatively, the processing system SYS may not form the melt pool MP on the build surface MS by irradiating the build surface MS with the processing light EL#2. **In** this case, the processing system SYS may heat (for example, preheat) the build surface MS by irradiating the build surface MS with the processing light EL#2. Alternatively, the processing system SYS may melt the build material M, which has been supplied to the build surface MS without bent melted, by irradiating the build surface MS with the processing light EL#2.

**In** a case where the second modified example of the second build operation is performed, as illustrated in FIG. 22, the control unit 7 may control the light concentration position CP of the processing light EL so that the light concentration position CP#1 of the processing light EL#1 is positioned in the space between the material nozzle 212 and the build surface MS. Moreover, as illustrated in FIG. 22, the control unit 7 may control the light concentration position CP of the processing light EL so that the light concentration position CP#2 of the processing light EL#2 is positioned at or near the build surface MS. Especially, as illustrated in FIG. 22, the control unit 7 may control the light concentration position CP of the processing light EL so that the light concentration position CP#1 of the processing light EL#1 and the light concentration position CP#2 of the processing light EL#2 are different positions along the Z-axis direction. As a result, the processing system SYS can irradiate the build material M with the processing light whose intensity is relatively high in the material irradiation plane ES and irradiate the build surface MS with the processing light whose intensity is relatively high.

Moreover, as illustrated in FIG. 22, the control unit 7 may control the light concentration position CP of the processing light EL so that the distance D1 between the light concentration position CP#1 of the processing light EL#1 and the build surface MS is longer than the distance D1 between the light concentration position CP#2 of the processing light EL#2 and the build surface MS. As one example, the control unit 7 may control the light concentration position CP of the processing light EL so that the distance D1 between the light concentration position CP#1 of the processing light EL#1 and the build surface MS is a first distance D13 that is longer than a second distance D14, and the distance D1 between the light concentration position CP#2 of the processing light EL#2 and the build surface MS is the second distance D14 that is shorter than the first distance D13. Note that FIG. 22 illustrates an example in which the distance D1 between the light concentration position CP#2 of the processing light EL#2 and the build surface MS is zero because the light concentration position CP#2 of processing light EL#2 is set on the build surface MS, but the distance D1 between the light concentration position CP#2 of the processing light EL#2 and the build surface MS may not be zero. As a result, the processing system SYS can irradiate the build material M with the processing light whose intensity is relatively high in the material irradiation plane ES and irradiate the build surface MS with the processing light whose intensity is relatively high.

Moreover, as illustrated in FIG. 22, the control unit 7 may control at least one of the light concentration position CP of the processing light EL and the material control point MCP so that the distance D3 between the light concentration position CP#1 of the processing light EL#1 and the material control point MCP is shorter than the distance D3 between the light concentration position CP#2 of the processing light EL#2 and the material control point MCP. As one example, the control unit 7 may controls at least one of the light concentration position CP of the processing light EL and the material control point MCP so that the distance D3 between the light concentration position CP#1 of the processing light EL#1 and the material control point MCP is a first distance D33 that is shorter than a second distance D34, and the distance D3 between the light concentration position CP#2 of the processing light EL#2 and the material control point MCP is the second distance D34 that is longer than the first distance D33. Note that the distance D3 between the light concentration position CP#1 of the processing light EL#1 and the material control point MCP is zero in the example illustrated in FIG. 22, because the material control point MCP is positioned at the same position as the light concentration position CP#1 of the processing light EL#1 in the Z-axis direction, but the distance D3 between the light concentration position CP#1 of the processing light EL#1 and the material control point MCP may not be zero. As a result, the processing system SYS can irradiate the build material M with the processing light whose intensity is relatively high in the material irradiation plane ES and irradiate the build surface MS with the processing light whose intensity is relatively high.

The build material M, which has been irradiated with the processing light EL#1 in the material irradiation plane ES, may be supplied to the build surface MS. For example, the build material M, which has been irradiated with the processing light EL#1 in the material irradiation plane ES, may be supplied to a desired area of the build surface MS that has been irradiated with the processing light EL#2. In a case where the melt pool MP is formed in the desired area, the build material M, which has been irradiated with the processing light EL#1 in the material irradiation plane ES, may be supplied to the melt pool MP formed in the desired area. In this case, the processing system SYS may build the build object in the desired area of the build surface MS that has been irradiated with the processing light EL#2 by supplying the build material M, which has been irradiated with the processing light EL#1 in the material irradiation plane ES, to the desired area of the build surface MS that has been irradiated with the processing light EL#2. Note that the desired area of the build surface MS that has been irradiated with the processing light EL#2 is referred to as an irradiated area MSL in the first modified example. Alternatively, the build material M, which has been irradiated with the processing light EL#1 in the material irradiation plane ES, may be supplied to an area of the build surface MS (namely, an area that is not irradiated with the processing light EL#2) that is different from the irradiated area MSL. In this case, the processing system SYS may build the build object in the area of the build surface MS that is different from the irradiated area MSL by supplying the build material M, which has been irradiated with the processing light EL#1 in the material irradiation plane ES, to the area of the build surface MS that is different from the irradiated area MSL.

Next, a specific example of the selective use of the processing lights EL#1 and EL#2 based on the user application will be described.

### (4-1-1) First Specific Example of Selective Use Processing Lights EL#1 and EL#2 based on Use Application

In a first specific example, as illustrated in FIG. 23, the processing system SYS melts the build material M in the material irradiation plane ES by irradiating the build material M with the processing light EL#1 in the material irradiation plane ES. Furthermore, in the first specific example, as illustrated in FIG. 23, the processing system SYS may heat (for example, preheat) the build surface MS by irradiating the build surface MS with the processing light EL#2. Namely, the processing system SYS may heat (for example, preheat) the irradiated area MSL of the build surface MS, which is irradiated with the processing light EL#2, by irradiating the build surface MS with the processing light EL#2. Note that the processing system SYS may not form the melt pool MP on the build surface MS by irradiating the build surface MS with the processing light EL#2.

As illustrated in FIG. 23, the build material M, which has been melted by the processing light EL#1, may be supplied to the irradiated area MSL heated by the processing light EL#2. Namely, the processing system SYS may heat the irradiated area MSL with the processing light EL#2, and then supply the build material M, which has been melted by the processing light EL#1, to the irradiated area MSL heated by the processing light EL#2. As a result, the build object is built on the build surface MS (especially, on the irradiated area MSL). In this manner, in the first specific example, the processing system SYS may build the build object on the build surface MS by performing the second build operation described above while heating the build surface MS.

In a case where the build material M is supplied to the build surface MS that has been heated in advance, the growth accuracy of the crystal of the build material M when the melted build material M is solidified is improved, compared to a case where the build material M is supplied to the build surface MS that is not heated in advance. Namely, it is more likely that the crystal of the build material M grows in an expected growth aspect in the process of the solidification of the melted build material M. Therefore, in a case where the build material M is supplied to the build surface MS hat has been heated in advance, an error between an actual size (for example, at least one of a width, a length, and a thickness) of the build object and a target size is smaller, compared to a case where the build material M is supplied to the build surface MS that is not heated in advance. Therefore, the build accuracy of the processing system SYS is improved.

In this manner, in the first specific example, the processing system SYS may selectively use the processing light EL#1, which is mainly used to melt the build material M, and the processing light EL#2, which is mainly used to improve the build accuracy. Therefore, the build accuracy of the processing system SYS is improved, compared to a case where both the processing lights EL#1 and EL#2 are mainly used to melt the build material M.

Note that a size (typically, a size in a direction intersecting the movement direction of the irradiation unit area MUA#2 corresponding to the processing unit area PUA#2, and a size that is referred to as a bead width) of the build object to be built depends on a size of the irradiated area MSL of the build surface MS heated by the processing light EL#2 in a case where the build material M is supplied to the build surface MS that has been heated in advance. This is because the build material M is supplied to the irradiated area MSL and then the supplied build material M is solidified in the irradiated area MSL. Therefore, the irradiated area MSL may be considered to indicate an area in which the build object is built. Heating a part of the build surface MS with the processing light EL#2 may be considered to be equivalent to marking the area in which the build object is built on the build surface MS. Furthermore, the size of the irradiated area MSL depends on a deflected amount of the processing light EL#2 by the Galvano mirror 2156. Therefore, the control unit 7 may control the deflected amount of the processing light EL#2 by the Galvano mirror 2156 so that the size of the build object to be built is the same as the target size.

Furthermore, in a case where the build material M is supplied to the build surface MS that has been heated in advance, the coupling force between the melted build material M and the build surface MS is stronger, compared to a case where the build material M is supplied to the build surface MS that is not heated in advance. Therefore, in a case where the build material M is supplied to the build surface MS that has been heated in advance, the processing system SYS can build the build object that is relatively strongly coupled with the build surface MS, compared to a case where the build material M is supplied to the build surface MS that is not heated in advance.

Note that a size of the irradiated area MSL of the build surface MS that is heated by the processing light EL#2 is larger in a case where the processing light EL#2 is deflected by using the Galvano mirror 2156, compared to a case where the processing light EL#2 is not deflected by using the Galvano mirror 2156, in the first specific example. Therefore, the control unit 7 may determine whether or not the processing light EL#2 should be deflected by using the Galvano mirror 2156 based on a size of an area of the build surface MS that should be heated by the processing light EL#2 (namely, an expected size of the irradiated area MSL).

### (4-1-2) Second Specific Example of Selective Use Processing Lights EL#1 and EL#2 based on Use Application

In a second specific example, as illustrated in an upper part of FIG. 24, the processing system SYS may heat (for example, preheat) at least a part of the build material M in the material irradiation plane ES by irradiating the build material M with the processing light EL#1 in the material irradiation plane ES. Furthermore, in the second specific example, as illustrated in FIG. 24, the processing system SYS may heat (for example, preheat) the build surface MS by irradiating the build surface MS with the processing light EL#2. Namely, the processing system SYS may heat (for example, preheat) the irradiated area MSL of the build surface MS irradiated with the processing light EL#2 by irradiating the build surface MS with the processing light EL#2. Note that the processing system SYS may form or may not form the melt pool MP on the build surface MS by irradiating the build surface MS with the processing light EL#2.

Especially in the second specific example, the processing system SYS controls a temperature distribution of the build material M by heating at least a part of the build material M in the material irradiation plane ES under the control of the control unit 7. Specifically, the processing system SYS controls the temperature distribution of the build material M in the material irradiation plane ES by heating at least a part of the build material M in the material irradiation plane ES under the control of the control unit 7.

In order to control the temperature distribution of the build material M in the material irradiation plane ES, the control unit 7 may control a distribution of an amount of heat (in the below-described description, it is referred to as an input heat amount) applied to the build material M per unit time by the irradiation of the processing light EL#1 in the material irradiation plane ES. Typically, the control unit 7 may change the input heat amount to the build material M by the irradiation of the processing light EL#1 based on a position (a location) in the material irradiation plane ES. For example, as illustrated in a lower part of FIG. 24, the control unit 7 may change the input heat amount to the build material M by the irradiation of the processing light EL#1 so that the input heat amount to the build material M in a first material passing area ESP#1 in the material irradiation plane ES is different from the input heat amount to the build material M in a second material passing area ESP#2, which is different from the first material passing area ESP#1, in the material irradiation plane ES.

Note that the build material M supplied to the material irradiation plane ES passes through the material irradiation plane ES as described above, because the material irradiation plane ES is the virtual plane. In this case, each of the first material passing area ESP#1 and the second material passing area ESP#2 may be regarded as an area through which the build material M passes in the material irradiation plane ES. Therefore, in the below-described description, the first material passing area ESP#1 and the second material passing area ESP#2 are referred to as the first material passing area ESP#1 and the second material passing area ESP#2, respectively.

The control unit 7 may change the input heat amount to the build material M by the irradiation of the processing light EL#1 so that the input heat amount to the build material M increase as the one material passing area in the material irradiation plane ES is farther from the optical axis AX of the irradiation optical system 211. For example, in the example illustrated in the lower part of FIG. 24, a distance between the first material passing area ESP#1 and the optical axis AX is longer than a distance between the second material passing area ESP#2 and the optical axis AX in the material irradiation plane ES. Namely, the first material passing area ESP#1 is positioned at a position that is farther from the optical axis AX than the second material passing area ESP#2 is. In this case, the control unit 7 may change the input heat amount to the build material M by the irradiation of the processing light EL#1 so that the input heat amount to the build material M in the first material passing area ESP#1 in the material irradiation plane ES is larger than the input heat amount to the build material M in the second material passing area ESP#2, which is different from the first material passing area ESP#1, in the material irradiation plane ES.

In a case where the input heat amount to the build material M in one material passing area increases as the one material passing area in the material irradiation plane ES is farther from the optical axis AX of the irradiation optical system 211, a temperature of the build material M passing through the one material passing area increases as the one material passing area in the material irradiation plane ES is farther from the optical axis AX of the irradiation optical system 211. Therefore, the control unit 7 may change the input heat amount to the build material M by the irradiation of the processing light EL#1 so that the temperature of the build material M passing through the one material passing area increases as the one material passing area in the material irradiation plane ES is farther from the optical axis AX of the irradiation optical system 211. In this case, as illustrated in the lower part of FIG. 24, the control unit 7 may change the input heat amount to the build material M by the irradiation of the processing light EL#1 so that the temperature of the build material M passing through the one material passing area increases continuously as the one material passing area in the material irradiation plane ES is farther from the optical axis AX of the irradiation optical system 211. Alternatively, as illustrated in the lower part of FIG. 24, the control unit 7 may change the input heat amount to the build material M by the irradiation of the processing light EL#1 so that the temperature of the build material M passing through the one material passing area increases in a stepwise manner as the one material passing area in the material irradiation plane ES is farther from the optical axis AX of the irradiation optical system 211. As one example, the control unit 7 may change the input heat amount to the build material M by the irradiation of the processing light EL#1 so that the temperature of the build material M passing through the first material passing area ESP#1 in the material irradiation plane ES is higher than the temperature of the build material M passing through the second material passing area ESP#2, which is different from the first material passing area ESP#1, in the material irradiation plane ES.

In order to realize a state where the temperature of the build material M passing through the one material passing increases as the one material passing area in the material irradiation plane ES is farther from the optical axis AX of the irradiation optical system 211, the control unit 7 may change the intensity of the processing light EL#1 based on the position in the material irradiation plane ES. For example, the control unit 7 may change the input heat amount to the build material M by the irradiation of the processing light EL#1 so that the intensity of the processing light EL#1 irradiated onto the build material M passing through the first material passing area ESP#1 in the material irradiation plane ES is different from the intensity of the processing light EL#1 irradiated onto the build material M passing through the second material passing area ESP#2 in the material irradiation plane ES.

Specifically, the control unit 7 may change the intensity of the processing light EL#1 so that the intensity of the processing light EL#1 irradiated onto the build material M passing through one material passing area increases as the one material passing area in the material irradiation plane ES is farther from the optical axis AX of the irradiation optical system 211. For example, as illustrated in the lower part of FIG. 24, the control unit 7 may change the input heat amount to the build material M by the irradiation of the processing light EL#1 so that the intensity of the processing light EL#1 irradiated onto the build material M passing through the first material passing area ESP#1 in the material irradiation plane ES is higher than the intensity of the processing light EL#1 irradiated onto the build material M passing through the second material passing area ESP#2 in the material irradiation plane ES.

In order to change the intensity of processing light EL#1 based on the position in the material irradiation plane ES, the control unit 7 may change the intensity of processing light EL#1 while deflecting the processing light EL#1 by using the Galvano mirror 2146 so that the processing light EL#1 moves in the material irradiation plane ES (namely, so thin the material irradiation plane ES is substantially scanned). The control unit 7 may change the intensity of the processing light EL#1 in synchronization with the deflection of the processing light EL#1 using the Galvano mirror 2146. As one example, the control unit 7 may deflect the processing light EL#1 by using the Galvano mirror 2146 so that the processing light EL#1 is irradiated onto the build material M passing through the first material passing area ESP#1 in the material irradiation plane ES and may change the intensity of the processing light EL#1 to a relatively high intensity. After that or before that, the control unit 7 may deflect the processing light EL#1 by using the Galvano mirror 2146 so that the processing light EL#1 is irradiated onto the build material M passing through the second material passing area ESP#2 in the material irradiation plane ES and may change the intensity of the processing light EL#1 to a relatively low intensity.

The build material M, the build material M that has been heated by the processing light EL#1 in the material irradiation plane ES (namely, the build material M whose temperature distribution has been controlled) may be supplied to the build surface MS heated by the processing light EL#2. Namely, the processing system SYS may supply the build material M that has been heated by the processing light EL#1 (namely, the build material M whose temperature distribution has been controlled) to the build surface MS heated by the processing light EL#2.

Here, since the temperature distribution of the build material M in the material irradiation plane ES, which is between the material nozzle 212 and the build surface MS, is controlled, the build material M, whose temperature distribution in a plane intersecting the Z-axis has been controlled, is supplied to the build surface MS. Namely, as illustrated in FIG. 25 that is a cross-sectional view illustrating the build material M supplied to the build surface MS, the build material M, which satisfies a condition that the temperature of the build material M supplied to one build area increases as the one build area in the build area is farther from the optical axis AX of the irradiation optical system 211, is supplied to the build surface MS. In this case, the supplied build material M is cooled and solidified on the build surface MS.

Here, there is a possibility that a cooling aspect of the build material M in a first build area BA#1 on the build surface MS is different from a cooling aspect of the build material M in a second build area BA#2, which is different from the first build area BA#1, on the build surface MS depending on the shape of the object (in the example illustrated in FIG. 25, the workpiece W) whose surface is the build surface MS. For example, in the example illustrated in FIG. 25, the first build area BA#1 is positioned at a position that is closer to an edge of the workpiece W than the second build area BA#2 is, and the second build area BA#2 is positioned at a position that is closer to a center of the workpiece W than the first build area BA#1 is.

In this case, the edge of the workpiece W may have more paths for releasing heat emitted from the build material M than the center of the workpiece W. This is because an upper surface of the workpiece W is usable as the path for releasing the heat emitted from the build material M at the center of the workpiece W and not only the upper surface of the workpiece W but also a side surface of the workpiece W are usable as the paths for releasing the heat emitted from the build material M at the edge of the workpiece W. Therefore, the build material M is cooled more easily at the edge of the workpiece W, and the build material M is cooled less easily at the center of the workpiece W.

In addition, in this case, the edge of the workpiece W may have fewer paths for releasing the heat emitted from the build material M than the center of the workpiece W, depending on the shape of the workpiece W and a preheating state of the workpiece W. In this case, the path for releasing the heat at the center of the workpiece W may be a downward one or a diagonally downward one directed from the center of the workpiece W toward an interior of the workpiece W, while the path for releasing the heat at the edge of the workpiece W may be a diagonally downward one directed from the edge of the workpiece W, which results in fewer paths.

Therefore, in a case where the temperature distribution of the build material M, which is supplied to the build surface MS, in the build surface MS is not controlled (namely, in a case where the temperature distribution of the build material M supplied to the build surface MS is uniform), a time required for the build material M to be solidified in the first build area BA#1 on the build surface MS is relatively long, and a time required for the build material M to be solidified in the second build area BA#2 on the build surface MS is relatively short. Therefore, a thermal gradient of the workpiece W is relatively large when the build material M is cooled. As a result, there is a possibility that a crack occurs in the workpiece W.

However, in the second specific example, the temperature distribution of the build material M, which is supplied to the build surface MS, in the build surface MS is controlled. For example, the build material M whose temperature is relatively high is supplied to the first build area BA#1 on the build surface MS at which the build material M is cooled more easily, and the build material M whose temperature is relatively low is supplied to the second build area BA#2 on the build surface MS at which the build material M is cooled less easily. Therefore, a difference between the time required for the build material M to be solidified in the first build area BA#1 on the build surface MS and the time required for the build material M to be solidified in the second build area BA#2 on the build surface MS is reduced. Therefore, the thermal gradient of the workpiece W is relatively small when the build material M is cooled. As a result, it is less likely that the crack occurs in the workpiece W. In this manner, in the second specific example, it is less likely that the crack occurs in the workpiece W (alternatively, the already built structural layer SL) when a new build object is built on the workpiece W (alternatively, the already built structural layer SL).

### (4-2) Second Modified Example of Second Build Operation

Next, a second modified example of the second build operation will be described. As described above with reference to FIG. 4(a) to FIG. 4(c) and FIG. 13, the processing system SYS that performs the second build operation supplies the build material M to the virtual material irradiation plane ES intersecting the Z-axis between the material nozzle 212 and the build surface MS. Furthermore, as described above with reference to FIG. 11 to FIG. 13, the processing system SYS that performs the second build operation uses the Galvano mirrors 2146 and 2156 to move the beam passing area PA through which the processing light EL passes in the irradiation unit area MUA so that the processing light EL substantially scans the virtual irradiation unit area MUA in the material irradiation plane ES.

In this case, an efficiency of using the build material M in the second build operation is higher as a ratio of an amount of the build material M, which is actually irradiated with the processing light EL in the material irradiation plane ES, to an amount of the build material M, which is supplied to the material irradiation plane ES, is higher. This is because the build material M that is actually irradiated with the processing light EL in the material irradiation plane ES greatly contributes to the building of the build object by the second build operation, while the build material M that is not irradiated with the processing light EL in the material irradiation plane ES does not contribute or does not greatly contribute to the building of the build object by the second build operation.

Note that the ratio of the amount of the build material M, which is actually irradiated with the processing light EL in the material irradiation plane ES, to the amount of the build material M, which is supplied to the material irradiation plane ES, is equivalent to a probability that the build material M is actually irradiated with the processing light EL in the material irradiation plane ES (namely, a probability that the processing light EL and the build material M interfere with each other in the material irradiation plane ES), and therefore, the ratio is referred to as an "interference probability" in the below-described description. In a case where all of the build material M supplied to the material irradiation plane ES is irradiated with the processing light EL, the interference probability is 100%. In a case where all of the build material M supplied to the material irradiation plane ES is not irradiated with the processing light EL, the interference probability is 0%. In a case where N% (wherein, N is a variable number representing a number that is equal to or larger than 0 and that is equal to or smaller than 100) of the build material M supplied to the material irradiation plane ES is irradiated with the processing light EL, the interference probability is N%. Note that the interference probability may be referred to as an irradiation probability.

However, there is a possibility that the interference probability is extremely low depending on a relationship between the supply aspect of the build material M to the material irradiation plane ES and an irradiation aspect of the processing light EL to the material irradiation plane ES. For example, FIG. 26(a) illustrates an example in which the build material M is supplied to the ring-shaped material supply area MSA in the material irradiation plane ES and the beam passing area PA (namely, the processing light EL) reciprocates along a straight movement trajectory in the irradiation unit area MUA set in the material irradiation plane ES. In the example illustrated in FIG. 26(a), the build material is irradiated with the processing light EL only at two points at which the movement trajectory of the beam passing area PA intersects the ring-shaped material supply area MSA. As a result, the interference probability is relatively low. On the other hand, FIG. 26(b) illustrates an example in which the build material M is supplied to the ring-shaped material supply area MSA in the material irradiation plane ES, and the beam passing area PA (namely, the processing light EL) rotationally moves along a ring-shaped movement trajectory in the irradiation unit area MUA set in the material irradiation plane ES. In the example illustrated in FIG. 26(b), a relatively large amount of build material M is irradiated with the processing light EL, because since the beam passing area PA is movable along the ring-shaped material supply area MSA. As a result, the interference probability is relatively high.

Note that the interference probability may be considered to be equivalent to a ratio of a beam irradiation area, which is a movement range of the beam passing area PA in the material irradiation plane ES, to the material supply area MSA, to which the build material M is supplied in the material irradiation plane ES. The ratio of the beam irradiation area to the material supply area MSA may be considered to be equivalent to a ratio of a size of the beam irradiation area in the material irradiation plane ES to a size of the material supply area MSA in the material irradiation plane ES. The interference probability may be considered to be equivalent to a ratio of the beam irradiation area in the material supply area MSA to the material supply area MSA. The ratio of the beam irradiation area in the material supply area MSA to the material supply area MSA may be considered to be equivalent to a ratio of a size of the beam irradiation area in the material supply area MSA to a size of the material supply area MSA in the material irradiation plane ES.

Therefore, in the second modified example, the processing system SYS may perform an operation for increase the interference probability so that the interference probability is not extremely low under the control of the control unit 7. Specifically, the control unit 7 may control (typically, change) the irradiation aspect of the processing light EL based on the supply mode of the build material M so as to satisfy an interference probability condition that the interference probability is not extremely low. In other words, the control unit 7 may control (typically, change) the processing light EL based on the supply aspect of the build material M so as to satisfy the interference probability condition. In other words, the control unit 7 may control (typically, change) the irradiation of the processing light EL based on the supply aspect of the build material M so as to satisfy the interference probability condition.

Especially, the control unit 7 may control the irradiation aspect of the processing light EL in the material irradiation plane ES based on the supply aspect of the build material M in the material irradiation plane ES so as to satisfy the interference probability condition. In other words, the control unit 7 may control the processing light EL in the material irradiation plane ES based on the supply state of the build material M in the material irradiation plane ES so as to satisfy the interference probability condition. In other words, the control unit 7 may control the irradiation of the processing light EL in the material irradiation plane ES based on the supply state of the build material M in the material irradiation plane ES so as to satisfy the interference probability condition.

The interference probability condition may include a condition that the interference probability is higher a lower threshold value. The interference probability condition may include a condition that the interference probability is improved by controlling the irradiation aspect of the processing light EL. The interference probability condition may include a condition that the interference probability after controlling the irradiation aspect of the processing light EL is higher than the interference probability before controlling the irradiation aspect of the processing light EL.

Next, a specific example of a beam irradiation control operations, which is an operation for control the irradiation aspect of the processing light EL based on the supply aspect of the build material M so as to satisfy the interference probability condition, will be described.

### (4-2-1) First Specific Example of Beam Control Operation

In a first specific example, the control unit 7 may control the movement trajectory of the beam passing area PA in the material irradiation plane ES based on at least one of a shape and a size of the material supply area MSA so as to satisfy the interference probability condition. Note that each of the shape and the size of the material supply area MSA is one example of the supply aspect of the build material M. Moreover, the movement trajectory of the beam passing area PA in the material irradiation plane ES is one example of the irradiation aspect of the processing light EL. Moreover, since the beam passing area PA moves in the virtual irradiation unit area MUA set in the material irradiation plane ES, the movement trajectory of the beam passing area PA in the material irradiation plane ES may be considered to be equivalent to the movement trajectory of the beam passing area PA in the irradiation unit area MUA.

As one example, as illustrated in FIG. 27(a) and FIG. 27(b), the control unit 7 may control the movement trajectory of the beam passing area PA in the material irradiation plane ES based on the shape of the material supply area MSA so that the shape of the movement trajectory of the beam passing area PA in the material irradiation plane ES becomes a shape that is determined based on the shape of the material supply area MSA.

For example, FIG. 27(a) illustrates an example in which the shape of the material supply area MSA is the ring shape in the material irradiation plane ES. In this case, as illustrated in FIG. 27(a), the control unit 7 may control the movement trajectory of the beam passing area PA in the material irradiation plane ES so that the shape of the movement trajectory of the beam passing area PA in the material irradiation plane ES becomes the ring shape that is determined based on the shape of the material supply area MSA. However, as long as the interference probability condition is satisfied, the shape of the movement trajectory of the beam passing area PA in a case where the shape of the material supply area MSA is the ring shape is not limited to the shape illustrated in FIG. 27(a).

For example, FIG. 27(b) illustrates an example in which the shape of the material supply area MSA in the material irradiation plane ES is a circular shape. In this case, as illustrated in FIG. 27(b), the control unit 7 may control the movement trajectory of the beam passing area PA in the material irradiation plane ES so that the shape of the movement trajectory of the beam passing area PA in the material irradiation plane ES becomes a shape that includes at least a part of a Lissajous curve determined based on the shape of the material supply area MSA. However, as long as the interference probability condition is satisfied, the shape of the movement trajectory of the beam passing area PA in a case where the shape of the material supply area MSA is the circular shape is not limited to the shape illustrated in FIG. 27(b).

Note that it is more likely that a size of the movement range in which the beam passing area PA moves is large in a case where the movement trajectory of the beam passing area PA includes at least a part of the Lissajous curve, compared to a case where the movement trajectory of the beam passing area PA does not include the Lissajous curve. Therefore, the control unit 7 may control the movement trajectory of the beam passing area PA in the material irradiation plane ES so that the shape of the movement trajectory of the beam passing area PA in the material irradiation plane ES becomes a shape that includes at least a part of any Lissajous curve.

As another example, as illustrated in FIG. 28(a) and FIG. 28(b), the control unit 7 may control the movement trajectory of the beam passing area PA in the material irradiation plane ES the size of the material supply area MSA so that the size of the movement trajectory of the beam passing area PA in the material irradiation plane ES becomes a size that is determined based on the size of the material supply area MSA. Note that the size of the movement trajectory of the beam passing area PA in the material irradiation plane ES may be considered to be equivalent to a size of the beam irradiation area, which is the movement range in which the beam passing area PA moves in the material irradiation plane ES. The size of the movement trajectory of the beam passing area PA in the material irradiation plane ES may be considered to be equivalent to the size of the irradiation unit area MUA, which includes the movement range in which the beam passing area PA moves in the material irradiation plane ES.

For example, FIG. 28(a) illustrates an example in which the size of the material supply area MSA is relatively large in the material irradiation plane ES. In this case, as illustrated in FIG. 28(a), the control unit 7 may control the movement trajectory of the beam passing area PA in the material irradiation plane ES so that the size of the movement trajectory of the beam passing area PA in the material irradiation plane ES becomes a relatively large size that is determined based on the size of the material supply area MSA.

For example, FIG. 28(b) illustrates an example in which the size of the material supply area MSA is relatively smaller in the material irradiation plane ES. In this case, as illustrated in FIG. 28(b), the control unit 7 may control the movement trajectory of the beam passing area PA in the material irradiation plane ES so that the size of the movement trajectory of the beam passing area PA in the material irradiation plane ES is a relatively small size that is determined based on the size of the material supply area MSA.

The control unit 7 may control the movement trajectory of the beam passing area PA in the material irradiation plane ES by controlling at least one of the Galvano mirrors 2146 and 2156. For example, the control unit 7 may control at least one of the Galvano mirrors 2146 and 2156 so that the movement trajectory of the beam passing area PA in the material irradiation plane ES becomes a desired movement trajectory.

Alternatively, the control unit 7 may substantially control the movement trajectory of the beam passing area PA by controlling the light source 4, instead of (alternatively, in addition to) controlling at least one of the Galvano mirrors 2146 and 2156 to directly control the movement trajectory of the beam passing area PA. Specifically, as illustrated in FIG. 29(a) and FIG. 29(b), the control unit 7 may substantially control the movement trajectory of the beam passing area PA by controlling the light source 4 to control a timing at which the processing light EL is emitted (conversely, control a timing at which the processing light EL is not emitted) without changing the movement trajectory of the beam passing area PA by using at least one of the Galvano mirrors 2146 and 2156. In this case, the actual movement trajectory of the beam passing area PA is equivalent to a trajectory connecting positions at each of which the processing light EL actually passes in the material irradiation plane ES at a timing at which the processing light EL is emitted. Namely, the actual movement trajectory of the beam passing area PA is equivalent to a trajectory connecting positions at each of which the beam passing area PA is positioned in the material irradiation plane ES at the timing at which the processing light EL is emitted. In the example illustrated in FIG. 29(a), the actual movement trajectory of the beam passing area PA is a circular trajectory obtained by connecting black dots illustrated in FIG. 29(a). In the example illustrated in FIG. 29(b), the actual movement trajectory of the beam passing area PA is a trajectory that includes at least a part of the Lissajous waveform obtained by connecting black dots illustrated in FIG. 29(b).

Alternatively, the control unit 7 may substantially control the movement trajectory of the beam passing area PA by controlling the light source 4 to switch the intensity of the processing light EL between an intensity capable of melting the build material M and an intensity incapable of melting the build material M without changing the movement trajectory of the beam passing area PA by using at least one of the Galvano mirrors 2146 and 2156. In this case, the actual movement trajectory of the beam passing area PA is equivalent to a trajectory connecting positions at each of which the processing light EL actually passes in the material irradiation plane ES at a timing at which the processing light EL having the intensity incapable of melting the build material M is emitted. Namely, the actual movement trajectory of the beam passing area PA is equivalent to a trajectory connecting positions at each of which the beam passing area PA is positioned in the material irradiation plane ES at the timing at which the processing light EL having the intensity incapable of melting the build material M is emitted.

### (4-2-2) Second Specific Example of Beam Control Operation

In a second specific example, as illustrated in FIG. 30, the control unit 7 may control (typically, change) at least one of the number n of processing lights EL, a size S of the beam passing area PA, and a movement speed V of the beam passing area PA so that the number n of processing lights EL emitted from the processing head 21, the size S of the beam passing area PA in the material irradiation plane ES, and the movement speed V of the beam passing area PA in the material irradiation plane ES satisfy a predetermined condition that is determined based on the interference probability conditions. N the control unit 7 may control (typically, change) at least one of the number n of processing lights EL, the size S of the beam passing area PA, and the movement speed V of the beam passing area PA so as to satisfy the interference probability condition.

Note that each of the number n of processing lights EL, the size S of the beam passing area PA, and the movement speed V of the beam passing area PA is one example of the irradiation aspect of the processing light EL. The size S of the beam passing area PA is equivalent to a size of the cross section of the processing light EL, which passes through the material irradiation plane ES, along the material irradiation plane ES. Note that the beam passing area PA may be an area whose outer edge (in other words, border) is defined by a line connecting positions at each of which the intensity of the processing light EL in the material irradiation plane ES is 1/n (wherein, n is a predetermined constant value) times of a maximum intensity of the processing light EL in the material irradiation plane ES. The constant value n may be (e²) (wherein e is a Napier's constat), may be 2, or may be any other number. Note that the beam passing area PA may be referred to as a spot (specifically, a spot of the processing light EL in the material irradiation plane ES). The movement speed V of the beam passing area PA may be considered to be equivalent to a driving speed of the Galvano mirrors 2146 and 2156 that move the beam passing area PA in the material irradiation plane ES.

A condition that a parameter obtained by multiplying the number n of processing lights EL, the size S of the beam passing area PA, and the movement speed V of the beam passing area PA (namely, n × s × V) is larger than a predetermined constant value K may be used as one example of the conditions that should be satisfied by the number n of processing lights EL, the size S of the beam passing area PA, and the movement speed V of the beam passing area PA. In this case, the control unit 7 may control (typically, change) at least one of the number n of processing lights EL, the size S of the beam passing area PA, and the movement speed V of the beam passing area PA so that the parameter (n × s × V) is larger than the predetermined constant value K.

The predetermined constant value K may be a constant value that is determined based on the supply aspect of the build material M. For example, the predetermined constant value K may be a constant value that is determined based on the size of the material supply area MSA, which is one example of the supply aspect of the build material M. As one example, the predetermined constant value K may be a constant value that is larger as the size of the material supply area MSA is larger. Note that it can be said that the second specific example of the beam control operation for controlling at least one of the number n of processing lights EL, the size S of the beam passing area PA, and the movement speed V of the beam passing area PA so that the number n of processing lights EL, the size S of the beam passing area PA, and the movement speed V of the beam passing area PA satisfy the predetermined condition is one example of an operation for controlling the irradiation aspect of processing light EL based on the supply aspect of build material M.

Here, the interference probability is higher as the number n of processing lights EL is larger in a situation where the size S of the beam passing area PA and the movement speed V of the beam passing area PA are fixed. Furthermore, the parameter (n × s × V) is larger and it is more likely that the parameter (n × s × V) is larger than the predetermined constant value K as the number n of processing lights EL is larger. Therefore, the control unit 7 may increase the interference probability by controlling the number n of processing lights EL so that the parameter (n × s × V) is larger than the predetermined constant value K.

Similarly, the interference probability is higher as the size S of the beam passing area PA is larger in a situation where the number n of processing lights EL and the movement speed V of the beam passing area PA are fixed. Furthermore, the parameter (n × s × V) is larger and it is more likely that the parameter (n × s × V) is larger than the predetermined constant value K as the size S of the beam passing area PA is larger. Therefore, the control unit 7 may increase the interference probability by controlling the size S of the beam passing area PA so that the parameter (n × s × V) is larger than the predetermined constant value K.

Similarly, the interference probability is higher as the movement speed V of the beam passing area PA is larger in a situation where the number n of processing lights EL and the size S of the beam passing area PA are fixed. Furthermore, the parameter (n × s × V) is larger and it is more likely that the parameter (n × s × V) is larger than the predetermined constant value K as the movement speed V of the beam passing area PA is larger. Therefore, the control unit 7 may increase the interference probability by controlling the movement speed V of the beam passing area PA so that the parameter (n × s × V) is larger than the predetermined constant value K.

Note that each of the first specific example of the beam control operation and the second specific example of the beam control operation may be regarded as an operation for controlling a beam path of the processing light EL emitted from the irradiation optical system 211 based on the supply aspect of the build material M. Here, in a case where the processing light EL is deflected by the Galvano mirror 2146 or 2156, the beam path in the second modified example may mean a three-dimensional space through which the processing light EL deflected by the Galvano mirror 2146 or 2156 passes. In a case where the processing light EL is not deflected by the Galvano mirror 2146 or 2156, the beam path in the second modified example may mean a three-dimensional space through which the processing light EL that is not deflected by the Galvano mirror 2146 or 2156 passes. The three-dimensional space through which the processing light EL that is not deflected by the Galvano mirror 2146 or 2156 passes may be considered to be substantially equivalent to a three-dimensional space defined by an outer shape of the processing light EL. The outer shape of the processing light EL may be equivalent to an outer shape obtained by connecting areas through which the processing light EL passes at the plurality of material supply planes PL intersecting the Z-axis, respectively. The area through which the processing light EL passes at each material supply plane PL may be an area whose outer edge (in other words, border) is defined by a line connecting positions at each of which the intensity of the processing light EL in the material supply plane PL is 1/n (wherein, n is a predetermined constant value) times of a maximum intensity of the processing light EL in the material supply plane PL. The constant value n may be (e²) (wherein e is a Napier's constat), may be 2, or may be any other number.

As described in the first specific example, when the movement trajectory of the beam passing area PA in the material irradiation plane ES changes, the beam path described above changes. Similarly, as described in the second specific example, when at least one of the number n of processing lights EL, the size S of the beam passing area PA, and the movement speed V of the beam passing area PA changes, the beam path described above changes. Therefore, as described above, each of the first specific example of the beam control operation and the second specific example of the beam control operation may be regarded as an operation for controlling the beam path of the processing light EL from the irradiation optical system 211 based on the supply aspect of the build material M.

### (4-3) Third Modified Example of Second Build Operation

Next, a third modified example of the second build operation will be described. The processing system SYS that performs the second build operation melts the build material M by irradiating the build material M with the processing light EL in the material irradiation plane ES (namely, in the space between the material nozzle 212 and the build surface MS). Here, in a case where the build material M is melted by the irradiation of the processing light EL, there is a possibility that a part of the build material M evaporates due to the irradiation of the processing light EL. In this case, a reaction force (an evaporation reaction force) generated due to the evaporation is generated in the melted build material M. As a result, as illustrated in FIG. 31, the material supply direction of the build material M changes due to the reaction force from a first material supply direction, which is the material supply direction before the build material M is irradiated with the processing light EL, to a second material supply direction, which is the material supply direction after the build material M is irradiated with the processing light EL.

Therefore, in the third modified example, the processing system SYS may control the material supply direction of the build material M by using the reaction force under the control of the control unit 7. The processing system SYS may irradiate the build material M with the processing light EL to generate the reaction force and control the material supply direction of the build material M by using the generated reaction force under the control of the control unit 7. Specifically, the control unit 7 changes the material supply direction of the build material M by using the reaction force from the first material supply direction, which is the material supply direction before the build material M is irradiated with the processing light EL, to the second material supply direction, which is the material supply direction after the build material M is irradiated with the processing light EL. The second material supply direction is typically different from the first material supply direction. In this case, the processing system SYS can flexibly control the material supply direction of the build material M, compared to a case where the material supply direction of the build material M is not controlled by using the reaction force.

The control unit 7 may irradiate the desired build material M with the processing light EL by using the Galvano mirror 2146 or 2156 to deflect the processing light EL, and change the material supply direction of the desired build material M. Namely, the control unit 7 may set the beam path of the processing light EL (see the second modified example) to a path that allows the material supply direction of the desired build material M to be changed by using the Galvano mirror 2146 or 2156 to deflect the processing light EL, and then irradiate the desired build material M with the processing light EL to change the material supply direction of the desired build material M. For example, the control unit 7 may irradiate a first build material M with the processing light EL by using the Galvano mirror 2146 or 2156 to deflect the processing light EL, and change the material supply direction of the first build material M, while may not irradiate a second build material M with the processing light EL and not change the material supply direction of the second build material M.

The control unit 7 may change the material supply direction of the build material M based on the material supply direction of the build material M supplied from the material nozzle 212. Specifically, FIG. 32 illustrates a distribution of the amount (the supplied amount) of the build material M supplied to each position of the build surface MS, which is estimated from the material supply direction of the build material M supplied from the material nozzle 212. Note that the "distribution of the amount (the supplied amount) of the build material M supplied to each position of the build surface MS" here typically means the "distribution of the amount (the supplied amount) of the build material M supplied to each position of the build surface MS per unit time". However, the "distribution of the amount (the supplied amount) of the build material M supplied to each position of the build surface MS" may mean the "distribution of the amount (the supplied amount) of the build material M supplied at a certain time at each position of the build surface MS". As illustrated in FIG. 32, before the material supply direction of the build material M is changed, the distribution of the supplied amount of the build material M is an uneven distribution in which the amount (the supplied amount) of the build material M supplied to a part of the build surface MS is much larger than the amount (the supplied amount) of the build material M supplied to another part of the build surface MS. The control unit 7 may change the material supply direction of the build material M so that the amount of the build material M is close to a target distribution based on the material supply direction of the build material M supplied from the material nozzle 212.

For example, as illustrated in FIG. 32, the control unit 7 may change the material supply direction of the build material M so that a difference between the amount (the supplied amount) of the build material M supplied to a part of the build surface MS and the amount (the supplied amount) of the build material M supplied to another part of the build surface MS is reduced by changing the material supply direction of the build material M. Namely, the control unit 7 may change the material supply direction of the build material M so that the difference between the amount (the supplied amount) of the build material M supplied to a part of the build surface MS and the amount (the supplied amount) of the build material M supplied to another part of the build surface MS in a case where the material supply direction of the build material M is changed is smaller than the difference between the amount (the supplied amount) of the build material M supplied to a part of the build surface MS and the amount (the supplied amount) of the build material M supplied to another part of the build surface MS in a case where the material supply direction of the build material M is not changed. As a result, a variation in the supplied amount of the build material M on the build surface MS is reduced.

### (4-4) Fourth Modified Example of Second Build Operation

Next, a fourth modified example of the second build operation will be described. In the second modified example of the second build operation described above with reference to FIG. 26 to FIG. 29, the processing system SYS controls (typically, changes) the irradiation aspect of the processing light EL based on the supply aspect of the build material M so as to satisfy the interference probability condition under the control of the control unit 7. On the other hand, in the fourth modified example of the second build operation, the processing system SYS may control (typically, change) the supply aspect of the build material M based on the irradiation aspect of the processing light EL so as to satisfy the interference probability condition under the control of the control unit 7. Especially, the processing system SYS may control (typically, change) the supply aspect of the build material M in the material irradiation plane ES based on the irradiation aspect of the processing light EL in the material irradiation plane ES so as to satisfy the interference probability condition under the control of the control unit 7.

Next, a specific example of an operation for controlling the supply aspect of the build material M in the material irradiation plane ES based on the irradiation aspect of the processing light EL in the material irradiation plane ES will be described.

### (4-4-1) Specific Example of Operation for Controlling Supply Aspect of Build Material M based on Irradiation Aspect of Processing Light EL

The control unit 7 may control (typically, change) the size of the material supply area MSA in the material irradiation plane ES based on the size of the movement trajectory of the beam passing area PA in the material irradiation plane ES so as to satisfy the interference probability condition. Note that the size of the material supply area MSA is one example of the supply aspect of the build material M. In the below-described description, the size of the material supply area MSA is represented by a reference symbol "MSA_size". Moreover, the size of the movement trajectory of the beam passing area PA in the material irradiation plane ES is one example of the irradiation aspect of the processing light EL. As described above, the size of the movement trajectory of the beam passing area PA in the material irradiation plane ES may be considered to be equivalent to the size of the beam irradiation area, which is the movement range in which the beam passing area PA moves in the material irradiation plane ES. As described above, the size of the movement trajectory of the beam passing area PA in the material irradiation plane ES may be considered to be equivalent to the size of the irradiation unit area MUA, which includes the movement range in which the beam passing area PA moves in the material irradiation plane ES. In the below-described description, an example in which the size of the irradiation unit area MUA is used as the size of the movement trajectory of the beam passing area PA in the material irradiation plane ES will be described. In the below-described description, the size of the irradiation unit area MUA is represented by a reference symbol "MUA_size". The size MUA_size of the irradiation unit area MUA may include a width (namely, a length along one direction) of the irradiation unit area MUA. Similarly, the size MSA_size of the material supply area MSA may include a width (namely, a length in one direction) of the material supply area MSA.

Specifically, as illustrated in FIG. 33(a) that is a cross-sectional view illustrating a relationship between the material supply area MSA and the irradiation unit area MUA and FIG. 33(b) that is a plan view illustrating the relationship between the material supply area MSA and the irradiation unit area MUA, the control unit 7 may controls size MSA_size of the material supply area MSA so that the size MSA_size of the material supply area MSA is the same as the size MUA_size of the irradiation unit area MUA. In this case, the interference probability becomes higher, because the size MSA_size of the material supply area MSA is the same as he size MUA_size of the irradiation unit area MUA.

Note that a state where "the size MSA_size of the material supply area MSA is the same as the size MUA_size of the irradiation unit area MUA" may include a state where the size MSA_size of the material supply area MSA is completely the same as the size MUA_size of the irradiation unit area MUA. The state where "the size MSA_size of the material supply area MSA is the same as the size MUA_size of the irradiation unit area MUA" may include a state where the size MSA_size of the material supply area MSA is not completely the same as the size MUA_size of the irradiation unit area MUA, but a difference between the size MSA_size of the material supply area MSA and the size MUA_size of the irradiation unit area MUA is small enough to consider that the size MSA_size of the material supply area MSA is substantially the same as the size MUA_size of the irradiation unit area MUA. For example, the state where "the size MSA_size of the material supply area MSA is the same as the size MUA_size of the irradiation unit area MUA" may include a state where the difference between the size MSA_size of the material supply area MSA and the size MUA_size of the irradiation unit area MUA is equal to or smaller than a predetermined allowable condition value.

Alternatively, as illustrated in FIG. 34 that is a cross-sectional view illustrating the relationship between the material supply area MSA and the irradiation unit area MUA, the control unit 7 may control the size MSA_size of the material supply area MSA so that the difference between the size MSA_size of the material supply area MSA and the size MUA_size of the irradiation unit area MUA becomes smaller by controlling (changing) the size MSA_size of the material supply area MSA. Namely, the control unit 7 may control (typically, change) the size MSA_size of the material supply area MSA so that the difference between the size MSA_size of the material supply area MSA and the size MUA_size of the irradiation unit area MU in a case where the size MSA_size of the material supply area MSA is changed is smaller than the difference between the size MSA_size of the material supply area MSA and the size MUA_size of the irradiation unit area MU in a case where the size MSA_size of the material supply area MSA is not changed. As a result, the interference probability becomes higher by controlling (changing) of the size MSA_size of the material supply area MSA.

### (4-4-2) Specific Example of Control Method of Size MSA_size of Material Supply Area MSA

### (4-4-2-1) First Specific Example of Control Method of Size MSA size of Material Supply Area MSA

The control unit 7 may control the nozzle driving system 23 to control the size MSA_size of the material supply area MSA. Specifically, as illustrated in FIG. 35, the control unit 7 may control the size MSA_size of the material supply area MSA by controlling the nozzle driving system 23 to move the material nozzle 212 along the Z-axis direction.

For example, as illustrated in FIG. 35, the control unit 7 may decrease the size MSA_size of the material supply area MSA by moving the material nozzle 212 toward the +Z side (namely, in an upward direction) along the Z-axis direction. Namely, the control unit 7 may decrease the size MSA_size of the material supply area MSA by moving the material nozzle 212 so that the material nozzle 212 moves away from the material irradiation plane ES along the Z-axis direction. The control unit 7 may decrease the size MSA_size of the material supply area MSA by moving the material nozzle 212 so that the material nozzle 212 moves away from the build surface MS along the Z-axis direction.

For example, as illustrated in FIG. 35, the control unit 7 may increase the size MSA_size of the material supply area MSA by moving the material nozzle 212 toward the -Z side (namely, in a downward direction) along the Z-axis direction. Namely, the control unit 7 may increase the size MSA_size of the material supply area MSA by moving the material nozzle 212 so that the material nozzle 212 approaches the material irradiation plane ES along the Z-axis direction. The control unit 7 may increase the size MSA_size of the material supply area MSA by moving the material nozzle 212 so that the material nozzle 212 approaches the build surface MS along the Z-axis direction.

Note that a distance between the material nozzle 212 and each of the material irradiation plane ES and the build surface MS along the Z-axis direction changes when the material nozzle 212 moves along the Z-axis direction. Therefore, an operation for controlling the size MSA_size of the material supply area MSA by moving the material nozzle 212 along the Z-axis direction may be considered to be equivalent to an operation for controlling the size MSA_size of the material supply area MSA by changing distance between the material nozzle 212 and each of the material irradiation plane ES and the build surface MS along the Z-axis direction.

In a case where the material nozzle 212 is moved along the Z-axis direction, as illustrated in FIG. 36(a) and FIG. 36(b), the processing system SYS may include a measurement apparatus 83 that measures the distance between the material nozzle 212 and the build surface MS along the Z-axis direction. For example, as illustrated in FIG. 36(a), the processing system SYS may include, as the measurement apparatus 83, a capacitance sensor 83a that detects a change in capacitance caused by a presence of the build surface MS in order to measure the distance between the material nozzle 212 and the build surface MS. For example, as illustrated in FIG. 36(b), the processing system SYS may include, as the measurement apparatus 83, an optical sensor 83b that detects returned light from the build surface MS in order to measure the distance between the material nozzle 212 and the build surface MS. A camera is one example of the optical sensor 83b. A distance sensor such as a TOF (Time of Flight) sensor is one example of the optical sensor 83b. Note that the optical sensor 83b optically receives the returned light through the irradiation optical system 211 in the example illustrated in FIG. 36(b), but it may optically receive the returned light without using the irradiation optical system 211.

In a case where the processing system SYS includes the measurement apparatus 83, the control unit 7 may calculate the distance between the material nozzle 212 and the build surface MS along the Z-axis direction based on a measured result of the measurement apparatus 83, and move the material nozzle 212 so that the calculated distance becomes a target distance. As one example, the control unit 7 may calculates the target distance, which allows the size MSA_size of the material supply area MSA to be the target size, by using a table indicating a relationship between the size MSA_size of the material supply area MSA and the distance between the material nozzle 212 and the build surface MS along the Z-axis, and move the material nozzle 212 so that the distance between the material nozzle 212 and the build surface MS along the Z-axis direction becomes the target size.

Note that the positional relationship (especially, the positional relationship in the Z-axis direction) between the workpiece W and the stage 31 is known to the control unit 7, because the workpiece W is placed on the stage 31. As a result, the positional relationship (especially, the positional relationship in the Z-axis direction) between the build surface MS, which is set on the upper surface of the workpiece W or set on the upper surface of the structural layer SL formed on the workpiece W, and the stage 31 is also known to the control unit 7. Therefore, the measurement apparatus 83 may measure the distance between the material nozzle 212 and the stage 31 along the Z-axis direction. In this case, the control unit 7 may measure the distance between the material nozzle 212 and the build surface MS along the Z-axis direction based on the measured result by the measurement apparatus 83 and information related to the positional relationship between the workpiece W and the stage 31 that is known to the control unit 7.

### (4-4-2-2) Second Specific Example of Control Method of Size MSA size of Material Supply Area MSA

The control unit 7 may control a gas nozzle 218, which is configured to supply (typically, blow) gas to the supply path of the build material M supplied from the material nozzle 212, to control the size MSA_size of the material supply area MSA. Note that the gas nozzle 218 that is used to control the size MSA_size of the material supply area MSA may be the same as or may be different from the gas nozzle 217 that is used to control the position of the material control point MCP described above with reference to FIG. 16.

Specifically, as illustrated in FIG. 37, the control unit 7 may control (typically, change) the size MSA_size of the material supply area MSA by controlling the ON/OFF of a supply of the gas from the gas nozzle 218 to change the material supply direction of the build material M from the material nozzle 212.

For example, as illustrated in FIG. 37, the control unit 7 may change the size MSA_size of the material supply area MSA to a relatively small second size (a size illustrated at a lower part of FIG. 37) by controlling the gas nozzle 217 to supply the gas in a situation where the size MSA_size of the material supply area MSA is a relatively large first size (a size illustrated at an upper part of FIG. 37). Alternatively, although it is not illustrated, for example, the control unit 7 may change the size MSA_size of the material supply area MSA to the relatively small second size (the size illustrated at the lower part of FIG. 37) by controlling the gas nozzle 217 to stop the supply of the gas in a situation where the size MSA_size of the material supply area MSA is the relatively large first size (the size illustrated at then upper part of FIG. 37).

For example, as illustrated in FIG. 37, the control unit 7 may change the size MSA_size of the material supply area MSA to the relatively large first size (the size illustrated at the upper part of FIG. 37) by controlling the gas nozzle 217 to stop the supply of the gas in a situation where the size MSA_size of the material supply area MSA is the relatively small second size (the size illustrated at the lower part of FIG. 37). Alternatively, although it is not illustrated, for example, the control unit 7 may change the size MSA_size of the material supply area MSA to the relatively large first size (the size illustrated at the upper part of FIG. 37) by controlling the gas nozzle 217 to supply the gas in a situation where the size MSA_size of the material supply area MSA is the relatively small second size (the size illustrated at the lower part of FIG. 37).

Alternatively, the control unit 7 may control (typically, change) the size MSA_size of the material supply area MSA by controlling a supply direction of the gas supply from the gas nozzle 217 to change the material supply direction of the build material M from the material nozzle 212, in addition to or instead of controlling ON/OFF of the supply of the gas from the gas nozzle 218.

For example, as illustrated in FIG. 37, the control unit 7 may change the size MSA_size of the material supply area MSA to the relatively small second size (the size illustrated at a lower part of FIG. 37) by controlling the gas nozzle 217 to change the supply direction of the gas in a situation where the size MSA_size of the material supply area MSA is the relatively large first size (the size illustrated at an upper part of FIG. 37). Alternatively, although it is not illustrated, for example, the control unit 7 may change the size MSA_size of the material supply area MSA to the relatively small second size (the size illustrated at the lower part of FIG. 37) by controlling the gas nozzle 217 to change the supply direction of the gas in a situation where the size MSA_size of the material supply area MSA is the relatively large first size (the size illustrated at then upper part of FIG. 37).

For example, as illustrated in FIG. 37, the control unit 7 may change the size MSA_size of the material supply area MSA to the relatively large first size (the size illustrated at the upper part of FIG. 37) by controlling the gas nozzle 217 to change the supply direction of the gas in a situation where the size MSA_size of the material supply area MSA is the relatively small second size (the size illustrated at the lower part of FIG. 37). Alternatively, although it is not illustrated, for example, the control unit 7 may change the size MSA_size of the material supply area MSA to the relatively large first size (the size illustrated at the upper part of FIG. 37) by controlling the gas nozzle 217 to change the supply direction of the gas in a situation where the size MSA_size of the material supply area MSA is the relatively small second size (the size illustrated at the lower part of FIG. 37).

Alternatively, the control unit 7 may control (typically, change) the size MSA_size of the material supply area MSA by controlling a supplied amount of the gas from the gas nozzle 217 to change the material supply direction of the build material M from the material nozzle 212, in addition to or instead of controlling at least one of ON/OFF of the supply of the gas from the gas nozzle 218 and the supply direction of the gas from the gas nozzle 217.

For example, as illustrated in FIG. 37, the control unit 7 may change the size MSA_size of the material supply area MSA to the relatively small second size (the size illustrated at a lower part of FIG. 37) by controlling the gas nozzle 217 to change the supplied amount of the gas in a situation where the size MSA_size of the material supply area MSA is the relatively large first size (the size illustrated at an upper part of FIG. 37). Alternatively, although it is not illustrated, for example, the control unit 7 may change the size MSA_size of the material supply area MSA to the relatively small second size (the size illustrated at the lower part of FIG. 37) by controlling the gas nozzle 217 to change the supplied amount of the gas in a situation where the size MSA_size of the material supply area MSA is the relatively large first size (the size illustrated at then upper part of FIG. 37).

For example, as illustrated in FIG. 37, the control unit 7 may change the size MSA_size of the material supply area MSA to the relatively large first size (the size illustrated at the upper part of FIG. 37) by controlling the gas nozzle 217 to change the supplied amount of the gas in a situation where the size MSA_size of the material supply area MSA is the relatively small second size (the size illustrated at the lower part of FIG. 37). Alternatively, although it is not illustrated, for example, the control unit 7 may change the size MSA_size of the material supply area MSA to the relatively large first size (the size illustrated at the upper part of FIG. 37) by controlling the gas nozzle 217 to change the supplied amount of the gas in a situation where the size MSA_size of the material supply area MSA is the relatively small second size (the size illustrated at the lower part of FIG. 37).

### (4-4-2-3) Third Specific Example of Control Method of Size MSA size of Material Supply Area MSA

The control unit 7 may control the supplied amount of the build material M supplied from the material nozzle 212 to control the size MSA_size of the material supply area MSA.

For example, the control unit 7 may increase the size MSA_size of the material supply area MSA by increasing the supplied amount of the build material M supplied. For example, the control unit 7 may change the size MSA_size of the material supply area MSA from a relatively small size corresponding to a first supplied amount to a relatively large size corresponding to a second supplied amount by changing the supplied amount of the build material M from the first supplied amount to the second supplied amount that is larger than the first supplied amount.

For example, the control unit 7 may decrease the size MSA_size of the material supply area MSA by decreasing the supplied amount of the build material M supplied. For example, the control unit 7 may change the size MSA_size of the material supply area MSA from a relatively large size corresponding to a second supplied amount to a relatively small size corresponding to a first supplied amount by changing the supplied amount of the build material M from the second supplied amount to the first supplied amount that is smaller than the second supplied amount.

### (4-5) Fifth Modified Example of Second Build Operation

Next, a fifth modified example of the second build operation will be described. In the fifth modified example, the processing system SYS that performs the second build operation may generate an image IMG by imaging the material irradiation plane ES (namely, the space between the material nozzle 212 and the build surface MS) and perform the second build operation based on the generated image IMG. Therefore, the processing system SYS that performs the fifth modified example of the second build operation includes an imaging apparatus 84, as illustrated in FIG. 38 that is a cross-sectional view illustrating a configuration of the processing system SYS that performs the fifth modified example of the second build operation.

### (4-5-1) Imaging Apparatus 84

In the below-describe description, the imaging apparatus 84 will first be described, and then an operation performed based on the image IMG generated by the imaging apparatus 84 will be described.

The imaging apparatus 84 is a camera that is configured to image the material irradiation plane ES. In a case where the imaging apparatus 84 images the material irradiation plane ES, the light concentration position of the imaging apparatus 84 may be positioned on or near the material irradiation plane ES. In a case where the imaging apparatus 84 images the material irradiation plane ES, an exposure of the imaging apparatus 84 may be set to a value that is suitable for imaging the material irradiation plane ES.

However, as described above, the material irradiation plane ES is a virtual plane intersecting the Z-axis as described above. Namely, the material irradiation plane ES itself is not a physical object that can be imaged by the imaging apparatus 84. Therefore, imaging the material irradiation plane ES may substantially mean imaging an object existing in the material irradiation plane ES. The object existing in the material irradiation plane ES may include an object supplied to the material irradiation plane ES. The object existing in the material irradiation plane ES may include an object passing through the material irradiation plane ES.

In the fifth modified example, an example in which the object existing in the material irradiation plane ES includes at least the build material M supplied to the material irradiation plane ES from the material nozzle 212 will be described. In this case, the imaging apparatus 84 may image the build material M supplied to the material irradiation plane ES by imaging the material irradiation plane ES. For example, the imaging apparatus 84 may image the build material M, which is irradiated with the processing light EL in the material irradiation plane ES, by imaging the material irradiation plane ES. For example, the imaging apparatus 84 may image the build material M, which is not irradiated with the processing light EL in the material irradiation plane ES, by imaging the material irradiation plane ES. For example, the imaging apparatus 84 may image the build material M, which is melted by the irradiation of the processing light EL in the material irradiation plane ES, by imaging the material irradiation plane ES. For example, the imaging apparatus 84 may image the build material M, which is not melted by irradiation of the processing light EL in the material irradiation plane ES, by imaging the material irradiation plane ES.

The imaging apparatus 84 may be positioned at any position at which the imaging apparatus 84 can image the material irradiation plane MS. For example, the imaging apparatus 84 may be positioned at any position at which the imaging apparatus 84 can image the material irradiation plane ES directly above the material irradiation plane MS. For example, the imaging apparatus 84 may be positioned at any position at which the imaging apparatus 84 can image the material irradiation plane ES from above the material irradiation plane MS. For example, the imaging apparatus 84 may be positioned at an arbitrary position at which the imaging apparatus 84 can image the material irradiation plane ES from obliquely above the material irradiation plane MS. For example, the imaging apparatus 84 may be positioned at any position at which the imaging apparatus 84 can image the material irradiation plane ES from the side of the material irradiation plane MS. For example, the imaging apparatus 84 may be positioned at any position at which the imaging apparatus 84 can image the material irradiation plane ES from directly beside the material irradiation plane MS.

The imaging apparatus 84 may be positioned at the processing head 21. As one example, the imaging apparatus 84 may be attached to an outer surface of a housing of the processing head 21. Note that the imaging apparatus 84 may be positioned at the processing head 21 so that the imaging apparatus 84 is attachable to / detachable from the processing head 21. Alternatively, the imaging apparatus 84 may be positioned at the processing head 21 so that the imaging apparatus 84 is fixed to the processing head 21. The imaging apparatus 84 may be positioned at the processing head 21 so that the imaging apparatus 84 is integrated with the processing head 21. In a case where the imaging apparatus 84 is positioned at the processing head 21, the imaging apparatus 84 may be movable together with the processing head 21. Namely, the head driving system 22 may move the imaging apparatus 84 together with the processing head 21. The head driving system 22 may move the imaging apparatus 84 together with the processing head 21.

The imaging apparatus 84 may be positioned at the material nozzle 212 of the processing head 21. As one example, the imaging apparatus 84 may be attached to an outer surface of the material nozzle 212. Note that the imaging apparatus 84 may be positioned at the material nozzle 212 so that the imaging apparatus 84 is attachable to / detachable from the material nozzle 212. Alternatively, the imaging apparatus 84 may be positioned at the material nozzle 212 so that the imaging apparatus 84 is fixed to the material nozzle 212. The imaging apparatus 84 may be positioned at the material nozzle 212 so that the imaging apparatus 84 is integrated with the material nozzle 212. In a case where the imaging apparatus 84 is positioned at the material nozzle 212, the imaging apparatus 84 may be movable together with the material nozzle 212. Namely, at least one of the head driving system 22 and the nozzle driving system 23 may move the imaging apparatus 84 together with the material nozzle 212. At least one of the head driving system 22 and the nozzle driving system 23 may move the imaging apparatus 84 together with the material nozzle 212.

Alternatively, the imaging apparatus 84 may be positioned at a support member that is different from the processing head 21. The imaging apparatus 84 may be positioned at the support member so that the imaging apparatus 84 is attachable to / detachable from the support member. Alternatively, the imaging apparatus 84 may be positioned at the support member so that the imaging apparatus 84 is fixed to the support member. The imaging apparatus 84 may be positioned at the support member so that the imaging apparatus 84 is integrated with the support member. In a case where the imaging apparatus 84 is positioned at the support member, the processing system SYS may include a driving system for moving the imaging apparatus 84. This driving system may move the imaging apparatus 84 in synchronization with at least one of the movement of the processing head 21 and the movement of the material nozzle 212. This driving system may move the imaging apparatus 84 independently of at least one of the movement of the processing head 21 and the movement of the material nozzle 212.

The processing system SYS may further include an illumination apparatus 85 that illuminates the material irradiation plane ES with illumination light IL, as illustrated in FIG. 39. In this case, the illumination apparatus 85 may illuminate the object existing in the material irradiation plane ES with the illumination light IL. Specifically, the illumination apparatus 85 may illuminate the build material M supplied to the material irradiation plane ES with the illumination light IL. However, the build material M supplied to the material irradiation plane ES may not be illuminated with the illumination light IL. In this case, the processing system SYS may not include the illumination apparatus 85.

Since the material irradiation plane ES is a plane intersecting the Z-axis, the illumination apparatus 85 may illuminate the material irradiation plane ES with sheet-like illumination light IL that is along the material irradiation plane ES. The illumination apparatus 85 may illuminate the material irradiation plane ES with the sheet-like illumination light IL that includes the material irradiation plane ES. A sheet light source is one example of this illumination apparatus 85. Note that the illumination apparatus 85 may illuminate the material irradiation plane ES with the sheet-like illumination light IL that is along an intersecting plane intersecting the material irradiation plane ES. In this case, the angle between the intersecting plane and the material irradiation plane ES may be an acute angle.

The imaging apparatus 84 may image the build material M supplied to the material irradiation plane ES by optically receiving light from the build material M supplied to the material irradiation plane ES with an imaging element of the imaging apparatus 84. Note that the light from the build material M supplied to the material irradiation plane ES is referred to as "material light ML" in the below-described description. The material light ML may include light reflected by the build material M. The material light ML may include light scattered by the build material M. The material light ML may include light diffracted by the build material M. The material light ML may include light transmitted through the build material M. The material light ML may include light emitted by the build material M. In a case where the build material M is melted by the irradiation of the processing light EL, the material light ML may include light generated when the build material M is melted. The light generated when the build material M is melted may be referred to as melt material light. The material light ML that includes the light generated when the build material M is melted may be referred to as melt material light.

As illustrated in FIG. 39 that is a cross-sectional view illustrating an optical path of the material light ML, at least a part of the optical path of the material light ML may overlap with at least a part of the optical path of the processing light EL emitted from the irradiation optical system 211. For example, in the example illustrated in FIG. 39, the processing head 21 includes a mirror 2192 and a beam splitter 2193. In this case, the processing light EL emitted from the irradiation optical system 211 may pass through the beam splitter 2193, and the processing light EL that has passed through the beam splitter 2193 may be irradiated onto the build material M supplied to the material irradiation plane ES. Namely, the irradiation optical system 211 may emit the processing light EL toward the material irradiation plane ES through the beam splitter 2193 that is an optical component. On the other hand, the material light ML from the build material M may be reflected by the beam splitter 2193, and the material light ML hat has been reflected by the beam splitter 2193 may enter the imaging apparatus 84 through the mirror 2192. Namely, the imaging apparatus 84 may optically receive the material light ML through the beam splitter 2193 through which the processing light EL passes. In this case, the optical path of the processing light EL between the beam splitter 2193 and the material irradiation plane ES overlaps with the optical path of the material light ML between the beam splitter 2193 and the material irradiation plane ES. However, at least a part of the optical path of the material light ML may not overlap with at least a part of the optical path of the processing light EL emitted from the irradiation optical system 211.

Note that the processing light EL emitted from the irradiation optical system 211 (specifically, emitted from the fθ lens 2162) enters the beam splitter 2193 in the example illustrated in FIG. 39. Namely, the beam splitter 2193 is positioned on the optical path of the processing light EL emitted from the irradiation optical system 211 (specifically, emitted from the fθ lens 2162). In other words, the beam splitter 2193 is positioned on the optical path of the processing light EL between the material irradiation plane ES and the irradiation optical system 211 (specifically, the fθ lens 2162). However, the beam splitter 2193 may be positioned so that the fθ lens 2162 (alternatively, a part of the irradiation optical system 211) is positioned on the optical path of the processing light EL between the material irradiation plane ES and the beam splitter 2193. In this case, the processing light EL emitted from the beam splitter 2193 may enter the fθ lens 2162, and the processing light EL emitted from the fθ lens 2162 may be irradiated onto the material irradiation plane ES. Furthermore, the material light ML from the build material M may enter the beam splitter 2193 through the fθ lens 2162.

Here, as described above, the processing light EL emitted from the irradiation optical system 211 may propagate in the space that is at least partially surrounded by the build material M supplied from the material nozzle 212 as described above. In this case, in a case where at least a part of the optical path of the material light ML overlaps with at least a part of the optical path of the processing light EL, the material light ML may also propagate in the space that is at least partially surrounded by the build material M supplied from the material nozzle 212, as illustrated in FIG. 39. For example, as illustrated in FIG. 39, the material light ML may propagate in the conical-shaped space whose outer edge is formed by the build material M supplied from the material nozzle 212. As one example, the material light ML may propagate in the space between the build material M supplied from the first supply port part 2122 of the material supply port 2121 (see FIG. 4(a) to FIG. 4(c)) and the build material M supplied from the second supply port part 2123 of the material supply port 2121 (see FIG. 4(a) to FIG. 4(c)). In this case, it is less likely that the material light ML is shielded by the build material M, compared to a case where the material light ML propagates in a space outside the space that is at least partially surrounded by the build material M supplied from the material nozzle 212. Therefore, the imaging apparatus 84 can optically receive the material light ML properly without being affected by the build material M. Namely, the imaging apparatus 84 can properly image the build material M supplied to the material irradiation plane ES without being affected by the build material M.

In a case where the imaging apparatus 84 images the build material M, the image IMG generated by the imaging apparatus 84 includes the build material M. For example, the image IMG may include the build material M supplied to the material irradiation plane ES. For example, the image IMG may include the build material M irradiated with the processing light EL in the material irradiation plane ES. For example, the image IMG may include the build material M melted by the irradiation of the processing light EL in the material irradiation plane ES. In the below-described description, the image IMG including the build material M is referred to as a material image IMG_M.

Note that an example in which the material image IMG_M includes at least the build material M melted by the irradiation of the processing light EL in the material irradiation plane ES will be described in the below-described description. Namely, in the below-described description, an example in which the imaging apparatus 84 images at least the build material M melted by the irradiation of the processing light EL in the material irradiation plane ES will be described. In this case, the material image IMG_M in which the melted build material M is captured may be referred to as a melt material image. In the below-described description, the melted build material M is referred to as a melt material MM for convenience of description.

The material image IMG_M imaged by the imaging apparatus 84 is output from the imaging apparatus 84 to the control unit 7. The control unit 7 may control the processing system SYS (especially, at least one of the processing unit 2 and the stage unit 3) to perform the build operation (especially, the second build operation) based on the material image IMG_M output from the imaging apparatus 84. For example, the control unit 7 may control the irradiation aspect (for example, the intensity) of the processing light EL based on the material image IMG_M. A control of the irradiation aspect of the processing light EL may include a control of at least one of the intensity of the processing light EL in the material irradiation plane ES, a movement of the processing light EL in the material irradiation plane ES, a shape of a cross-section of the processing light EL in the material irradiation plane ES, a size of the cross-section of the processing light EL in the material irradiation plane ES, a movement speed of the processing light EL in the material irradiation plane ES, and a movement path (a movement trajectory) of the processing light EL in the material irradiation plane ES. The control of the irradiation aspect of the processing light EL may include a control of at least one of the Galvano mirrors 2146 and 2156 that is used to irradiate the irradiation unit area MUA in the material irradiation plane ES with the processing light EL. The control of at least one of the Galvano mirrors 2146 and 2156 may include a control of the scanning mirror of at least one of the Galvano mirrors 2146 and 2156 (for example, at least one of the X scanning mirror 2146MX, the Y scanning mirror 2146MY, the X scanning mirror 2156MX, and the Y scanning mirror 2156MY). The control of the scanning mirror may include a control of at least one of a scanning frequency (in other words, a swing frequency) and a rotational speed (in other words, a swing speed) of the scanning mirror. For example, the control unit 7 may control one of the movement aspect of at least one of the processing head 21, the material nozzle 212, and the stage 31 based on the material image IMG_M. The movement aspect may include at least one of the movement speed, the movement distance, the movement direction, and the movement timing. For example, the control unit 7 may control the supply aspect of the build material M from the material nozzle 212 based on the material image IMG_M. The supply aspect may include at least one of a supply speed, the supplied amount, the supply direction, and the supply timing.

When the material image IMG_M includes the melt material MM, which is the build material M melted by the irradiation of the processing light EL in the material irradiation plane ES, the control unit 7 may control the processing system SYS (especially, at least one of the processing unit 2 and the stage unit 3) based on information related to the melt material MM captured in the material image IMG_M.

In a case where not only the melt material MM but also a non-melt material, which is the build material that is not melted by the irradiation of the processing light EL in the material irradiation plane ES, are captured in the material image IMG_M, the control unit 7 may control the processing system SYS (especially, at least one of the processing unit 2 and the stage unit 3) based on the information related to the melt material MM captured in the material image IMG_M and information related to the non-melt material captured in the material image IMG_M. Alternatively, the control unit 7 may acquire the material image IMG_M including the melt material MM and the material image IMG_M including the non-melt material, and control the processing system SYS (especially, at least one of the processing unit 2 and the stage unit 3) based on the material image IMG_M including the melt material MM and the material image IMG_M including the non-melt material.

Next, one specific example of an operation that is performed based on the material image IMG_M generated by the imaging apparatus 84 will be further described.

### (4-5-2) Specific Example of Operation performed based on Material Image IMG M

For example, the control unit 7 may perform, as the specific example of the operation performed based on the material image IMG_M, an imaging position control operation for controlling a position of the imaging apparatus 84 based on the material image IMG_M. For example, the control unit 7 may control the position of the imaging apparatus 84 along at least one of the X-axis direction, the Y-axis direction, and the Z-axis direction based on the material image IMG_M. For example, the control unit 7 may control the position of the imaging apparatus 84 along at least one of the θX direction, the θY direction, and the θZ direction based on the material image IMG_M. Namely, the control unit 7 may control a pose of the imaging apparatus 84 around at least one axis of the X-axis, the Y-axis, and the Z-axis based on the material image IMG_M.

Alternatively, for example, the control unit 7 may perform, as the specific example of the operation performed based on the material image IMG_M, a melt material feedback control operation based on the material image IMG_M, in addition to or instead of the imaging position control operation. The melt material feedback control operation is an operation for controlling the processing unit 2 based on the material image IMG_M so that a size of a melt material area MMA in the material image IMG_M becomes a target size TS. Note that the melt material area MMA will be described in detail later.

The control unit 7 may perform the melt material feedback control operation in at least a part of a build period during which the processing system SYS performs the build operation (especially, the second build operation). Namely, the processing system SYS may perform the build operation (especially, the second build operation) and the melt material feedback operation in parallel. The control unit 7 may perform the melt material feedback control operation in real time in at least a part of the build period during which the processing system SYS performs the build operation (especially, the second build operation).

Next, with reference to FIG. 40, a flow of the melt material feedback control operation will be described. FIG. 40 is a flowchart that illustrates the flow of the melt material feedback control operation.

As illustrated in FIG. 40, the control unit 7 acquires the material image IMG_M from the imaging apparatus 84 (a step S11). Specifically, the imaging apparatus 84 images the build material M supplied from the material nozzle 212 to the material irradiation plane ES. As a result, the imaging apparatus 84 generates the material image IMG_M including the build material M supplied from the material nozzle 212 to the material irradiation plane ES (especially, the melt material MM). The imaging apparatus 84 outputs the generated material image IMG_M to the control unit 7. As a result, the control unit 7 acquires the material image IMG_M.

The imaging apparatus 84 images the material irradiation plane ES so that the build material M supplied from the material nozzle 212 to the material irradiation plane ES is included in an imaging range of the imaging apparatus 84. Specifically, as described above, the build material M is supplied to the material supply area MSA in the material irradiation plane ES. Therefore, the imaging apparatus 84 may be aligned with the material irradiation plane ES to which the build material M is supplied so that the material supply area MSA is included in the imaging range of the imaging apparatus 84. As a result, the imaging apparatus 84 can properly image the build material M supplied from the material nozzle 212 to the material irradiation plane ES.

As described above, the processing lights EL moves in the material irradiation plane ES by the Galvano mirrors 2146 and 2156. Specifically, the beam passing areas PA through which the processing lights EL pass move in the material irradiation plane ES by the Galvano mirrors 2146 and 2156. As a result, an area in which the build material M is irradiated with the processing light EL in the material irradiation plane ES also moves in the material irradiation plane ES. Namely, an area in which the melt material MM is generated in the material irradiation plane ES also moves in the material irradiation plane ES. In this case, the imaging apparatus 84 may image the material irradiation plane ES so that a movement range of the melt material MM in the material irradiation plane ES is included in the imaging range of the imaging apparatus 84. Namely, the imaging apparatus 84 may image the material irradiation plane ES so that the irradiation unit area MU, which is a movement range of the processing light EL in the material irradiation plane ES, is included in the imaging range of the imaging apparatus 84. Specifically, the imaging apparatus 84 may be aligned with the material irradiation plane ES to which the build material M is supplied so that the movement range of the melt material MM in the material irradiation plane ES (namely, the irradiation unit area MUA) is included in the imaging range of the imaging apparatus 84. As a result, the imaging apparatus 84 can properly image the melt material MM moving in the irradiation unit area MUA.

The imaging apparatus 84 may repeatedly image the material irradiation plane ES to which the build material M is supplied at a predetermined imaging rate. Namely, the imaging apparatus 84 may successively image the material irradiation plane ES to which the build material M is supplied at the predetermined imaging rate a plurality of times. Note that the imaging rate may be an index value that indicates the number of times the imaging apparatus 84 images the material irradiation plane ES per unit time (for example, per second). In other words, the imaging apparatus 84 may repeatedly image the material irradiation plane ES each time a predetermined imaging cycle elapses. For example, the imaging apparatus 84 may image the material irradiation plane ES at a first time, and then image the material irradiation plane ES at a second time at which the predetermined imaging cycle has elapsed from the first time. Note that the imaging cycle may be an inverse number of the imaging rate. In this case, the imaging apparatus 84 may generate a plurality of material images IMG_M as time series data. The control unit 7 may acquire the plurality of material images IMG_M as the time series data.

The Galvano mirror 2146 or 2156 may move the beam passing area PA (namely, may move the processing light EL) in the irradiation unit area MUA in a period during which the imaging apparatus 84 repeatedly images the material irradiation plane ES. In this case, the imaging apparatus 84 may image the melt material MM formed at a first position in the material irradiation plane ES at a first time, and then image the melt material MM formed at a second position different form the first position in the material irradiation plane ES at a second time different from the first time. Namely, the imaging apparatus 84 may image the melt material MM appearing at the first position in the material irradiation plane ES at the first time, and then image the melt material MM appearing at the second position in the material irradiation plane ES at the second time. As a result, the plurality of material images IMG_M generated by the imaging apparatus 84 may include a material image IMG_M in which the melt material MM formed at the first position in the material irradiation plane ES is captured and a material image IMG_M in which the melt material MM formed at the second position in the material irradiation plane ES is captured. Namely, the plurality of material images IMG_M may include the material image IMG_M indicating the melt material MM formed at the first position in the material irradiation plane ES and the material image IMG_M indicating the melt material MM formed at the second position in the material irradiation plane ES. The plurality of material images IMG_M may include the material image IMG_M generated by imaging the melt material MM formed at the first position in the material irradiation plane ES and the material image IMG_M generated by imaging the melt material MM formed at the second position in the material irradiation plane ES.

Note that the imaging apparatus 84 may be considered to expose an imaging element with light from the material irradiation plane ES (for example, the material light ML described above) a plurality of times in a case where the imaging apparatus 84 repeatedly images the material irradiation plane ES. In this case, the plurality of exposures of the imaging element may be referred to as a multiple exposure. Namely, the imaging apparatus 84 may generate the plurality of material images IMG_M as the time series data by performing the multiple exposure of the imaging element. In other words, the imaging apparatus 84 may generate the plurality of material images IMG_M as the time series data by performing the multiple exposure of the melt material MM by the imaging element. Namely, the imaging apparatus 84 may generate the plurality of material images IMG_M as a result of the multiple exposure by performing the multiple exposure of the melt material MM by the imaging element.

Alternatively, in a case where the imaging apparatus 84 repeatedly images the material irradiation plane ES, the imaging apparatus 84 may expose the imaging element to the light from the material irradiation plane ES (for example, the material light ML described above) the plurality of times in a single imaging operation for generating a single material image IMG_M. In this case, the plurality of exposures of the imaging element in the single imaging for generating the single material image IMG_M may be referred to as the multiple exposure. Namely, the imaging apparatus 84 may generate the single material image IMG_M by performing the multiple exposure of the imaging element. Furthermore, the imaging apparatus 84 may generate the plurality of material images IMG_M as the time series data by repeatedly performing the multiple exposure of the imaging element for generating the single material image IMG_M. Namely, the imaging apparatus 84 may generate the plurality of material images IMG_M as a result of the multiple exposure by performing the multiple exposure of the melt material MM by the imaging element.

Then, the control unit 7 generates melt material image information MMI based on at least one material image IMG_M acquired at the step S11 (a step S12). The melt material image information MMI is information related to the melt material MM captured in the material image IMG_M.

The control unit 7 may generate information related to the melt material area MMA as one example of the melt material image information MMI. The melt material area MMA may include an area in which the melt material MM is captured in the material image IMG_M, as illustrated in FIG. 41 that illustrates the material image IMG_M.

In order to generate the information related to the melt material area MMA, the control unit 7 may use at least two of the plurality of material images IMG_M acquired as the time series data at the step S11. Namely, the control unit 7 may generate the information related to the melt material area MMA by using the plurality of material images IMG_M that correspond to at least some of the plurality of material images IMG_M acquired as the time series data at the step S11.

Specifically, a left side of FIG. 42 illustrates the plurality of material images IMG_M acquired as the time series data. As illustrated on the left side of FIG. 42, in a case where the melt material MM moves by the Galvano mirror 2146 or 2156, there is a possibility that a position at which the melt material MM is captured changes between the plurality of material images IMG_M. This is because the imaging apparatus 84 may image the melt material MM formed at the first position in the material irradiation plane ES at the first time, and then image the melt material MM formed at the second position different from the first position in the material irradiation plane ES at the second time different from the first time, as described above, in a case where the melt material MM moves by the Galvano mirror 2146 or 2156. Especially, there is a possibility that a position at which the melt material MM is captured changes between the plurality of material images IMG_M in a case where an exposure time of the imaging apparatus 84 is shorter than a certain time.

In this case, the control unit 7 may generate an addition image IMG_C by adding at least two successive material images IMG_M of the plurality of material images IMG_M acquired at the step S11, in order to generate the information related to the melt material area MMA, as illustrated in FIG. 42. Namely, the control unit 7 may generate the addition image IMG_C by merging at least two successive material images IMG_M. Note that the addition image IMG_C may be referred to as a merged image.

Specifically, the control unit 7 may add at least two successive material images IMG_M in units of pixels. For example, the control unit 7 may add signal values of at least two successive material images IMG_M in units of pixels. A value related to a brightness (namely, a luminance value) is one example of the signal value of the material image IMG_M. The number of material images IMG_M that should be added may be set in advance. An addition frame number, which is the number of material images IMG_M that should be added, may be set in advance. The addition frame number, which is the number of material images IMG_M that should be added, may be set properly by the control unit 7. The addition frame number, which is the number of material images IMG_M that should be added, may be set properly by a user of the processing system SYS.

In this case, the addition image IMG_C may be an image in which the signal value of each pixel of the addition image IMG_C is a total sum of the signal values of corresponding pixels of at least two added material images IMG_M. Specifically, the addition image IMG_C may be an image in which the signal value of the pixel in a x-th row and a y-th column of the addition image IMG_C is a total sum of the signal values of the pixels in the x-th row and the y-th column of at least two added material images IMG_M. Note that x is a variable number representing an integer that is larger than or equal to 1 and that is smaller than or equal to the total number of pixels along a horizontal direction of each of the addition image IMG_C and the material image IMG_M. y is a variable number representing an integer that is larger than or equal to 1 and that is smaller than or equal to the total number of pixels along a vertical direction of each of the addition image IMG_C and the material image IMG_M.

Alternatively, the addition image IMG_C may be an image in which the signal value of each pixel of the addition image IMG_C is an average value of the signal values of corresponding pixels of at least two added material images IMG_M. For example, the addition image IMG_C may be an image in which the signal value of the pixel in the x-th row and the y-th column of the addition image IMG_C is an average value of the signal values (namely, a value obtained by dividing the total sum of the signal values by the addition frame number) of the pixels in the x-th row and the y-th column of at least two added material images IMG_M. In this case, the control unit 7 may calculate the total sum of the signal values of corresponding pixels of at least two material images IMG_M, and then divide the calculated sum by the addition frame number to generate the addition image IMG_C. Alternatively, the control unit 7 may generate the addition image IMG_C by dividing the signal values of corresponding pixels of at least two material images IMG_M by the addition frame number, and then calculate the total sum of the signal values of corresponding pixels.

Alternatively, the addition image IMG_C may be an image in which the signal value of each pixel of the addition image IMG_C is a moving average value of the signal values of corresponding pixels of at least two added material images IMG_M. For example, the control unit 7 may generate the addition image IMG_C by calculating the moving average of the signal values of corresponding pixels of the at least two material images IMG_M recently acquired. As one example, the control unit 7 may generate a first addition image IMG_C by calculating the moving average of the signal values of corresponding pixels of ten material images IMG_M to which a first frame to a tenth frame are assigned as indices, and then generate a second addition image IMG_C by calculating the moving average of the signal values of corresponding pixels of ten material images IMG_M to which a second frame to an eleventh frame are assigned as indices, and then generate a third addition image IMG_C by calculating the moving average of the signal values of corresponding pixels of ten material images IMG_M to which a third frame to a twelfth frame are assigned as indices. Then, the control unit 7 may generate the addition image IMG_C in a same manner.

The control unit 7 typically acquires the material image IMG_M indicated by a digital signal from the imaging apparatus 84. In this case, the control unit 7 may add the plurality of material images IMG_M by adding the plurality of digital signals that indicate the plurality of material images IMG_M, respectively. For example, the control unit 7 may add the plurality of digital signals by using an adder (namely, an adder as a hardware), which adds the input digital signals, to add the plurality of digital signals. For example, the control unit 7 may add the plurality of material images IMG_M by inputting the digital signals into a buffer and then adding the digital signals that have been input into the buffer (namely, adding the digital signals as a software processing). Alternatively, the control unit 7 may add the plurality of material images IMG_M by performing a predetermined image processing on the plurality of material images IMG_M and then adding the plurality of digital signals that respectively indicate the plurality of material images IMG_M on which the predetermined image processing has been performed. At least one of a gamma processing, a noise reduction processing, and a HDR (High Dynamic Range) processing is one example of the predetermined signal processing.

Alternatively, the control unit 7 may acquire the material image IMG_M indicated by an analog signal from the imaging apparatus 84. In this case, the control unit 7 may add the plurality of material images IMG_M by adding the plurality of analog signals that indicate the plurality of material images IMG_M, respectively. Alternatively, the control unit 7 may convert the analog signal to the digital signal. Then, the control unit 7 may add the plurality of material images IMG_M by adding the plurality of digital signals that indicate the plurality of material images IMG_M, respectively, as in a case where the material images IMG_M indicated by the digital signal is acquired from the imaging apparatus 84.

Then, the control unit 7 may detect the melt material area MMA in which the melt material MM is captured in the addition image IMG_C. Specifically, as illustrated at a left side of FIG. 42, the signal value of an area in which the melt material MM is captured is different from the signal value of an area in which the melt material MM is not captured in the material image IMG_M. This is because the melt material MM emits intense light due to a physical phenomenon of melting. Therefore, the luminance value of the area in which the melt material MM is captured is different from the luminance value of the area in which the melt material MM is not captured in the material image IMG_M. Typically, the luminance value of the area in which the melt material MM is captured is higher than the luminance value of the area in which the melt material MM is not captured in the material image IMG_M. Therefore, as illustrated at a right side of FIG. 42, the signal value of the area in which the melt material MM is captured is different from the signal value of the area in which the melt material MM is not captured even in the addition image IMG_C. Namely, the signal value of the melt material area MMA is different from the signal value of an area that is different from the melt material area MMA in the addition image IMG_C. Typically, the luminance value of the melt material area MMA is higher than the luminance value of the area that is different from the melt material area MMA. Therefore, the control unit 7 may detect the melt material area MMA in the addition image IMG_C by comparing the signal value (for example, the luminance value) of each pixel of the addition image IMG_C with a predetermined signal threshold value.

For example, the control unit 7 may detect a pixel whose signal value (for example, luminance value) is larger than the predetermined signal threshold value in the addition image IMG_C. Namely, the control unit 7 may detect a pixel at which the added signal value (for example, luminance value) is larger than the predetermined signal threshold value in the addition image IMG_C. In this case, the control unit 7 may detect, as the melt material area MMA, an area including the detected pixel.

For example, the control unit 7 may set the signal value of the pixel, whose signal value (for example, luminance value) is larger than the predetermined signal threshold value, to a first signal value in the addition image IMG_C. On the other hand, the control unit 7 may set the signal value of the pixel, whose signal value (for example, luminance value) is smaller than the predetermined signal threshold value, to a second signal value (for example, 0) that is different from the first signal value in the addition image IMG_C. Namely, the control unit 7 may perform a binarization processing on the addition image IMG_C. Then, the control unit 7 may detect, as the melt material area MMA, an area that includes the pixel whose signal value is the first signal value. Namely, the control unit 7 may detect the melt material area MMA by using the added image IMG_C on which the binarization processing has been performed.

In this case, a signal value "1" may be used as the first signal value, and a signal value "0" may be used as the second signal value. Namely, the control unit 7 may set the signal value of the pixel, whose signal value is larger than the predetermined signal threshold value, to 1 in the addition image IMG_C. On the other hand, the control unit 7 may set the signal value of the pixel, whose signal value is smaller than the predetermined signal threshold value, to 0 in the addition image IMG_C. Then, the control unit 7 may detect, as the melt material area MMA, an area including the pixel whose signal value is 1.

The signal threshold value may be set to a proper value that allows the melt material area MMA to be distinguished from the area different from the melt material area MMA based on the signal value (for example, the luminance value). The signal threshold value may be set in advance. The signal threshold value may be set properly by the control unit 7. The signal threshold value may be set properly by the user of the processing system SYS.

The melt material area MMA detected in the addition image IMG_C may be considered to be substantially equivalent to an area in which the melt material MM have moved. Especially, the melt material area MMA detected in the addition image IMG_C may be considered to be equivalent to an area in which the melt material MM have moved in a period during which at least two material images IMG_M, which are used to generate the addition image IMG_C, are imaged. Therefore, the melt material area MMA may mean the area in which the melt material MM have moved.

The melt material area MMA detected in the addition image IMG_C may be considered to be substantially equivalent to an area in which the processing system SYS continuously forms the melt material MM at different positions. Therefore, the melt material area MMA may mean the area in which the processing system SYS continuously forms the melt material MM at different positions.

However, there is a possibility that not only the melt material MM but also a non-melted build material M are captured in the material image IMG_M. For example, there is a possibility that the build material M that has been irradiated with the processing light EL but is not melted is captured in the material image IMG_M. For example, there is a possibility that the build material M that is not irradiated with the processing light EL and is not melted is captured in the material image IMG_M. In this case, the signal value of the area in which the non-melted build material M is captured is different from the signal value of the area in which the build material M is not included in in the material image IMG_M. This is because the build material M is illuminated with the illumination light IL described above and the brightness value of the area in which the build material M is captured is typically higher than the brightness value of the area in which the build material M is not captured in the material image IMG_M is. In this case, there is a possibility that at least a part of the area in which the non-melted build material M is captured in the material image IMG_M is mistakenly detected as the melt material area MMA in which the melt material MM is captured, depending on the signal threshold value that is used to detect the melt material area MMA.

Therefore, the illumination apparatus 85 may illuminate the material irradiation plane ES with the illumination light IL whose wavelength is different from the wavelength of the melt material light, which is the material light ML generated by the melt material MM. A state where the wavelength of the melt material light is different from the wavelength of the illumination light IL may include a state where a peak wavelength of the melt material light is different from a peak wavelength of the illumination light IL. As one example, in a case where the peak wavelength of the melt material light is 800 nm, the peak wavelength of the illumination light IL may be a wavelength different from 800 nm (for example, 600 nm). In this case, the imaging apparatus 84 may image the material irradiation plane ES through a filter that allows a light component whose wavelength is the same as the wavelength of the melt material light to pass therethrough and that shields a light component whose wavelength is different from the wavelength of the melt material light. As a result, the melt material MM is captured in the material image IMG_M in a state where the melt material MM is clearly distinguishable from the non-melted build material M. As a result, the control unit 7 can properly detect the melt material area MMA that is likely to include the area in which the melt material MM is captured and that is unlikely to include the area in which the non-melted build material M is captured.

Then, the control unit 7 may generate, as the melt material image information MMI, the information related to the melt material area MMA based on a detected result of the melt material area MMA. For example, the control unit 7 may generate information related to a size of the melt material area MMA as one example of the information related to the melt material area MMA. As one example, the control unit 7 may calculate a planar dimension of the melt material area MMA and generate information related to the calculated planar dimension of the melt material area MMA as the information related to the size of the melt material area MMA. In this case, the control unit 7 may calculate, as the planar dimension of the melt material area MMA, the number of pixels included in the melt material area MMA. Namely, the control unit 7 may generate the information related to the size of the melt material area MMA by calculating the number of pixels whose signal value (for example, luminance value) is larger than the predetermined signal threshold value based on the addition image IMG_C.

However, the control unit 7 may generate the information related to the melt material area MMA by using a single material image IMG_M instead of using the plurality of material images IMG_M. Specifically, the control unit 7 may detect the melt material area MMA in the material image IMG_M by comparing the signal value (for example, the luminance value) of each pixel of the material image IMG_M with the predetermined signal threshold value. For example, the control unit 7 may detect the pixel whose signal value (for example, luminance value) is larger than the predetermined signal threshold value in the material image IMG_M. In this case, the control unit 7 may detect, as the melt material area MMA, the area including the detected pixel. Then, the control unit 7 may generate, as the melt material image information MMI, the information related to the melt material area MMA based on the detection results of the melt material area MMA.

In a case where the exposure time of the imaging apparatus 84 is longer than a certain time, it is likely that the melt material area MMA, which is the same as the melt material area MMA captured in the addition image IMG_C, is captured in the single material image IMG_M. For example, in a case where the exposure time of the imaging apparatus 84 is longer than the certain time that is determined based on a cycle of the periodic movement of the melt material MM, it is likely that the melt material area MMA, which is the same as the melt material area MMA captured in the addition image IMG_C, is captured in the single material image IMG_M. As one example, in a case where the exposure time of the imaging apparatus 84 is longer than one cycle of the periodic movement of the melt material MM, it is likely that the melt material area MMA, which is the same as the melt material area MMA captured in the addition image IMG_C, is captured in the single material image IMG_M. Therefore, in a case where the exposure time of the imaging apparatus 84 is longer than a certain time, the control unit 7 may generate the melt material image information MMI by using the single material image IMG_M without using the plurality of material images IMG_M. Note that the certain time may be a time period required for one cycle of the periodic movement of the melt material MM (namely, a periodic movement of the beam passing area PA in the irradiation unit area MUA). The certain time may be half the time period required for one cycle of the periodic movement of the melt material MM. The certain time may be one-third of the time period required for the periodic movement of the melt material MM. The control unit 7 may generate the melt material image information MMI by using the single material image IMG_M in which the melt material area MMA is captured.

Note that the exposure time of the imaging apparatus 84 may mean a time during which the imaging element of the imaging apparatus 84 is exposed to light. For example, in a case where the imaging apparatus 84 includes a mechanical shutter, the exposure time of the imaging apparatus 84 may mean a time during which the mechanical shutter is in an open state. Namely, the exposure time of the imaging apparatus 84 may mean a time from a timing at which the mechanical shutter is switched to the open state to a timing at which the mechanical shutter is switched to a close state. The open state may mean a state in which the mechanical shutter is opened. The close state may mean a state in which the mechanical shutter is closed. Alternatively, in a case where the imaging apparatus 84 includes an electronic shutter, the exposure time of the imaging apparatus 84 may mean a time during which the electronic shutter is in an ON state. Namely, the exposure time of the imaging apparatus 84 may mean a time from a timing at which the electronic shutter is switched to the ON state to a timing at which the electronic shutter is switched to an OFF state. The ON state may mean a state in which the electronic shutter is turned on. The state in which the electronic shutter is turned on may mean a state in which each pixel of the imaging element is exposed in a single imaging and in which an electric charge based on the amount of light is allowed to be accumulated in each pixel of the imaging element.

Alternatively, in a case where the imaging apparatus 84 includes the mechanical shutter, the imaging apparatus 84 may open and close the mechanical shutter the plurality of times at a timing synchronized with the above-described imaging rate. Even in this case, the imaging apparatus 84 may be considered to perform the multiple exposure. Then, the imaging apparatus 84 may read out the electric charge accumulated in each pixel of the imaging element. Even in this case, it is likely that the melt material area MMA, which is the same as the melt material area MMA captured in the addition image IMG_C, is captured in the single material image IMG_M generated by the imaging apparatus 84. Therefore, the control unit 7 may generate the melt material image information MMI by using the single material image IMG_M in which the melt material area MMA is captured.

Even in a case where the imaging apparatus 84 includes the electronic shutter, the imaging apparatus 84 may turn the electronic shutter on and off the plurality of times at a timing synchronized with the above-described imaging rate. Even in this case, the imaging apparatus 84 may be considered to perform the multiple exposure. Then, the imaging apparatus 84 may read out the electric charge accumulated in each pixel of the imaging element. Even in this case, it is likely that the melt material area MMA, which is the same as the melt material area MMA captured in the addition image IMG_C, is captured in the single material image IMG_M generated by the imaging apparatus 84. Therefore, the control unit 7 may generate the melt material image information MMI by using the single material image IMG_M in which the melt material area MMA is captured. However, the imaging apparatus 84 may read out the electric charge accumulated in each pixel of the imaging element each time the electronic shutter is turned on and off. In this case, the imaging apparatus 84 may be considered to substantially generate the plurality of material images IMG_M as the time series data.

Note that the imaging apparatus 84 may be considered to serve as a measurement apparatus that acquires information related to the melt material MM, because the melt material image information MMI, which is the information related to melt material MM, is generated from the material image IMG_M generated by the imaging apparatus 84. The imaging apparatus 84 may be considered to serve as a measurement apparatus that measures the build material MM in the material irradiation plane ES (namely, the space between the material nozzle 212 and the build surface MS). In this case, the control unit 7 may be considered to control the processing system SYS (for example, the processing unit 2) based on a measured result (for example, the material image IMG_M) by the imaging apparatus that serves as the measurement apparatus.

Alternatively, the processing system SYS may include any measurement apparatus that is different from the imaging apparatus 84 and that is configured to measure the build material M in the material irradiation plane ES (namely, the space between the material nozzle 212 and the build surface MS) in addition to or instead of the imaging apparatus 84. In this case, the control unit 7 may control the processing system SYS (for example, the processing unit 2) based on a measured result by any measurement apparatus.

Again in FIG. 40, then, the control unit 7 controls the processing system SYS based on the melt material image information MMI generated at the step S12 (a step S13). For example, as illustrated in FIG. 43, the control unit 7 controls the processing system SYS based on the melt material image information MMI so that the size of the melt material area MMA becomes a predetermined target size TS.

The control of the processing unit 2 may include a control of the irradiation aspect of the processing light EL. The control of the irradiation aspect of the processing light EL may include a control of at least one of the intensity of the processing light EL, the movement of the processing light EL, the shape of the cross-section of the processing light EL, the size of the cross-section of the processing light EL, the movement speed of the processing light EL, the movement path (the movement trajectory) of the processing light EL, an ON-OFF control of the processing light EL, the duty ratio of the processing light EL, and a distance between the light concentration position CP of the processing light EL and the build surface MS. Namely, the control of the processing unit 2 may include the control of at least one of the intensity of the processing light EL, the movement of the processing light EL, the shape of the cross-section of the processing light EL, the size of the cross-section of the processing light EL, the movement speed of the processing light EL, the movement path (the movement trajectory) of the processing light EL, the ON-OFF control of the processing light EL, the duty ratio of the processing light EL, and the distance between the light concentration position CP of the processing light EL and the build surface MS

Especially, the control of the irradiation aspect of the processing light EL may include a control of at least one of the intensity of the processing light EL in the material irradiation plane ES, the movement of the processing light EL in the material irradiation plane ES, the shape of the cross-section of the processing light EL in the material irradiation plane ES, the size of the cross-section of the processing light EL in the material irradiation plane ES, the movement speed of the processing light EL in the material irradiation plane ES, and the movement path (the movement trajectory) of the processing light EL in the material irradiation plane ES. Namely, the control of the processing unit 2 may include the control of at least one of the intensity of the processing light EL in the material irradiation plane ES, the movement of the processing light EL in the material irradiation plane ES, the shape of the cross-section of the processing light EL in the material irradiation plane ES, the size of the cross-section of the processing light EL in the material irradiation plane ES, the movement speed of the processing light EL in the material irradiation plane ES, and the movement path (the movement trajectory) of the processing light EL in the material irradiation plane ES.

As one example, the control unit 7 may control the intensity of the processing light EL emitted by the light source 4 so that the size of the melt material area MMA becomes the predetermined target size TS. Namely, the control unit 7 may perform a DC modulation control for controlling a DC component of the intensity of the processing light EL. Namely, the size of the melt material MM changes as the intensity of the processing light EL changes. For example, an amount of the build material M melted by the processing light EL is larger as the intensity of the processing light EL is higher. Therefore, the size of the melt material MM is larger as the intensity of the processing light EL is higher. Similarly, the size of the melt material MM#2 is larger as the intensity of the processing light EL#2 is higher. The size of the melt material area MMA captured in the material image IMG_M or the addition image IMG_C changes as the size of the melt material MM changes. Therefore, the control unit 7 may control the size of the melt material area MMA by controlling the intensity of at least one of the processing light EL.

Note that, an input heat amount transmitted from the processing light EL to the build material M changes as the intensity of the processing light EL changes. Therefore, an operation for controlling the intensity of the processing light EL so that the size of the melt material area MMA becomes the predetermined target size TS may be considered to be equivalent to an operation for controlling the input heat amount transmitted from the processing light EL to the build material M so that the size of the melt material area MMA becomes the predetermined target size TS. Alternatively, the control unit 7 may control the input heat amount transmitted from the processing light EL to the build material M by controlling the irradiation aspect of the processing light EL, which is different from the intensity of the processing light EL, so that the size of the melt material area MMA becomes the predetermined target size TS.

As another example, the control unit 7 may control at least one of the Galvano mirrors 2146 and 2156, which move the melt material MM, so that the size of the melt material area MMA becomes the predetermined target size TS. The size of the melt material area MMA captured in the material image IMG_M or the addition image IMG_C changes as the range in which at least one of the Galvano mirrors 2146 and 2156 moves the melt material MM (namely, the range in which at least one of the Galvano mirrors 2146 and 2156 moves the beam passing area PA) changes. Therefore, the control unit 7 may control the size of the melt material area MMA by controlling at least one of the Galvano mirrors 2146 and 2156.

An operation for controlling the processing system SYS so that the size of the melt material area MMA becomes the target size TS may include an operation for controlling the processing system SYS so that a difference between the size of the melt material area MMA and the target size TS decreases. Namely, the operation for controlling the processing system SYS so that the size of the melt material area MMA becomes the target size TS may include an operation for controlling the processing system SYS so that the size of the melt material area MMA is closer to the target size TS. Moreover, the operation for controlling the processing system SYS so that the size of the melt material area MMA becomes the target size TS may include an operation for controlling the processing system SYS so that the difference between the size of the melt material area MMA and the target size TS is zero. Namely, the operation for controlling the processing system SYS so that the size of the melt material area MMA becomes the target size TS may include the operation for controlling the processing system SYS so that the size of the melt material area MMA is equal to the target size TS. In any case, the control unit 7 may be considered to perform a feedback control of the processing system SYS based on the size of the melt material area MMA.

As a result, the size of the melt material area MMA is maintained at the target size TS. Here, as described above, the melt material area MMA corresponds to the area in which the melt material MM moves in the material irradiation plane ES. Namely, the melt material area MMA corresponds to the area in which the melt material MM distributes in the material irradiation plane ES. Therefore, the size of the melt material area MMA is substantially correlated with the size of the irradiation unit area MUA in which the melt material MM moves. Therefore, when the size of the melt material area MMA is maintained at the target size TS, the size of the irradiation unit area MUA is also maintained at a size corresponding to the target size TS. As a result, the size (typically, the width) of the linear build object, which is built on the build surface MS by moving the irradiation unit area MUA in the material irradiation plane ES, is also maintained at a size corresponding to the target size TS. This is because the size of the linear build object is correlated with the size of the irradiation unit area MUA. Specifically, the size of the linear build object is larger as the size of the irradiation unit area MUA is larger. Conversely, the size of the linear build object is smaller as the size of the irradiation unit area MUA is smaller. Therefore, the processing system SYS may build the linear build object having the desired size (typically, the desired width) by performing the melt material feedback control operation. Namely, it is unlikely that the processing system SYS, which perform melt material feedback control, erroneously builds the linear build object having a size that is different from the desired size. Therefore, the processing system SYS can build the build object with high build accuracy.

As another example, a distribution of the build material M supplied from the material nozzle 212 to the material irradiation plane ES, namely the shape and the size of the material supply area MSA, may be obtained from an imaged result by the imaging apparatus 84 (the material image), and therefore, the control unit 7 may control the irradiation aspect of the processing light EL to perform the second modified example of the second build operation described above, especially the first and second specific examples of the beam control operation, based on the imaged result by the imaging apparatus 84 (the material image).

Note that the control unit 7 generates the melt material image information MMI that is correlated with the size of the irradiation unit area MUA by adding at least two material images IMG_M. However, the control unit 7 may calculate an index value that is correlated with the size of the irradiation unit area MUA (namely, the size of the area in which the melt material MM moves in the material irradiation plane ES) from at least two material images IMG_M without adding at least two material images IMG_M. In this case, the control unit 7 may control the processing system SYS so that the calculated index value becomes the target size TS (alternatively, a value based on the target size TS) at the step S13 in FIG. 40.

As one example, the control unit 7 may calculate the sizes of at least two melt materials MM that are captured in at least two material images IMG_M, respectively. For example, the control unit 7 may calculate the size of the melt material MM captured in a first material image IMG_M, and may calculate the size of the melt material MM captured in a second material image IMG_M, which is different from the first material image IMG_M. Then, the control unit 7 may add the calculated sizes of at least two melt materials MM. For example, the control unit 7 may add the size of the melt material MM captured in the first material image IMG_M and the size of the melt material MM captured in the second material image IMG_M. In this case, a value obtained by adding the sizes of at least two melt materials MM may be used as the index value that is correlated with the size of the irradiation unit area MUA (namely, the sizes of the area in which melt material MM moves in the material irradiation plane ES).

As another example, the control unit 7 may calculate positions of at least two melt materials MM that are captured in at least two material images IMG_M, respectively. For example, the control unit 7 may calculate the position of the melt material MM captured in a first material image IMG_M, and may calculate the position of the melt material MM captured in a second material image IMG_M, which is different from the first material image IMG_M. Then, the control unit 7 may calculate the size of the irradiation unit area MUA (namely, the size of the area in which the melt material MM moves) based on the calculated positions of at least two melt materials MM. For example, since the beam passing area PA periodically moves along one direction in the irradiation unit area MUA as described above, the melt material MM also periodically moves along the one direction in the material irradiation plane ES. In this case, the control unit 7 may calculate positions of both ends along the one direction of the area in which the melt material MM moves, based on the calculated position of the melt material MM. For example, the control unit 7 may calculate, as the positions of the both ends along one direction of the area in which the melt material MM moves, a position at which a coordinate indicating the position of the melt material MM is maximum and a position at which the coordinate indicating the position of the melt material MM is minimum. Then, the control unit 7 may calculate a distance between the calculated positions of the both ends as the index value that is correlated with the size of the irradiation unit area MUA (namely, the size of the area in which the melt material MM move in the material irradiation plane ES). In this case, the control unit 7 may control the processing system SYS so that the calculated index value becomes a distance based on the target size TS at the step S13 in FIG. 40.

### (4-5-3) Imaging of Melt Pool MP

The imaging apparatus 84 may image the melt pool MP formed on the build surface MS in addition to or instead of imaging the material irradiation plane ES. Alternatively, as illustrated in FIG. 44, the processing system SYS may include an imaging apparatus 86 that is configured to image the melt pool MP formed on the build surface MS, in addition to or instead of the imaging apparatus 84.

The imaging apparatus 84 or 86 may generate the image IMG in which the melt pool MP is captured by imaging the melt pool MP. In this case, the control unit 7 may calculate a size of a melt pool area in which the melt pool MP is captured in the image IMG based on the image IMG generated by the imaging apparatus 84 or 86, and control the processing system SYS (for example, the processing unit 2) so that the size of the melt pool area becomes a predetermined target size. Even in this case, the processing system SYS can build the build object with high build accuracy.

### (4-5-4) Imaging of Workpiece W

The imaging apparatus 84 may image the build surface MS in addition to or instead of imaging the material irradiation plane ES. Alternatively, as illustrated in FIG. 44, the processing system SYS may include an imaging apparatus 86 that is configured to image the build surface MS in addition to or instead of the imaging apparatus 84.

Typically, the imaging apparatus 84 or 86 may image an object (for example, the workpiece W or the structural layer SL) whose surface is the build surface MS. The imaging apparatus 84 or 86 may generate the image IMG, in which the build surface MS (especially, the object whose surface is the build surface MS) is captured, by imaging the build surface MS. Note that the image IMG in which the build surface MS (especially, the object whose surface is the build surface MS) is captured may be referred to as an object image.

In this case, the control unit 7 may calculate a temperature of the build material M supplied to the build surface MS based on the image IMG generated by the imaging apparatus 84 or 86, and control the processing system SYS (for example, the processing unit 2) based on the calculated temperature of the build material M. For example, the control unit 7 may control the processing system SYS (for example, the processing unit 2) to build the build object with high build accuracy based on the calculated temperature of the build material M.

The control unit 7 may calculate a temperature of the build surface MS based on the image IMG generated by the imaging apparatus 84 or 86, and control the processing system SYS (for example, the processing unit 2) based on the calculated temperature of the build surface MS. For example, the control unit 7 may control the processing system SYS (for example, the processing unit 2) to build the build object with high build accuracy based on the calculated temperature of the build surface MS.

In a case where the imaging apparatus 84 or 86 images the build surface MS, the illumination apparatus 85 described above may illuminate the build surface MS with the illumination light IL. Alternatively, the processing system SYS may include an illumination apparatus that is configured to illuminate the build surface MS with the illumination light IL in addition to or instead of the illumination apparatus 85. In this case, the imaging apparatus 84 or 86 can image the build surface MS properly.

### (4-5-4) Change of Imaging Condition

In a case where the processing system SYS includes the imaging apparatus 84 (furthermore, the imaging apparatus 86, the same applies in the below-described description), the control unit 7 may change an imaging condition for the imaging apparatus 84 to image the melt material MM.

The control unit 7 may change the imaging condition so that the imaging apparatus 84 can properly image the material irradiation plane ES (specifically, properly image the build material M supplied to the material irradiation plane ES). For example, the control unit 7 may change the imaging condition so that the imaging apparatus 84 can generate the material image IMG_M that allows the above-described melt material feedback control operation to be performed properly. For example, the control unit 7 may change the imaging condition so that the imaging apparatus 84 can generate the material image IMG_M that allows the processing system SYS to build the linear build object having the desired size (typically, the desired width) by the above-described melt material feedback control operation.

In this case, the imaging apparatus 84 images the material irradiation plane ES based on the imaging condition changed by the control unit 7. Namely, the control unit 7 controls the imaging apparatus 84 to image the build material M supplied to the material irradiation plane ES based on the imaging condition changed by the control unit 7.

The imaging condition may include a condition related to an imaging timing at which the imaging apparatus 84 images the material irradiation plane ES. In this case, the control unit 7 may change the imaging timing. For example, the control unit 7 may change the imaging timing so that the imaging timing is earlier than the imaging timing before the change, as illustrated in FIG. 45(a). For example, the control unit 7 may change the imaging timing so that the imaging timing is later than the imaging timing before the change, as illustrated in FIG. 45(a).

The condition related to the imaging timing may include a timing at which the imaging apparatus 84 starts imaging the material irradiation plane ES, as illustrated in FIG. 45(a). The condition related to the imaging timing may include a timing at which the imaging apparatus 84 finishes imaging the material irradiation plane ES, as illustrated in FIG. 45(a). The timing at which the imaging apparatus 84 starts imaging the material irradiation plane ES may mean a timing at which the imaging apparatus 84 switches the state of the mechanical shutter from the close state to the open state. The timing at which the imaging apparatus 84 starts imaging the material irradiation plane ES may mean a timing at which the imaging apparatus 84 switches the stage of the electronic shutter from the OFF state to the ON state. The timing at which the imaging apparatus 84 finishes imaging of the melt material MM may mean a timing at which the imaging apparatus 84 switches the stage of the mechanical shutter from the open state to the close state. The timing at which the imaging apparatus 84 starts imaging the material irradiation plane ES may mean a timing at which the imaging apparatus 84 switches the stage of the electronic shutter from the ON state to the OFF state.

Note that the imaging timing illustrated in FIG. 45 (a) may be regarded as a timing at which each of the plurality of exposures is performed in the multiple exposure in a case where the imaging apparatus 84 may be considered to perform the multiple exposure as described above. Namely, a single pulse-shaped waveform illustrated in FIG. 45 (a) may be considered to indicate a timing at which single exposure is performed in the multiple exposure.

The imaging condition may include a condition related to the exposure time of the imaging apparatus 84 to image the material irradiation plane ES. In this case, the control unit 7 may change the exposure time. For example, the control unit 7 may change the exposure time so that the exposure time is shorter than the exposure time before the change, as illustrated in FIG. 45(b). For example, the control unit 7 may change the exposure time so that the exposure time is longer than the exposure time before the change, as illustrated in FIG. 45(b).

Note that the definition of the exposure time is already described, and therefore, a detailed description thereof is omitted. In the example illustrated in FIG. 45(b), the exposure time may mean a time period from a timing at which the imaging apparatus 84 starts imaging the material irradiation plane ES to a timing at which the imaging apparatus 84 finishes imaging the material irradiation plane ES.

Moreover, in a case where the imaging apparatus 84 may be considered to perform the multiple exposure as described above, the exposure time illustrated in FIG. 45(b) may be regarded as a time period during which each of the plurality of exposures is performed in the multiple exposure. Namely, the single pulse-shaped waveform illustrated in FIG. 45(b) may be considered to indicate the time period during which the single exposure is performed in the multiple exposure.

The imaging condition may include a condition related to the imaging cycle or the imaging rate at which the imaging apparatus 84 images the material irradiation plane ES. In this case, the control unit 7 may change the imaging cycle or imaging rate. For example, the control unit 7 may change the imaging cycle so that the imaging cycle is longer than the imaging cycle before the change, as illustrated in FIG. 45(c). For example, the control unit 7 may change the imaging cycle so that the imaging cycle is shorter than the imaging cycle before the change, as illustrated in FIG. 45(c). For example, the control unit 7 may change the imaging rate so that the imaging rate is lower than the imaging rate before the change, as illustrated in FIG. 45(c). For example, the control unit 7 may change the imaging rate so that the imaging rate is higher than the imaging rate before the change, as illustrated in FIG. 45(c).

Note that the definition of the imaging cycle and the imaging rate is already described, and therefore, a detailed description thereof is omitted. In the example illustrated in FIG. 45(c), the imaging cycle may mean a time period from a timing at which the imaging apparatus 84 starts imaging the material irradiation plane ES to a timing at which the imaging apparatus 84 starts imaging the material irradiation plane ES next. The imaging rate may mean the number of times the imaging apparatus 84 starts imaging the material irradiation plane ES per unit of time (for example, per second).

Note that the imaging cycle illustrated in FIG. 45(c) may be regarded as a cycle in which each of the plurality of exposures is performed in the multiple exposure in a case where the imaging apparatus 84 may be considered to perform the multiple exposure as described above. Namely, an interval between two adjacent pulse-shaped waveforms illustrated in FIG. 45(c) may be considered to indicate a cycle in which the single exposure is performed in the multiple exposure. Moreover, in a case where the imaging apparatus 84 may be considered to perform the multiple exposure as described above, the imaging rate illustrated in FIG. 45(c) may be regarded as an index value (this index value may be referred to as an exposure rate) that indicates the number of times the exposure is performed per unit time in the multiple exposure.

Note that the operation of the imaging apparatus 84 for generating the plurality of material images IMG_M as the time series data changes as the imaging condition is changed. Considering that the imaging apparatus 84 may be considered to generate the plurality of material images IMG_M as the time series data by performing the multiple exposure as described above, the operation for changing the imaging condition may be considered to be equivalent to an operation for changing a condition of the multiple exposure.

The control unit 7 may change the imaging condition based on a processing condition of the workpiece W by the processing system SYS. For example, in a case where the processing system SYS processes the workpiece W based on a first processing condition, the control unit 7 may change the imaging condition so that the imaging apparatus 84 images the material irradiation plane ES based on a first imaging condition. For example, in a case where the processing system SYS processes the workpiece W based on a second processing condition that is different from the first processing condition, the control unit 7 may change the imaging condition so that the imaging apparatus 84 images the material irradiation plane ES based on a second imaging condition that is different from the first imaging condition.

The control unit 7 may change the imaging condition so that the imaging apparatus 84 can properly image the material irradiation plane ES even in a case the processing condition is changed. For example, in a case where the processing system SYS processes the workpiece W based on the first processing condition, the control unit 7 may change the imaging condition to the first imaging condition so that the imaging apparatus 84 can properly image the melt material MM that is formed by the processing system SYS based on the first processing condition. For example, in a case where the processing system SYS processes the workpiece W based on the second processing condition, the control unit 7 may change the imaging condition to the second imaging condition so that the imaging apparatus 84 can properly image the melt material MM that is formed by the processing system SYS based on the second processing condition.

The control unit 7 may change the imaging condition based on the processing condition by using an imaging condition table that specifies a correspondence relationship between the processing condition and the imaging condition. The imaging condition table may be a table specifying the imaging condition that should be used by the imaging apparatus 84 in a case where the processing condition of the workpiece W is one processing condition. The imaging condition table may be a table that records information related to the imaging condition that should be used by the imaging apparatus 84 in association with the processing condition of the workpiece W. The imaging condition table may be stored (in other words, recorded) in the storage apparatus 72. The imaging condition table may be generated in advance by repeatedly performing the above-described melt material feedback control operation while changing at least one of the processing condition and the imaging condition, and determining the correspondence relationship between the processing condition and the imaging condition that can realize a state in which the build accuracy of the linear build object, which is built as a result of the melt material feedback control operation, is a desired accuracy.

The processing condition may include a light condition related to the processing light EL. Note that the light condition may be referred to as a beam condition because the processing light EL is one example of the energy beam. The light condition may include an intensity condition related to the intensity of the processing light EL. In this case, the control unit 7 may change the imaging condition based on the intensity of the processing light EL with which the workpiece W is irradiated in order to process the workpiece W. The control unit 7 may change the imaging condition based on the intensity of the processing light EL passing through the material irradiation plane ES in order to process the workpiece W.

The processing condition may include a movement aspect condition related to a movement aspect of the beam passing area PA in the material irradiation plane ES (namely, a movement aspect of the processing light EL). In this case, the control unit 7 may change the imaging condition based on the movement aspect of the beam passing area PA. The movement aspect of the beam passing area PA may include a movement speed of the beam passing area PA. The movement aspect of the beam passing area PA may include a movement cycle of the beam passing area PA. The movement aspect of the beam passing area PA may include a movement stroke (namely, a stroke amount or a stroke width) of the beam passing area PA. The movement stroke may mean an amplitude of a reciprocating movement. The movement aspect of the beam passing area PA may include a pattern of a movement trajectory of the beam passing area PA.

Note that the movement aspect condition may be considered to be equivalent to a condition related to a movement aspect of the melt material MM in the material irradiation plane ES, because the build material M is melted (namely, the melt material MM is formed) in the material irradiation plane ES due to the processing light EL passing through the beam passing area PA. The movement aspect condition may be considered to be equivalent to a conditions related to a deflection aspect of the processing light EL, because the beam passing area PA moves by deflecting the processing light EL.

### (5) Modified Example of Processing System SYS

Next, a modified example of the processing system SYS will be described.

### (5-1) First Modified Example

In the above-described description, the control unit 7 builds the build object, which extends along the movement direction of the processing unit area PUA on the build surface MS, on the build surface MS by controlling at least one of the head driving system 22 and the stage driving system 32 to move the processing unit area PUA on the build surface MS while controlling at least one of the Galvano mirrors 2146 and 2156 to move the target irradiation area EA in the processing unit area PUA set on the build surface MS.

On the other hand, in a first modified example, the control unit 7 may control the processing unit 2 so that the build object having a desired shape pattern is built in the processing unit area PUA as illustrated in FIG. 46. FIG. 46 illustrates an example in which the control unit 7 controls the processing unit 2 so that four build objects BO (BO#1 to BO#4), each of which has a desired shape pattern, are built in the processing unit area PUA. The build object BO#1 includes two linear build objects extending along the Y-axis and a ring-shaped build object (namely, a curved build object) connecting the two linear build objects. The build object BO#2 includes a linear build object extending along the Y-axis. The build object BO#3 includes a linear build object extending in the Y-axis direction and a linear build object intersecting each of the X-axis direction and the Y-axis direction. The build object BO#4 includes two linear build objects intersecting each of the X-axis direction and the Y-axis direction and intersecting each other.

In a case where a plurality of build objects BO are built in the processing unit area PUA, the control unit 7 may control the processing unit 2 so as to build the plurality of build objects BO in parallel. Alternatively, the control unit 7 may control the processing unit 2 to build a first build object BO of the plurality of build objects BO, and then build a second build object BO of the plurality of build objects BO.

In order to build the build object having the desired shape pattern in the processing unit area PUA, the control unit 7 may emit the processing light EL from the irradiation optical system 211 at a timing at which the target irradiation area EA overlaps a position at which the build object BO should be built in the processing unit area PUA while controlling at least one of the Galvano mirrors 2146 and 2156 so that the target irradiation area EA moves along each of the X-axis direction and the Y-axis direction in the processing unit area PUA. On the other hand, the control unit 7 may not emit the processing light EL from the irradiation optical system 211 at a timing at which the target irradiation area EA overlaps a position at which the build object BO should not be built in the processing unit area PUA. As a result, the build object BO, which has a shape pattern corresponding to a distribution pattern of the position onto which the processing light EL is irradiated, is built in the processing unit area PUA.

A width of each build object BO may be a width that is generally the same as a width of a beam spot BS formed by the processing light EL on the build surface MS. For example, as illustrated in FIG. 47(a), the control unit 7 may build the build object BO whose width is generally the same as the width of the beam spots BS and which extends along a movement direction of the beam spots BS by controlling at least one of the Galvano mirrors 2146 and 2156 so that the beam spot BS moves along one direction (in the example illustrated in FIG. 47(a), along the X-axis direction) in the processing unit area PUA.

Alternatively, the width of each build object BO may be a width that is wider than the width of the beam spot formed by the processing light EL on the build surface MS. For example, as illustrated in FIG. 47(b), the control unit 7 may build the build object BO whose width is wider than the width of the beam spots BS along another direction and which extends along the movement direction of the beam spots BS by controlling at least one of the Galvano mirrors 2146 and 2156 so as to alternately repeat an operation for moving the beam spot BS along one direction (in the example illustrated in FIG. 47(b), along the X-axis direction) in each processing unit area PUA and an operation for moving the beam spot BS along the another direction (in the example illustrated in FIG. 47(b), along the Y-axis direction) intersecting the one direction in each processing unit area PUA.

Even in a case where the build object BO having the desired shape pattern is built in the processing unit area PUA, the control unit 7 may control at least one of the head driving system 22 and the stage driving system 32 so that the processing unit area PUA moves on the build surface MS. Namely, the control unit 7 may build the build object BO having the desired shape pattern in the processing unit area PUA and move the processing unit area PUA on the build surface MS. For example, FIG. 48 illustrates an example in which the control unit 7 builds the build object BO having the desired shape pattern in the processing unit area PUA and moves the processing unit area PUA on the build surface MS toward the -Y direction side along the Y-axis. As a result, the processing system SYS may build the build object BO having the desired shape pattern in a wider range on the build surface MS.

The control unit 7 may alternately perform an operation for building the build object BO having the desired shape pattern in the processing unit area PUA and an operation for moving the processing unit area PUA on the build surface MS. For example, as illustrated in a first part of FIG. 49, the control unit 7 may control at least one of the head driving system 22 and the stage driving system 32 to move at least one of the processing head 21 and the stage 31 so that the processing unit area PUA is positioned at a first position P11 on the build surface MS. Then, as illustrated in a second part of FIG. 49, the control unit 7 may control the processing unit 2 to build the build object BO having the desired shape pattern in the processing unit area PUA positioned at the first position P11 in a state where the processing unit area PUA stops at the first position P11 on the build surface MS. Then, as illustrated in a third part of FIG. 49, the control unit 7 may control at least one of the head driving system 22 and the stage driving system 32 to move at least one of the processing head 21 and the stage 31 so that the processing unit area PUA is positioned at a second position P12 on the build surface MS. Note that the processing unit area PUA positioned at the first position P11 and the processing unit area PUA positioned at the second position P12 may be adjacent to each other along the movement direction of the processing unit area PUA (in the example illustrated in FIG. 49, the Y-axis direction). Then, as illustrated in a fourth part of FIG. 49, the control unit 7 may control the processing unit 2 to build the build object BO having the desired shape pattern in the processing unit area PUA positioned at the second position P12 in a state where the processing unit area PUA stops at the second position P12 on the build surface MS. In this case, the control unit 7 may build the build object BO having the desired shape pattern in the processing unit area PUA positioned at the second position P12 so that the build object BO formed in the processing unit area PUA positioned at the first position P11 and the build object BO formed in the processing unit area PUA positioned at the second position P12 are connected along the movement direction of the processing unit area PUA (in the example illustrated in FIG. 49, the Y-axis direction).

Alternatively, the control unit 7 may perform the operation for building the build object BO having the desired shape pattern in the processing unit area PUA and the operation for moving the processing unit area PUA on the build surface MS in parallel. Namely, the control unit 7 may control the processing system SYS to move the processing unit area PUA on the build surface MS while building the build object BO having the desired shape pattern in the processing unit area PUA. In this case, for example, the control unit 7 may control the processing unit 2 to build the build object BO in the processing unit area PUA at a time t1 based on the shape pattern of the build object BO that should be built in the processing unit area PUA set on the build surface MS at the time t1 (see FIG. 50(b)), as illustrated in FIG. 50(a). Specifically, the control unit 7 may control the processing unit 2 to emit the processing light EL from the irradiation optical system 211 at a timing determined based on the shape pattern of the build object BO that should be built in the processing unit area PUA set on the build surface MS at the time t1 (see FIG. 50(b)) while controlling at least one of the Galvano mirrors 2146 and 2156 to move the target irradiation area EA along each of the X-axis direction and the Y-axis direction in the processing unit area PUA. On the other hand, the control unit 7 may control the processing unit 2 to build the build object BO in the processing unit area PUA at a time t2, which is different from the time t1, based on the shape pattern of the build object BO that should be built in the processing unit area PUA set on the build surface MS at the time t2 (see FIG. 50(d)), as illustrated in FIG. 50(c). Specifically, the control unit 7 may control the processing unit 2 to emit the processing light EL from the irradiation optical system 211 at a timing determined based on the shape pattern of the build object BO that should be built in the processing unit area PUA set on the build surface MS at the time t2 (see FIG. 50(d)) while controlling at least one of the Galvano mirrors 2146 and 2156 to move the target irradiation area EA along each of the X-axis direction and the Y-axis direction in the processing unit area PUA.

Here, the shape pattern illustrated in FIG. 50(b) is partially the same as the shape pattern illustrated in FIG. 50(d). In this case, in order to build one part of one build object BO at one position on the build surface MS, the control unit 7 may control the processing unit 2 to irradiate the one position on the build surface MS with the processing light EL in order to build the one part at a time t1 and to irradiate the same one position on the build surface MS with the processing light EL in order to build the same one part at a time t2. Therefore, in a case where the operation for building the build object BO having the desired shape pattern in the processing unit area PUA and the operation for moving the processing unit area PUA on the build surface MS are performed in parallel, each part of the build object BO may be built by a plurality of irradiation of the processing light EL.

Note that the shape pattern of the build object BO that is used to determine the irradiation timing of the processing light EL may be different from the actual shape pattern of the build object BO that should be formed on the build surface MS, in a case where the operation for building the build object BO having the desired shape pattern in the processing unit area PUA and the operation for moving the processing unit area PUA on the build surface MS are performed in parallel. For example, as illustrated in FIG. 51, the shape pattern of the build object BO that is used to determine the irradiation timing of the processing light EL may be a shape pattern that is obtained by compressing the actual shape pattern of the build object BO, which should be built on the build surface MS, along the movement direction of the processing unit area PUA. The shape pattern of the build object BO that is used to determine the irradiation timing of the processing light EL may be a shape pattern that is obtained by compressing the actual shape pattern of the build object BO, which should be built on the build surface MS, along the movement direction of the processing unit area PUA at a compression ratio determined based on the movement speed of the processing unit area PUA. In this case, even in a case where the operation for building the build object BO having the desired shape pattern in the processing unit area PUA and the operation for moving the processing unit area PUA on the build surface MS are performed in parallel, the processing system SYS can build, on the build surface MS, the build object BO having the shape pattern that is the same as the shape pattern that should be built on the build surface MS.

Moreover, in a case where the operation for building the build object BO having the desired shape pattern in the processing unit area PUA and the operation for moving the processing unit area PUA on the build surface MS are performed in parallel, the control unit 7 controls the processing unit 2 to emit the processing light EL from the irradiation optical system 211 at the timing determined based on the shape pattern of the build object BO that should be built in the processing unit area PUA while controlling at least one of the Galvano mirrors 2146 and 2156 to move the target irradiation area EA along each of the X-axis direction and the Y-axis direction in the processing unit area PUA. In this case, the control unit 7 alternately performs a scanning operation for moving the target irradiation area EA along a scanning movement direction, which is one of the X-axis direction and the Y-axis direction, in the processing unit area PUA, and a stepping operation for moving the target irradiation area EA along a stepping movement direction, which is the other one of the X-axis direction and the Y-axis direction, by a predetermined stepping distance. As a result, due to a repetition of the scanning operation and the stepping operation, a timing at which the target irradiation area EA is positioned at one position in the processing unit area PUA is different from a timing at which the target irradiation area EA is positioned at another position in the processing unit area PUA. As a result, as illustrated in FIG. 52, there is a possibility that the shape pattern of the build object BO built on the build surface MS is distorted along each of the stepping movement direction and the stepping movement direction. Therefore, the shape pattern of the build object BO that is used to determine the irradiation timing of the processing light EL may be a shape pattern that is obtained by modifying the actual shape pattern of the build object BO, which should be built on the build surface MS, in a modification aspect that allows the distortion generated in the shape pattern of the build object BO built on the build surface MS to be canceled.

### (5-2) Second Modified Example

In a second modified example, the control unit 7 may control the processing system SYS to build the structural layer SL while changing a width wd of the processing unit area PUA based on the shape of the structural layer SL that should be built on the build surface MS. In the below-described description, an example in which the target irradiation area EA moves in the single scanning direction, which is along the build surface MS, in the processing unit area PUA under the assumption that the processing unit area PUA is stationary (namely, does not move) on the build surface MS will be described for convenience of description, as illustrated in FIG. 6(a). However, an operation described below may be performed even in a case where the target irradiation area EA moves in each of the plurality of single scanning direction, which is along the build surface MS, in the processing unit area PUA under the assumption that the processing unit area PUA is stationary (namely, does not move) on the build surface MS (for example, see FIG. 6(a) and FIG. 6(b)). In this case, as illustrated in FIG. 6(a), the width wd of the processing unit area PUA is equivalent to a movement stroke distance of the target irradiation area EA. The width wd of the processing unit area PUA is equivalent to an amplitude of the target irradiation area EA. Note that the width wd of the processing unit area PUA may mean the size of the processing unit area PUA in a direction intersecting the movement direction of the processing unit area PUA on the build surface MS, as illustrated in FIG. 6(a) and FIG. 6(b).

Here, the width (the bead width) D of the build object, which is built on the build surface MS by moving the processing unit area PUA on the build surface MS, depends on the width wd of the processing unit area PUA. Specifically, as illustrated in FIG. 53(a), in a case where the processing unit area PUA moves along the target movement trajectory MT0, the build object, which has the width in the direction intersecting the target movement trajectory MT0, is built on the build surface MS. For example, in a case where the processing unit area PUA moves along the Y-axis direction as illustrated in FIG. 53(a), the build object, which has the width along the X-axis direction and which extends along the Y-axis direction, is built on the build surface MS as illustrated in FIG. 53(b). In this case, the width D of the build object depends on the width wd of the processing unit area PUA. For example, the width D of the build object is wider as the width wd of the processing unit area PUA is wider. For example, the width D of the build object is narrower as the width wd of the processing unit area PUA is narrower.

Therefore, when the width wd of the processing unit area PUA changes, the width D of the build object changes. In the second modified example, the control unit 7 may set the width D of the build object to an appropriate width by changing the width wd of the processing unit area PUA based on the shape of the structural layer SL.

As one example, FIG. 54(a) illustrates the structural layer SL whose width along the X-axis gradually decrease and then whose width along the Y-axis gradually increases. In this case, as illustrated in FIG. 54(b), the control unit 7 may change the width wd of the processing unit area PUA while moving the processing unit area PUA along the Y-axis so that the width wd of the processing unit area PUA along the X-axis gradually decrease and the width wd of the processing unit area PUA along the X-axis gradually increases in accordance the movement of the processing unit area PUA along the Y-axis. As a result, the processing system SYS can build the structural layer SL illustrated in FIG. 54(a).

The control unit 7 may change the width wd of the processing unit area PUA based on the shape of the structural layer SL not only in a case where the structural layer SL having a relatively simple shape illustrated in FIG. 54(a) is formed, but also in a case where the structural layer SL having a relatively complex shape illustrated in FIG. 55(a) is formed. In this case, for example, as illustrated in FIG. 55(b), the control unit 7 may repeat a scanning movement operation for moving the processing unit area PUA along one direction (for example, the Y-axis direction) while changing the width wd of the processing unit area PUA based on the shape of the structural layer SL, and a step movement operation for moving the processing unit area PUA along another direction (for example, the X-axis direction) intersecting the one direction. As a result, the processing system SYS can build the structural layer SL having a relatively complex shape illustrated in FIG. 55(a).

### (5-3) Third Modified Example

In the above-described description, the processing unit 2 includes a single material nozzle 212 in which the material supply port 2121, which is configured to supply the build material M along each of the plurality of different material supply directions, is formed, as illustrated in FIG. 1. However, the processing unit 2 may include a plurality of material nozzles 212a each of which is configured to supply the build material M along a single material supply direction. As one example, as illustrated in FIG. 56(a) that is a side view illustrating the plurality of material nozzles 212a, the processing unit 2 may include three material nozzles 212a each of which is configured to supply the build material M. In this case, the processing unit 2 may supply the build material M by using the plurality of material nozzles 212a in the same supply aspect as in a case where the single material nozzle 212a in which the material supply port 2121 is formed is used. For example, the processing unit 2 may supply the build material M so that the build materials M are supplied from the plurality of material nozzles 212a along different material supply directions, respectively. For example, the processing unit 2 may supply the build material M so that the plurality of material supply axes SX, which extend along the plurality of material supply directions, respectively, intersect (namely, intersect at the material control point MCP) each other.

Here, a position at which the material supply axis SX of each of the plurality of material nozzles 212a intersects the processing light EL (the optical axis AX of the irradiation optical system 211) may not be at a single point as illustrated in FIG. 56(a). The position at which the material supply axis SX of a first material nozzle 212a intersects the processing light EL (the optical axis AX of the irradiation optical system 211) and the position at which the material supply axis SX of a second material nozzle 212a intersects the processing light EL (the optical axis AX of the irradiation optical system 211) may be different along the direction of the optical axis AX of the irradiation optical system 211. In this case, the processing unit 2 may be considered to have a plurality of material control points MCP. For example, the processing unit 2 may be considered to have the material control point MCP, which corresponds to the point at which the material supply axis SX of the first material nozzle 212a intersect the processing light EL (the optical axis AX of the irradiation optical system 211), and the material supply point MCP, which corresponds to the point at which the material supply axis SX of the second material nozzle 212a intersects the processing light EL (the optical axis AX of the irradiation optical system 211).

Moreover, the plurality of material nozzles 212a may not supply the build material M simultaneously. For example, the control unit 7 may switch the material nozzle 212a that actually supplies the build material M between the plurality of material nozzles 212a. In this case, in a case where the position at which the material supply axis SX of the first material nozzle 212a intersects the optical axis AX of the irradiation optical system 211 and the position at which the material supply axis SX of the second material nozzle 212a intersects the optical axis AX of the irradiation optical system 211 are different from each other, the control unit 7 may change the position (typically, the position in the direction along the optical axis AX) of the material control point MCP by switching the material nozzle 212a that actually supplies the build material M. Namely, the control unit 7 may change the distance between the material control point MCP and the build surface MS (the object) without changing the distance between the material nozzle 212a (the material supply member) and the build surface MS (the object). Note that the control unit 7 may combine an operation for switching the material nozzle 212a that actually supplies the build material M and an operation for changing the distance between the material nozzle 212a (the material supply member) and the build surface MS (the object). Moreover, one material control point MCP of the plurality of material control points MCP may be positioned on the build surface MS, and another material control points MCP of the plurality of material control points MCP may be positioned in the space between the plurality of material nozzles 212a and the build surface MS (the space between the material supply member and the object).

Note that the processing unit 2 may supply the build material M to two or more of the material control points MCP simultaneously in a case where the processing unit 2 has the plurality of material control points MCP along the direction of the optical axis AX.

Moreover, the same type of build materials may not be supplied from the plurality of material nozzles 212a. For example, at least one of a wire-like build material and a gas-like build material may be supplied from a first material nozzle 212a. The build material M that is the powdery material may be supplied from a second material nozzle 212a.

Alternatively, as illustrated in FIG. 56(b) that is a side view of the material nozzle 212a, the processing unit 2 may include a single material nozzle 212a that is configured to supply the build material M along a single material supply direction.

In the above-described description, the material nozzle 212 supplies the build material M so that the build material M is supplied from the material supply port 2121 of the material nozzle 212 along the material supply direction that is inclined with respect to the Z-axis (namely, the axis along the optical axis AX of the irradiation optical system 211). However, the material nozzle 212 may supply the build material M so that the build material M is supplied from the material supply port 2121 along the material supply direction that is along the Z-axis (namely, the axis along the optical axis AX of the irradiation optical system 211). Even in a case where the material nozzle 212a that is configured to supply the build material M along the single material supply direction is used, the material nozzle 212a may supply the build material M so that the build material M is supplied along the material supply direction that is along the Z-axis (namely, the axis along the optical axis AX of the irradiation optical system 211) as illustrated in FIG. 56(c) that is a side view illustrating the material nozzle 212a. In this case, the irradiation optical system 211 may emit the processing light EL so that the processing light EL propagates along the propagating direction that is inclined with respect to the Z-axis (namely, the axis along the optical axis AX of the irradiation optical system 211). Namely, the irradiation optical system 211 may emit the processing light EL so that the processing light EL propagates along the propagating direction that is different from the material supply direction of the build material M.

### (5-4) Modified Example

In the above-described description, the processing unit 2 changes the emitting direction of the processing light EL by using the Galvano mirrors 2146 and 2156. However, the processing unit 2 may change the emitting direction of the processing light EL by using at least one of a polygon mirror and a resonant mirror in addition to or instead of the Galvano mirrors 2146 and 2156.

In the above-described description, the processing unit 2 melts the build material M by irradiating the build material M with the processing light EL. However, the processing unit 2 may melt the build material M by irradiating the build material M with any energy beam. At least one of a charged particle beam, an electromagnetic wave and the like is one example of any energy beam. A least one of an electron beam, an ion beam and the like is one example of the charged particle beam.

In the above-described description, the processing unit 2 builds the three-dimensional structural object ST by performing the additive manufacturing based on the Laser Metal Deposition. However, the processing unit 2 may build the three-dimensional structural object ST by performing the additive manufacturing based on another method for building the three-dimensional structural object. At least one of a PBF (Powder Bed Fusion) such as a SLS (Selective Laser Sintering), a Binder Jetting, a Material Jetting, a SLA (Stereolithography), and a LMS (Laser Metal Fusion) is one example of another method for building the three-dimensional structural object.

The processing system SYS may perform both the additive manufacturing and a subtracting manufacturing. For example, the processing system SYS may perform the additive manufacturing by using one of the processing lights EL#1 and EL#2, and may perform the subtracting manufacturing by using the other one of the processing lights EL#1 and EL#2. In this case, the processing system SYS may perform the additive manufacturing and the subtracting manufacturing simultaneously. Note that the processing system SYS may perform the additive manufacturing and the subtracting manufacturing by using the same processing light EL in a case where the processing system SYS may not perform the additive manufacturing and the subtracting manufacturing simultaneously.

The processing system SYS may perform a remelt processing for reducing a flatness of the surface (namely, for reducing a surface roughness, for making the surface closer to a flat surface) of the workpiece W (alternatively, the build object built on the workpiece W) processed by the additive manufacturing or the subtractive manufacturing, in addition to or instead of at least one of the additive manufacturing and the subtractive manufacturing. For example, the processing system SYS may perform at least one of the additive manufacturing and the subtractive manufacturing by using one of the processing lights EL#1 and EL#2, and may perform the remelt processing by using the other one of the processing lights EL#1 and EL#2. In this case, the processing system SYS may perform the remelt processing and at least one of the additive manufacturing and the subtractive manufacturing simultaneously. Note that the processing system SYS may perform the remelt processing and at least one of the additive manufacturing and the subtracting manufacturing by using the same processing light EL in a case where the processing system SYS may not perform the remelt processing and at least one of the additive manufacturing and the subtracting manufacturing simultaneously.

The above-described processing unit 2 (especially, the processing head 21) may be attached to a robot (typically, an articulated robot). For example, the processing unit 2 (especially, the processing head 21) may be attached to a welding robot for performing a welding. For example, the processing unit 2 (especially, the processing head 21) may be attached to a self-propelled mobile robot.

### (6) Supplementary Note

Regarding the above-described example embodiment, below described Supplementary notes are further disclosed.

### [Supplementary Note 1]

A processing system including:
a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and
a control apparatus that is configured to control the processing apparatus,
wherein
the control apparatus controls the processing apparatus to melt the build material by irradiating the build material supplied to a space between the material supply member and the object with the energy beam, and to build the build object on the object by supplying the melted build material to the object, and
the control apparatus changes a supply direction of the build material melted by an irradiation of the energy beam from a supply direction of the build material that is not yet irradiated with the energy beam by performing a control for irradiating the build material with the energy beam based on a supply direction of the build material.

### [Supplementary Note 2]

The processing system according to the Supplementary Note 1, wherein
the control apparatus changes the supply direction of the build material melted by the irradiation of the energy beam by using a reaction force generated when the build material is melted by the irradiation of the energy beam.

### [Supplementary Note 3]

The processing system according to the Supplementary Note 1 or 2, wherein
the control apparatus changes the supply direction of the build material melted by the irradiation of the energy beam based on a target distribution of a distribution of a supplied amount of the build material melted by the irradiation of the energy beam on a surface of the object.

### [Supplementary Note 4]

The processing system according to any one of the Supplementary Notes 1 to 3, wherein
the control apparatus changes the supply direction of the build material melted by the irradiation of the energy beam so that a difference between a supplied amount of the build material supplied to a first area on a surface of the object and a supplied amount of the build material supplied to a second area, which is different from the first area, on the surface of the object in a case where the supply direction of the melted build material is changed is smaller than a difference between a supplied amount of the build material supplied to the first area and a supplied amount of the build material supplied to the second area in a case where it is assumed that the supply direction of the melted build material is not changed.

### [Supplementary Note 5]

The processing system according to any one of the Supplementary Notes 1 to 4, wherein
the control apparatus sets a beam path of the energy beam in the space.

### [Supplementary Note 6]

The processing system according to the Supplementary Note 5, wherein
the irradiation apparatus includes a deflection optical system that is configured to deflect the energy beam to move a passing area of the energy beam passes in a plane that intersects an optical axis of the irradiation apparatus, and
the control apparatus changes the supply direction of the build material melted by the irradiation of the energy beam by using the deflection optical system to move the energy beam in the space.

### [Supplementary Note 7]

The processing system according to any one of the Supplementary Notes 1 to 6, wherein
the irradiation apparatus includes a deflection optical system that is configured to deflect the energy beam to move a passing area of the energy beam passes in a plane that intersects an optical axis of the irradiation apparatus, and
the control apparatus controls the processing apparatus to melt the build material by irradiating the build material with the energy beam in the space while deflecting the energy beam.

### [Supplementary Note 8]

The processing system according to any one of the Supplementary Notes 1 to 7, wherein
the material supply member supplies build materials to the space from different directions, and
the irradiation apparatus melts the build materials at a position at which the build materials supplied from the different directions intersect.

### [Supplementary Note 9]

The processing system according to any one of the Supplementary Notes 1 to 8, wherein
the material supply member supplies the build material to a material supply position on a surface of the object from a direction intersecting the surface, and
the irradiation apparatus melts the build material in the space with the energy beam directed toward a direction different from the material supply position.

### [Supplementary Note 10]

A processing method including:
supplying a build material from a material supply member;
emitting an energy beam from an irradiation apparatus; and
performing an additive manufacturing for building a build object on an object by melting the build material, which is supplied from the material supply member in a space between the material supply member and the object, with the energy beam emitted from the irradiation apparatus,
wherein
the performing the additive manufacturing includes melt the build material by irradiating the build material supplied to a space between the material supply member and the object with the energy beam, and to build the build object on the object by supplying the melted build material to the object, and
the control apparatus changes a supply direction of the build material melted by an irradiation of the energy beam from a supply direction of the build material that is not yet irradiated with the energy beam by irradiating the build material with the energy beam based on a supply direction of the build material.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing system and a processing method, which involve such changes, are also intended to be within the technical scope of the present invention.

### Description of Reference Codes

- SYS: processing system
- 2: processing unit
- 21: processing head
- 211: irradiation optical system
- 212: material nozzle
- 2146, 2156: Galvano scanner
- 2162: fθ lens
- 212: material nozzle
- 22: head driving system
- 23: nozzle driving system
- 3: stage unit
- 31: stage
- 32: stage driving system
- 81: separation apparatus
- 83: measurement apparatus
- 84: imaging apparatus
- W: workpiece
- M: build material
- MSA: material supply area
- MCP: material control point
- MS: build surface
- PL: material supply plane
- ES: material irradiation plane
- EL: processing light
- CP: light concentration position
- EA: target irradiation area
- PUA: processing unit area
- MUA: irradiation unit area
- MP: melt pool

## Claims

1. A processing system comprising:
a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and
a control apparatus that is configured to control the processing apparatus,
wherein
the material supply member supplies the build material to a material supply area in a plane that intersects an optical axis of the irradiation apparatus in a space between the material supply member and the object, and
a control of the processing apparatus by the control apparatus includes a control of a beam path of the energy beam from the irradiation apparatus based on at least one of a shape and a size of the material supply area.

2. The processing system according to claim 1, wherein
the material supply member supplies build materials to the space from different directions, and
the irradiation apparatus melts the build materials at a position at which the build materials supplied from the different directions intersect.

3. The processing system according to claim 1 or 2, wherein
the material supply member supplies the build material to a material supply position on a surface of the object from a direction intersecting the surface, and
the irradiation apparatus melts the build material in the space with the energy beam directed toward a direction different from the material supply position.

4. The processing system according to any one of claims 1 to 3, wherein
the irradiation apparatus includes a deflection optical system that is configured to deflect the energy beam to move a beam passing area through which the energy beam passes in the plane, and
the control apparatus controls the processing apparatus to melt the build material by irradiating the build material with the energy beam in the space while deflecting the energy beam.

5. The processing system according to claim 4, wherein
the control of the beam path by the control apparatus includes a control of a movement trajectory of the beam passing area through which the energy beam passes in the plane.

6. The processing system according to claim 5, wherein
the control apparatus controls the movement trajectory so that the movement trajectory of the beam passing area in the plane includes at least a part of a Lissajous curve.

7. The processing system according to any one of claims 4 to 6, wherein
the control apparatus controls an intensity of the energy beam in a period during which the beam passing area moves in the plane.

8. The processing system according to claim 7, wherein
a control of the intensity of the energy beam includes a change of the intensity of the energy beam in the period.

9. The processing system according to any one of claims 2 to 8, wherein
the control of the beam path by the control apparatus includes a control of at least one of a size and a shape of a spot of the energy beam in the plane.

10. The processing system according to any one of claims 2 to 9, wherein
the control of the beam path by the control apparatus includes a control of a movement speed of a passing area of the energy beam in the plane.

11. The processing system according to claim 10, wherein
a control of the movement speed includes a change of the movement speed of the passing area in a period during which the passing area of the energy beam moves in the plane.

12. The processing system according to any one of claims 2 to 11, wherein
the control of the beam path by the control apparatus includes a control of the number of the energy beams that are irradiated onto the build material in the plane.

13. The processing system according to any one of claims 2 to 12, wherein
the control apparatus controls the beam path so that a ratio of a beam irradiation area, which is a movement range of a passing area of the energy beam in the plane, to the material supply area is larger than a first threshold value.

14. The processing system according to any one of claims 2 to 13, wherein
the control apparatus controls the beam path so that a value, which is obtained by multiplying a size of a passing area of the energy beam in the plane, a movement speed of the passing area of the energy beam in the plane, and the number of the energy beams that are irradiated onto the build material in the plane, is larger than a second threshold value.

15. The processing system according to claim 14, wherein
the second threshold value is set based on a size of the material supply area.

16. The processing system according to any one of claims 1 to 15 comprising an imaging apparatus that images the build material in the space between the material supply member and the object.

17. The processing system according to claim 16, wherein
at least one of the shape and the size of the material supply area is calculated from an imaged result of the build material by the imaging apparatus.

18. The processing system according to claim 16 or 17 comprising an illumination apparatus that illuminates the build material in the space between the material supply member and the object.

19. A processing system comprising:
a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and
a control apparatus that is configured to control the processing apparatus,
wherein
the material supply member supplies the build material to a material supply area in a plane that intersects an optical axis of the irradiation apparatus in a space between the material supply member and the object, and
the control apparatus controls a supply aspect of the build material from the material supply member based on an irradiation aspect of the energy beam.

20. The processing system according to claim 19, wherein
the material supply member supplies build materials to the space from different directions, and
the irradiation apparatus melts the build materials at a position at which the build materials supplied from the different directions intersect.

21. The processing system according to claim 19 or 20, wherein
the material supply member supplies the build material to a material supply position on a surface of the object from a direction intersecting the surface, and
the irradiation apparatus melts the build material in the space with the energy beam directed toward a direction different from the material supply position.

22. The processing system according to any one of claims 19 to 21, wherein
the irradiation apparatus melts the build material by irradiating the build material with the energy beam in the plane, and
the control apparatus controls the supply aspect of the build material in the plane based on the irradiation aspect of the energy beam in the plane.

23. The processing system according to claim 22, wherein
the irradiation apparatus includes a deflection optical system that is configured to deflect the energy beam to move a passing area of the energy beam in the plane, and
the control apparatus controls the processing apparatus to melt the build material by irradiating the build material with the energy beam in the space while deflecting the energy beam.

24. The processing system according to claim 23, wherein
an aspect of the energy beam in the plane includes a size of a movement trajectory of the passing area moving in the plane, and
the control apparatus controls a size of the material supply area based on the size of the movement trajectory of the passing area.

25. The processing system according to claim 24, wherein
the control apparatus controls the supply aspect of the build material in the space so that a difference between the size of the movement trajectory of the passing area and a size of the material supply area after the supply aspect of the build material in the space is controlled is smaller than a difference between the size of the movement trajectory of the passing area and the size of the material supply area in a case where it is assumed that the supply aspect of the build material in the space is not controlled.

26. The processing system according to claim 24 or 25, wherein
the control apparatus controls the supply aspect of the build material in the space so that the size of the movement trajectory is the same as a size of the material supply area.

27. The processing system according to any one of claims 19 to 26, wherein
the control apparatus controls the supply aspect of the build material in the space by controlling a supplied amount of the build material supplied from the material supply member.

28. The processing system according to any one of claims 19 to 27, wherein
the processing apparatus includes a gas supply member that is configured to supply gas toward the build material supplied from the material supply member, and
the control apparatus controls the supply aspect of the build material in the space by controlling a supplied amount of the gas supplied from the gas supply member.

29. The processing system according to any one of claims 19 to 28, wherein
the control apparatus controls the supply aspect of the build material in the space by changing a distance between the material supply member and the object in a direction that is along an optical axis of the irradiation apparatus.

30. The processing system according to claim 29, wherein
the processing apparatus includes a measurement apparatus that measures the distance between the material supply member and the object in the direction that is along the optical axis of the irradiation apparatus, and
the control apparatus controls the distance between the material supply member and the object in the direction that is along the optical axis of the irradiation apparatus based on a measured result by the measurement apparatus..

31. A processing system comprising:
a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and
a control apparatus that is configured to control the processing apparatus,
wherein
the control apparatus controls the processing apparatus to melt the build material by irradiating the build material supplied to a space between the material supply member and the object with the energy beam, and to build the build object on the object by supplying the melted build material to the object, and
the control apparatus controls the energy beam, which is irradiated onto the build material, based on a supply aspect of the build material supplied to the space.

32. The processing system according to claim 31, wherein
the control apparatus supplies the build material to a material supply area in a plane that intersects an optical axis of the irradiation apparatus in the space,
the supply aspect includes at least one of a shape and a size of the material supply area, and
a control of the energy beam includes a control of a beam path of the energy beam from the irradiation apparatus.

33. The processing system according to claim 31 or 32, wherein
the control apparatus changes a supply direction of the build material melted by an irradiation of the energy beam from a supply direction of the build material that is not yet irradiated with the energy beam by performing a control for irradiating the build material with the energy beam based on a supply direction of the build material in the space.

34. A processing system comprising:
a processing apparatus that includes a material supply member for supplying a build material and an irradiation apparatus for emitting an energy beam and that performs an additive manufacturing for building a build object on an object by melting the build material supplied from the material supply member with the energy beam emitted from the irradiation apparatus; and
a control apparatus that is configured to control the processing apparatus,
wherein
the material supply member supplies the build material to a material supply area in a plane that intersects an optical axis of the irradiation apparatus in a space between the material supply member and the object, and
a control of the processing apparatus by the control apparatus includes a control of an irradiation of the energy beam from the irradiation apparatus based on at least one of a shape and a size of the material supply area.

35. The processing system according to any one of claims 31 to 34, wherein
the material supply member supplies build materials to the space from different directions, and
the irradiation apparatus melts the build materials at a position at which the build materials supplied from the different directions intersect.

36. The processing system according to any one of claims 31 to 35, wherein
the material supply member supplies the build material to a material supply position on a surface of the object from a direction intersecting the surface, and
the irradiation apparatus melts the build material in the space with the energy beam directed toward a direction different from the material supply position.

37. A processing method comprising:
supplying a build material from a material supply member;
emitting an energy beam from an irradiation apparatus; and
performing an additive manufacturing for building a build object on an object by melting the build material supplied from the material supply member with the energy beam emitted from the irradiation apparatus,
wherein
the supplying the build material includes supplying the build material to a material supply area in a plane that intersects an optical axis of the irradiation apparatus in a space between the material supply member and the object, and
the performing the additive manufacturing includes setting a beam path of the energy beam from the irradiation apparatus based on at least one of a shape and a size of the material supply area.

38. A processing method comprising:
supplying a build material from a material supply member;
emitting an energy beam from an irradiation apparatus; and
performing an additive manufacturing for building a build object on an object by melting the build material supplied from the material supply member with the energy beam emitted from the irradiation apparatus,
wherein
the supplying the build material includes:
supplying the build material to a material supply area in a plane that intersects an optical axis of the irradiation apparatus in a space between the material supply member and the object; and
setting a supply aspect of the build material from the material supply member based on an aspect of the energy beam.

39. A processing method comprising:
supplying a build material from a material supply member;
emitting an energy beam from an irradiation apparatus; and
performing an additive manufacturing for building a build object on an object by melting the build material, which is supplied from the material supply member in a space between the material supply member and the object, with the energy beam emitted from the irradiation apparatus,
wherein
the performing the additive manufacturing includes setting the energy beam, which is irradiated onto the build material, based on an aspect of the build material supplied to the space.

40. A processing method comprising:
supplying a build material from a material supply member;
emitting an energy beam from an irradiation apparatus; and
performing an additive manufacturing for building a build object on an object by melting the build material supplied from the material supply member with the energy beam emitted from the irradiation apparatus,
wherein
the supplying the build material includes supplying the build material to a material supply area in a plane that intersects an optical axis of the irradiation apparatus in a space between the material supply member and the object, and
the performing the additive manufacturing includes controlling an irradiation of the energy beam from the irradiation apparatus based on at least one of a shape and a size of the material supply area.
